(19) Europäisches Patentamt
European Patent Office
Office européen des brevets

(11) EP 3 163 778 B1

(12) EUROPEAN PATENT SPECIFICATION

(45) Date of publication and mention of the grant of the patent:
**25.04.2018 Bulletin 2018/17**

(21) Application number: **11747743.0**

(22) Date of filing: **25.02.2011**

(51) Int Cl.:
***H04L 1/00*** *(2006.01)* ***H04L 27/26*** *(2006.01)*
*H04H 20/57* *(2008.01)* *H04H 60/11* *(2008.01)*

(86) International application number:
**PCT/KR2011/001337**

(87) International publication number:
**WO 2011/105853 (01.09.2011 Gazette 2011/35)**

(54) **BROADCASTING SIGNAL TRANSMITTER/RECEIVER AND BROADCASTING SIGNAL TRANSMISSION/RECEPTION METHOD**

RUNDFUNKSIGNAL-SENDER UND -EMPFÄNGER SOWIE RUNDFUNKSIGNAL-SENDE- UND EMPFANGSVERFAHREN

ÉMETTEUR/RÉCEPTEUR DE SIGNAUX DE DIFFUSION ET PROCÉDÉ D'ÉMISSION/RÉCEPTION DE SIGNAUX DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 US 308778 P**

(43) Date of publication of application:
**03.05.2017 Bulletin 2017/18**

(73) Proprietor: **LG Electronics Inc.**
**Seoul 150-721 (KR)**

(72) Inventors:
- **KO, Woo Suk**
  **Seoul 137-724 (KR)**
- **PARK, Jeong Hwan**
  **Seoul 137-724 (KR)**
- **MOON, Sang Chul**
  **Seoul 137-724 (KR)**
- **HONG, Ho Taek**
  **Seoul 137-724 (KR)**

(74) Representative: **Cabinet Plasseraud**
**66, rue de la Chaussée d'Antin**
**75440 Paris Cedex 09 (FR)**

(56) References cited:
**EP-A1- 2 071 792** **EP-A1- 2 071 795**
**US-A1- 2009 094 356** **US-A1- 2009 103 649**
**US-A1- 2009 187 949**

- **"Digital Video Broadcasting (DVB); Frame structure channel coding and modulation for a second generation digital terrestrial television broadcasting system (DVB-T2)", EUROPEAN STANDARD (TELECOMMUNICATIONS SERIES), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.1.1, 1 July 2009 (2009-07-01), XP014044393,**
- **DVB ORGANIZATION: "49BBC_Alamouti&Inter_M&I049.pdf", DVB, DIGITAL VIDEO BROADCASTING, C/O EBU - 17A ANCIENNE ROUTE - CH-1218 GRAND SACONNEX, GENEVA - SWITZERLAND, 16 November 2007 (2007-11-16), XP017817980,**
- **DVB ORGANIZATION: "DVB_TM_C2_137_sss_015_preamble_pilots.pd f ", DVB, DIGITAL VIDEO BROADCASTING, C/O EBU - 17A ANCIENNE ROUTE - CH-1218 GRAND SACONNEX, GENEVA - SWITZERLAND, 3 November 2008 (2008-11-03), XP017830487,**
- **DVB ORGANIZATION: "TM-NGH095r1_ETRI_CfT_Response_Block LDPC and Coded Cooperative MIMO Transmission.pdf", DVB, DIGITAL VIDEO BROADCASTING, C/O EBU - 17A ANCIENNE ROUTE - CH-1218 GRAND SACONNEX, GENEVA - SWITZERLAND, 20 March 2010 (2010-03-20), XP017832127,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 163 778 B1

## Description

[Technical Field]

The present invention relates to a broadcast signal transmitter/receiver and a method for transmitting and receiving a broadcast signal and more particularly to a broadcast signal transmitter/receiver, which transmits signaling information allowing reception of broadcast signals according to the characteristics of the receiver and allowing transmission of broadcast signals compatible with a conventional broadcast signal transmitter/receiver while increasing data transmission efficiency, and a method for transmitting and receiving a broadcast signal for the broadcast signal transmitter/receiver.

[Background Art]

As analog broadcasting will soon end, a variety of technologies for transmitting and receiving digital broadcast signals has been developed. Digital broadcast signals can transmit a greater capacity of video/audio data than analog broadcast signals, and can include a variety of optional data in addition to video/audio data.

A digital broadcast system can provide High Definition (HD) images, multi-channel sound, and a variety of optional services. However, data transmission efficiency for high capacity data transmission, robustness of transmitting and receiving networks, and flexibility of networks in consideration of mobile receiving equipment are problems that should still be improved. Document: "Digital video broadcasting (DVB); Frame structure channel coding and modulation for a second generation digital terrestrial television broadcasting system (DVB-T2)", European standard (Telecommunications series, European telecommunications standards Institute (ETSI), 650, Route des Lucioles; F-06921 Sophia-Antipolis; France no. VI.1,1 July 2009 (2009-07-01) discloses Frame structure channel coding and modulation for a digital broadcasting system. Document: DVB organization: "49BBC_Alamouti&inter_M&1049.pdf", DVB, Digital video broadcasting, C/O EBU-17A Ancienne Route-CH-1218 Grand Saconnex, Geneva-Switzerland, 16 November 2007 (2007-11-16) discloses details of Alamouti encoding employed in a digital video broadcasting system. Document : DVB organization: "DVB_TM_C2_137_sss_015_preamble_pilots.pdf", DVB, Digital video broadcasting, C/O EBU-17A Ancienne Route-CH-1218 Grand Saconnex, Geneva-Switzerland, 3 November 2008 (2008-11-03) discloses details of preamble pilots used in a digital video broadcasting system.

[Disclosure]

[Technical Problem]

A technical object of one embodiment of the present invention is to provide a method and apparatus for transceiving broadcast signals, which can enhance data transmission efficiency in a digital broadcast system. Another object of the present invention is to provide a broadcast signal transmitter/receiver and a method for transmitting and receiving a broadcast signal, wherein signaling information is transmitted to allow a broadcast signal to be received according to the characteristics of the receiver.

A further technical object of the present invention is to provide a method and apparatus for transceiving broadcast signals, which can maintain compatibility with a conventional broadcast system in addition to achieving the above described objects.

[Technical Solution]

In an aspect, a broadcast signal transmitter according to claim 5 is provided. Further aspects provide a method of transmitting according to claim 1, a method for receiving according to claim 9 and a receiver according to claim 12.

[Advantageous Effects]

According to the present invention, in a digital broadcast system, it is possible to enhance data transmission efficiency and increase robustness in terms of transmission and reception of broadcast signals, by virtue of provision of a MIMO system.

Further, according to the present invention, in a digital broadcast system, it is possible to decode MIMO receiving signals efficiently using MIMO processing of the present invention even under a diverse broadcast environment.

In addition, according to the present invention, a broadcast system using MIMO of the present invention can achieve the above described advantages while maintaining compatibility with a conventional broadcast system not using MIMO.

Further, according to the present invention, it is possible to provide a method and apparatus for transceiving broadcast signals, which can receive digital broadcast signals without error even under an indoor environment or using mobile reception equipment.

[Description of Drawings]

Fig. 1 shows a broadcast signal transmitter using MIMO according to an embodiment of the present invention;
Fig. 2 shows a broadcast signal receiver according to an embodiment of the present invention;
Fig. 3 shows an additional frame structure based on PLP according to an embodiment of the present invention;
Fig. 4 shows an additional frame structure based on FEF according to an embodiment of the present invention;
Fig. 5A and B show a process of generating a P1 symbol in order to perceive an additional frame according to an embodiment of the present invention;
Fig. 6 shows a conceptual diagram of a broadcast signal transmitting method according to an embodiment of the present invention.
Fig. 7 shows a broadcast signal transmitted by a national broadcast system with a MIMO system applied using SVC.
Fig. 8 shows a MIMO transmitting/receiving system according to an embodiment of the present system.
Fig. 9 shows a data transmitting/receiving method using MIMO by SM in channel conditions according to an embodiment of the present system.
Fig. 10 shows a structure of a P1 symbol and AP1 symbol according to an embodiment of the present invention.
Fig. 11 shows P1 signaling information and AP1 signaling information according to an embodiment of the present invention.
Fig. 12 shows L1-pre signaling information according to another embodiment of the present invention.
Fig. 13 shows L1-post signaling information according to another embodiment of the present invention.
Fig. 14 shows L1-post dynamic signaling information according to another embodiment of the present invention.
Fig. 15 shows an input processor of a broadcast signal transmitter/receiver according to an embodiment of the present invention.
Fig. 16 shows a mode adaption module implementing a plurality of PLP as an input processor according to an embodiment of the present invention.
Fig. 17 shows a stream adaption module implementing a plurality of PLP as an input processor according to an embodiment of the present invention.
Fig. 18 shows a BICM encoder according to the first embodiment of the present invention.
Fig. 19 shows a frame builder encoder according to the first embodiment of the present invention.
Fig. 20 shows an OFDM generator according to the first embodiment of the present invention.
Fig. 21 shows a BICM encoder 101300 according to another embodiment of the present invention.
Fig. 22 shows an OFDM demodulator according to the first embodiment of the present invention.
Fig. 23 shows a frame demapper according to the first embodiment of the present invention.
Fig. 24 shows a BICM decoder according to the first embodiment of the present invention.
Fig. 25 shows a BICM decoder according to another embodiment of the present invention.
Fig. 26 shows an output process of the broadcast signal receiver according to an embodiment of the present invention.
Fig. 27 shows an output process of the broadcast signal receiver according to another embodiment of the present invention.
Fig. 28 illustrates a frame mapping structure of L1 signaling information according to an embodiment of the present invention.
Fig. 29 illustrates an operation of a time interleaver according to an embodiment of the present invention.
Fig. 30 illustrates a frame structure of a transmission signal according to an embodiment of the present invention.
Fig. 31 illustrates a frame mapping structure of L1 signaling information according to an embodiment of the present invention.
Fig. 32 illustrates a frame mapping structure of L1 signaling information according to an embodiment of the present invention.
Fig. 33 illustrates a frame mapping structure of L1 signaling information according to an embodiment of the present invention.
Fig. 34 illustrates a frame mapping structure of L1 signaling information according to an embodiment of the present invention.
Fig. 35 illustrates a method for signaling an additional preamble according to an embodiment of the present invention.
Fig. 36 illustrates a frame structure of a transmission signal according to an embodiment of the present invention.
Fig. 37 illustrates a frame mapping structure of L1 signaling information according to an embodiment of the present invention.

Fig. 38 illustrates a frame mapping structure of L1 signaling information according to an embodiment of the present invention.

Fig. 39 illustrates a frame mapping structure of L1 signaling information according to another embodiment of the present invention.

Fig. 40 illustrates a frame mapping structure of L1 signaling information according to an embodiment of the present invention.

Fig. 41 illustrates a frame mapping structure of L1 signaling information according to an embodiment of the present invention.

Fig. 42 illustrates a frame mapping structure of L1 signaling information according to an embodiment of the present invention.

Fig. 43 illustrates a frame mapping structure of L1 signaling information according to another embodiment of the present invention.

Fig. 44 illustrates a frame mapping structure of L1 signaling information according to an embodiment of the present invention.

Fig. 45 illustrates a frame mapping structure of L1 signaling information according to an embodiment of the present invention.

Fig. 46 illustrates a frame structure of L1 signaling information according to an embodiment of the present invention.

Fig. 47 illustrates a frame mapping structure of L1 signaling information according to an embodiment of the present invention.

Fig. 48 illustrates a frame mapping structure of L1 signaling information according to another embodiment of the present invention.

Fig. 49 illustrates a frame mapping structure of L1 signaling information according to an embodiment of the present invention.

Fig. 50 illustrates a frame mapping structure of L1 signaling information according to an embodiment of the present invention.

Fig. 51 illustrates a frame mapping structure of L1 signaling information according to an embodiment of the present invention.

Fig. 52 illustrates a frame mapping structure of L1 signaling information according to an embodiment of the present invention.

Fig. 53 illustrates a frame mapping structure of L1 signaling information according to an embodiment of the present invention.

Fig. 54 illustrates a frame mapping structure of L1 signaling information according to another embodiment of the present invention.

Fig. 55 illustrates a frame mapping structure of L1 signaling information according to another embodiment of the present invention.

Fig. 56 illustrates a frame mapping structure of L1 signaling information according to another embodiment of the present invention.

Fig. 57 illustrates a frame mapping structure of L1 signaling information according to an embodiment of the present invention.

Fig. 58 illustrates a method for signaling an additional preamble according to an embodiment of the present invention.

Fig. 59 illustrates PILOT_PATTERN information signaled by an additional preamble according to an embodiment of the present invention.

Fig. 60 illustrates L1_PRE_SPREAD_LEN information signaled by an additional preamble according to an embodiment of the present invention.

Fig. 61 illustrates P2_SYMBOL_FLAG information signaled by an additional preamble according to an embodiment of the present invention.

Fig. 62 illustrates a frame mapping structure of L1 signaling information according to an embodiment of the present invention.

Fig. 63 illustrates a frame mapping structure of L1 signaling information according to another embodiment of the present invention.

Fig. 64 illustrates a frame mapping structure of L1 signaling information according to another embodiment of the present invention.

Fig. 65 illustrates a frame mapping structure of L1 signaling information according to another embodiment of the present invention.

Fig. 66 illustrates a frame mapping structure of L1 signaling information according to another embodiment of the present invention.

Fig. 67 illustrates a frame mapping structure of L1 signaling information according to another embodiment of the present invention.

Fig. 68 is a flowchart illustrating a method for transmitting broadcast signals according to an embodiment of the present invention.

[Best Mode]

Hereinafter, although the preferred embodiments of the present invention will be described in detail with reference to the accompanying drawings and contents as described with relation to the accompanying drawings, it is to be understood that the present invention is not limited to the embodiments.

Various technologies have been introduced to increase transmission efficiency and to perform robust communication in a digital broadcast system. One of such technologies is a method of using a plurality of antennas at a transmitting side or a receiving side. This method may be classified into a Single-Input Single-Output (SISO) scheme in which transmission is performed through a single antenna and reception is performed through a single antenna, a Single-Input Multi-Output (SIMO) scheme in which transmission is performed through a single antenna and reception is performed through multiple antennas, a Multi-Input Single-Output (MISO) scheme in which transmission is performed through multiple antennas and reception is performed through a single antenna, and a Multi-Input Multi-Output (MIMO) scheme in which transmission is performed through multiple antennas and reception is performed through multiple antennas. Although the multiple antennas may be exemplified by 2 antennas for ease of explanation in the following description, the description of the present invention may be applied to systems that use 2 or more antennas.

The SISO scheme corresponds to a general broadcast system that uses 1 transmission antenna and 1 reception antenna. The SIMO scheme corresponds to a broadcast system that uses 1 transmission antenna and a plurality of reception antennas.

The MISO scheme corresponds to a broadcast system that uses a plurality of transmission antennas and 1 reception antenna to provide transmit diversity. An example of the MISO scheme is an Alamouti scheme. In the MISO scheme, it is possible to receive data through 1 antenna without performance loss. Although a reception system can receive the same data through a plurality of reception antennas in order to improve performance, this case will be described as belonging to MISO cases in this specification.

The performance of a system that employs the MIMO technology depends on characteristics of a transmission channel. The efficiency of such a system is high, especially, when the system has independent channel environments. That is, the performance of the system that employs the MIMO technology may improve when channels of all antennas ranging from antennas of the transmitting side and antennas of the receiving side are independent channels that have no correlation to each other. However, in a channel environment in which the correlations between channels of transmission and reception antennas are very high as in a line-of-sight (LOS) environment, the performance of the system that employs the MIMO technology may be significantly reduced or the system may not be able to operate.

In addition, if the MIMO scheme is applied to a broadcast system that uses the SISO and MISO schemes, it is possible to increase data transmission efficiency. However, in addition to the above problems, there is a need to maintain compatibility to allow a receiver having a single antenna to receive services. Accordingly, the present invention suggests a method for solving such existing problems.

In addition, the present invention can provide a broadcast signal transmitter/receiver and a broadcast transmission and reception method for a conventional terrestrial broadcast system and a system that can transmit and receive additional broadcast signals (or enhanced broadcast signals), for example, mobile broadcast signals, while sharing an RF frequency band with a terrestrial broadcast system such as DVB-T2.

To accomplish this, in the present invention, it is possible to use a video coding method having scalability in which a basic video component which has low image quality although it is robust to a communication environment and an extended video component which is slightly weak to a communication environment although it can provide a high-quality image can be distinguishably transmitted. Although the present invention will be described with reference to SVC as a video coding method having scalability, the present invention may be applied to any other video coding methods. Embodiment of the present invention will be described in more detail with reference to the drawings.

A broadcast signal transmitter and receiver of the present invention can perform MISO processing and MIMO processing on a plurality of signals that are transmitted and received through a plurality of antennas. The following is a description of a broadcast signal transmitter and receiver that performs signal processing on 2 signals that are transmitted and received through 2 antennas.

Fig. 1 illustrates a broadcast signal transmitter using the MIMO scheme according to an embodiment of the present invention.

As shown in Fig. 1, the broadcast signal transmitter according to the present invention may include an input pre-processor 101100, an input processing module 101200, a Bit Interleaved Coded Modulation (BICM) encoder 101300, a frame builder 101400, and an Orthogonal Frequency-Division Multiplexing (OFDM) generator (or transmitter) 101500. The broadcast signal transmitter according to the present invention may receive a plurality of MPEG-TS streams or a General Stream Encapsulation (GSE) stream (or GS stream).

The input pre-processor 101100 may generate a plurality of PLPs (physical layer pipes) on a service basis in order to give robustness to a plurality of input streams, i.e., a plurality of MPEG-TS streams or GSE streams.

PLPs are data units that are identified in the physical layer. Specifically, a PLP is data having the same physical layer attribute which is processed in the transmission path and may be mapped on a cell by cell basis in a frame. In addition, a PLP may be considered a physical layer Time Division Multiplexing (TDM) channel that carries one or a plurality of services. Specifically, a path through which such a service is transmitted or a stream identifiable in the physical layer which is transmitted through the path is referred to as a PLP.

Thereafter, the input processing module 101200 may generate a Base Band (BB) frame including a plurality of generated PLPs. The BICM module 101300 may add redundancy to the BB frame to correct an error in a transmission channel and may interleave PLP data included in the BB frame.

The frame builder 101400 may accomplish a transmission frame structure by mapping the plurality of PLPs to a transmission frame and adding signaling information thereto. The OFDM generator 101500 may demodulate input data from the frame builder according to OFDM to divide the input data into a plurality of paths such that the input data is transmitted through a plurality of antennas.

Fig. 2 illustrates a broadcast signal receiver according to an embodiment of the present invention.

As shown in Fig. 2, the broadcast signal receiver may include an OFDM demodulator 107100, a frame parser 107200, a BICM decoder 107300, and an output processor 107400. The OFDM demodulator 107100 may convert signals received through a plurality of receive antennas into signals in the frequency domain. The frame parser 107200 may output PLPs for a necessary service from among the converted signals. The BICM decoder 107300 may correct an error generated according to a transmission channel. The output processor 107400 may perform procedures necessary to generate output TSs or GSs. Here, dual polarity signals may be input as input antenna signals and one or more streams may be output as the TXs or GSs.

Fig. 3 illustrates an additional frame structure based on PLP according to an embodiment of the present invention.

As shown in Fig. 3, a frame according to an embodiment of the present invention may include a preamble area and a data area. The preamble area may include a P1 symbol and a P2 symbol and the data area may include a plurality of data symbols. The P1 symbol may transmit P1 signaling information and P2 symbol may transmit L1-signaling information..

In this case, a preamble symbol may be additionally allocated to the preamble. This additional preamble symbol is referred to as an Additional Preamble 1 (AP1). In an embodiment of the present invention, one or more AP1 symbols may be added to a frame in order to improve detection performance of a mobile broadcast signal under very low SNR or time-selective fading conditions. AP1 signaling information transmitted through the AP1 symbol may include an additional transmission parameter.

AP1 signaling information according to an embodiment of the present invention includes pilot pattern information in a frame. Thus, according to an embodiment of the present invention the broadcast signal receiver does not transmit P2 symbol, if L1 signaling information is spread in data symbols of the data area, pilot pattern information can be discovered by using the AP1 signaling information before L1 signaling information in the data area is decoded.

Also, if the L1-signaling information in the data area of a frame is spread, AP1 signaling information can include information necessary for the broadcast signal receiver to decode signaling information spread in a frame of the data area. According to the present invention, a preamble area of a frame include a P1 symbol, more than one AP1 symbols, and more than one P2 symbols. And the data area comprises a plurality of data symbols, also known as data OFDM symbol. A P2 symbol is optional and whether it is inserted is determined by signaling AP1 signaling information through AP1 symbols according to an embodiment of the present invention.

In an embodiment of the present invention, a P1 insertion module in the OFDM generator OFDM generator 101500 of the broadcast signal transmitter may insert the P1 symbol and the AP1 symbol into every symbol. That is, the P1 insertion module may insert 2 or more preamble symbols into every frame. In another embodiment, an AP1 insertion module may be added downstream of (or next to) the P1 insertion module and the AP1 insertion module may insert the AP1 symbol. If 2 or more preamble symbols are used as in the present invention, there are advantages in that robustness to burst fading that may occur in a mobile fading environment is further increased and signal detection performance is also improved.

The P1 symbol may transmit P1 signaling information associated with a basic transmission parameter and transmission type and a corresponding preamble identifier and the receiver may detect the frame using the P1 symbol. A plurality of P2 symbols may be provided and may carry L1 signaling information and signaling information such as a command PLP. The L1 signaling information may include L1-pre signaling information and L1-post signaling information, common PLP may include network information such as a NIT(Network Information Table) or PLP information and service information such as an SDT(Service Description Table) or an EIT(Event Information Table). The preamble of the present invention may include only the P1 symbol, the L1-pre signaling information, and the L1-post signaling information or may include all of the P1 symbol, the L1-pre signaling information, the L1-post signaling information, and the common PLP according to designer intention. A plurality of data symbols located next to the P1 symbol may include a plurality of PLPs. The plurality of PLPs may include audio, video, and data TS streams and PSI/SI information such as a Program Association Table (PAT) and a Program Map Table (PMT). In the present invention, a PLP that transmits PSI/SI information may be referred to as a base PLP or a signaling PLP. The PLPs may include a type-1 PLP that is transmitted through one sub-slice per frame and a type-2 PLP that is transmitted through two sub-slices per frame. The plurality of PLPs may transmit one service and may also transmit service components included in one service. When the PLPs transmit service components, the transmitting side may transmit signaling information which indicates that the PLPs transmit service components.

In addition, additional data (or an enhanced broadcast signal) in addition to basic data may be transmitted through a specific PLP while sharing an RF frequency band with the conventional terrestrial broadcast system according to an embodiment of the present invention. In this case, the transmitting side may define a system or a signal that is currently transmitted through signaling information of the P1 symbol described above. The following description is given with reference to the case in which the additional data is video data. That is, as shown in Fig. 3, PLP M1 112100 and PLP (M1+M2) 112200 which are type 2 PLPs may be transmitted while including additional video data. In addition, in the present invention, a frame that transmits such additional video data may be referred to as an additional frame and a frame that transmits basic data may be referred to as a basic frame (or T2 frame).

In addition, a frame that can transmit not only additional data but also data associated with a new broadcast system different from the conventional terrestrial broadcast system may be referred to as an additional frame. In this case, a frame that transmits a conventional terrestrial broadcast may be referred to as a terrestrial broadcast frame and an additional frame may transmit additional data or basic data associated with the new broadcast system.

Fig. 4 illustrates a structure of an additional frame based on FEF according to an embodiment of the present invention.

Specifically, Fig. 4 shows the case in which a Future Extension Frame (FEF) is used in order to transmit additional video data. In the present invention, a frame that transmits basic video data may be referred to as a basic frame and an FEF that transmits additional video data may be referred to as an additional frame.

Fig. 4 shows structures of superframes 113100 and 113200 in each of which a basic frame and an additional frame are multiplexed. Frames 113100-1 to 113100-n that are not shaded from among frames included in the superframe 113100 are basic frames and shaded frames 113120-1 and 113120-2 are additional frames.

Fig. 4 (A) shows the case in which the ratio of basic frames to additional frames is N:1. In this case, the time required for the receiver to receive a next additional frame 113120-2 after receiving one additional frame 113120-1 may correspond to N basic frames.

Fig. 4(B) shows the case in which the ratio of basic frames to additional frames is 1:1. In this case, the proportion of additional frames in the superframe 113200 may be maximized and therefore the additional frames may have a structure very similar to that of the basic frames in order to maximize the extent of sharing with the basic frames. In addition, in this case, the time required for the receiver to receive a next additional frame 113210-2 after receiving one additional frame 113210-1 corresponds to 1 basic frame 113220 and therefore the superframe period is shorter than that of Fig. 4(A).

Figs. 5 (A) and 7(B) illustrate a P1 symbol generation procedure for identifying additional frames according to an embodiment of the present invention.

In the case in which additional video data is transmitted through additional frames which are distinguished from basic frames as shown in Fig. 4, there is a need to transmit additional signaling information for enabling the receiver to identify and process an additional frame. An additional frame of the present invention may include a P1 symbol for transmitting such additional signaling information and the P1 symbol may be referred to as a new_system_P1 symbol. This new_system_P1 symbol may be different from a P1 symbol that is used in a conventional frame and a plurality of new_system_P1 symbols may be provided. In an embodiment, the new_system_P1 symbol may be located before a first P2 symbol in a preamble area of the frame.

In the present invention, a P1 symbol of a conventional frame may be modified and used to generate the minimum Hamming distance. The present invention suggests a method in which a minimum Hamming distance is generated by modifying the structure of the P1 symbol of the conventional frame or is generated by changing the symbol generator 114100 that generates symbols.

Fig. 5(A) shows the structure of the P1 symbol of the conventional frame. In the present invention, the structure of the P1 symbol of the conventional frame shown in Fig. 5(A) may be modified to generate a minimum Hamming distance. In this case, the minimum Hamming distance may be generated by changing a frequency displacement f_SH for the prefix and postfix of the conventional P1 symbol or changing the length (specifically, the size of T_P1C or T_P1B) of the P1 symbol. However, in the case in which the minimum Hamming distance is generated by modifying the structure of the P1 symbol, there is a need to appropriately modify parameters (the sizes of T_P1C and T_P1B and f_SH) used in the P1 symbol structure.

Fig. 5(B) shows the P1 symbol generator that generates P1 symbols. In the present invention, the P1 symbol generator shown in Fig. 5(B) may be modified to generate a minimum Hamming distance. In this case, a minimum Hamming distance may be generated using a method which changes the distribution of active carriers used for a P1 symbol in a CDS table module 114110, an MSS module 114120, and a C-A-B structure module 114130 included in the P1 symbol generator (for example, a method in which the CDS table module 114110 uses a different Complementary Set of Sequence (CSS)) or a method which changes a pattern for information that is transmitted through a P1 symbol (for example, a method in which the MSS module 114120 uses a different Complementary Set of Sequence (CSS)).

In addition, the AP1 symbol of the present invention described above with reference to Fig. 3 may be generated through the procedure described above with reference to Fig. 5.

In addition, the present invention proposes a MIMO system using scalable video coding (SVC). SVC is a video coding method developed to cope with a variety of terminals and communication environments and variations in the terminals and communication environments. SVC can code a video hierarchically such that desired definition is generated and transmit additional video data having a base layer from which video data about an image having basic definition can be restored and an enhancement layer from which an image having higher definition can be restored. Accordingly, a receiver can acquire the basic definition image by receiving and decoding only the video data of the base layer, or obtain the higher definition image by decoding the video data of the base layer and the video data of the enhancement layer according to characteristics thereof. In the following description, the base layer can include video data corresponding to the base layer and the enhancement layer can include video data corresponding to the enhancement layer. In the following, video data may not be a target of SVC, the base layer can include data capable of providing a fundamental service including basic video/audio/data corresponding to the base layer, and the enhancement layer can include data capable of providing a higher service including higher video/audio/data corresponding to the enhancement layer.

The present invention proposes a method of transmitting the base layer of SVC through a path through which signals can be received according to SISO or MISO using SVC and transmitting the enhancement layer of SVC through a path through which signals can be received according to MIMO in the broadcast system of the present invention. That is, the present invention provides a method by which a receiver having a single antenna acquires an image with basic definition by receiving the base layer using SISO or MISO and a receiver having a plurality of antennas acquires an image with higher definition by receiving the base layer and the enhancement layer using MIMO.

A description will be given of a method of transmitting the MIMO broadcast data including the base layer and the enhancement layer in association with terrestrial broadcast frames for transmitting terrestrial broadcast signals.

(1) Method of transmitting MIMO broadcast data using predetermined PLP

It is possible to transmit the MIMO broadcast data included in a predetermined PLP while distinguishing the predetermined PLP from a PLP including terrestrial broadcast data. In this case, the predetermined PLP is used to transmit the MIMO broadcast data, and signaling information for describing the predetermined PLP may be additionally transmitted to prevent an error in the conventional receiving system. In the following, the predetermined PLP including the MIMO broadcast data may be referred to as a MIMO broadcast PLP and the PLP including the terrestrial broadcast data may be referred to as a terrestrial broadcast PLP.

As MIMO broadcast data may not be implemented in a terrestrial broadcast receiver, it is necessary to have additional information for signaling to distinguish terrestrial PLP and MIMO broadcast PLP. In this case, signaling can use a reserved field in the L1 signaling information of the terrestrial broadcast system. When a plurality of antenna is used for transmitting MIMO broadcast data on the transmitting side, the terrestrial broadcast data can be transmitted by MISO. The present invention, in order to perceive PLP, utilizes L1-post signaling information.

(2) Method of transmitting MIMO broadcast data using predetermined frame

It is possible to include the MIMO broadcast data generated as described above in a predetermined frame and to transmit the predetermined frame including the MIMO broadcast data while distinguishing the predetermined frame from a terrestrial broadcast frame. In this case, the predetermined frame is used to transmit the MIMO broadcast data, and signaling information for describing the predetermined frame may be additionally transmitted to prevent an error in the conventional receiving system.

Fig. 6 shows a conceptual diagram for a method of transmitting broadcast signals.

As shown in Fig. 6, terrestrial broadcast data and MIMO broadcast data in frame units can be distinctively transmitted. The FEF length of a MIMO broadcast frame (FEF) can be allocated in between terrestrial broadcast frames in an FEF interval. In this case, MIMO system data can co-exist in a frequency band within the terrestrial broadcast system, and malfunction can be prevented by the broadcast signal receiver perceiving a frame through L1 signaling and ignoring MIMO broadcast frames. In that case, the MIMO system can use some of the thruput by FEF related parameters such as FEF_TYPR, FEF_LENGTH, FEF_INTERVAL defined by the L1-post signaling information.

(3) Method of transmitting MIMO broadcast PLP using terrestrial broadcast frame and MIMO broadcast frame

PLPs including MIMO broadcast data may be transmitted through a terrestrial broadcast frame and a MIMO broadcast frame. Since a MIMO broadcast PLP may be present in the terrestrial broadcast frame (or basic frame), distinguished from the above-mentioned embodiments, it is necessary to signal the relationship between connected PLPs present in the terrestrial broadcast frame and the MIMO broadcast frame. To achieve this, the MIMO broadcast frame may also include L1 signaling information, and information about the MIMO broadcast PLP present in the broadcast frame may be transmitted along with L1 signaling information of the terrestrial broadcast frame.

MIMO broadcast PLP data in different frames are connected by using PLP fields including L1-post signaling information. According to an embodiment of the present invention, the receiving system includes as L1-post signaling information PLP_ID information, PLP+TYPE information, PLP_PAYLOAD_TYPE information, PLP_GROYP_ID information, uses those information to check the PLP connection between MIMO broadcast PLP data. It then acquires services by continuously decoding desired MIMO broadcast PLP data.

Terrestrial broadcast PLP in the terrestrial broadcast frames can be transmitted as a preset mode and also as mentioned a new mode to support the MIMO system can be transmitted. According to an embodiment of the present invention, the MIMO broadcast PLP in the terrestrial broadcast frames as a base layer can be transmitted by MISO or SISO method and MIMO broadcast PLP in MIMO broadcast frames as an enhancement layer can be transmitted by the MIMO method.

Fig. 7 shows broadcast signals transmitted by a broadcast system being applied by a MIMO system using a SVC.

Fig. 7 shows a broadcast signal that allocates terrestrial data and MIMO broadcast data to a frame or PLP by using the SVC and generating a base and enhancement layer.

Fig. 7A shows a broadcast signal transmitted by a broadcast system being applied by a MIMO transmitting system by using the SVC.

The broadcast system in Fig. 7A transmits broadcast signals including a terrestrial broadcast frame and MIMO broadcast frame. The MIMO broadcast PLP in Fig. 7A can exist in a terrestrial broadcast frame or a MIMO broadcast frame. The MIMO broadcast PLP in the terrestrial broadcast frame as a base layer can be transmited by the SISO or MISO method and the MIMO broadcast PLP in the MIMO broadcast frame as an enhancement layer can be transmitted by the SISO, MISO, or MIMO method.

Fig. 7B shows a broadcast signal being applied by a MIMO transmitting system using a SVC.

In Fig. 7B, the broadcast system transmits broadcast signals including the terrestrial broadcast frame and the MIMO broadcast frame. The MIMO broadcast PLP in Fig. 7 B only exists in the MIMO broadcast frame. In that case, the MIMO broadcast PLP indludes PLP with a base layer and PLP with an enhancement layer. The PLP with the base layer can be transmitted by the SISO or MISO method, and the PLP with the enhancement layer can be transmitted by the SISO, MISO, or MIMO method. The rate of the PLP with base layer and the PLP with enhancement layer can be varied from 0 to 100%.

Fig. 7C shows a broadcast signal transmitted by a broadcast system being applied by a MIMO transmitting system using a SVC.

The broadcast system of Fig. 7C transmits broadcast signals including terrestrial broadcast frames and MIMO broadcast frames. The MIMO broadcast data exists only in the MIMO broadcast frame. But, as opposed to Fig. 7B, a base layer and an enhancement layer are not transmitted by PLP but carriers.

Various technologies are introduced to improve transmission efficiency and perform robust communication in a digital broadcast system. One of the technologies is a method of using a plurality of antennas at a transmitting side or a receiving side. This method may be divided into SISO(Single-Input Single-Output), SIMO(Single-Input Multi-Output), MISO(Multi-Input Sinle-Output) and MIMO(Multi-Input Multi-Output). While multiple antennas are described as two antennas in the following, the present invention is applicable to systems using two or more antennas.

SISO is a normal broadcast system using a single transmit antenna and a single receive antenna. SIMO is a broadcast system using a single transmit antenna and multiple receive antennas.

MISO is a broadcast system that provides transmission diversity using a plurality of transmit antennas and a plurality of receive antennas. An example of MISO is Alamouti scheme. MISO can receive data using a single antenna without performance loss. While a reception system may receive the same data through a plurality of receive antennas for performance improvement, this is included in MISO in the specification.

MIMO is a broadcast system that provides transmit/receive diversity and high transmission efficiency using a plurality of transmit antennas and a plurality of receive antennas. MIMO can process signals differently in temporal and spatial dimensions and transmit a plurality of data streams through parallel paths simultaneously operating in the same frequency band to achieve diversity and high transmission efficiency.

In an embodiment, MIMO can use spatial multiplexing (SM) and Golden code (GC) schemes, which will be described in detail.

A modulation scheme in broadcast signal transmission may be represented as M-QAM (Quadrature Amplitude Modulation) in the following description. That is, BPSK (Binary Phase Shift Keying) can be represented by 2-QAM when M is 2 and QPSK (Quadrature Phase Shift Keying) can be represented by 4-QAM when M is 4. M can indicate the number of symbols used for modulation.

A description will be given of a case in which a MIMO system transmits two broadcast signals using two transmit antennas and receives two broadcast signals using two receive antennas as an example.

Fig. 8 illustrates MIMO transmission and reception systems according to an embodiment of the present invention.

As shown in Fig. 8, the MIMO transmission system includes an input signal generator 201010, a MIMO encoder 201020, a first transmit antenna 201030, and a second transmit antenna 201040. In the following, the input signal generator 201010 may be referred to as a divider and the MIMO encoder 201020 may be referred to as a MIMO processor.

The MIMO reception system may include a first receive antenna 201050, a second receive antenna 201060, a MIMO decoder 201070, and an output signal generator 201080. In the following, the output signal generator 201080 may be referred to as a merger and the MIMO decoder 101070 may be referred to as an ML detector.

In the MIMO transmission system, the input signal generator 201010 generates a plurality of input signals for transmission through a plurality of antennas. In the following, the input signal generator 201010 may be referred to as a divider. Specifically, the input signal generator 201010 may divide an input signal for transmission into 2 input signals and output the first input signal S1 and the second input signal S2 for MIMO transmission.

The MIMO encoder 201020 may perform MIMO encoding on the plurality of input signals S1 and S2 and output a first transmission signal St1 and a second transmission signal St2 for MIMO transmission and the output transmission signals may be transmitted through a first antenna 201030 and a second antenna 201040 via required signal processing and modulation procedures. The MIMO encoding 201020 may perform encoding on a per symbol basis. The SM scheme or the GC scheme may be used as the MIMO encoding method. In the following, the MIMO encoder may be referred to as a MIMO processor. Specifically, the MIMO encoder may process a plurality of input signals according to a MIMO matrix and a parameter value of the MIMO matrix which are described below.

The input signal generator 201010 is an element that outputs a plurality of input signals for MIMO encoding and may also be an element such as a demultiplexer or a frame builder depending on the transmission system. The input signal generator 201010 may also be included in the MIMO encoder 201020 such that the MIMO encoder 201020 generates a plurality of input signals and performs encoding on the plurality of input signals. The MIMO encoder 201020 may be a device that performs MIMO encoding or MIMO processing on a plurality of signals and outputs the encoded or processed signals so as to acquire diversity gain and multiplexing gain of the transmission system.

Since signal processing should be performed on a plurality of input signals after the input signal generator 201010, a plurality of devices may be provided next to the input signal generator 201010 to process signals in parallel or one device including one memory may be provided to sequentially process signals or to simultaneously process signals in parallel.

The MIMO reception system receives a first reception signal Sr1 and a second reception signal Sr2 using a first receive antenna 201050 and a second receive antenna 201060. The MIMO decoder 201070 then processes the first reception signal and the second reception signal and outputs a first output signal and a second output signal. The MIMO decoder 201070 processes the first reception signal and the second reception signal according to the MIMO encoding method used by the MIMO encoder 201020. As an ML detector, the MIMO decoder 201070 outputs a first output signal and a second output signal using information regarding the channel environment, reception signals, and the MIMO matrix used by the MIMO encoder in the transmission system. In an embodiment, when ML detection is performed, the first output signal and the second output signal may include probability information of bits rather than bit values and may also be converted into bit values through FEC decoding.

The MIMO decoder of the MIMO reception system processes the first reception signal and the second reception signal according to the QAM type of the first input signal and the second input signal processed in the MIMO transmission system. Since the first reception signal and the second reception signal received by the MIMO reception system are signals that have been transmitted after being generated by performing MIMO encoding on the first input signal and the second input signal of the same QAM type or different QAM types, the MIMO reception system may determine a combination of QAM types of the reception signals to perform MIMO decoding on the reception signals. Accordingly, the MIMO transmission system may transmit information identifying the QAM type of each transmission signal in the transmission signal and the QAM type identification information may be included in a preamble portion of the transmission signal. The MIMO reception system may determine the combination of the QAM types of the reception signals from the QAM type identification information of the transmission signals and perform MIMO decoding on the reception signals based on the determination.

The following is a description of a MIMO encoder and a MIMO encoding method that have low system complexity, high data transmission efficiency, and high signal reconstruction (or restoration) performance in various channel environments according to an embodiment of the present invention.

The SM scheme is a method in which data is simultaneously transmitted through a plurality of antennas without MIMO encoding. In this case, the receiver can acquire information from data that is simultaneously received through a plurality of receive antennas. The SM scheme has an advantage in that the complexity of a Maximum Likelihood (ML) decoder that the receiver uses to perform signal reconstruction (or restoration) is relatively low since the decoder only needs to check a combination of received signals. However, the SM scheme has a disadvantage in that transmit diversity cannot be achieved at the transmitting side. In the case of the SM scheme, the MIMO encoder bypasses a plurality of input signals. In the following, such a bypass process may be referred to as MIMO encoding.

The GC scheme is a method in which data is transmitted through a plurality of antennas after the data is encoded according to a predetermined rule (for example, according to an encoding method using golden code). When the number of the antennas is 2, transmit diversity is acquired at the transmitting side since encoding is performed using a 2x2 matrix. However, there is a disadvantage in that the complexity of the ML decoder of the receiver is high since the ML decoder needs to check 4 signal combinations.

The GC scheme has an advantage in that it is possible to perform more robust communication than using the SM scheme since transmit diversity is achieved. However, such a comparison has been made when only the GC scheme and the SM scheme are used for data processing for data transmission and, if data is transmitted using additional data coding (which may also be referred to as outer coding), transmit diversity of the GC scheme may fail to yield additional gain. This failure easily occurs especially when such outer coding has a large minimum Hamming distance. For example, the transmit diversity of the GC scheme may fail to yield additional gain compared to the SM scheme when data is transmitted after being encoded by adding redundancy for error correction using a Low Density Parity Check (LDPC) code having a large minimum Hamming distance. In this case, it may be advantageous for the broadcast system to use the SM scheme having low complexity.

Fig. 9 illustrates a data transmission and reception method according to MIMO transmission of the SM scheme in a channel environment according to an embodiment of the present invention.

The MIMO transmission system may transmit input signal 1 (S1) and input signal 2 (S2) respectively through transmit antenna 1 and transmit antenna 2 according to the SM scheme. Fig. 13 illustrates an embodiment in which the transmitting side transmits a symbol modulated according to 4-QAM.

The transmit antenna 1 receives a signal through two paths. In the channel environment of Fig. 13, the received signal of the receive antenna 1 is $S1^*h_{11} + S2h_{21}$ and the received signal of the receive antenna 2 is $S1^*h_{12} + S2h_{22}$. The receiving side may acquire S1 and S2 through channel estimation to reconstruct data.

This is a scenario in which the transmission and reception paths are independent of each other. In the following, such an environment is referred to as being uncorrelated. On the other hand, channels of the transmission and reception paths may have a very high correlation with each other as in a Line Of Sight (LOS) environment, which is referred to as being fully correlated in the following description.

In the case in which channels are fully correlated in MIMO, each channel may be represented by a 2x2 matrix whose elements are all 1 (i.e., $h_{11}=h_{12}=h_{21}=h_{22}=1$) as shown in Fig. 9. Here, the receive antenna 1 and the receive antenna 2 receive the same reception signal (S1+S2). That is, if signals transmitted through 2 transmit antennas pass through the same channel and are received by 2 receive antennas, a reception signal received by the receiver, i.e., data added (or combined) through the channel, cannot express both symbols S1 and S2. As shown in Fig. 9, in the fully correlated channel environment, the receiver cannot receive a 16-QAM symbol, into which the signal S1 represented by a 4-QAM symbol and the signal S2 represented by a 4-QAM symbol are combined and the receiver cannot separate and reconstruct the signals S1 and S2 since the receiver receives a combined signal S1+S2 represented by 9 symbols as shown on the right side of Fig. 9. In the following, a received signal that has passed through fully correlated channels may be represented by a signal corresponding to the sum of signals transmitted by the transmission system. That is, the MIMO encoding method will now be described on the assumption that, when the transmission system having two antennas transmits a first transmission signal and a second transmission signal, a received signal that has passed through the fully correlated channels corresponds to the sum of the first and second transmission signals.

In this case, the receiver cannot reconstruct a signal received according to MIMO using the SM scheme even when the receiver is in a very high SNR environment. In the case of a communication system, communication is generally performed in two ways and therefore such a channel environment may be signaled to the transmitter through a feedback channel established between the transmitter and the receiver to allow the transmitter to change the transmission method. However, in the case of a broadcast system, it may be difficult to perform bidirectional communication through a feedback channel and one transmitter covers a large number of receivers and a large range and therefore it may be difficult to deal with various channel environment changes. Accordingly, if the SM scheme is used in such a fully correlated channel environment, the receiver cannot receive services and it is difficult to deal with such an environment, increasing costs, unless the coverage of the broadcast network is reduced.

The following is a description of a method for dealing with the case in which the correlation between MIMO channels is 1, i.e., the case in which channels are in a fully correlated channel environment.

The present invention suggests that a MIMO system be designed such that signals received through MIMO channels satisfy the following conditions so as to deal with the case in which the MIMO channels are fully correlated.

1) A received signal should be able to represent both original signals S1 and S2. That is, coordinates of a constellation received by the receiver should be able to uniquely represent sequences of S1 and S2.
2) A minimum Euclidean distance of a received signal should be increased so as to reduce symbol error rate.
3) Hamming distance characteristics of a received signal should be good so as to reduce bit error rate.

First, the present invention suggests a MIMO encoding method that uses a MIMO encoding matrix including an encoding factor "a" as expressed in the following Expression 1 so as to satisfy such requirements.

[Expression 1]

$$\begin{bmatrix} 1 & a \\ a & -1 \end{bmatrix}$$

When a MIMO encoder encodes input signals S1 and S2 using a MIMO encoding matrix as shown in Expression 1, reception signal 1 (Rx1) and reception signal 2 (Rx2) received by antenna 1 and antenna 2 are calculated as expressed in the following Expression 2. The reception signal 1 (Rx1) and reception signal 2 (Rx2) are calculated as expressed in the last line of Expression 2, especially, when MIMO channels are fully correlated.

[Expression 2]

$$\begin{array}{l} Rx_1 = h_{11}(S1 + aS2) + h_{21}(aS1 - S2) \\ Rx_2 = h_{12}(S1 + aS2) + h_{22}(aS1 - S2) \end{array}, if\ h_{11} = h_{21} = h_{12} = h_{22} = h,$$
$$R = Rx_1 = Rx_2 = h\{(a+1)S1 + (a-1)S2\}$$

First, when MIMO channels are uncorrelated, the reception signal 1 (Rx1) is calculated as Rx1 = $h_{11}$(S1+a*S2)+$h_{21}$(a*S1-S1) and the reception signal 2 (Rx2) is calculated as Rx2 = $h_{12}$(S1+a*S2)+$h_{22}$(a*S1-S2). Thus, since the signals S1 and S2 have the same power, it is possible to use gain of the MIMO system together with the SM scheme. When MIMO channels are fully correlated, the reception signals (R=Rx1=Rx2) expressed as R = h{(a+1)S1+(a-1)S2} are acquired and therefore it is possible to separate and acquire the signals S1 and S2 and the signals S1 and S2 are designed such that both have different power and therefore it is possible to secure robustness accordingly.

That is, the MIMO encoder may encode input signals S1 and S2 such that the input signals S1 and S2 have different powers according to the encoding factor "a" and are also received with different distributions even in fully correlated channels. For example, input signals S1 and S2 may be encoded such that both have different powers and the encoded signals may then be transmitted using constellations which have different Euclidean distances through normalization to allow the receiver to separate and reconstruct the input signals even when the signals have passed through fully correlated channels.

The MIMO encoding matrix described above may be represented as Expression 3 taking into consideration a normalization factor.

[Expression 3]

$$\frac{1}{\sqrt{1+a^2}}\begin{pmatrix} 1 & a \\ a & -1 \end{pmatrix} = \begin{pmatrix} \frac{1}{\sqrt{1+a^2}} & \frac{a}{\sqrt{1+a^2}} \\ \frac{a}{\sqrt{1+a^2}} & \frac{-1}{\sqrt{1+a^2}} \end{pmatrix} = \begin{bmatrix} \cos\theta & \sin\theta \\ \sin\theta & -\cos\theta \end{bmatrix}$$

MIMO encoding of the MIMO encoder that uses the MIMO encoding matrix (or rotation matrix) shown in Expression 3 may be considered as rotating the input signals by an arbitrary angle of θ that can be represented by the encoding factor a, separating the cosine and sine components (or real and imaginary components) of the rotated signals, assigning positive and negative (+/-) signs to the separated components, and transmitting the separated components through different antennas. For example, the MIMO encoder may encode the input signals S1 and S2 such that the cosine component of the input signal S1 and the sine component of the input signal S2 are transmitted through one transmit antenna and the sine component of the input signal S1 and the cosine component of the input signal S2 to which a negative sign is attached are transmitted through another transmit antenna. The angle, by which the input signals are rotated, changes according to change of the value of the encoding factor "a" and the power distributions of the input signals S1 and S2 become different according to the value of the factor and the angle. Since the power distribution difference can be represented by a distance between symbol coordinates in the constellations, the encoded input signals can be represented by different constellations even when the input signals are received by the receiving side via fully correlated channels such that it is possible to identify and separate the signals, thereby enabling reconstruction of the original input signals.

Specifically, the Euclidian distances of transmission signals change as the power distributions change, the transmission signals received by the receiving side can be represented by identifiable constellations having different Euclidian distances such that it is possible to reconstruct the signals even when the signals have passed through a fully correlated channel. That is, the MIMO encoder can encode the input signal S1 and the input signal S2 into signals having different Euclidian distances according to the value "a" and the receiving side can receive and reconstruct the encoded and transmitted signals using identifiable constellations.

MIMO encoding of the input signals using the above-described MIMO encoding matrix may be represented as Expression 4.

[Expression 4]

$$\begin{pmatrix} X1 \\ X2 \end{pmatrix} = \frac{1}{\sqrt{1+a^2}} \begin{pmatrix} 1 & a \\ a & -1 \end{pmatrix} \begin{pmatrix} S1 \\ S2 \end{pmatrix}$$

In Expression 4, S1 and S2 respectively represent normalized QAM symbols of constellations mapped by symbol mappers on MIMO paths of the input signals S1 and S2. X1 and X2 respectively denote MIMO-encoded symbols. That is, the MIMO encoder can apply the matrix as represented by Expression 4 to the first input signal including the symbols corresponding to S1 and the second input signal including the symbols corresponding to S2 to output a first transmission signal including the symbols corresponding to X1 and a second transmission signal including the symbols corresponding to X2.

The MIMO encoder may perform encoding on input signals using the MIMO encoding matrix described above while additionally adjusting the encoding factor a. That is, it is possible to adjust and optimize the encoding factor "a" taking into consideration additional data reconstruction performance of the MIMO transmission and reception system.

1. First Embodiment: MIMO encoding method that optimizes the encoding factor "a" taking into consideration Euclidian distances (in a fully correlated MIMO channel environment)

It is possible to calculate the encoding factor value "a" taking into consideration the Euclidean distance while using the MIMO encoding matrix. In a MIMO system having two transmit antennas and two receive antennas, when transmission signal St1 is an M-QAM symbol and transmission signal St2 is an N-QAM symbol, a signal St1+St2 that is received by the receiving side via a fully correlated MIMO channel is an (M*N)-QAM signal.

The first embodiment of the present invention suggests a method for optimizing the value "a" such that symbols have the same Euclidian distance in a constellation 205050 of a symbol of a reception signal that has passed through a fully correlated channel. That is, in the case in which input signals are encoded using the MIMO matrix, it is possible to calculate or set the value of the encoding factor "a" such that reception symbols have the same Euclidean distances in a constellation of a reception signal that has passed through a fully correlated channel and to encode the input signals using the calculated or set value "a" of the encoding factor. Such a value "a" may be represented by Expression 5 for each modulation scheme combination.

[Expression 5]

$$a = \begin{cases} 3 & \text{, for QPSK + QPSK} \\ \left(4+\sqrt{5}\right)/\left(4-\sqrt{5}\right) & \text{, for QPSK + 16QAM} \\ 0.6 & \text{, for 16QAM + 16QAM} \end{cases}$$

That is, the distribution and constellation of the transmission and reception symbols can be changed according to modulation schemes of the reception signals and a combination of the modulation schemes and the Euclidean distance changes according to the distribution and constellation of the symbols and therefore the value "a" for optimizing the Euclidean distance may also change accordingly. Expression 5 also shows an encoding factor value "a" for optimizing the Euclidean distance calculated when transmission and reception signals are a combination of 4-QAM and 16-QAM (i.e., QPSK+16-QAM) and an encoding factor value "a" calculated when transmission and reception signals are a combination of 16-QAM and 16-QAM (i.e., 16-QAM+16-QAM).

In other words, in the first embodiment, the value "a" is set such that the constellation of a signal obtained by summing first and second transmission signals that are obtained by MIMO-encoding first and second 4-QAM input signals, for example, is identical to the constellation of a 16-QAM signal.

2. Second Embodiment: MIMO encoding method taking into consideration gray mapping in addition to Euclidian distance

The second embodiment suggests a MIMO encoding method in which an encoding factor value "a" is set so as to optimize the Euclidean distance, similar to the first embodiment, and MIMO encoding is performed such that a reception signal that has passed through a fully correlated channel has a gray mapping (or gray mapping form).

In the MIMO encoding method of the second embodiment, at the receiving side, the signs of real and imaginary parts of the input signal S2 among the input signals S1 and S2 may be changed according to a value of the input signal S1 such that each signal becomes a gray mapping signal. Data values included in the input signal S2 may be changed using a method represented by the following Expression 6.

That is, the MIMO encoder may perform MIMO encoding after changing signs of the input signal S2 according to the value of the input signal S1 while using the same MIMO encoding factor as used in the first embodiment. In other words, the sign of the input signal S2 may be determined according to the sign of the input signal S1, and then the MIMO encoding matrix may be applied to the first and second input signals S1 and S2 to output the first and second transmission signals, as described above.

[Expression 6]

$$S1 = b_0 b_1 \ldots b_{N-1}, \quad N = \log_2 M, \quad M = \text{QAM size of } S1$$
$$real(S1) = b_0 b_2 \ldots b_{N-2}$$
$$imag(S1) = b_1 b_3 \ldots b_{N-1}$$
$$for\ i = 1 \ldots N-1$$
$$\quad si = sq = 1$$
$$\quad if\ i = index\ of\ real(S1)\ and\ b_i = 1$$
$$\quad\quad si = -si$$
$$\quad if\ i = index\ of\ imag(S1)\ and\ b_i = 1$$
$$\quad\quad sq = -sq$$
$$end\ for$$
$$S2 = si \cdot real(S2) + i \cdot sq \cdot imag(S2)$$

If bit values assigned to the real and imaginary parts of the input signal S1 among the input signals S1 and S2 and are XORed as in Expression 6 and the signs of the real and imaginary parts are determined according to the XORed value and transmission signal 1 and transmission signal 2 are transmitted respectively through antenna 1 and antenna 2, then reception symbols of a reception signal, which is received by the receiver via a fully correlated channel, have a gray mapping form such that the Hamming distance between adjacent symbols in the constellation does not exceed 2.

Since an (M*N)-QAM signal received by the receiver has a minimum Euclidean distance and a gray mapping form, the second embodiment may achieve the same performance as the SIMO scheme even in a fully correlated MIMO channel environment. However, when signals S1 and S2 are acquired by decoding the reception signal at the ML decoder, complexity may be increased since the value of S2 depends on the value of S1 and performance may be degraded due to the correlation between input signals in an uncorrelated MIMO channel.

3. Third Embodiment: MIMO encoding method that sets MIMO encoding factor taking into consideration Hamming distance in addition to Euclidian distance

The third embodiment suggests a method in which MIMO encoding is performed by setting an encoding factor value "a" so as to optimize the Euclidian distance taking into consideration the Hamming distance of a reception signal rather than allowing the entire constellation of the reception signal to have a Euclidian distance as in the first embodiment.

In the third embodiment, a Hamming distance of interval D_E1 is smaller than a Hamming distance of interval D_E2 in the constellation of the reception signal and therefore the Euclidian distance is adjusted so as to compensate for the Hamming distance difference by maintaining the power difference between the interval D_E1 and the interval D_E2 such that the power of the interval D_E1 is twice the power of the interval D_E2. That is, the Euclidian distance is adjusted so as to compensate for the reconstruction performance difference due to the Hamming distance difference using the power difference. This may be represented by Expression 7.

[Expression 7]

$$2D_{H_1} = D_{H_2}$$
$$\sqrt{2}D_{E_1} = D_{E_2}$$
$$2\sqrt{2}(a-1) = 2((a+1)-3(a-1))$$
$$a = \frac{\sqrt{2}+4}{\sqrt{2}+2}$$

That is, the MIMO encoder performs MIMO encoding on input signals by distributing different powers to the input signals using the MIMO matrix such that the signals have different Euclidian distances. In this case, the MIMO encoder may perform MIMO encoding by calculating and setting the encoding factor value "a" such that input signals with distributed power have Euclidian distances for compensating for a Hamming distance difference according to the third embodiment.

In the example described above expression 7, the value "a" is calculated when the input signal S1 is a 16-QAM signal and the input signal S2 is also a 16-QAM signal. The value "a" of a different modulation scheme may be calculated as shown in Expression 8 using the same principle.

[Expression 8]

$$a = \begin{cases} \sqrt{2}+1 & \text{, for QPSK + QPSK} \\ \left(\sqrt{2}+3+\sqrt{5}\right)/\left(\sqrt{2}+3-\sqrt{5}\right) & \text{, for QPSK + 16QAM} \\ \left(\sqrt{2}+4\right)/\left(\sqrt{2}+2\right) & \text{, for 16QAM + 16QAM} \end{cases}$$

Here, it is assumed that, in the case of QPSK+16-QAM MIMO, the values suggested above are obtained when power of the input signals S1 and S2 has been normalized to 1 after the input signals S1 and S2 are QAM-modulated through QPSK and 16-QAM, respectively, at the symbol mapper. When the power has not been normalized, the value "a" may be modified accordingly.

In addition, in the case of QPSK+16-QAM, a value of 4.0 other than the above-suggested values may be used as the value "a". The reason for this is that the combined signal can represent all input signals S1 and S2 even when the SM scheme is applied in a fully correlated channel environment. In this case, a value of 4.0 or a value close to 4.0 may be used instead of the value calculated using Expression 9 in order to compensate a high code rate of the outer code.

When the second embodiment and the third embodiment are compared with reference to the above descriptions and charts, it can be seen that the second embodiment exhibits the same performance as SIMO in a fully correlated MIMO channel environment and thus does not suffer any performance loss, thereby solving the problems of the MIMO scheme in a fully correlated MIMO channel environment. However, in the second embodiment, input signals S1 and S2 are not independent of each other due to MIMO encoding such that the signal S2 changes according to the signal S1, thereby causing performance degradation in an uncorrelated channel. Accordingly, iterative ML detection may be used in order to solve the problem that reception and decoding errors of the signal S1 are reflected in the signal S2, causing an additional decoding error of the signal S2.

In the iterative ML detection method, an outer code is included in an iterative loop and a detection error of the signal S1 is reduced using a soft posteriori probability value of the signal S1 output from an outer port as an a priori probability value of the ML detector, thereby reducing the probability of application of the detection error of the signal S1 for detection of the signal S2. This method allows the MIMO encoding method of the second embodiment to exhibit performance of the SIMO system in a fully correlated MIMO channel environment and exhibit performance of the SIMO system in an uncorrelated MIMO channel environment.

In the MIMO encoding method of the third embodiment, a reception signal received through a fully correlated MIMO channel is designed taking into consideration both the Hamming distance and the Euclidian distance. Accordingly, the MIMO encoding method of the third embodiment not only has better performance in a fully correlated MIMO channel but also has no performance loss compared to the SM scheme in an uncorrelated MIMO channel such that it is possible to use both MIMO transmission and reception gains. In this case, there is an advantage in implementation of the receiver since the receiver has complexity similar to the SM scheme.

Power imbalance may occur between signals that are transmitted through respective communication paths when MIMO transmission and reception is performed. That is, signals transmitted through a plurality of transmission antennas may be received by a receiver with different powers. In the worst case, only a signal transmitted by one transmission antenna may be received by the receiver. The following is a description of a MIMO encoding method which can minimize performance degradation in such a power imbalance situation. Especially, a MIMO encoding method in which MIMO encoding is performed by additionally taking into consideration a power imbalance situation while using the MIMO encoding matrix of the present invention having an encoding factor as described above.

4. Fourth Embodiment: MIMO encoding method for minimizing encoding factor value "a" taking into consideration Euclidian distance of transmission signal

The value "a" may be calculated taking into consideration the Euclidian distance of the transmission signal while using the MIMO encoding matrix described above. In a MIMO system having 2 transmission antennas and 2 reception antennas, when an input signal S1 is an M-QAM symbol and an input signal S2 is an N-QAM symbol, a signal S1+S2 received by a receiving side via a fully correlated MIMO channel is an (M*N)-QAM signal.

Although the value "a" may be determined by optimizing the Euclidian distance with reference to a reception signal as described above in the first embodiment, this may degrade decoding performance in a power imbalance situation. Accordingly, if the Euclidian distance is optimized with reference to transmission signals from the transmitting side, it is possible to minimize performance degradation that occurs in a power imbalance situation at the receiving side. The value "a" for optimizing the Euclidian distance with reference to transmission signals may be represented by Expression 9.

[Expression 9]

$$a = \begin{cases} 2 & ,\text{for QPSK} + \text{QPSK} \\ 4 & ,\text{for16QAM} + 16\text{QAM} \end{cases}$$

Accordingly, it can be understood that, when the MIMO encoding method of the fourth embodiment is used, it is possible to minimize reception performance degradation since the Euclidian distance of the transmission signals received in a power imbalance situation has been optimized.

However, a different value needs to be used when symbol types of input signals are different as in the QPSK+16-QAM transmission method. The reason for this is that, when modulation schemes of input signals used for MIMO transmission are different, a trade-off problem occurs such that, if the optimized value "a" is used for one transmission antenna, then a signal having relatively low performance is transmitted through another transmission antenna.

5. Fifth Embodiment: MIMO encoding method taking into consideration gray mapping in addition to Euclidian distance of transmission signal

The fifth embodiment suggests a MIMO encoding method in which an encoding factor value "a" is set so as to optimize the Euclidean distance of the transmission signal, similar to the fourth embodiment, and MIMO encoding is performed such that a transmission signal that has passed through a fully correlated channel has a gray mapping (or gray mapping form) in a power imbalance situation.

In the MIMO encoding method of the fifth embodiment, the signs of real and imaginary parts of the input signal S2 among the input signals S1 and S2 may be changed according to a value of the input signal S1 such that each transmission signal becomes a gray mapping signal. Similar to the second embodiment, data values included in the input signal S2 may be changed using a method represented by Expression 6 described above.

Bit values assigned to the real and imaginary parts of the input signal S1 among the input signals S1 and S2 may be XORed as in Expression 6 and the signs of the real and imaginary parts may be determined according to the XORed value and transmission signal 1 and transmission signal 2 having a gray mapping form may then be transmitted respectively through antenna 1 and antenna 2.

Since a (M*N)-QAM signal transmitted by the transmitting side has a minimum Euclidean distance and a gray mapping, the fifth embodiment may achieve the same performance as the SIMO scheme even in a power imbalance situation. However, when signals S1 and S2 are acquired by decoding the reception signal at the ML decoder, complexity may be increased since the value of S2 depends on the value of S1.

6. Sixth Embodiment: MIMO encoding method taking into consideration Hamming distance in addition to Euclidian distance of transmission signal

In the sixth embodiment, an encoding factor value "a" is set so as to optimize the Euclidian distance taking into consideration the Hamming distance of a transmission signal rather than allowing the entire constellation of the transmission signal to have a Euclidian distance as in the fourth embodiment. Specifically, it is possible to design an encoding matrix such that the square of the Euclidian distance between adjacent constellation points when the Hamming distance between the adjacent constellation points is 2 is twice the square of the Euclidian distance between the points when the Hamming distance is 1. That is, the Euclidian distance is adjusted such that a reconstruction performance difference due to a Hamming distance difference can be compensated for using a power difference.

A description will be given of the method of setting value "a" in more detail.

For example, in a transmission signal, since a Hamming distance in a section between internal symbols representing a first input signal in constellations corresponds to half a Hamming distance in an inter-symbol section between constellations representing the first input signal, the Euclidean distance can be adjusted such that the Hamming distance difference is compensated by maintaining the power of the internal section twice that of a neighboring section. In other words, the neighboring section has a Hamming distance twice that of the internal section. That is, in neighboring symbols, the number of different bits in one symbol is twice the number of different bits in the other. The Euclidean distance can be increased such that the section having a double Hamming distance has higher power to as to compensate for performance deterioration due to a Hamming distance difference when a received signal is restored. In other words, it is possible to compensate for a restoration performance difference caused by a Hamming distance difference with a power difference by adjusting the Euclidean distance.

Relative Euclidean distances for signals St1 and St2 transmitted from a transmitter are detected in constellations. It can be determined from the above-mentioned equation 2 that a minimum Euclidean distance of a 16-QAM symbol having decreasing power is (a-1) and a minimum Euclidean distance of a 16-QAM symbol having increasing power is (a+1) (because one transmitted signal is represented as R=h{a+1}S1+(a-1)S2}). The value "a" may be obtained using the above conditions, which may be represented by Expression 10.

[Expression 10]

$$a = \begin{cases} \sqrt{2}+1 & ,\text{for QPSK} + \text{QPSK} \\ \sqrt{2}+3 & ,\text{for 16QAM} + \text{16QAM} \end{cases}$$

However, when the input signals have different symbol types as in a QPSK+16-QAM transmission method, it is necessary to use different values 'a'. This is because, if a value 'a' optimized for one of the transmission antennas is used, a signal having lower quality may be transmitted through the other transmission antenna when different modulation schemes are employed for the input signals used for MIMO transmission, that is, trade-off may be generated.

Fig. 10 illustrates an exemplary structure of a P1 symbol and an exemplary structure of an AP1 symbol according to an embodiment of the present invention.

P1 symbol is generated by having each of a front portion and an end portion of an effective (or valid) symbol copied, by having a frequency shift performed as much as $+f_{sh}$, and by having the frequency-shifted copies respectively positioned at a front portion (C) and an end portion (B) of the effective symbol (A). In the present invention, the C portion will be referred to as a prefix, and the B portion will be referred to as a postfix. More specifically, P1 symbol is configured of a prefix portion, an effective symbol portion, and a postfix portion.

In the same manner, AP1 symbol is generated by having each of a front portion and an end portion of an effective (or valid) symbol copied, by having a frequency shift performed as much as $-f_{sh}$, and by having the frequency-shifted copies respectively positioned at a front portion (F) and an end portion (E) of the effective symbol (D). In the present invention, the F portion will be referred to as a prefix, and the E portion will be referred to as a postfix. More specifically, AP1 symbol is configured of a prefix portion, an effective symbol portion, and a postfix portion.

Herein, the two frequency-shift values $+f_{sh}$, $-f_{sh}$, which are used in the P1 symbol and the AP1 symbol, may have the same absolute value yet be given opposite signs. More specifically, the frequency-shift is performed in opposite directions. And, the lengths C and F, which are copied to the front portion of the effective symbol, may be set to have different values. And, the lengths B and E, which are copied to the end portion of the effective symbol, may be set to have different values. Alternatively, the lengths C and F may be set to have different values, and the lengths B and E may be set to have the same value, or vice versa. According to another embodiment of the present invention, an effective symbol length of the P1 symbol and an effective symbol length of the AP1 symbol may be differently determined. And, according to yet another embodiment of the present invention, a CSS (Complementary Set Sequence) may be used for tone selection and data scrambling within the AP1 may be scrambled by AP1.

According to the embodiment of the present invention, the lengths of C and F, which are copied to the front portion of the effective (or valid) symbol, may be set to have different values, and the lengths of B and E, which are copied to the end portion of the effective (or valid) symbol, may also be set to have different values.

The C,B,F,E lengths according to the present invention may be obtained by using Equation 11 shown below.

[Expression 11]

$$\text{Length of C } (T_C) = \{\text{Length of A } (T_A)/2 + 30\}$$

$$\text{Length of B } (T_B) = \{\text{Length of A } (T_A)/2 - 30\}$$

$$\text{Length of E } (T_F) = \{\text{Length of D } (T_D)/2 + 15\}$$

$$\text{Length of E } (T_E) = \{\text{Length of D } (T_D)/2 - 15\}$$

As shown in Equation 11, P1 symbol and AP1 symbol have the same frequency shift value. However, each of the P1 symbol and the AP1 symbol are given opposite signs. Additionally, in order to determine the lengths of C and B, the present invention determines an offset value being added to or subtracted from a value corresponding to the length of A ($T_A$)/2. And, in order to determine the lengths of F and E, the present invention determines an offset value being added to or subtracted from a value corresponding to the length of D ($T_D$)/2. Herein, each of the offset values is set up differently. According to the embodiment of the present invention, the offset value of P1 symbol is set to 30, and the offset value of AP1 symbol is set to 15. However, the values given in the above-described examples are merely exemplary. And, therefore, it will be apparent that the corresponding values may easily be varied or changed by anyone skilled in the art. Thus, the present invention will not be limited only to the values presented herein.

According to the present invention, by generating AP1 symbol and an AP1 symbol to configure the structure shown in Fig. 10, and by inserting the generated symbols to each signal frame, the P1 symbol does not degrade the detection performance of the AP1 symbol, and, conversely, the AP1 symbol does not degrade the detection performance of the P1 symbol. Additionally, the detection performance of the P1 symbol is almost identical to the detection performance of the AP1 symbol. Furthermore, by configuring the symbols so that the P1 symbol and the AP1 symbol have similar symbol structures, the complexity level of the receiver may be reduced.

At this point, the P1 symbol and the AP1 symbol may be transmitted consecutively, or each of the symbols may be allocated to different positions within the signal frame and may then be transmitted. And, in case the P1 symbol and AP1 symbol are each allocated to a different position within the signal frame, so as to be transmitted, a high time diversity effect may be gained with respect to the preamble symbol. According to the embodiment of the present invention, the P1 symbol and the AP1 symbol are consecutively transmitted. In that case, the AP1 symbol, according to Fig. 3, transmits information necessary for decoding signaling information spread in a pilot pattern or a frame of a data area. It can be generated in Fig. 5.

Fig. 11 show P1 signaling information and AP1 signaling information according to an embodiment of the present invention. Fig. 11A shows a table diagram having P1 signaling information according to an embodiment of the present invention.

As shown in Fig. 11A, the P1 signaling information includes a S1 field and S2 field. The further description is as follows.

The S1 field has a size of 3 bits and indicates a preamble format and P2 type.

The S2 field has a size of 4 bits and can have S2 field 1 and 2.

S2 field 1 field has a size of 3 bits and indicates partial information about FFT size information and guide interval (GI). FFT size indicates the number of sub-carriers to comprise one OFDM symbol and the GI size indicates the ratio of GI in one OFDM symbol. Thus, the length of an OFDM symbol can be varied depending on the FFT and GI size.

S2 field 2 field has a size of 1 bin and indicates whether the preamble of the frame is the same type.

Fig. 11B shows a table having the AP1 signaling information according to an embodiment of the present invention.

As shown in Fig. 11B, the AP1 signaling information includes a PILOT_PATTERN field and L1_PRE_SPREAD_LENGTH field. The further description is as follows.

The PILOT_PATTERN field has a size of 4 bits and indicates a pilot pattern of the frame. According to an embodiment of the present invention, when the pilot pattern information is transmitted through the AP1 symbol, the P2 symbol is not transmitted. Even when L1 signaling information is spread in the data symbols in the data area, the receiver can discover the pilot pattern before decoding the L1 signaling information of the data area.

L1_PRE_SPEAD_LENGTH field has a size of 3 bits and indicates the length of a spreading interval in the data area for the L1-pre signaling information. That is, it indicates the number of data symbols in the data area having the spreading interval for the L1 pre signaling information. According to the present invention, the spreading interval for L1 pre signaling information is called L1-pre spread interval. If L1_PRE_SPREAD_LENGTH field value is "000", it means that L1 signaling information in a data area of a frame is not spread.

Fields having P1 signaling information and AP1 signaling information and themselves are illustrated for the better understanding of the present invention and each field and information can be varied as the designer intends..

Fig. 12 shows another embodiment of the present invention for L1-pre signaling information.

L1-pre signaling information includes information necessary for decoding L1 post signaling. In the following, fields that are illustrated in Fig. 12 are described.

The TYPE field has 8 bits and may indicate whether the type of an input stream is TS or GS.

The BWT_EXT field has 1 bit and may indicate bandwidth extension of an OFDM symbol.

The S1 field has 3 bits and may represent whether a current transmission system is a MISO system or a MIMO system.

The S2 field has 4 bits and may indicate an FFT size.

The L1_REPETITION_FLAG field has 1 bit and may represent a repetition flag of an L1 signal.

The GUARD_Interval field has 3 bits and may indicate the size of a guard interval of the current transmission system.

The PAPR field has 4 bits and may indicate a PAPR reduction scheme. As described above, ACE or TR scheme may be used as the PAPR scheme in the present invention.

The L1_MOD field has 4 bits and may indicate QAM modulation type of the L1-post signaling information.

The L1_COD field has 2 bits and may indicate the code rate of the L1-post signaling information.

The L1_FEC_TYPE field has 2 bits and may indicate the FEC type of the L1-post signaling information.

The L1_POST_SIZE field has 18 bits and may indicate the size of the L1-post signaling information.

The L1_POST_INFO_SIZE field has 18 bits and may indicate the size of an information region of the L1-post signaling information.

The PILOT_PATTERN field has 4 bits and may indicate a pilot insertion pattern.

The TX_ID_AVAILABILITY field has 8 bits and may indicate transmitter identification availability in a current geographical cell range.

The CELL_ID field has 16 bits and may indicate a cell identifier.

The NETWORK_ID field has 16 bits and may indicate a network identifier.

The SYSTEM_ID field has 16 bits and may indicate a system identifier.

The NUM_FRAMES field has 8 bits and may indicate the number of transmission frames per super-frame.

The NUM_DATA_SYMBOLS field 12 bits and may indicate the number of OFDM symbols per transmission frame.

The REGEN_FLAG field has 3 bits and may indicate the number of regenerations of a signal according to a repeater.

The L1_POST_EXTENSION field has 1 bit and may indicate presence or absence of an extension block of the L1-post signaling information.

The NUM_RF field has 3 bits and may indicate the number of RF bands for TFS.

The CURRENT_RF_IDX field has 3 bits and may indicate the index of a current RF channel.

The RESERVED field has 10 bits and is reserved for later use.

The CRC_32 field has 32 bits and may indicate a CRC error extraction code of the L1-pre signaling information.

NUM_T2_FRAMES field has a size of 8 bits and indicates the number of frames for the existing terrestrial broadcast system in the super frame. The receiver determines a structure of the super frame by the field. The frame is used to calculate information necessary for hopping a frame that can transmit additional data or data about a new broadcast system other than the existing broadcast systems.

L1_POST_SPREAD_LENGTH field has a size of 12 bits and indicates the length of a spreading interval in the data area for L1-post signaling information. That is, it indicates the number of the data symbols having the spreading interval for the L1-post signaling information. In the present invention, the spreading interval for L1-post signaling information is called L1-post spread interval. If the value of L1_POST_SPREAD_LENGTH field is all 0, L1_post signaling information is not spread.

NUM_MISO_SYMBOLS field has a size of 12 bits and indicates the number of MISO symbols in the data symbols of the current frame.

MIMO_SYMBOL_INTERVAL field has a size of 12 bits and indicates the number of MIMO symbols between two MIMO symbol parts.

MIMO_SYMBOL_LENGTH field has a size of 12 bits and indicates the number of MIMO symbols in one MIMO symbol part.

Fig. 13 shows an embodiment of L1-post signaling information.

The L1-post signaling information may include parameters necessary for the receiver to encode PLP data.

As shown in Fig. 7, the L1-post signaling information comprises a configurable block, a dynamic block, an extension block, a Cyclic Redundancy Check block (CRC) and a L1 padding block.

The configurable block may include information equally applied to one transmission frame and the dynamic block may include characteristic information corresponding to a currently transmitted frame.

The extension block may be used when the L1-post signaling information is extended, and the CRC block may include information used for error correction of the L1-post signaling information and may have 32 bits. The padding block may be used to adjust sizes of information respectively included in a plurality of encoding blocks to be equal when the L1-post signaling information is transmitted while being divided into the encoding blocks and has a variable size.

Fig. 13 shows a table included in the configurable block, which includes the following fields. In the following, fields that are illustrated in Fig. 13 are described.

The SUB_SLICES_PER_FRAME field has a size of 15 bits and may indicate the number of sub-slices per transmission frame.

The NUM_PLP field has a size of 8 bits and may indicate the number of PLPs.

The NUM_AUX field has a size of 4 bits and may indicate the number of auxiliary streams.

The AUX_CONFIG_RFU field has a size of 8 bits and is a reserved region.

The following fields are included in "for loop" (or frequency loop) to be repeated based on the number of RF (NUM_RF filed-1) of the present system. NUM_RF field may be signaled via L1-pre signaling information.

The RF_IDX field has a size of 3 bits and may indicate an RF channel index.

The FREQUENCY field has a size of 32 bits and may indicate an RF channel frequency.

The following fields are used only when the LSB of S2 field is 1, that is, when S2='xxx1'.

The FEF_TYPE field has a size of 4 bits and may be used to indicate a future extension frame (FEF).

The FEF_LENGTH field has a size of 22 bits and may indicate the length of an FEF.

The FEF_INTERVAL field has a size of 8 bits and may indicate the duration of an FEF interval.

The following fields are included in "for loop" (or PLP loop) to be repeated based on the number of PLP in the super frame(NUM_PLP filed-1).

The PLP_ID field has a size of 8 bits and may be used to identify a PLP.

The PLP_TYPE field has a size of 3 bits and may indicate whether a current PLP is a common PLP or a PLP including normal data.

The PLP_PAYLOAD_TYPE field has a size of 5 bits and may indicate a PLP payload type. That is, PLP PAYLOAD may include GFPS, GCS, GSE, TS, IP data perceived by PLP_PAYLOAD_TYPE.

The FF_FLAG flag has a size of 1 bit and may indicate a fixed frequency flag.

The FIRST_RF_IDX field has a size of 3 bits and may indicate the index of the first RF channel for TFS.

The FIRST_FRAME_IDX field has a size of 8 bits and may indicate the first frame index of a current PLP in a super-frame.

The PLP_GROUP_ID field has a size of 8 bits and may be used to identify a PLP group. A PLP group may be referred to as a link-layer-pipe (LLP) and PLP_GROUP_ID field is called LLP_ID field in an embodiment of the present invention.

The PLP_COD field has a size of 3 bits and may indicate a code rate of a PLP.

The PLP_MOD field has a size of 3 bits and may indicate a QAM type of a PLP.

The PLP_ROTATION field has a size of 1 bit and may indicate a constellation rotation flag of a PLP.

The PLP_FEC_TYPE field has a size of 2 bits and may indicate FEC type of a PLP.

The PLP_NUM_BLOCKS_MAX field has a size of 10 bits and may indicate a maximum number of PLPs of FEC blocks.

The FRAME_INTERVAL field has a size of 8 bits and may indicate an interval of a transmission frame.

The TIME_IL_LENGTH field has a size of 8 bits and may indicate a symbol interleaving (or time interleaving) depth.

The TIME_IL_TYPE field has a size of 1 bit and may indicate a symbol interleaving (or time interleaving) type.

The IM-BAND_B_FLAG field has a size of 1 bit and may indicate an in-band signaling flag.

The RESERVED_1 field has a size of 16 bits and is used in the PLP loop in the future.

The RESERVED_2 field has a size of 32 bits and is used in the configurable block in the future.

The following fields are included in an auxiliary stream loop.

THE AUX_RFU field has a size of 32 bits and is called "for loop" to be repeated based on the number of sub-stream (NUM_AUX field -1). That is, it is a filed to be used in the sub-stream loop.

Fields included in frequency loop are as follows.

NEXT_NGH_SUPERFRAME field has a size of 8 bits and indicates the number of super frames between the current frame and the next NGH frame.

Fields included in PLP loop are as follows.

PLP_PROFILE field has a size of 2 bits and indicates profile of stream included in the current PLP. That is, PLP_PROFILE field may indicate whether the current PLP is PLP of a base layer or PLP of an enhancement layer.

PLP_MIMO_TYPE field has a size of 2 bits and determines whether the current PLP is the MIMO or MISO type.

As an embodiment, PLP_MOD field value is determined by combining with PLP_MIMO_TYPE field. If the PLP_MIMO_TYPE field value indicates the MISO type, the PLP_MOD field is used for symbol-remapping. If the PLP_MIMO_TYPE field value indicates the MIMO type, the PLP_MOD field can be interpreted as a constellation size having a spectrum effect generated after indicating MIMO.

Fig. 14 shows an embodiment of L1-post dynamic signaling information.

The table included in a dynamic block shown in Fig. 14 includes parameters necessary for the receiver to decode PLP and especially includes information regarding the current frame. The table shown in Fig. 14 can signal to in-band to efficiently implement slicing in the receiver.

A table shown in Fig. 15 is included in the dynamic block and includes the following fields.

The FRAME_IDX field has a size of 8 bits and may indicate a frame index in a super-frame.

The SUB_SLICE_INTERVAL field has a size of 22 bits and may indicate a sub-slice interval.

The TYPE_2_START field has a size of 22 bits and may indicate a start position of PLPs of a symbol interleaver over a plurality of frames. L1_CHANGE_COUNTER field has a size of 8 bits and may indicate a change in L1 signaling.

The START_RF_IDX field has a size of 3 bits and may indicate a start RF channel index for TFS.

The RESERVED_1 field has a size of 8 bits and is a reserved field.

It is a filed called "for' loop" to be repeated as many times as the number of PLP in the super frame (NUM_PLP FIELD VALUE -1).

The PLP_ID field has a size of 8 bits and may be used to identify each PLP.

The PLP_START field has a size of 22 bits and may indicate a PLP start address in a frame.

The PLP_NUM_BLOCKS field has a size of 10 bits and may indicate the number of PLPs of FEC blocks.

The RESERVED_2 field has a size of 8 bits and may be used in the PLP loop in the future.

The RESERVED_3 field has a size of 8 bits and may be used in the dynamic block in the future.

The following field is included in the auxiliary stream loop.

The AUX_RFU field has a size of 48 bits and may be used in the auxiliary stream loop in the future.

NEXT_NGH_FRAME field has a size of 8 bits and is used only when the LSB of the S2 field is 1, that is, when S2 is "xxx1". NEXT_NGH_SUPERFRAME field indicates the number of FEF frames or frames between the first frame and the next in a super frame having additional transmitting frames. NEXT_NGH_FRAME and NEXT_NGH_SUPERFRAME are used for calculating the necessary amount for hopping the next frame. That is, NEXT_NGH_FRAME field and the NEXT_NGH_SUPERFRAME field have only FEF or many mixed regular frames. When all the FEF frames are not used for additional frames, an efficient hopping mechanism will be provided. Especially, the receiver can perform hopping in the next additional frame without decoding P1 signaling information in all the frames in the super frame.

An embodiment of a broadcast signal transmitter or receiver for MIMO processing is as follows.

The broadcast signal transmitter comprises as shown in Fig. 1 an input processor 101200, a BICM encoder 101300, a frame builder 101400, and an OFDM generator 101500. Also, the broadcast signal receiver, as shown in Fig. 2, comprises an OFDM demodulator 107100, a frame demapper 107200, a BICM decoder 107300, and an output processor 1073400.

The input processor 101200 of the broadcast signal transmitter executes FEC encoding for transmitting data in a form of block. The BICM encoder 101300 performs encoding for correcting errors. The frame builder 101400 performs mapping data in a frame, and the OFDM generator 101500 performs OFDM demodulating in the frame-mapped data into symbol units and transmit the data. Devices in the broadcast signal receiver can perform reverse-functioning corresponding to the counterpart devices in the transmitter.

The present invention suggests a broadcast signal transmitter or receiver that independently applies MISO or MIMO processing for each PLP from a plurality of PLP inputs. According to the present invention, the present invention can effectively adjust the quality of service (QOS) or services from PLP in a physical layer.

An embodiment for performing MISO/MISO processing in a plurality of signals from the transmitter and receiver through a plurality of antennas are as follows.

A first embodiment is about a broadcast signal transmitter or a corresponding receiver independently performing MISO or MIMO processing for each PLP data input during a BICM encoding process.

The second embodiment relates to a broadcast signal transmitter, which performs MISO processing and MIMO processing on PLP data mapped in a frame during an OFDM generating procedure or which performs only MISO processing during an OFDM generating procedure and performs MIMO processing during a BICM encoding procedure, and a broadcast signal receiver corresponding to the broadcast signal transmitter.

Fig. 15 and Fig. 16 show an input process that the broadcast signal transmitter comprises in common. Further description is as follows.

Fig. 15 shows an input processor of the broadcast signal transmitter according to an embodiment.

The input process 101200 in Fig. 1 is shown as an embodiment in Fig. 15 performing only one PLP. The input processor in Fig. 15 comprises a mode adaptation module 601100 and a stream adaptation module 601200. The mode adaptation module 601100 further comprises an input interface module 601110, a CRC-8 encoder 601120 and a BB header insertion module 601130, wherein a stream adaptation module 1020 comprises a padding insertion module 601210 and a BB scrambler 601220.

The input interface module 601110 in the input processor performing a single PLP performs mapping by distinguishing the input bit stream in a logical unit to perform FEC (BCH/LDPC) encoding at the end of the BICM encoder. The CRC-9 encoder 601120 performs CRC encoding in the mapped bit stream and a BB header insertion module 1050 inserts a BB header in the data field. In that case, the BB header includes all adaptation type (TS/GS/IP) information, user packet length information, and data field length.

Also, if the input data does not have a BB frame for FEC encoding, the stream adaptation block 601200 generates a padding insertion unit and a Pseudo Random Binary Sequence (PRBS) and includes a BB scrambler 601220 randomizing data computed by the PRBS and XOR. Such a move by the BB scrambler 601220 can ultimately lower the Peak-to-Average Power Ratio of the OFDM-modulated signal.

Fig. 16 shows a mode adaptation module as an input processor of the broadcast signal transmitter performing a plurality of PLP. The mode adaptation module in Fig. 16 comprises a plurality of input interface modules 602100 performing mode adaptation for each PLP in parallel, an input stream synchronizer 602200, a compensating delay module 602300, null packet deletion module 602400, a CRC-0 encoder 602500, and a BB header insertion unit 602600. The description of the input interface module 6021000, the CRC-8 encoder 602500 and the BB header insertion unit 602600 illustrated in Fig. 19 is omitted.

The input stream synchronizer 602200 inserts timing information necessary for restoring input stream clock reference information (ISCR), transport stream (TS) or generic stream (GS). The compensating delay module 602300 synchronizes a group of PLP based on the timing information.

The null packet deletion module (602400) deletes null packet that is unnecessarily transmitted and inserts the number of the deleted null packets based on the deleted position.

Fig. 17 shows a stream adaptation module as an input processor of the broadcast signal transmitter performing a plurality of PLP.

The stream adaptation module in Fig. 17 receives the data in PLP units from the mode adaptation in Fig. 16.

The scheduler 603100 performs scheduling for the MIMO transmitting system using a plurality of antennas including dual polarity and generates parameters for a demultiplexer, a cell interleaver, a time interleaver. Also, the scheduler 603100 transmits L1-dynamic signaling information for the current frame besides in-band signaling, and performs cell mapping based on the scheduling.

A plurality of a 1-frame delay module 603200 executing a plurality of PLP delays one frame so that scheduling information of the next frame for in-band signaling can be included in the current frame. A plurality of in-band signaling/padding insertion module inserts L1-dynamic signaling information to the delayed data. Also, if there is any room for padding, the in-band signaling/padding insertion module 603300 inserts padding bits and in-band signaling information into the padding area. And, the BB scrambler 603400 generates a pseudo random binary sequence (PRBS) as shown in Fig. 15 and randomizes the data by computing the PRBS with XOR.

The stream adaption module in Fig. 17 generates L1-signaling information transmitted by the preamble symbol of the frame or the spread data symbol. Such L1-signaling information includes L1-pre signaling information and L1-post signaling information. The L1-pre signaling information includes parameters necessary for performing the L1-post signaling information and static L1-signaling information, and the L1-post signaling information includes the static L1-signaling information and dynamic L1-signaling information. The L1-signaling generator 603500 can transmit the generated L1-pre signaling information and L1-post signaling information. The transmitted L1-pre signaling information and L1-post signaling information is scrambled by each BB scramble 603600, 603700. Also, according to another embodiment, the L1 signaling generator 603500 transmits L1-signaling information having L1-pre signaling and L1-post signaling information and scrambles L1-signaling information transmitted by one BB scrambler.

Figs. 18 to 20 show a structure block of a broadcast signal transmitter according to an embodiment. Further description is as follows.

Fig. 18 shows a BICM encoder according to a first embodiment of the present invention.

The BICM encoder shown in Fig. 18 is an embodiment of the BICM encoder 101300 in Fig. 1.

The BICM encoder according to the first embodiment performs bit-interleaving in a plurality of PLP data after performing input-processing, L1-pre signaling information, and L1-post signaling information, and encoding for correcting errors.

Also, the BICM encoder independently performs MISO and MIMO encoding in PLP data. That is, the BICM encoder in Fig. 18 includes a first BICM encoding block 604100 performing MISO encoding in PLP data, a second BICM encoding block 604200 performing MIMO encoding in PLP data, and a third BICM encoding block 604300 performing MIMO encoding in signaling information. However, as the signaling information includes information necessary for restoring PLP data in a frame from the receiver, more robustness is required between the transmitter and receiver compared to PLP data. Thus, an embodiment of the present invention is the MISO process performing the signaling information.

The description of data performing process for each block is as follows.

First, the first BICM encoding block 604100 includes a BICM encoder 604100, a FEC (Forward Error Correction) encoder 604110, a bit-interleaver 604120, a first demultiplexer 604130, a constellation mapper 604140, a cell interleaver 604150, a time interleaver 604160, and a MISO encoder 604170.

The FEC encoder 604110 performs BCH encoding and LDPC encoding in PLP data after performing input processing with redundancy to correct channel errors from the receiver. The bit-interleaver 604120 prepares to have robustness for bust errors by performing bit-interleaving in the FEC-encoded PLP data by each FEC block unit. In that case, the bit interleaver can perform bit interleaving by using two FEC block units. When using two FEC blocks, a pair of cell units may be generated from two different FEC blocks in the frame-builder. Thus, the broadcast signal receiver may improve the reception by ensuring the diversity of FEC blocks.

A first demultiplexer 604130 can perform demultiplexing in the bit-interleaved PLP data into one FEC block unit. In that case, the first demultiplexer 604130 uses two FEC blocks and performs demultiplexing. When using the two blocks, pairs of cells in the frame builder may be generated from different FEC blocks. Thus, the receiver can improve reception by ensuring the diversity of FEC blocks.

The constellation mapper 604140 performs mapping in the bit-demultiplexed PLP data into symbol units. In that case, the constellation mapper 604140 can rotate a certain angle depending on the modulation type. The rotated constellation mappers can be expressed in I-phase (In-phase) and Q-phase (Quadrature-phase), and the constellation mappers can delay only the Q-phase for a certain value. Then, the constellation mapper 604140 performs re-mapping in the In-phase element with the delayed Q-phase element.

The cell interleaver 604150 performs interleaving in the re-mapped data into cell units, and the time interleaver 604160 performs interleaving in the cell-interleaved PLP data into time units.

In that case, the time interleaver 604160 uses two FEC blocks for interleaving. Through this process, as pairs of cells are generated from two different FEC blocks, the receiver can improve reception by ensuring the diversity of the FEC blocks.

The MSIO encoder 604170 performs MISO encoding by using MISO encoding matrix in the time-interleaved PLP data and transmits MISO PLP data through two routes (STx_k, STx_k+1). The present invention includes an OSTBC (Orthogonal Space-Time Block Code)/OSFBC(Orthogonal Space Frequency Block Code/Alamouti code) as an embodiment of a MISO encoding method.

The second BICM encoding block 604200 includes a FEC encoder 604210, a bit-interleaver 604220, a second demultiplexer 604230, a first constellation mapper 604240-1 and a second constellation mapper 604240-2, a first cell interleaver 604250-1 and a second interleaver 604250-2, and a first time interleaver 604260-1 and a second cell interleaver 604260-2 and a MIMO encoder 604270. The FEC encoder 604210 and the bit-interleaver 604220 can perform the same function as the FEC encoder 604110 and the bit-interleaver 604120 of the MISO method.

The second demultiplexer 604230 can transmit the PLP data by demultiplexing to two routes necessary for MIMO transmission in addition to performing the same function as the first demultiplexer 604130 of the MISO method. In that case, the character of the data transmission for each route may be different. Thus, the second demultiplexer can randomly allocate the bit-interleaved PLP data into each route.

The first constellation mapper 604240-1 and the second constellation mapper 604240-2 can operate the same function as the constellation mapper (604140) of the MISO method.

The first cell interleaver (604250-1) and the second cell interleaver (604250-2) can perform cell-interleaving in only a half of the PLP data in one of the FEC blocks from the routes. Thus, the first interleaver 603260-1 and second interleaver 603260-2 can operate the same as the cell interleaver 604150. Also, in order to execute data from a plurality of routes, as the first cell interleaver 604250-1 and the second cell interleaver 604250-2 are not allocated additional memory, there is an advantage of performing cell interleaving by using the memory of the cell interleaver 604150. The first time interleaver 603260-1 and the second time interleaver 603260-2 can operate the same as the time interleaver 603260 of the MISO method. In that case, the first time interleaver 603260-1 and the second time interleaver 603260-2 can be performed the same time interleaving or a different time interleaving.

The MIMO encoder 604270 performs MIMO encoding in the time-interleaved PLP data from by using MIMO encoding matrix and transmit MIMO PLP data to two routes (STx_m, STx_m+1).

The MIMO encoding matrix of the present invention includes a spatial multiplexing, a Golden code (GC), a full-rate full diversity code, and a linear dispersion code. Also, the MIMO encoder 604170 performs MIMO encoding by using MIMO encoding matrix according to the first and sixth embodiment of the present invention in Figs. 8 to 9.

L1-signaling information includes L1-pre signaling information and L1-post signaling information. It can independently perform MISO encoding in the L1-pre signaling information and L1-post signaling information.

Thus, the third BICM encoding block 604300 includes a first encoding block 604400 executing the L1-pre signaling information and the second encoding block 604500 executing the L1-post signaling information.

The first encoding block 604400 includes a FEC encoder 604470, a constellation mapper 604420, a cell interleaver 604430, a time interleaver 604560, and a MISO encoder 604570.

The L1-pre signaling information includes information necessary for decoding L1-post signaling information and the L1-post signaling information includes information necessary for restoring data transmitted from the receiver.

That is, the receiver needs to decode the L1-pre signaling information quickly and correctly for decoding the L1-signaling information and the data. Thus, the receiver of the present invention does not perform bit-interleaving and de-multiplexing for the L1-pre signaling information in order to perform the fast decoding.

The description of first encoding block 604500 and the second encoding block 604600 is omitted because they perform the same function as the first BICM block 604100.

As a result, to execute the L1-pre signaling information, the first encoding block 604400 performs MISO encoding in the L1-pre signaling information and transmits the free-signaling data to two routes (STx_pre, STx_pre+1). Also, to execute L1-post signaling information the second encoding block 604500 performs MISO encoding in the L1-post signaling information and transmits the L1-post signaling data to two routes (STx_post, STx_post+1).

Fig. 19 shows a frame builder according to a first embodiment.

The frame builder shown in Fig. 19 is an embodiment of the frame builder 101400 shown in Fig. 1.

The first BICM encoding block 604100 transmits MISO PLP data to two routes (STx_k, STx_K+1) and the second BICM encoding block (604200) transmits MIMO PLP data to two routes (STx_m, STx_m+1). Also, the third BICM encoding block (604300) transmits the L1-pre signaling information and the L1-post signaling information to two routes (STx_pre, Stx_pre_1 and STx_post, STx_post+1).

Each data is inputted into the frame builder. In that case, as shown in Fig. 19, the frame builder includes a first route receiving the BICM encoded data from STx_0 to STx_post, and a second route receiving the BICM encoded data from STx_0+1 to stx_post+1. The data received in the first route is transmitted through a first antenna (Tx_1) and the data in the second route is transmitted through a second antenna (Tx_2).

As shown in Fig. 19, the frame builder according the first embodiment includes a first frame building block 605100 executing the data from the first route and a second frame building block 605200 executing the data from the second route. The first frame building block 605100 includes a first delay compensator 604110, a first pair-wise cell mapper 605120, and a first pair-wise frequency interleaver 605300-1, and a second frame building block 605200 includes a second delay compensator 605100-2 executing the data from the second route, a second pair-wise cell mapper 605200-2, and a second pair-wise frequency interleaver 605300-2.

The first pair-wise cell mapper 605120 and the first pair-wise frequency interleaver 605130, or the second pair-wise cell mapper 605120 and the second pair-wise frequency interleaver 605310 operate independently but the same functions in the first and the second routes respectively.

A method of processing data in the first frame building block 605100 and the second frame building block 605200.

The first delay compensator 605110 and the second delay compensator 605110 can compensate the L1-pre signaling data or the L1-post signaling data for the delay in the first frame and by the BICM encoder 604300. The L1-signaling information can include information not only in the current frame but also in the next frame. Thus, during the input processing, the L1-signaling information can be delayed one frame as opposed to PLP data inputted in the current frame. Through this process, one frame of the L1-signaling information having information about the current and the next frames.

The first pair-wise cell mapper 605120 and the second pair-wise cell mapper 605220 can perform mapping in the PLP data and the L1-signaling data in symbol units into cell units in a frame in the sub-carrier of the OFDM symbols.

In that case, the PLP data includes a common PLP DATA, a MISO/MIMO encoded PLP data and a sub-slice processor module 605120-1~2 performs frame-mapping in the PLP data in cell units for the diversity effect.

Also, the first pair-wise cell mapper 605120 and the second pairwaise cell mapper 605220 can perform frame-mapping in two consecutive inputted cells in pairs.

For the better restoration performance of MISO signals, coherence between MSI transmitting channels should be secured when performing MISO encoding. Thus, in order to secure coherence, the first pair-wise cell mapper 605120 and the second pair-wise cell mapper 605220 pair up cells generated from the same PLP and perform OFDM modulating in the paired-up cells. Then coherence between the channels will be maximized.In other words, according to an embodiment of the present invention, as the MISO encoder is positioned in the front of the BICM encoder, the structure of the frames is in pairs considering such MISO encoding process.

As mentioned above, when performing bit-interleaving or time interleaving by the bit-interleaver 604120 and the time interleaver 604160 using two FEC blocks, two paired up cells can be generated from two different FEC blocks. As the receiver ensures diversity, higher reception can be obtained. The first pair-wise frequency interleaver 605130 and the second pair-wise frequency interleaver 605230 perform frequency interleaving in the data in cell units from each route and transmits the frequency-interleaved data to the OFDM generator through each route.

In that case, the first pair-wise frequency interleaver 605130 and the second pair-wise frequency interleaver 605230 pair up two consecutive cells in interleaving units and then perform frequency interleaving. This is to maximize coherence between channels.

Fig. 20 shows an OFDM generator according to a first embodiment.

The OFDM generator in Fig. 20 is an embodiment of the OFDM shown in Fig. 1.

The present invention transmits broadcast signals by the MISO/MIMO method through two antennas. The OFDM generator in Fig. 20 receives and demodulates the broadcast signals through a first and a second route. It then transmits the signals to two antennas (Tx1, Tx2).

A first OFDM generating block 606800 modulates the broadcast signals through the first antenna (Tx1) and a second OFDM generating block 606900 modulates the broadcast signals through the second antenna (TX2).

If channel correlation between the first and second antennas is large, transmitted signals can apply polarity depending on the channel correlation. In the present invention, such a method is called polarity multiplexing MIMO. The first antenna is called "vertical antenna" and the second antenna is called "horizontal antenna". The first OFDM generating block 606100 performs OFDM modulating in broadcast signals through the first antenna (Tx1) and the second transmitter 606900 performs OFDM modulating in the broadcast signals from the first route and transmits the signals to the second antenna (Tx2).

Modules including the first OFDM generating block 606800 and the second OFDM generating block 606900 are as follows.

The first OFDM generating block 606800 includes a pilot insertion module 606100-1, an IFFT module 606200-1, a PAPR module 606300-1, a GI insertion module 606400-1, a P1 symbol insertion module 606500-1, an AP1 symbol insertion module 606600-1 and a DAC 606700-1, wherein modules in the first transmitting unit 606800 operate the same functions.

The second OFDM generating block 606900 includes a pilot insertion module 606100-2, an IFFT module 606200-2, a PAPR module 606300-2, a GI insertion module 606400-2, a P1 symbol insertion module 606500-2, an AP1 symbol insertion module 606600-2 and a DAC 606700-2, wherein modules in the first transmitting unit 606800 operate the same functions.

Thus, modules in the first OFDM generating block 606800 will be illustrated in more detail. The pilot insertion module inserts a pilot of the predetermined pilot pattern into a frame and transmits it to the IFFT module 606200-1. The pilot pattern information is transmitted with AP1 signaling information or L1-signaling information.

The IFFT module 606200-1 performs IFFT algorithm in the signals and transmits them to the PAPR module 606300-1.

The PAPR module 606300-1 reduces PAPR of the signals in a time domain and transmits them to the GI insertion module 606400-1. Also, feedback on necessary information based on the PAPR reduction algorithm is given to the pilot insertion module 606100-1.

The GI insertion module 606400-1 copies the end of the effective OFDM symbol, inserts guard intervals in cyclic prefix to each OFDM symbol, and transmits them to the P1 symbol insertion module 606500-1. The GI information can be transmitted through the P1 signaling information or L1-pre signaling information.

The P1 and AP1 symbol are inserted in every frame of the P1 insertion module in the OFDM generator. That is, the P1 insertion module can insert more than two preamble symbols in every frame. When using more than two preamble symbols, burst fading that can happen in the mobile fading conditions will be more strengthened and signal detection performance will be improved.

The P1 symbol insertion module 606500-1 inserts a P1 symbol in the beginning of each frame and transmits it to the AP1 symbol insertion module 606600-1.

The AP1 symbol insertion module 606600-1 inserts an AP1 symbol at the end of the P1 symbol and transmits it to the DAC 606700-1.

The DAC 606700-1 converts the signal frame having the P1 symbol to an analog signal and transmits it to the transmitting antenna (Tx1).

According to another embodiment of the present invention, a structure block of a broadcast signal transmitter is illustrated as follows. The BICM encoder shown in Fig. 21 is another embodiment of the BICM encoder 101300 in Fig. 1.

As the BICM encoding blocks in Fig. 21 operate the same as the BICM encoding blocks in Fig. 18, further description of them is omitted. However, the BICM encoding blocks of the MISO encoder 607120, 6074320-1~2 and the MIMO encoder 607320 are positioned at the end of the constellation mapper 607110, 6071210-1~2, 607310-1~2, which is distinguishable from the BICM encoding blocks according to Fig. 18.

The BICM decoder according to Fig. 18 performs MISO/MIMO first and then outputs the data in bit units. It is because the output data of the MISO/MIMO decoder can the probability information of bit units. Thus, although the BICM decoder can perform time deinterleaving or cell deinterleaving, information about symbol units is required because the output data will be imputed in bit units. Therefore, the memory complexity of the broadcast signal receiver will increase because it should store information about symbol mapping of the input bits during the deinterleaving process.

As shown in Fig. 21, in the BICM encoder according to the second embodiment I the MISO encoder 607100, 607300, 607400 and the MIMO encoder 607200 are located at the end of the constellation mapper. Thus, the BICM decoder can perform MISO/MIMO decoding after time deinterleaving and cell deinterleaving in symbol units. Thus, the memory complexity will be reduced compared to the broadcast signal receiver according to the first embodiment.

Figs. 22 to 24 show a structure block of the broadcast signal receiver according to the first embodiment.

Fig. 22 shows an OFDM demodulator according to the first embodiment of the present invention.

The OFDM modulator shown in Fig. 22 is an embodiment of the OFDM demodulator 107100 illustrated in Fig. 2.

According to an embodiment of the present invention, the present invention requires two antennas, Rx1 and Rx2, to receive transmitted signals by MIMO/MISO. The OFDM demodulator shown in Fig. 22 can perform OFDM demodulation through the Rx1 and Rx2 antennas.

A block demodulating transmitted signals through a first antenna (Rx1) is called a first OFDM demodulating block 610100 and a block demodulating transmitted signals through a second antenna (Rx2) is called a second OFDM demodulating block 610200.

In addition, the present invention can utilize polarity multiplexing MIMO according to an embodiment of the present invention. The first OFDM demodulating block 610100 performs OFDM demodulation in the broadcast signals transmitted through the first antenna (Rx1) and outputs the signals by a frame demapper to a first route, and the second demodulating block 610200 performs OFDM demodulating in the broadcast signals transmitted through the second antenna (Rx2) and outputs the signals by a frame demapper to a second route.

Also, the OFDM according to the first embodiment in Fig. 22 can perform the reverse process of the OFDM generator according to the first embodiment.

The first OFDM demodulating block 610100 and the second OFDM demodulating block included in OFDM generator according to the first embodiment of the present invention are as follows.

The first OFDM demodulating block 610100 includes a tuner 610110, an ADC 610120, a P1 symbol detection module 610130, an AP1 symbol detection module 610140, a synchronizing module 610150, a GI cancellation module 610160, a FFT module 610170 and a channel estimation module 610180.

The second OFDM demodulating block 610200 comprises a tuner 610210, an ADC 610220, a P1 symbol detection module 610230, an AP1 symbol detection module 610240, a synchronizing module 610250, a GI cancellation module 610260, a FFT module 610270 and a channel detection module 610280, and operates the same as the first OFDM demodulating block 610100.

Thus, modules in the first OFDM demodulating block 610100 will be further illustrated.

The tuner 610110 receives broadcast signals by selecting a frequency range and transmits it to the ADC 610120 by compensating the size of the signal.

The ADC 610120 coverts analog broadcast signals into digital signals and transmits them to the P1 symbol detection module 610130.

The P1 symbol detection module 610130 extracts P1 symbols in the P1 signaling information and decodes the P1 signaling information. Also, the P1 symbol detection module 610130 transmits the decoded P1 signaling information to the synchronizing module 610150 and a system controller (not shown in the drawing). The system controller determines which frame the received signal has by using the decoded P1 signaling information and controls other devices.

The AP1 symbol detection module 610140 extracts AP1 symbols in the AP1 signaling information and decodes the AP1 signaling information. Also, the AP1 symbol detection module 610140 transmits the decoded AP1 signaling information to the synchronizing module 610150 and a system controller (not shown in the drawing). The system controller determines the pilot pattern information in the current frame and L1-pre spread interval information by using the decoded AP1 signaling information.

The synchronizing module 610150 performs time and frequency synchronizing by using the decoded P1 signaling information and the AP1 signaling information.

The GI cancellation module 610160 deletes guard intervals included in the synchronized signals and transmits them to the FFT module 610170.

The FFT module 610170 converts the signals from the time domain to the frequency domain by performing FFT algorithm.

The channel detection module 610180 detects a transmitting channel from the transmitting antenna to the receiving antenna by using pilot signals having the converted signals. Then, the channel detection module 610180 can additionally perform equalizing for each of the received data. Signals that are converted into the frequency domain will be inputted in the frame demapper.

Fig. 23 shows a frame demapper according to the first embodiment of the present invention.

The frame demapper in Fig. 23 is an embodiment of the frame demapper 107200 in Fig. 2.

The frame demapper according to the first embodiment includes the first frame demapping block 611100 executing data from a first route and a second frame demapping block 611200 executing data from a second route. The first frame demapping block 611100 includes a first pair-wise frequency deinterleaver 611110 and a first pair-wise cell demapper 611120, and the second demapping block 611200 includes a second pair-wise frequency deinterleaver 611210 and a second pair-wise cell demapper 611220.

Also, the first pair-wise frequency deinterleaver 61110 and the first pair-wise cell demapper 611120 or the second pair-wise frequency deinterleaver 611210 and the second pair-wise cell demapper 611220 can operate independently and the same through a first route and a second route respectively.

Also, the frame demapper according to the first embodiment can perform the reverse process of the frame builder according to the first embodiment in Fig. 19.

A method of performing data by blocks included in the first frame builder demapping block 611100 and the second frame builder demapping block 611200 is as follows.

The first pair-wise frequency deinterleaver 611110 and the second pair-wise frequency deinterleaver 611210 perform deinterleaving in data in the frequency domain through the first and seoncd routes into cell units in that case, the first pair-wise frequency deinterleaver 611110 and the second frequency deinterleaver 611210 pair up two consecutive cells in deinterleaving units and perform frequency deinterleaving. The deinterelaving process can be performed in a reverse direction of the interleaving process in the transmitting unit. The frequency-deinterleaved data will be transmitted in the original order.

The first pair-wise cell demapper 611120 and the second pair-wise cell demapper 611220 can extract common PLP data, PLP data and L1-signaling information in cell units from the de-interleaved data. The extracted PLP data includes MISO PLP data for the MISO method and MIMO PLP data for the MIMO method, and the extracted L1-signaling data includes information necessary for the current and next frames. Also, if the transmitter performs sub-slicing in the PLP data, the first and the second pair-wise cell demappers 611120, 611220 can merge the sliced PLP data and generate it in one stream.

Also, the first pair-wise cell demapper 611120 and the second pair-wise cell demapper 611220 can pair up two consecutive cells.

Data transmitted through the first route is inputted to the BICM decoder by the route from SRx_0 to SRx_post and data transmitted through the second route is inputted to the BICM decoder by the route from SRx_0+1 to SRx_post+1.

Fig. 24 shows a BICM decoder according to the first embodiment.

The BICM decoder in Fig. 24 is an embodiment of the BICM decoder 107300 shown in Fig. 2.

The BICM decoder according to the first embodiment receives data from the first route via SRx_0 to SRx_post by a frame demapper and data from the second route via SRx_0+1 to SRx_post+1 and performs BICM decoding.

Also, the BICM decoder according to the first embodiment independently performs MISO/MIMO encoding in each of the data.

That is, the BICM decoder in Fig. 24 includes a first BICM decoding block 612100 performing MISO PLP data from SRx_k and SRx_k+1, a second BICM decoding block 612200 performing MIMO PLP data from SRx_m and SRx_m+1, and a third BICM decoding block 612300 performing MISO encoding in the L1-signaling information from SRx_pre, SRx_pre+1, SRx_post, and SRx_post+1.

Also, the BICM decoder in Fig. 18 can perform the reverse process of the BICM encoder.

Data processing method for each block is illustrated.

First, the first BICM decoding block 612100 includes a MISO decoder 612110, a time deinterleaver 6122120, a cell deinterleaver 612130, a constellation demapper 612140, a first demultiplexer 612150, a bit deinterleaver 612160, and a FEC decoder 612170.

The MISO decoder 612110 can perform MISO decoding in MISO PLP data. The MISO decoder 612110 can perform following four functions.

First, if the channel estimation modules 610800-1~2 included in the OFDM demodulator does not perform channel equalizing, the MISO decoder 612110 applies the effect of the channel detection regarding every transmissible reference point and computes an LLR value. Therefore, it will have the same effect.

Second, the MISO decoder 612110 performs the following functions based on the performance of the constellation mapper 604140. If the BICM encoder of the broadcast signal transmitter rotates the constellation mapper with a certain angle and delays the Q-phase element of the constellation for a certain value, the MISO decoder 612110 delays the I-phase element of the constellation for a certain value and computes a 2D-LLR value based on the rotation angle.

If the constellation mapper 604140 does not rotate constellation and does not delay the Q-phase of constellation for a certain value, the MSIO decoder 612110 can compute the 2-D LLR value based on the normal QAM.

Third, the MISO decoder 612110 selects a decoding matrix to perform the reverse process based on the encoding matrix used by the MISO encoder 604170.

Fourth, the MISO decoder 612440 can combine signals inputted from two antennas. The signal combining method includes maximum ratio combining, equal gain combining, and selective combining and obtains the diversity effect by maximizing the SNR of the combined signals.

The MISO decoder 612110 performs MISO decoding in the combined signal and combine the MISO-decoded combined signals.

The time deinterleaver 6122120 restores the MISO decoded data into a time domain and the cell deinterleaver 612130 performs deinterleaving in the time-deinterleaved data into cell units.

The constellation demapper 612140 can perform the following functions based on the performance of the MISO decoder 612110.

First, if the MISO decoder 612110 does not transmit the LLR value directly and only performs MISO decoding, the constellation demapper 612140 can compute the LLR value. In more detail, if the constellation demapper 604140 in the BICM encoder performs constellation rotation or Q-phase element delay, the constellation demapper 612140 delay the I-phase LLR element and computes the LLR value. If the constellation demapper 604140 does not perform the constellation rotation and Q-phase element delay, the constellation demapper 612140 can compute the LLR value based on the normal QAM.

The computing the LLR value includes computing 2-D LLR and computing 1-D LLR. When computing the 1-D LLR, the complexity of the LLR computation can be reduced by executing either one of a first or a second route.

The first multiplexer 612150 restores demapped data in bit stream.

The bit-interleaver 612160 performs deinterleaving in the bit-stream, FEC decoding in the deinterleaved data, and outputs MISO PLP data by correcting errors in the transmitting channels.

The second BICM decoding block 612200 includes a MIMO decoder 612210, a first time deinterleaver 612220-0 and a second time deinterleaver 612220-1, a first cell deinterleaver 612230-0 and a second cell deinterleaver 612230-1, a first constellation demapper 612240-0 and a second constellation demapper 612240-1, a second multiplexer 612250, a bit interleaver 612260 and a FEC decoder 612270.

The MIMO decoder 612210 performs in MIMO PLP data from SRx_m and SRx_m+1. The MIMO decoder 612210 can perform the four functions of the MISO decoder 612110 except for the fourth function in which the signals are to be combined. Then, the MIMO decoder 612210 performs decoding by using MIMO encoding matrix of the first and sixth embodiment.

The first time deinterleaver 612220-0 and the second time deinterleaver 612220-1 perform deinterleaving in the MIMO decoded data into cell units. In that case, the first cell deinterleaver 612230-0 and the second deinterleaver 612230-1 performs cell deinterleaving in only a half of the cell data in one FEC block. As a result, cell deinterleaving by the first and second cell deinterleaver 612230-0, 612230-1 has the same effect as deinterleaving by cell deinterleaver 612130 using one FEC block.

The first constellation demapper 612240-0, the second constellation demapper 612240-1, the second multiplexer 612250, bitinterleaver 612260 and FEC decoder 612270 operates the same as those according to the first BICM decoding block 612100.

The third BICM decoding block 612300 includes a first decoding block 612400 performing L1-pre signaling data and a second decoding block 612500 performing L1-post signaling data. The first decoding block 612400 includes a MISO decoder 612410, a time deinterleaver 612420, a cell deinterleaver 612430, a constellation demapper 612440, and a FEC decoder 612450, and the second decoding block 612500 includes a MISO decoder 612510, a time deinterleaver 612520, a cell deinterleaver 612530, a constellation demapper 612540, a multiplexer 612550, a bit deinterleaver 612560, and a FEC decoder 612570.

As the first decoding block 612400 and the second decoding block 612500 have the same functions, the description of the first BICM decoding block 612100 is omitted.

As a result, the first BICM decoding block 612400 outputs the BICM decoded MISO PLP data to an output processor and the second BICM decoding block 612200 transmits the BICM decoded MIMO PLP data to the output processor.

The first decoding block 612400 in the third BICM decoding block 612300 performs MSIO decoding in L1-pre signaling data and transmits the data. Also, the second decoding block 612500 in the third BCIM decoding block performs MISO decoding in L1-post signaling data and transmits one L1-post signaling information.

Fig. 25 shows a BICM decoder according to another embodiment.

The BICM decoder in Fig. 25 is another embodiment of the BICM decoder 107300 in Fig. 2.

The BICM decoding blocks according to another embodiment in Fig. 25 operate the same as the decoding blocks according to the first embodiment in Fig. 24. Therefore, further description is omitted. However, the only difference is that in the BICM decoder the MISO decoder 615110, 615410, 615510 and the MIMO decoder 615310 are located at the end of the cell deinterleaver.

As shown in Fig. 25, the memory complexity of the receiver may be reduced because the BICM decoder performs MISO/MIMO decoding after time deinterleaving and cell deinterleaving in symbol units.

As a result, the first BICM decoding block 615100 transmits the BICM decoded MISO PLP data to an output processor and the second BICM decoding block 615200 transmits the BICM decoded MIMO PLP data to the output processor. Also, the first decoding block 615400 in the third BICM decoding block 615300 performs MISO decoding in L1-pre signaling data and outputs the L1-pre signaling information. Also, the second decoding block 615500 in the third BICM decoding block 615300 performs MISO decoding in L1-post signaling data and transmits the data.

Fig. 26 and Fig. 27 show an embodiment of an output processor included broadcast signal receiver according to each embodiment. The following is a specific description of the output processor according to an embodiment of the present invention.

Fig. 26 shows an output processor of the broadcast signal receiver according to an embodiment.

The output processor in Fig. 26 is an embodiment of the output processor 107400 in Fig. 2.

The output processor in Fig. 26 as opposed to an input processor performing single PLP in Fig. 15 performs the reverse process of it and includes a BB discrambler 616100, a padding remove module 616200, a CRC-8 decoder 616300 and a BB frame processor 616400. The output processor performs the reverse process of the input processor by receiving bit stream from the BICM decoder.

The BB descrambler 616100 receives bit stream, performs XOR algorithm with the same bit-string as PRBS processed by the BB scrambler and outputs it. The padding remove module 616200 removes, if necessary, padding bits inserted in the padding insertion module. The CRC-8 decoder 616300 performs CRC decoding in the bit-stream and the BB frame processor 616400 decodes information in the BB frame header and restores TS or GS by using the decoded information.

Fig. 27 shows another embodiment of an output processor.

The output processor in Fig. 27 as opposed to the input processor in Fig. 16 and Fig. 17 performing a plurality of PLP performs the reverse process of it. The output processor includes a plurality of blocks for a plurality of PLP. The blocks are as follows. The output processor includes a BB descrambler 617100, 617400-1, 617400-2) and a padding removal module 617120, a CRC-8 decoder 617130, a BB frame processor 617140, a De-jitter buffer 617150, a null packet insertion module 617160, a TS clock regeneration module 617170, an in-band signaling decoder 617180, a TS recombination module 617300 and a L1 signaling decoder 617410. The same blocks as in Fig. 26 are omitted.

Processing for a plurality of PLP can be shown as decoding PLP data regarding common PLP or decoding service components like scalable video service or a plurality of services at once. The BB descrambler 617110, the padding removal module 617120, the CRC-8 decoder 617130 and the BB frame processor 617140 operate the same as those in Fig. 26.

The De-jitter buffer 617150 compensates a temporarily inserted delay for the synchronization of a plurality of PLP based on Time To Output (TTO) parameters. The null packet insertion module 617160 restores the deleted null packet based on the Deleted Null Packet (DNP) information. The TS clock regeneration module restores the detailed time synchronization of the outputted packet based on Input Stream Time Reference information. The TS recombination module 617300 receives the restored common PLP and related PLP data and transmit the original TS, IP or GS. The TTO parameters, DNP information, and ICSR information are obtained by the BB frame processor and it can transmit the data to each block or a system controller.

The in-band signaling decoder 617200 restores in-band signaling information via the padding bit filed of PLP data and transmits it.

As for L1 signaling information, the BB descramblers 617400-1, 617400-2 performs descrambling in the corresponding L1 pre signaling information data and L1-post signaling information, and the L1 signaling decoder 6174100 decodes the descrambled data and restores the L1 signaling information. The restored L1-signlaing information includes L1-pre signaling information and L1-post signaling information. It will also be transmitted to the system controller and provides parameters for BICM decoding, frame demapping, and OFDM demodulating. The L1 signaling information can be inputted as one BB descrambler and will be descrambled.

The following is a description of a broadcast signal transmitter according to a second embodiment of the present invention.

In the second embodiment, a transmission system may be constructed as follows.

1) First, in a configuration of a first embodiment, only a MIMO encoder may be included in a BICM encoder and the MIMO encoder may be located between a frame builder and an OFDM generator. Here, the location of the MIMO encoder included in the BICM encoder is the same as shown in Figs. 18 to 21.

2) Next, a MIMO encoder and a MISO encoder may not be included in the BICM encoder and a MIMO/MISO encoder which can perform both MIMO encoding and MISO encoding may be located between the frame builder and the OFDM generator.

Basic operations for MIMO encoding and MISO encoding in the second embodiment are the same as described above.

A reception system of the second embodiment corresponding to the transmission system is constructed as follows.

1) First, only a MIMO decoder may be included in the BICM decoder of the first embodiment and a MISO decoder may be located between a frame demapper and an OFDM demodulator. Here, the location of the MISO decoder included in the BICM decoder is the same as shown in Figs. 24 and 25.

2) Next, a MIMO decoder and a MISO decoder may not be included in the BICM decoder and a MIMO/MISO decoder which can perform both MIMO decoding and MISO decoding may be located between the frame demapper and the OFDM demodulator.

Basic operations for MIMO decoding and MISO decoding in the second embodiment are also the same as described above.

The following is a description of the structure and function of a frame included in a broadcast signal that is processed and transmitted by a the broadcast signal transmitter described above and is then received and processed by the broadcast signal receiver described above.

The following is a more detailed description of a method of spreading the L1 signaling information described above to construct a frame.

1. Method of spreading L1-pre signaling information over a P2 symbol part of a frame and spreading L1-post signaling information of a next frame over a data symbol part of the frame

In this embodiment, a method in which L1-pre signaling information is spread over a P2 symbol part of a frame and a L1-post signaling information of a next frame is spread over a data symbol part of the frame is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the P2 symbol part may be referred to as a preamble part of a transmission signal or a frame.

Fig. 28 illustrates a frame mapping structure of L1 signaling information according to an embodiment of the present invention. In the frame structure of Fig. 28, the horizontal axis represents the time domain and the vertical axis represents the frequency domain.

In the example of Fig. 28, the frame builder uniformly spreads cells corresponding to L1-pre signaling information over a P2 symbol part of a frame in the time and frequency domains. In addition, the frame builder uniformly spreads cells corresponding to L1-post signaling information of a next frame over a data symbol part of the frame.

It is possible to secure sufficient robustness of the L1-pre signaling information among the L1 signaling information since the L1-pre signaling information is repeated in each frame in a superframe. However, the robustness of the L1-post signaling information may be reduced since different L1-post signaling information may be transmitted in each frame. Thus, the robustness of the L1-post signaling information may be enhanced by transmitting L1-post signaling information of a next frame in the data symbol part so as to achieve time/frequency diversity.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1-pre signaling information is spread according to the number of P2 symbols. The reception system may decode P2 symbols to acquire L1-pre signaling information and may then acquire information regarding a configuration of the frame from the acquired L1-pre signaling information. The reception system may then decode L1-post signaling information included in the data symbol part to acquire information regarding a PLP included in a next frame.

The following is a description of a method for a frame builder to spread L1-pre signaling information and L1-post signaling information as in the frame structure of Fig. 28 described above.

First, the L1-pre signaling information is spread over the P2 symbol part in the time and frequency domains as in Fig. 28. The L1-pre signaling information is mapped to the frame in the time domain as shown in the following Expression 12 and is mapped in the frequency domain as shown in the following Expression 13.

[Expression 12]

$$C_{PRE}(i) = \begin{cases} ceil\left(\frac{L1_PRE_INFO_SIZE}{N_{P2}}\right), & 0 \le i < (L1_PRE_INFO_SIZE \bmod N_{P2}) \\ floor\left(\frac{L1_PRE_INFO_SIZE}{N_{P2}}\right), & (L1_PRE_INFO_SIZE \bmod N_{P2}) \le i < N_{P2} \end{cases},$$

*where* $C_{PRE}(i)$= Number of L1-pre cells in *I*[th]*P2 symbol*
L1*_PRE_INFO_SIZE*=the size of information part of thr L1-pre signalling data

In Expression 12, C_PRE(i) represents the number of cells of L1-pre signaling information allocated to an ith symbol according to the number of P2 symbols that varies according to FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

[Expression 13]

$$A(i,j) = \begin{cases} \left\{\sum_{k=0}^{i-1} C_{PRE}(k) + j\right\} \% C_{DATA}, & 0 < i < N_{P2} \\ j \% C_{DATA}, & i = 0 \end{cases}, \quad 0 \le j < C_{PRE}(i),$$

*where A(i, j)* = Carrier index after spreading for *J*[th] carrier in *i*[th] symbol $C_{P3}$=Number of data cells in one P2 symbol

As shown in Expression 12, when cells of L1-pre signaling information are allocated according to the number of P2 symbols in the time domain, the allocated cells are cyclically shifted in the frequency domain using Expression 13. That is, C_PRE(i) jth cells allocated to the ith symbol are mapped to an index of A(i,j) as shown in Expression 13. Here, j corresponds to a jth subcarrier used in OFDM modulation in the frequency domain. j may represent a value in a range from 0 to C_PRE(i)-1.

The reception system may determine the number of P2 symbols included in the frame using the FFT size information acquired from the P1 symbol. Thus, the reception system may determine the number of L1-pre cells allocated to the ith symbol, i.e., may determine the value C_PRE(i). The reception system may acquire P1-pre signaling information using a frame structure in which uniformly divided L1-pre cells are cyclically shifted in each symbol in the frequency domain.

Next, the L1-post signaling information is spread over the time and frequency domains in a data symbol part as shown in Fig. 28. The L1-post signaling information is mapped to the frame in the time domain as shown in the following Expression 14 and is mapped in the frequency domain as shown in the following Expression 15.

[Expression 14]

$$C_{POST}(i) = \begin{cases} ceil\left(\frac{L1_POST_INFO_SIZE}{L_{normal}}\right), & 0 \le i < (L1_POST_INFO_SIZE \bmod L_{normal}) \\ floor\left(\frac{L1_POST_INFO_SIZE}{L_{normal}}\right), & (L1_POST_INFO_SIZE \bmod L_{normal}) \le i \le L_{normal} - 1 \end{cases}$$

*where* $C_{POST(i)}$=Number of L-1-post cells in $i^{th}$ data symbol *L1_POST_INFO_SIZE*=the size og the information part of the L1-post signaling data $L_{normal}$=# of data symbols, not including P1, P2 or any frame closing symbol, in a frame

In Expression 14, L_normal represents the number of data symbols excluding P1, P2 or closing symbols in the frame. Cells of L1-post signaling information may be uniformly distributed over L_normal data symbols and the number of cells of the L1-post signaling information allocated to the ith data symbol may be set to C_POST(i) according to Expression 14.

[Expression 15]

$$A(i,j)=\left\{\begin{array}{ll}\left\{\sum_{k=0}^{i-1} C_{POST}(k)+j\right\} \bmod C_{DATA}, & 0<i\leq L_{normal}-1\\ j \bmod C_{DATA}, & i=0\end{array}\right\},\ 0\leq j<C_{POST}(i)\ ,$$

*where A(i, j)* = Carrier index after spreading for $j^{th}$ carrier in $i^{th}$ symbol $C_{DATA}$=Number of data cells in one normal data symbol

The cells of the L1-post signaling information which are spread in the time domain as shown in Expression 14 are spread in the frequency domain as shown in Expression 15. That is, the cells of the L1-post signaling information are mapped to the first subcarrier and are cyclically shifted to maximize frequency diversity. Such mapping is performed as shown in Expression 15 and C_POST(i) jth cells allocated to the ith symbol are mapped to an index (or subcarrier) of A(i,j). Here, j corresponds to a jth subcarrier used in OFDM modulation in the frequency domain. j may represent a value in a range from 0 to C_POST(i)-1.

The reception system may acquire L1-pre signaling information from the P2 symbol part to acquire L1-post signaling information for a next frame located in the data symbol. Once the reception system acquires the L1-pre signaling information, the reception system may determine the structure of L1-post signaling information which is spread over L_normal data symbols using the values of an L1-POST_INFO_SIZE field and a NUM_DATA_SYMBOLS field included in the L1-pre signaling information. Since cells of the L1-post signaling information are uniformly spread in each symbol, the reception system may determine the number of cells of the L1-post signaling information allocated to the ith symbol through the above Expression 14. In addition, since cells of the L1-post signaling information are cyclically shifted in each symbol in the frequency domain, the reception system may determine the number and the locations of L1-post signaling information cells of the subcarrier in the frequency domain through the above Expression 15.

Fig. 29 illustrates an operation of a time interleaver according to an embodiment of the present invention.

In an embodiment of the present invention, the transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver may perform interleaving on output data of a cell interleaver in the BICM block and output the resulting data on a cell mapper included in the frame builder.

In an embodiment, the transmission system may perform interleaving only on data that is transmitted in the data part in the frame as shown in Fig. 28 and may not perform time interleaving on data that is transmitted in the preamble part (the P1 or P2 symbol part). In this case, the present invention may perform interleaving only on L1-post signaling information included in the data part and may not perform interleaving on L1-pre signaling information included in the preamble part. However, a time interleaver that can perform time interleaving on each of the L1-pre signaling information and the L1-post signaling information is described below.

First, the time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row = C_PRE(0) and Column = N_P2 when the block interleaver interleaves L1-pre signaling information and may be of Row = C_POST(0) and Column = L_normal when the block interleaver interleaves L1-post signaling information.

The reception system may include a time deinterleaver to perform the reverse of the operation performed by the time interleaver described above. The time deinterleaver may be included in a decoding module that performs Forward Error Correction (FEC) decoding and deinterleaving on data. In this case, the time interleaver may receive data from a cell mapper included in the frame builder and perform deinterleaving on the received data and then may provide the deinterleaved data to a cell deinterleaver in the BICM decoding block. On the contrary to the transmitting side, the time deinterleaver may write data in a column direction and may read data in a row direction and may then output the read data.

Fig. 30 illustrates a frame structure of a transmission signal according to an embodiment of the present invention.

The transmission signal of Fig. 30 includes superframes, each including a plurality of frames. The L1 signaling information spreading method, which is applied to a transmission signal having such a structure, is described below.

First, the spreading method may be used for frames in a superframe. That is, this method allows L1-pre signaling information included in a preamble part in an n-1th frame to include information regarding the frame (i.e., frame n-1) and L1-post signaling information included in a data part thereof to include information regarding a next frame (i.e., frame n). For frames included in the same superframe, it is possible to signal a number of the superframe (i.e., the number of frames included in the single superframe) which does not change in L1_CHQNGE_COUNTER information included in dynamic information of the L1-post signaling information. In this case, a next frame may be decoded by acquiring the L1-post signaling information included in the frame as described above.

However, for frames included in superframe n and a different superframe such as superframe n+1 as shown in Fig. 30, L1-post signaling information of frame n in superframe n+1, which indicates information regarding frame n+1 in superframe n+1, may differ from L1-post signaling information of frames included in superframe n. That is, frames included in superframe n+1 have L1-pre signaling information and L1-post signaling information which are different from those of frames included in superframe n. For example, L1-pre signaling information of frames included in a superframe includes different information items such as L1_MOD information, L1_COD information, L1_FEC_TYPE information, L1_POST_SIZE information, L1_POST_SIZE_INFO information, or L1_POST_EXTENSION. L1-post signaling information of frames included in a superframe may also include different information items.

Accordingly, when the L1 signaling information is spread, the L1 signaling information needs to be inserted and spread taking into consideration a superframe including the frame.

The reception system may process frames included in the same superframe by determining a configuration of the current frame from L1-pre signaling information included in a preamble part of the current frame and determining a configuration of a next frame from L1-post signaling information included in a data part of the current frame as described above. However, when a frame belonging to a different superframe follows, the reception system needs to process the frame by determining L1 signaling information which changes as described above. The reception system may process each frame by determining the number of superframes, after which the frame configuration changes, from L1_CHANGE_COUNTER information included in dynamic information of the L1-post signaling information and additional determining L1 signaling information that changes at the boundary.

The frame structure of Fig. 28 shows the case in which 4K FFT is used, i.e., the case in which the number of P2 symbols is 4. In this embodiment, such spreading of L1 signaling information may be expressed such that L1-pre signaling information includes 8 cells, L1-post signaling information includes 28 cells, and a data symbol region includes 14 symbols. In this case, as shown in Fig. 28, the cells of the L1-pre signaling information are spread such that the cells of the L1-pre signaling information are arranged in 4 symbols such that 2 cells are arranged in each symbol and are cyclically shifted to different subcarriers in each symbol in the frequency domain. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

2. Method of spreading L1-pre signaling information and L1-post signaling information over a P2 symbol part of a frame and spreading L1-post signaling information of a next frame over a data symbol part of the frame

In this embodiment, a method in which L1-pre signaling information and L1-post signaling information of the current frame are spread over a P2 symbol part of the frame and a L1-post signaling information of a next frame is spread over a data symbol part of the frame is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the P2 symbol part may be referred to as a preamble part of a transmission signal or a frame.

Fig. 31 illustrates a frame mapping structure of L1 signaling information according to an embodiment of the present invention. In the frame structure of Fig. 31, the horizontal axis represents the time domain and the vertical axis represents the frequency domain.

In the example of Fig. 31, the frame builder uniformly spreads cells corresponding to L1-pre signaling information and cells corresponding to L1-post signaling information of the current frame over a P2 symbol part of a frame in the time and frequency domains. In addition, the frame builder uniformly spreads cells corresponding to L1-post signaling information of a next frame over a data symbol part of the frame.

It is possible to secure sufficient robustness of the L1-pre signaling information among the L1 signaling information since the L1-pre signaling information is repeated in each frame in a superframe. However, the robustness of the L1-post signaling information may be reduced since different L1-post signaling information may be transmitted in each frame. Thus, the robustness of the L1-post signaling information may be enhanced by transmitting L1-post signaling information of a next frame in the data symbol part so as to achieve time/frequency diversity. In addition, it is possible to omit inclusion of L1-post signaling information in the current P2 symbol part using L1_REPETITION_FLAG information included in the L1-pre signaling information in order to solve the frame overhead problem. In an embodiment of the present invention, it is possible to determine that the L1-post signaling information of the current frame is present in the P2 symbol part when the value of the L1_REPETITION_FLAG field is 1 and to determine that the L1-post signaling information is not present in the P2 symbol part when the value is 0.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1-pre signaling information is spread according to the number of P2 symbols. In addition, the reception system may check the value of an L1_REPETITION_FLAG field included in the L1-pre signaling information and determine that the L1-post signaling information of the current frame is present in the P2 symbol part when the value of the L1_REPETITION_FLAG field is 1 and determine that the L1-post signaling information is not present in the P2 symbol part when the value is 0.

When the value of the L1_REPETITION_FLAG field is 1, the reception system may decode the L1-post signaling information to acquire L1-post signaling information of the current frame from the P2 symbol part of the current frame and to acquire L1-post signaling information of a next frame from the data symbol part. That is, the reception system may decode P2 symbols to acquire L1-pre signaling information and may then acquire information regarding a configuration of the frame from the acquired L1-pre signaling information. The reception system may then decode L1-post signaling information included in the data symbol part to acquire information regarding a PLP included in a next frame.

When the value of the L1_REPETITION_FLAG field is 0, the reception system may decode the L1-post signaling information to acquire on the L1-post signaling information of the next frame from the P2 symbol part of the current frame. In this case, latency may occur when the reception system performs data reconstruction or decoding. This may be overcome by setting the value of the L1_REPETITION_FLAG field to 1 and including the L1-post signaling information of the current frame.

The following is a description of a method for a frame builder to spread L1-pre signaling information and L1-post signaling information as in the frame structure of Fig. 31 described above.

First, the L1-pre signaling information is spread over the P2 symbol part in the time and frequency domains as in Fig. 31. The L1-pre signaling information is mapped to the frame in the time domain as shown in the following Expression 16 and is mapped in the frequency domain as shown in the following Expression 17.

[Expression 16]

$$C_{PRE}(i) = \begin{cases} ceil\left(\dfrac{L1_PRE_INFO_SIZE}{N_{P2}}\right), & 0 \le i < (L1_PRE_INFO_SIZE \bmod N_{P2}) \\ floor\left(\dfrac{L1_PRE_INFO_SIZE}{N_{P2}}\right), & (L1_PRE_INFO_SIZE \bmod N_{P2}) \le i < N_{P2} \end{cases},$$

*where $C_{PRE}(i)$*= Number of L1-pre cells in *i^th^ P2 symbol*

L1_*PRE_INFO_SIZE*=the size of information part of the L1-pre signalling data

In Expression 16, C_PRE (i) represents the number of cells of L1-pre signaling information allocated to an ith symbol according to the number of P2 symbols that varies according to FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

[Expression 17]

$$A(i,j)=\left\{\begin{matrix}\left\{\sum_{k=0}^{i-1}C_{PRE}(k)+j\right\}\%C_{DATA}, & 0<i<N_{P2}\\ j\%C_{DATA}, & i=0\end{matrix}\right\},\ 0\le j<C_{PRE}(i)\ ,$$

*where A(i, j)* = Carrier index after spreading for $j^{th}$ carrier in $i^{th}$ symbol $C_{P2}$=Number of data cells in one P2 symbol

As shown in Expression 16, when cells of L1-pre signaling information are allocated according to the number of P2 symbols in the time domain, the allocated cells are cyclically shifted in the frequency domain using Expression 17. That is, C_PRE(i) jth cells allocated to the ith symbol are mapped to an index of A(i,j) as shown in Expression 17. Here, j corresponds to a jth subcarrier used in OFDM modulation in the frequency domain. j may represent a value in a range from 0 to C_PRE(i)-1.

The reception system may determine the number of P2 symbols included in the frame using the FFT size information acquired from the P1 symbol. Thus, the reception system may determine the number of L1-pre cells allocated to the ith symbol, i.e., may determine the value C_PRE(i). The reception system may acquire P1-pre signaling information using a frame structure in which uniformly divided L1-pre cells are cyclically shifted in each symbol in the frequency domain.

Next, the L1-post signaling information of the next frame is spread over the time and frequency domains in a data symbol part as shown in Fig. 31. The L1-post signaling information of the current frame is mapped to the frame in the time domain as shown in the following Expression 18 and is mapped in the frequency domain as shown in the following Expression 19.

[Expression 18]

$$C_{POST}(i)=\left\{\begin{matrix}ceil(\frac{L1_POST_INFO_SIZE}{L_{normal}}), & 0\le i<(L1_POST_INFO_SIZE \bmod L_{normal})\\ floor(\frac{L1_POST_INFO_SIZE}{L_{normal}}), & (L1_POST_INFO_SIZE \bmod L_{normal})\le i\le L_{normal}-1\end{matrix}\right\},$$

*where* $C_{POST(i)}$=Number of L-1-post cells in $i^{th}$ data symbol *L1_POST_INFO_SIZE*=the size of the information part of the L1-post signaling data $L_{normal}$=# of data symbols, not including P1, P2 or any frame closing symbol, in a frame

In Expression 18, L_normal represents the number of data symbols excluding P1, P2 or closing symbols in the frame. Cells of L1-post signaling information may be uniformly distributed over L_normal data symbols and the number of cells of the L1-post signaling information allocated to the ith data symbol may be set to C_POST (i) according to Expression 18.

[Expression 19]

$$A(i,j)=\left\{\begin{matrix}\left\{\sum_{k=0}^{i-1}C_{POST}(k)+j\right\}\bmod C_{DATA}, & 0<i\le L_{normal}-1\\ j \bmod C_{DATA}, & i=0\end{matrix}\right\},\ 0\le j<C_{POST}(i)\ ,$$

*where A(i, j)* = Carrier index after spreading for $j^{th}$ carrier in $i^{th}$ symbol $C_{DATA}$=Number of data cells in one normal data symbol

The cells of the L1-post signaling information which are spread in the time domain as shown in Expression 18 are spread in the frequency domain as shown in Expression 19. That is, the cells of the L1-post signaling information are mapped to the first subcarrier and are cyclically shifted to maximize frequency diversity. Such mapping is performed as shown in Expression 19 and C_POST(i) jth cells allocated to the ith symbol are mapped to an index (or subcarrier) of A(i,j). Here, j corresponds to a jth subcarrier used in OFDM modulation in the frequency domain. j may represent a value in a range from 0 to C_POST(i)-1.

The reception system may acquire L1-pre signaling information from the P2 symbol part to acquire L1-post signaling information for a next frame located in the data symbol. Once the reception system acquires the L1-pre signaling information, the reception system may determine the structure of L1-post signaling information which is spread over L_normal data symbols using the values of an L1-POST_INFO_SIZE field and a NUM_DATA_SYMBOLS field included in the L1-pre signaling information. Since cells of the L1-post signaling information are uniformly spread in each symbol, the reception system may determine the number of cells of the L1-post signaling information allocated to the ith symbol through the above Expression 18. In addition, since cells of the L1-post signaling information are cyclically shifted in each symbol in the frequency domain, the reception system may determine the number and the locations of L1-post signaling information cells of the subcarrier in the frequency domain through the above Expression 19.

Finally, L1-post signaling information of the current frame may be spread over a P2 symbol part in the time and frequency domains as shown in Fig. 31 (when the value of the L1_REPETITION_FLAG field is 1). The L1-post signaling information of the current frame is mapped to the frame in the time domain as shown in the following Expression 20 and is mapped in the frequency domain as shown in the following Expression 21.

[Expression 20]

$$C_{POST_P2}(i) = \begin{cases} ceil\left(\frac{L1_POST_INFO_SIZE}{N_{P2}}\right), & 0 \le i < (L1_POST_INFO_SIZE \bmod N_{P2}) \\ floor\left(\frac{L1_POST_INFO_SIZE}{N_{P2}}\right), & (L1_POST_INFO_SIZE \bmod N_{P2}) \le i < N_{P2} \end{cases}$$

*where* $C_{POST_P2}(i)$= Number of L1-pre cells in $i^{th}$ *P2 symbol*

L1_*PRE_INFO_SIZE*=the size of information part of the L1-pre signalling data

In Expression 20, C_POST_P2(i) represents the number of cells of L1-post signaling information of the current frame allocated to an ith symbol according to the number of P2 symbols that varies according to FFT mode. As described above, the value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

[Expression 21]

$$A(i,j) = \left\{ \sum_{k=0}^{i} C_{PRE}(k) + j \right\} \bmod C_{P2}\ ,\ 0 \le j < C_{POST_P2}(i),\ 0 \le i < N_{P2}$$

*where* $A(i, j)$ = Carrier index after spreading for $j^{th}$ carrier in $i^{th}$ symbol $C_{P2}$=Number of data cells in one P2 symbol

As shown in Expression 20, when C_POST_P2(i) cells of L1-post signaling information of the current frame are allocated according to the number of P2 symbols in the time domain, the allocated C_POST_P2(i) cells are shifted such that the cells are continuous with cells of L1-pre signaling information in the frequency domain in each P2 symbol. This may be mathematically expressed by Expression 21. That is, C_POST_P2(i) jth cells allocated to the ith symbol are mapped to an index of A(i,j) as shown in Expression 21. Here, j corresponds to a jth subcarrier used in OFDM modulation in the frequency domain. j may represent a value in a range from 0 to C_POST_P2(i)-1. As a result, the cells of the L1-post signaling information of the current frame may be spread such that the cells are arranged continuously in frequency in the same spreading pattern as the L1-pre signaling information.

The reception system may first acquire L1-pre signaling information from the P2 symbol part. The reception system may determine that L1-pre signaling information is included in the P2 symbol part when the value of an L1_REPETITION_FLAG field included in the L1-pre signaling information is 0 and determine that L1-pre signaling information of the current frame is additionally included in the P2 symbol part when the value is 1.

When the value of the L1_REPETITION_FLAG field is 1, the reception system may acquire L1-post signaling information for a next frame located at the data symbol. In this case, the reception system cannot determine spreading location information and the length of L1-post signaling information of the current frame before the L1-pre signaling information is reconstructed. Accordingly, until the L1-pre signaling information is reconstructed, the reception system may store cells which are continuous with cells of the L1-pre signaling information in the frequency domain in the P2 symbol part.

Once the reception system acquires the L1-pre signaling information, the reception system may determine the number of cells of the L1-post signaling information of the current frame allocated for each symbol using L1_POST_INFO_SIZE information included in the L1-pre signaling information. This value may be determined using C_POST_P2(i) as shown in Expression 20. Then, the reception system may reconstruct the L1-post signaling information of the current frame by extracting a number of cells, which are continuous with cells of the L1-post signaling information in the frequency domain, the number corresponding to C_POST_P2(i), from cells stored in the buffer in each symbol.

In an embodiment of the present invention, the transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 29 may perform interleaving on output data of a cell interleaver in the BICM block and output the resulting data on a cell mapper included in the frame builder.

The time interleaver and the time deinterleaver are the same as described above with reference to Fig. 29. However, in an embodiment of the present invention, the size of the block interleaver may be of Row = C_PRE(0) and Column = N_P2 when the block interleaver interleaves L1-pre signaling information, may be of Row = C_POST_P2(0) and Column = N_P2 when the block interleaver interleaves L1-post signaling information of the current frame, and may be of Row = C_POST(0) and Column = L_normal when the block interleaver interleaves L1-post signaling information of the next frame.

A transmission signal according to this embodiment may have the frame structure shown in Fig. 30. The same description is omitted herein.

Fig. 32 illustrates a frame mapping structure of L1 signaling information according to an embodiment of the present invention. In the frame structure of Fig. 32, the horizontal axis represents the time domain and the vertical axis represents the frequency domain.

Fig. 32 shows the case in which the value of the L1_REPETITION_FLAG field is 0 in the above example and the frame builder uniformly spreads cells corresponding to L1-pre signaling information over a P2 symbol part of a frame in the time and frequency domains. In addition, the frame builder uniformly spreads cells corresponding to L1-post signaling information of a next frame over a data symbol part of the frame.

Fig. 32 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 32, the cells of the L1-pre signaling information are spread such that the cells of the L1-pre signaling information are arranged in 4 symbols such that 2 cells are arranged in each symbol and are cyclically shifted to different subcarriers in each symbol in the frequency domain. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

Fig. 33 illustrates a frame mapping structure of L1 signaling information according to an embodiment of the present invention. In the frame structure of Fig. 33, the horizontal axis represents the time domain and the vertical axis represents the frequency domain.

Fig. 33 shows the case in which the value of the L1_REPETITION_FLAG field is 1 in the above example and the frame builder uniformly spreads cells corresponding to L1-pre signaling information and cells corresponding to L1-post signaling information of the current frame over a P2 symbol part of a frame in the time and frequency domains. In addition, the frame builder uniformly spreads cells corresponding to L1-post signaling information of a next frame over a data symbol part of the frame.

Fig. 33 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 33, the cells of the L1-pre signaling information are spread such that the cells of the L1-pre signaling information are arranged in 4 symbols such that 2 cells are arranged in each symbol and are cyclically shifted to different subcarriers in each symbol in the frequency domain. The cells of the L1-post signaling information of the current frame are divided into groups of 7 cells and are then located continuously with the cells of the L1-pre signaling information spread in the frequency domain. The reception system does not know the size and location of the L1-post signaling information of the current frame. Therefore, in order to notify the reception system of the relative positions of the L1-post signaling information cells of the current frame through the L1-pre signaling information, the cells of the L1-post signaling information of the current frame are located continuously with the cells of the L1-pre signaling information. This also improves frequency diversity. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

3. Method of spreading L1 signaling information of a next frame over a data symbol part of a frame and adding an additional preamble

In this embodiment, a method in which L1-pre signaling information of a next frame and L1-post signaling information of the next frame are spread over a P2 symbol part of a frame and an additional preamble P1' is added is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the additional P1 symbol part may be referred to as a preamble part of a transmission signal or a frame.

Fig. 34 illustrates a frame mapping structure of L1 signaling information according to an embodiment of the present invention. In the frame structure of Fig. 34, the horizontal axis represents the time domain and the vertical axis represents the frequency domain.

In the example of Fig. 34, the frame builder uniformly spreads cells corresponding to L1-pre signaling information of the next frame over an N_spread section included in a symbol part of a frame in the time and frequency domains. In addition, the frame builder uniformly spreads cells corresponding to L1-post signaling information of a next frame over a section subsequent to the N_spread section in the data symbol part of the frame. Further, a P1' symbol, which is an additional preamble, is added to signal the spreading length of the L1-pre signaling information and the pilot pattern through the P1' symbol, thereby allowing the receiving side to efficiently perform channel estimation and spreading structure determination.

Cells of the L1-pre signaling information of the next frame are uniformly arranged in a spreading section (i.e., a symbol section having an N_spread length) indicated by L1_PRE_SPREAD_LEN in the time domain to achieve time diversity and are cyclically shifted to subcarriers in the frequency domain in each symbol such that the cells are arranged so as to achieve frequency diversity. Cells of the L1-post signaling information of the next frame are uniformly arranged in a section other than the symbol section having the N_spread length in the data symbol section in the time domain to achieve time diversity and are cyclically shifted to subcarriers in the frequency domain in each symbol such that the cells are arranged so as to achieve frequency diversity.

When the reception system receives a frame having such a structure, the reception system may first decode a P1 symbol of the frame to acquire FFT size information or the like of the frame. The reception system may then decode the P1' symbol to acquire information regarding the pilot pattern and information regarding the spreading pattern of the L1-pre signaling information. Since the reception system can determine a section in which L1-pre signaling information is spread through the acquired information, the reception system can determine the number of cells of the L1-pre signaling information allocated for each symbol. Since the cells of the L1-pre signaling information are cyclically shifted in the frequency domain, the reception system can determine correct locations of the cells of the L1-pre signaling information to reconstruct the L1-pre.

In addition, the reception system may acquire the length of a section in which the L1-post signaling information is spread by subtracting the length of the spreading section of the L1-pre signaling information from the length of the data symbol section. Thus, since the reception system can determine the number of cells of the L1-post signaling information that are uniformly included in one symbol and the cells of the L1-post signaling information are cyclically shifted in the frequency domain, the reception system can determine correct locations of the cells of the L1-post signaling information to reconstruct the L1-post. The reception system may decode the L1-post signaling information to acquire information regarding a PLP included in a next frame.

Fig. 35 illustrates a method for signaling an additional preamble according to an embodiment of the present invention.

As shown in Fig. 35, one P1' symbol may be located as an additional preamble between a P1 symbol and a data symbol. The P1' symbol is a preamble similar to the P1 symbol and includes 7 bits. The P1' symbol uses a distribution sequence and a modulation sequence which are different from those of the P1 symbol and information of the P1' symbol does not change in one superframe, similar to that of the P1 symbol. The 7 bits include 4 bits indicating information regarding the pilot pattern (PILOT_PATTERN) and 3 bits indicating information regarding the length (L1_PRE_SPREAD_LEN) of the spreading section of the L1-pre signaling information.

To decode L1-pre signaling information and L1-post signaling information present in the data symbol part, there is a need to perform channel estimation of the frame. For such channel estimation, the transmitting side needs to use a predefined pilot pattern. In this embodiment, PILOT_PATTERN information of the P1' symbol is used as shown in a table 45020 of Fig. 35 to notify the receiving side of the pilot pattern. In an embodiment, the pilot pattern information may provide information regarding 8 pilot patterns of 0000 to 0111 as shown in the table 45020 and the remaining values 1000 to 1111 may be reserved for pilot patterns that may be used at a later time.

The L1_PRE_SPREAD_LEN information may provide parameter information indicating the number of symbols over which cells of L1-pre signaling information are spread. In other words, the L1_PRE_SPREAD_LEN information may provide information regarding time diversity of the L1-pre signaling information as shown in a table 45030. A data symbol section of a frame may be expressed in 12 bits. However, since 3 bits are allocated to the L1_PRE_SPREAD_LEN information, the length of the spreading section of the L1-pre signaling information may be quantized into 3 bits to be signaled in an embodiment of the present invention. In the embodiment of Fig. 35, it is assumed that the maximum spreading length is about 125ms and the L1_PRE_SPREAD_LEN information indicates 8 spreading patterns. In the case in which in which the value of the L1_PRE_SPREAD_LEN information is 000, this indicates that spreading of the L1 signaling information is not used but instead L1-pre signaling information and L1-post signaling information are signaled using the conventional P2 symbol. In each of the remaining cases, the length of a spreading section of the L1-pre signaling information may be defined in units of symbols for each FFT size as shown in the table 45030.

The reception system may decode an additional P1' symbol after decoding the P1 symbol to acquire PILOT_PATTERN information and L1_PRE_SPREAD_LEN information as shown in Fig. 35. Since the reception system can determine the pilot pattern of the current frame through such acquired information, the reception system can perform channel estimation using the pilot signal. In addition, since the reception system can determine the number of symbols over which the L1-pre signaling information is spread, the reception system can determine the spreading pattern of the L1-pre signaling information to reconstruct L1-pre signaling information present at the corresponding location.

In an embodiment of the present invention, L1-pre signaling information which is transmitted within a data part includes configuration (or attribute) information of a next frame. For example, the L1-pre signaling information may include TYPE information, BWT_EXT information, ID information, NUM_T2_FRAME information, or the like representing the configuration of a next frame and may also include L1_MOD information, L1_COD information, L1_POST_SIZE information, L1_FEC_TYPE information, or the like representing the configuration of L1-post signaling information of a next frame.

To reconstruct L1-post signaling information included in the current frame, there is a need to be aware of a configuration of the current frame such as the length of the current frame. However, since the L1-pre signaling information included in the current frame includes configuration information of L1-post signaling information included in a next frame, parameter information indicating the length of the current frame is added to the L1-pre signaling information in the embodiment of the present invention. In an embodiment, the parameter information may be defined as CURRENT_NUM_DATA_SYMBOLS information. The CURRENT_NUM_DATA_SYMBOLS information, which is 12-bit information, may be expressed by the number of OFDM symbols.

The reception system may decode the L1-pre signaling information included in the current frame to acquire configuration information of the next frame and to acquire information used to decode L1-post signaling information of the next frame included in the current frame. In addition, since the reception system can determine the length of the current frame using the CURRENT_NUM_DATA_SYMBOLS information included in the L1-pre signaling information, the reception system can determine the structure of L1-post signaling information spread in the current frame using the length of the current frame to decode the L1-post signaling information.

The following is a description of a method for a frame builder to spread L1-pre signaling information and L1-post signaling information as in the frame structure of Fig. 34 described above.

First, the L1-pre signaling information is spread over an N_spread section of a data symbol part in the time and frequency domains as in Fig. 34. The L1-pre signaling information is mapped to the frame in the time domain as shown in the following Expression 22 and is mapped in the frequency domain as shown in the following Expression 23.

[Expression 22]

$$C_{PRE}(i) = \begin{cases} ceil\left(\frac{L1_PRE_INFO_SIZE}{N_{spread}}\right), & 0 \le i < (L1_PRE_INFO_SIZE \bmod N_{spread}) \\ floor\left(\frac{L1_PRE_INFO_SIZE}{N_{spread}}\right), & (L1_PRE_INFO_SIZE \bmod N_{spread}) \le i < N_{spread} \end{cases}$$

*where* $C_{PRE}(i)$= Number of L1-pre cells in $i^{th}$ *data symbol*
$N_{spread}$=Number of data symbols for L1-pre spreding
L1_*PRE_INFO_SIZE*=the size of information part of the L1-pre signalling data

In Expression 22, C_PRE (i) represents the number of cells of L1-pre signaling information allocated to an ith symbol according to the value of N_spread. The value of N_spread may be determined according to L1_PRE_SPREAD information of the P1' symbol as described above.

[Expression 23]

$$A(i,j)=\begin{Bmatrix}\left\{\sum_{k=0}^{i-1}C_{PRE}(k)+j\right\}\bmod C_{DATA}, & 0<i<N_{spread}\\ j\bmod C_{DATA} & ,i=0\end{Bmatrix},\ 0\le j<C_{PRE}(i)\ .$$

*where A(i, j)* = Carrier index after spreading for *j*$^{th}$ carrier in *i*$^{th}$ symbol $C_{DATA}$=Number of data cells in one normal data symbol

As shown in Expression 22, when cells of L1-pre signaling information are allocated according to the length (N_spread) of the spreading section in the time domain, the allocated cells are cyclically shifted in the frequency domain using Expression 23. That is, C_PRE(i) jth cells allocated to the ith symbol are mapped to an index of A(i,j) as shown in Expression 23. Here, j corresponds to a jth subcarrier used in OFDM modulation in the frequency domain. j may represent a value in a range from 0 to C_PRE(i)-1.

The reception system may determine the number of P2 symbols included in the frame using the FFT size information acquired from the P1 symbol. Thus, the reception system may determine the number of L1-pre cells allocated to the ith symbol, i.e., may determine the value C_PRE(i). The reception system may acquire P1-pre signaling information using a frame structure in which uniformly divided L1-pre cells are cyclically shifted in each symbol in the frequency domain.

The reception system may perform channel estimation using a pilot pattern received through the P1' symbol and may then determine the length of the spreading section of the L1-pre signaling information for the next frame using the L1_PRE_SPREAD_LEN information. Since the reception system can determine a correct length of the spreading section through the table 45030 of Fig. 35 described above and can also determine the length of the spreading section and the amount of the L1-pre signaling information, the reception system can determine the locations of cells of the L1-pre signaling information using Expressions 22 and 23.

Next, the L1-post signaling information is spread over the time and frequency domains in a section subsequent to the spreading section of the L1-pre signaling information of the data symbol part as shown in Fig. 34. The L1-post signaling information is mapped to the frame in the time domain as shown in the following Expression 24 and is mapped in the frequency domain as shown in the following Expression 25.

[Expression 24]

$$C_{POST}(i)=\begin{Bmatrix}ceil\left(\frac{L1_POST_INFO_SIZE}{L_{normal}-N_{spread}}\right), & N_{spread}\le i<(L1_POST_INFO_SIZE\bmod(L_{normal}-N_{spread}))\\ floor\left(\frac{L1_POST_INFO_SIZE}{L_{normal}-N_{spread}}\right), & (L1_POST_INFO_SIZE\bmod(L_{normal}-N_{spread}))\le i<L_{normal}-N_{spread}\end{Bmatrix},$$

*where* $C_{POST}(i)$=Number of L1-post cells in *i*$^{th}$ data symbol *L1_POST_INFO_SIZE*=the size of the information part of the L1-post signaling data $L_{normal}$=# of data symbols, not including P1, P2 or any frame closing symbol, in a frame

In Expression 24, L_normal represents the number of data symbols excluding P1, P2 or closing symbols in the frame. Thus, a value obtained by subtracting the value of N_spread from the value of L_normal is the length of a symbol section over which L1-post signaling information is spread. Cells of L1-post signaling information may be uniformly distributed over L_normal - N_spread data symbols and the number of cells of the L1-post signaling information allocated to the ith data symbol may be set to C_POST(i) according to Expression 24.

[Expression 25]

$$A(i,j)=\begin{cases}\left\{\sum_{k=0}^{i-1} C_{POST}(k)+j\right\} \bmod C_{DATA}, & N_{spread}<i<L_{normal}\\ j \bmod C_{DATA} & ,i=N_{spread}\end{cases},\ 0\leq j<C_{POST}(i),$$

*where A(i, j)* = Carrier address after spreading for $j^{th}$ carrier in $i^{th}$ symbol $C_{DATA}$=Number of data cells in one normal data symbol

The cells of the L1-post signaling information which are spread in the time domain as shown in Expression 24 are spread in the frequency domain as shown in Expression 25. That is, the cells of the L1-post signaling information are mapped to the first subcarrier and are cyclically shifted to maximize frequency diversity. Such mapping is performed as shown in Expression 25 and C_POST(i) jth cells allocated to the ith symbol are mapped to an index (or subcarrier) of A(i,j). Here, j corresponds to a jth subcarrier used in OFDM modulation in the frequency domain. j may represent a value in a range from 0 to C_POST(i)-1.

The reception system may acquire NUM_DAT_SYMBOLS information and N_spread information in the current frame and L1_POST_INFO_SIZE by decoding the L1-pre signaling information and may reconstruct L1-post signaling information using the acquired information. That is, the reception system may determine the number of cells corresponding to L1-post signaling information, which is uniformly distributed over one symbol, through such information and Expression 24. Since cells allocated to each symbol are cyclically shifted in the frequency domain, the reception system may determine locations of cells corresponding to the L1-post signaling information using such structural characteristics to acquire the L1-post signaling information. Thus, the reception system may acquire information regarding PLPs included in a next frame by decoding the L1-post signaling information.

In an embodiment of the present invention, the transmission system may perform time interleaving and time deinterleaving on the generated L1 signaling information. Such operations of the time interleaver and the time deinterleaver are similar to those described above with reference to Fig. 29. However, in an embodiment of the present invention, the size of the block interleaver may be of Row = C_PRE(0) and Column = N_spread when the block interleaver interleaves L1-pre signaling information and may be of Row = C_POST(0) and Column = L_normal - N_spread when the block interleaver interleaves L1-post signaling information.

Fig. 36 illustrates a frame structure of a transmission signal according to an embodiment of the present invention.

The transmission signal of Fig. 36 includes superframes, each including a plurality of frames. The L1 signaling information spreading method, which is applied to a transmission signal having such a structure, is described below.

First, the spreading method may be used for frames in a superframe. That is, this method allows a P1' symbol included in an n-1th frame to include information regarding the frame (i.e., frame n-1) (such as pilot pattern information or length information of a spreading section of the L1-pre signaling information) and L1-post signaling information included in a data part thereof to include information regarding a next frame (i.e., frame n). For frames included in the same superframe, it is possible to signal a number of the superframe (i.e., the number of frames included in the single superframe) which does not change in L1_CHQNGE_COUNTER information included in dynamic information of the L1-post signaling information. In this case, a next frame may be decoded by acquiring the L1-post signaling information included in the frame as described above.

However, for frames included in superframe n and a different superframe such as superframe n+1 as shown in Fig. 36, L1-post signaling information of frame n in superframe n+1, which indicates information regarding frame n+1 in superframe n+1, may differ from L1-post signaling information of frames included in superframe n. That is, frames included in superframe n+1 have L1-pre signaling information and L1-post signaling information which are different from those of frames included in superframe n. For example, L1-pre signaling information of frames included in a superframe includes different information items such as L1_MOD information, L1_COD information, L1_FEC_TYPE information, L1_POST_SIZE information, L1_POST_SIZE_INFO information, or L1_POST_EXTENSION. L1-post signaling information of frames included in a superframe may also include different information items.

Accordingly, when the L1 signaling information is spread, the L1 signaling information needs to be inserted and spread taking into consideration a superframe including the frame.

The reception system may process frames included in the same superframe by acquiring information regarding the current frame (i.e., frame n-1) (such as pilot pattern information or length information of a spreading section of the L1-pre signaling information) from a P1' symbol included in the current frame and acquiring information regarding a next frame (i.e., frame n) from L1 signaling information included in a data part of the current frame. However, when a frame belonging to a different superframe follows, the reception system needs to process the frame by determining L1 signaling information which changes as described above. The reception system may process each frame by determining the number of superframes, after which the frame configuration changes, from L1_CHANGE_COUNTER information included in dynamic information of the L1-post signaling information and additional determining L1 signaling information that changes at the boundary.

Fig. 34 shows a frame mapping structure of L1 signaling information according to an embodiment of the present invention as described above.

In the example of Fig. 34, the frame builder uniformly spreads cells corresponding to L1-pre signaling information of the next frame over an N_spread section included in a symbol part of a frame in the time and frequency domains. In addition, the frame builder uniformly spreads cells corresponding to L1-post signaling information of a next frame over a section subsequent to the N_spread section in the data symbol part of the frame. Further, a P1' symbol, which is an additional preamble, is added to signal the spreading length of the L1-pre signaling information and the pilot pattern through the P1' symbol, thereby allowing the receiving side to efficiently perform channel estimation and spreading structure determination.

In the case of Fig. 34, it is assumed that the number of cells of the L1-pre signaling information is 8, the number of cells of the L1-post signaling information is 28, the number of data symbols is 22, and the length of the N_spread section is 8. The frame builder first spreads the 8 cells of the L1-pre signaling information over the N-spread section and spreads the 28 cells of the L1-post signaling information over the section of the 14 (= 22-8) data symbols such that 2 cells are arranged in each data symbol, thereby maximizing time diversity and frequency diversity.

4. Method of spreading L1-pre signaling information over a P2 symbol part of a frame and spreading L1-post signaling information of a next frame over a data symbol part of the frame

In this embodiment, a method in which L1-pre signaling information is spread over a P2 symbol part of a frame and a L1-post signaling information of a next frame is spread over a data symbol part of the frame is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the P2 symbol part may be referred to as a preamble part of a transmission signal or a frame.

Fig. 37 illustrates a frame mapping structure of L1 signaling information according to an embodiment of the present invention. In the frame structure of Fig. 37, the horizontal axis represents the time domain and the vertical axis represents the frequency domain.

In the example of Fig. 37, the frame builder uniformly spreads cells corresponding to L1-pre signaling information over a P2 symbol part of a frame in the time and frequency domains. In addition, the frame builder uniformly spreads cells corresponding to L1-post signaling information of a next frame over a data symbol part of the frame. Particularly, cells may be randomly spread according to a predefined equation or method.

It is possible to secure sufficient robustness of the L1-pre signaling information among the L1 signaling information since the L1-pre signaling information is repeated in each frame in a superframe. However, the robustness of the L1-post signaling information may be reduced since different L1-post signaling information may be transmitted in each frame. Thus, the robustness of the L1-post signaling information may be enhanced by transmitting L1-post signaling information of a next frame in the data symbol part so as to achieve time/frequency diversity.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1-pre signaling information is spread according to the number of P2 symbols. The reception system may decode P2 symbols to acquire L1-pre signaling information and may then acquire information regarding a configuration of the frame from the acquired L1-pre signaling information. The reception system may then decode L1-post signaling information included in the data symbol part to acquire information regarding a PLP included in a next frame.

The following is a description of a method for a frame builder to spread L1-pre signaling information and L1-post signaling information as in the frame structure of Fig. 37 described above.

First, the L1-pre signaling information is spread over the P2 symbol part in the time and frequency domains as in Fig. 37. The L1-pre signaling information is mapped to the frame in the time domain as shown in the following Expression 26 and is mapped in the frequency domain as shown in the following Expression 27.

[Expression 26]

$$C_{PRE}(i) = \begin{cases} ceil\left(\frac{L1_PRE_INFO_SIZE}{N_{P2}}\right), & 0 \le i < (L1_PRE_INFO_SIZE \bmod N_{P2}) \\ floor\left(\frac{L1_PRE_INFO_SIZE}{N_{P2}}\right), & (L1_PRE_INFO_SIZE \bmod N_{P2}) \le i < N_{P2} \end{cases},$$

*where* $C_{PRE}(i)$= Number of L1-pre cells in $i^{th}$ *P2 symbol*

L1*_PRE_INFO_SIZE*=the size of information part of the L1-pre signalling data

In Expression 26, C_PRE(i) represents the number of cells of L1-pre signaling information allocated to an ith symbol according to the number of P2 symbols that varies according to FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 26, when cells of L1-pre signaling information are allocated according to the number of P2 symbols in the time domain, the allocated cells are shifted in the frequency domain. An amount by which each P2 symbol is shifted in the frequency domain may be a predefined random amount or may be determined using a predefined equation. That is, cells of L1-pre signaling information may be mapped to subcarriers corresponding to an interval corresponding to the determined amount.

The reception system may determine the number of P2 symbols included in the frame using the FFT size information acquired from the P1 symbol. Thus, the reception system may determine the number of L1-pre cells allocated to the ith symbol, i.e., may determine the value C_PRE(i). The reception system may acquire P1-pre signaling information using a frame structure in which uniformly divided L1-pre cells are shifted in each symbol in the frequency domain randomly or through a predefined equation.

Next, the L1-post signaling information is spread over the time and frequency domains in a data symbol part as shown in Fig. 37. The L1-post signaling information is mapped to the frame in the time domain as shown in the following Expression 27.

[Expression 27]

$$C_{POST}(i) = \begin{cases} ceil\left(\frac{L1_POST_INFO_SIZE}{L_{normal}}\right), & 0 \le i < (L1_POST_INFO_SIZE \bmod L_{normal}) \\ floor\left(\frac{L1_POST_INFO_SIZE}{L_{normal}}\right), & (L1_POST_INFO_SIZE \bmod L_{normal}) \le i \le L_{normal} - 1 \end{cases},$$

*where* $C_{POST}(i)$=Number of L1-post cells in $i^{th}$ data symbol *L1_POST_INFO_SIZE*=the size of the information part of the L1-post signaling data $L_{normal}$=# of data symbols, not including P1, P2 or any frame closing symbol, in a frame

In Expression 27, L_normal represents the number of data symbols excluding P1, P2 or closing symbols in the frame. Cells of L1-post signaling information may be uniformly distributed over L_normal data symbols and the number of cells of the L1-post signaling information allocated to the ith data symbol may be set to C_POST(i) according to Expression 27.

The cells of the L1-post signaling information which are spread in the time domain as shown in Expression 27 are again spread in the frequency domain. That is, the cells of the L1-post signaling information are mapped to the first subcarrier and are shifted by a predefined random amount or by an amount determined using a predefined equation to maximize frequency diversity. That is, cells of L1-post signaling information may be mapped to subcarriers corresponding to an interval corresponding to the determined amount.

The reception system may acquire L1-pre signaling information from the P2 symbol part to acquire L1-post signaling information for a next frame located in the data symbol. Once the reception system acquires the L1-pre signaling information, the reception system may determine the structure of L1-post signaling information which is spread over L_normal data symbols using the values of an L1-POST_INFO_SIZE field and a NUM_DATA_SYMBOLS field included in the L1-pre signaling information. Since cells of the L1-post signaling information are uniformly spread in each symbol, the reception system may determine the number of cells of the L1-post signaling information allocated to the ith symbol through the above Expression 27. In addition, since cells of the L1-post signaling information are shifted in each symbol in the frequency domain by a random amount or by an amount determined using a predefined equation, the reception system may determine the number and the locations of L1-post signaling information cells of the subcarrier in the frequency domain through such a structure.

In an embodiment of the present invention, the transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 29 may perform interleaving on output data of a cell interleaver in the BICM block and output the resulting data on a cell mapper included in the frame builder.

The time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row = C_PRE(0) and Column = N_P2 when the block interleaver interleaves L1-pre signaling information and may be of Row = C_POST(0) and Column = L_normal when the block interleaver interleaves L1-post signaling information. Other operations of the time interleaver and the time deinterleaver are the same as described above with reference to Fig. 29.

A transmission signal of this embodiment includes superframes, each including a plurality of frames. The L1 signaling information spreading method, which is applied to a transmission signal having such a structure, is the same as described above with reference to Fig. 30.

Fig. 38 illustrates a frame mapping structure of L1 signaling information according to an embodiment of the present invention. In the frame structure of Fig. 38, the horizontal axis represents the time domain and the vertical axis represents the frequency domain.

Fig. 38 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 38, the cells of the L1-pre signaling information are spread such that the cells of the L1-pre signaling information are arranged in 4 symbols such that 2 cells are arranged in each symbol and are cyclically shifted to different subcarriers in each symbol in the frequency domain. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

Fig. 39 illustrates a frame mapping structure of L1 signaling information according to another embodiment of the present invention. In the frame structure of Fig. 39, the horizontal axis represents the time domain and the vertical axis represents the frequency domain.

Fig. 39 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 39, the cells of the L1-pre signaling information are spread such that the cells of the L1-pre signaling information are arranged in 4 symbols such that 2 cells are arranged in each symbol and are each shifted to a different subcarrier in each symbol in the frequency domain by a random interval. It can also be seen that 28 cells of L1-post signaling information for a next frame are spread such that the 28 cells are arranged in 14 data symbols such that 2 cells are arranged in each data symbol in the time domain and are each shifted to a different subcarrier in the frequency domain by a random interval.

5. Method of spreading L1-pre signaling information and L1-post signaling information over a P2 symbol part of a frame and spreading L1-post signaling information of a next frame over a data symbol part of the frame

In this embodiment, a method in which L1-pre signaling information and L1-post signaling information of the current frame are spread over a P2 symbol part of the frame and a L1-post signaling information of a next frame is spread over a data symbol part of the frame is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the P2 symbol part may be referred to as a preamble part of a transmission signal or a frame.

Fig. 40 illustrates a frame mapping structure of L1 signaling information according to an embodiment of the present invention. In the frame structure of Fig. 40, the horizontal axis represents the time domain and the vertical axis represents the frequency domain.

In the example of Fig. 40, the frame builder uniformly spreads cells corresponding to L1-pre signaling information and cells corresponding to L1-post signaling information of the current frame over a P2 symbol part of a frame in the time and frequency domains. In addition, the frame builder uniformly spreads cells corresponding to L1-post signaling information of a next frame over a data symbol part of the frame.

It is possible to secure sufficient robustness of the L1-pre signaling information among the L1 signaling information since the L1-pre signaling information is repeated in each frame in a superframe. However, the robustness of the L1-post signaling information may be reduced since different L1-post signaling information may be transmitted in each frame. Thus, the robustness of the L1-post signaling information may be enhanced by transmitting L1-post signaling information of a next frame in the data symbol part so as to achieve time/frequency diversity. In addition, it is possible to omit inclusion of L1-post signaling information in the current P2 symbol part using L1_REPETITION_FLAG information included in the L1-pre signaling information in order to solve the frame overhead problem. In an embodiment of the present invention, it is possible to determine that the L1-post signaling information of the current frame is present in the P2 symbol part when the value of the L1_REPETITION_FLAG field is 1 and to determine that the L1-post signaling information is not present in the P2 symbol part when the value is 0.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1-pre signaling information is spread according to the number of P2 symbols. In addition, the reception system may check the value of an L1_REPETITION_FLAG field included in the L1-pre signaling information and determine that the L1-post signaling information of the current frame is present in the P2 symbol part when the value of the L1_REPETITION_FLAG field is 1 and determine that the L1-post signaling information is not present in the P2 symbol part when the value is 0.

When the value of the L1_REPETITION_FLAG field is 1, the reception system may decode the L1-post signaling information to acquire L1-post signaling information of the current frame from the P2 symbol part of the current frame and to acquire L1-post signaling information of a next frame from the data symbol part. That is, the reception system may decode P2 symbols to acquire L1-pre signaling information and may then acquire information regarding a configuration of the frame from the acquired L1-pre signaling information. The reception system may then decode L1-post signaling information included in the data symbol part to acquire information regarding a PLP included in a next frame.

When the value of the L1_REPETITION_FLAG field is 0, the reception system may decode the L1-post signaling information to acquire on the L1-post signaling information of the next frame from the P2 symbol part of the current frame. In this case, latency may occur when the reception system performs data reconstruction or decoding. This may be overcome by setting the value of the L1_REPETITION_FLAG field to 1 and including the L1-post signaling information of the current frame.

The following is a description of a method for a frame builder to spread L1-pre signaling information and L1-post signaling information as in the frame structure of Fig. 40 described above.

First, the L1-pre signaling information is spread over the P2 symbol part in the time and frequency domains as in Fig. 40. The L1-pre signaling information is mapped to the frame in the time domain as shown in the following Expression 28.

[Expression 28]

$$C_{PRE}(i) = \left\{ \begin{array}{ll} ceil\left(\frac{L1_PRE_INFO_SIZE}{N_{P2}}\right), & 0 \le i < (L1_PRE_INFO_SIZE \bmod N_{P2}) \\ floor\left(\frac{L1_PRE_INFO_SIZE}{N_{P2}}\right), & (L1_PRE_INFO_SIZE \bmod N_{P2}) \le i < N_{P2} \end{array} \right\},$$

*where* $C_{PRE}(i)$= Number of L1-pre cells in *$i^{th}$ P2 symbol*

L1_*PRE_INFO_SIZE*=the size of information part of the L1-pre signalling data

In Expression 28, C_PRE(i) represents the number of cells of L1-pre signaling information allocated to an ith symbol according to the number of P2 symbols that varies according to FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 28, when cells of L1-pre signaling information are allocated according to the number of P2 symbols in the time domain, the allocated cells are shifted in the frequency domain. An amount by which each P2 symbol is shifted in the frequency domain may be a predefined random amount or may be determined using a predefined equation. That is, cells of L1-pre signaling information may be mapped to subcarriers corresponding to an interval corresponding to the determined amount.

The reception system may determine the number of P2 symbols included in the frame using the FFT size information acquired from the P1 symbol. Thus, the reception system may determine the number of L1-pre cells allocated to the ith symbol, i.e., may determine the value C_PRE(i). The reception system may acquire P1-pre signaling information using a frame structure in which uniformly divided L1-pre cells are shifted in each symbol in the frequency domain randomly or through a predefined equation.

Next, the L1-post signaling information of the current frame is spread over the time and frequency domains in a data symbol part as shown in Fig. 40. The L1-post signaling information is mapped to the frame in the time domain as shown in the following Expression 29.

[Expression 29]

$$C_{POST}(i)=\begin{cases} ceil\left(\frac{L1_POST_INFO_SIZE}{L_{normal}}\right), & 0\le i<(L1_POST_INFO_SIZE \bmod L_{normal}) \\ floor\left(\frac{L1_POST_INFO_SIZE}{L_{normal}}\right), & (L1_POST_INFO_SIZE \bmod L_{normal})\le i\le L_{normal}-1 \end{cases},$$

*where* $C_{POST}(i)$=Number of L1-post cells in $i^{th}$ data symbol *L1_POST_INFO_SIZE*=the size of the information part of the L1-post signaling data $L_{normal}$=# of data symbols, not including P1, P2 or any frame closing symbol, in a frame

In Expression 29, L_normal represents the number of data symbols excluding P1, P2 or closing symbols in the frame. Cells of L1-post signaling information may be uniformly distributed over L_normal data symbols and the number of cells of the L1-post signaling information allocated to the ith data symbol may be set to C_POST(i) according to Expression 29.

The cells of the L1-post signaling information which are spread in the time domain as shown in Expression 29 are again spread in the frequency domain. That is, the cells of the L1-post signaling information are mapped to the first subcarrier and are shifted by a predefined random amount or by an amount determined using a predefined equation to maximize frequency diversity. That is, cells of L1-post signaling information may be mapped to subcarriers corresponding to an interval corresponding to the determined amount.

The reception system may acquire L1-pre signaling information from the P2 symbol part to acquire L1-post signaling information for a next frame located in the data symbol. Once the reception system acquires the L1-pre signaling information, the reception system may determine the structure of L1-post signaling information which is spread over L_normal data symbols using the values of an L1-POST_INFO_SIZE field and a NUM_DATA_SYMBOLS field included in the L1-pre signaling information. Since cells of the L1-post signaling information are uniformly spread in each symbol, the reception system may determine the number of cells of the L1-post signaling information allocated to the ith symbol through the above Expression 29. In addition, since cells of the L1-post signaling information are shifted in each symbol in the frequency domain by a random amount or by an amount determined using a predefined equation, the reception system may determine the number and the locations of L1-post signaling information cells of the subcarrier in the frequency domain through such a structure.

Finally, L1-post signaling information of the current frame may be spread over a P2 symbol part in the time and frequency domains as shown in Fig. 40 (when the value of the L1_REPETITION_FLAG field is 1). The L1-post signaling information of the current frame is mapped to the frame in the time domain as shown in the following Expression 30.

[Expression 30]

$$C_{POST_P2}(i)=\begin{cases} ceil\left(\frac{L1_POST_INFO_SIZE}{N_{P2}}\right), & 0\le i<(L1_POST_INFO_SIZE \bmod N_{P2}) \\ floor\left(\frac{L1_POST_INFO_SIZE}{N_{P2}}\right), & (L1_POST_INFO_SIZE \bmod N_{P2})\le i<N_{P2} \end{cases},$$

*where* $C_{POST_P2}(i)$= Number of L1-post cells in $i^{th}$ *P2 symbol*

L1_*POST_SIZE*=the size of information part of the L1-post signalling data

In Expression 30, C_POST_P2(i) represents the number of cells of L1-post signaling information of the current frame allocated to an ith symbol according to the number of P2 symbols that varies according to FFT mode. As described above, the value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 30, when cells of L1-post signaling information of the current frame are allocated according to the number of P2 symbols in the time domain, the allocated C_POST_P2(i) cells are shifted such that the cells are continuous with cells of L1-pre signaling information in the frequency domain in each P2 symbol. As a result, the cells of the L1-post signaling information of the current frame may be spread such that the cells are arranged continuously in frequency in the same spreading pattern as the L1-pre signaling information.

The reception system may first acquire L1-pre signaling information from the P2 symbol part. The reception system may determine that L1-pre signaling information is included in the P2 symbol part when the value of an L1_REPETITION_FLAG field included in the L1-pre signaling information is 0 and determine that L1-pre signaling information of the current frame is additionally included in the P2 symbol part when the value is 1.

When the value of the L1_REPETITION_FLAG field is 1, the reception system may acquire L1-post signaling information for a next frame located at the data symbol. In this case, the reception system cannot determine spreading location information and the length of L1-post signaling information of the current frame before the L1-pre signaling information is reconstructed. Accordingly, until the L1-pre signaling information is reconstructed, the reception system may store cells which are continuous with cells of the L1-pre signaling information in the frequency domain in the P2 symbol part.

Once the reception system acquires the L1-pre signaling information, the reception system may determine the number of cells of the L1-post signaling information of the current frame allocated for each symbol using L1_POST_INFO_SIZE information included in the L1-pre signaling information. This value may be determined using C_POST_P2(i) as shown in Expression 30. Then, the reception system may reconstruct the L1-post signaling information of the current frame by extracting a number of cells, which are continuous with cells of the L1-post signaling information in the frequency domain, the number corresponding to C_POST_P2(i), from cells stored in the buffer in each symbol.

In an embodiment of the present invention, the transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 29 may perform interleaving on output data of a cell interleaver in the BICM block and output the resulting data on a cell mapper included in the frame builder.

The time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row = C_PRE(0) and Column = N_P2 when the block interleaver interleaves L1-pre signaling information, may be of Row = C_POST_P2(0) and Column = N_P2 when the block interleaver interleaves L1-post signaling information of the current frame, and may be of Row = C_POST(0) and Column = L_normal when the block interleaver interleaves L1-post signaling information of the next frame. Other operations of the time interleaver and the time deinterleaver are the same as described above with reference to Fig. 29.

A transmission signal of this embodiment includes superframes, each including a plurality of frames. The L1 signaling information spreading method, which is applied to a transmission signal having such a structure, is the same as described above with reference to Fig. 30.

Fig. 41 illustrates a frame mapping structure of L1 signaling information according to an embodiment of the present invention. In the frame structure of Fig. 41, the horizontal axis represents the time domain and the vertical axis represents the frequency domain.

Fig. 41 shows the case in which the value of the L1_REPETITION_FLAG field is 0 in the above example and the frame builder uniformly spreads cells corresponding to L1-pre signaling information over a P2 symbol part of a frame in the time and frequency domains. In addition, the frame builder uniformly spreads cells corresponding to L1-post signaling information of a next frame over a data symbol part of the frame.

Fig. 41 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 41, the cells of the L1-pre signaling information are spread such that the cells of the L1-pre signaling information are arranged in 4 symbols such that 2 cells are arranged in each symbol and are cyclically shifted to different subcarriers in each symbol in the frequency domain. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

Fig. 42 illustrates a frame mapping structure of L1 signaling information according to an embodiment of the present invention. In the frame structure of Fig. 42, the horizontal axis represents the time domain and the vertical axis represents the frequency domain.

Fig. 42 shows the case in which the value of the L1_REPETITION_FLAG field is 1 in the above example and the frame builder uniformly spreads cells corresponding to L1-pre signaling information and cells corresponding to L1-post signaling information of the current frame over a P2 symbol part of a frame in the time and frequency domains. In addition, the frame builder uniformly spreads cells corresponding to L1-post signaling information of a next frame over a data symbol part of the frame.

Fig. 42 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 42, the cells of the L1-pre signaling information are spread such that the cells of the L1-pre signaling information are arranged in 4 symbols such that 2 cells are arranged in each symbol and are cyclically shifted to different subcarriers in each symbol in the frequency domain.

The cells of the L1-post signaling information of the current frame are divided into groups of 7 cells and are then located continuously with the cells of the L1-pre signaling information spread in the frequency domain. The reception system does not know the size and location of the L1-post signaling information of the current frame. Therefore, in order to notify the reception system of the relative positions of the L1-post signaling information cells of the current frame through the L1-pre signaling information, the cells of the L1-post signaling information of the current frame are located continuously with the cells of the L1-pre signaling information. This also improves frequency diversity. It can also be seen that 28 cells of L1-post signaling information for a next frame are spread such that the 28 cells are arranged in 14 data symbols such that 2 cells are arranged in each data symbol in the time domain and are cyclically shifted to different subcarriers in the frequency domain.

Fig. 43 illustrates a frame mapping structure of L1 signaling information according to another embodiment of the present invention. In the frame structure of Fig. 43, the horizontal axis represents the time domain and the vertical axis represents the frequency domain.

Fig. 43 shows the case in which the value of the L1_REPETITION_FLAG field is 0 in the above example and the frame builder uniformly spreads cells corresponding to L1-pre signaling information over a P2 symbol part of a frame in the time and frequency domains. In addition, the frame builder uniformly spreads cells corresponding to L1-post signaling information of a next frame over a data symbol part of the frame.

Fig. 43 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 43, the cells of the L1-pre signaling information are spread such that the cells of the L1-pre signaling information are arranged in 4 symbols such that 2 cells are arranged in each symbol and are each shifted to a different subcarrier in each symbol in the frequency domain by a random interval. It can also be seen that 28 cells of L1-post signaling information for a next frame are spread such that the 28 cells are arranged in 14 data symbols such that 2 cells are arranged in each data symbol in the time domain and are each shifted to a different subcarrier in the frequency domain by a random interval.

Fig. 44 illustrates a frame mapping structure of L1 signaling information according to an embodiment of the present invention. In the frame structure of Fig. 44, the horizontal axis represents the time domain and the vertical axis represents the frequency domain.

Fig. 44 shows the case in which the value of the L1_REPETITION_FLAG field is 1 in the above example and the frame builder uniformly spreads cells corresponding to L1-pre signaling information and cells corresponding to L1-post signaling information of the current frame over a P2 symbol part of a frame in the time and frequency domains. In addition, the frame builder uniformly spreads cells corresponding to L1-post signaling information of a next frame over a data symbol part of the frame.

Fig. 44 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 44, the cells of the L1-pre signaling information are spread such that the cells of the L1-pre signaling information are arranged in 4 symbols such that 2 cells are arranged in each symbol and are each shifted to a different subcarrier in each symbol in the frequency domain by a random interval.

The cells of the L1-post signaling information of the current frame are divided into groups of 7 cells and are then located continuously with the cells of the L1-pre signaling information spread in the frequency domain. The reception system does not know the size and location of the L1-post signaling information of the current frame. Therefore, in order to notify the reception system of the relative positions of the L1-post signaling information cells of the current frame through the L1-pre signaling information, the cells of the L1-post signaling information of the current frame are located continuously with the cells of the L1-pre signaling information. This also improves frequency diversity. It can also be seen that 28 cells of L1-post signaling information for a next frame are spread such that the 28 cells are arranged in 14 data symbols such that 2 cells are arranged in each data symbol in the time domain and are each shifted to a different subcarrier in the frequency domain by a random interval.

6. Method of spreading L1-pre signaling information and L1-post signaling information over a P2 symbol part of a frame

In this embodiment, a method in which L1-pre signaling information and L1-post signaling information are spread over a P2 symbol part of a frame is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the P2 symbol part may be referred to as a preamble part of a transmission signal or a frame.

Fig. 45 illustrates a frame mapping structure of L1 signaling information according to an embodiment of the present invention. In the frame structure of Fig. 45, the horizontal axis represents the time domain and the vertical axis represents the frequency domain.

The frame builder may arrange L1-pre signaling information and L1-post signaling information by allocating each of the L1-pre signaling information and the L1-post signaling information to a uniform number of cells in the time domain. The L1-pre signaling information and the L1-post signaling information may also be arranged such that each of the L1-pre signaling information and the L1-post signaling information is shifted in the frequency domain by a predefined amount or a random amount as shown in Fig. 45.

A reception system that receives a frame having such a structure may first decode a P1 symbol of the frame to acquire FFT size information or the like of the frame and to determine the number of P2 symbols corresponding to the acquired information. The reception system can be aware of an amount (or the number of cells) by which the L1 signaling information is spread for each symbol according to the number of P2 symbols and thus can acquire L1 signaling information by determining the amount by which the L1 signaling information is shifted in the frequency domain. Since the L1-post signaling information is arranged continuously with L1-pre signaling information in the frequency domain as shown in Fig. 45, the reception system may store L1-post signaling information in a P2 symbol section in a buffer and decode the L1-pre signaling information to determine the number of cells of the L1-post signaling information and may then acquire and decode the L1-post information stored in the buffer.

Fig. 46 illustrates a frame structure of L1 signaling information according to an embodiment of the present invention. Specifically, Fig. 46 shows a cell arrangement in the frequency domain. In the frame structure of Fig. 46, the horizontal axis represents the time domain and the vertical axis represents the frequency domain.

The left drawing of Fig. 46 shows the case in which cells of L1 signaling information are spread over a P2 symbol part only in the time domain to achieve only time diversity. The right drawing of Fig. 46 shows the case in which cells of L1 signaling information spread in the time domain are again spread in the frequency domain to secure frequency diversity.

In the case of the right drawing of Fig. 46, cells of L1 signaling information may be set to be shifted by a preset random value in the frequency domain or may be set to be cyclically shifted through a predetermined equation. Such a shift operation in the frequency domain may be performed such that cells arranged in each symbol are arranged in subcarriers of OFDM modulation which are separated from each other by a predetermined interval in the frequency domain, where the interval may be expressed as a shift amount or a shift value.

Fig. 47 illustrates a frame mapping structure of L1 signaling information according to an embodiment of the present invention. In the frame structure of Fig. 47, the horizontal axis represents the time domain and the vertical axis represents the frequency domain.

In the case of Fig. 47, the frame builder uniformly spreads cells corresponding to L1-pre signaling information over a P2 symbol part of a frame in the time and frequency domains.

Fig. 47 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 47, the cells of the L1-pre signaling information are spread such that the cells of the L1-pre signaling information are arranged in 4 symbols such that 2 cells are arranged in each symbol and are each shifted to a different subcarrier in each symbol in the frequency domain by a random interval. In the embodiment of Fig. 47, shift values used for shifting of the L1 signaling information in the frequency domain are {1, 4, 7, 3}. That is, cells of L1-pre signaling information distributed over 4 symbols are shifted respectively by intervals of 1, 4, 7, and 3 subcarriers. Here, since cells of L1-post signaling information are arranged continuously with the cells of the L1-pre signaling information, it may be considered that the cells of the L1-post signaling information are shifted by the same intervals as the cells of the L1-pre signaling information.

The cells of the L1-post signaling information are divided into groups of 7 cells and are then located continuously with the cells of the L1-pre signaling information spread in the frequency domain. The reception system does not know the size and location of the L1-post signaling information. Therefore, in order to notify the reception system of the relative positions of the L1-post signaling information cells through the L1-pre signaling information, the cells of the L1-post signaling information are located continuously with the cells of the L1-pre signaling information. This also improves frequency diversity.

Fig. 48 illustrates a frame mapping structure of L1 signaling information according to another embodiment of the present invention. In the frame structure of Fig. 48, the horizontal axis represents the time domain and the vertical axis represents the frequency domain.

In the case of Fig. 48, the frame builder uniformly spreads cells corresponding to L1-pre signaling information over a P2 symbol part of a frame in the time and frequency domains.

Fig. 48 also shows the case in which 4K FFT is used, i.e., the case in which the number of P2 symbols is 4. In this embodiment, it is assumed that L1 signaling information is spread such that L1-pre signaling information includes 8 cells, L1-post signaling information includes 28 cells, and a data symbol region includes 14 symbols. In this case, as shown in Fig. 48, the cells of the L1-pre signaling information are spread such that the cells of the L1-pre signaling information are arranged in 4 symbols such that 2 cells are arranged in each symbol and are each cyclically shifted to a different subcarrier in each symbol in the frequency domain according to a predetermined equation.

The cells of the L1-post signaling information are divided into groups of 7 cells and are then located continuously with the cells of the L1-pre signaling information spread in the frequency domain. The reception system does not know the size and location of the L1-post signaling information. Therefore, in order to notify the reception system of the relative positions of the L1-post signaling information cells through the L1-pre signaling information, the cells of the L1-post signaling information are located continuously with the cells of the L1-pre signaling information. This also improves frequency diversity.

7. Method of spreading L1 signaling information of a next frame over a data symbol part of a frame and adding an additional preamble

In this embodiment, a method in which L1-pre signaling information of a next frame and L1-post signaling information of the next frame are spread over a P2 symbol part of a frame and an additional preamble P1' is added is described as one of the above method of spreading L1 signaling information. In addition, in this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP. The P1 symbol part and the additional P1 symbol part may be referred to as a preamble part of a transmission signal or a frame.

Fig. 49 illustrates a frame mapping structure of L1 signaling information according to an embodiment of the present invention. In the frame structure of Fig. 49, the horizontal axis represents the time domain and the vertical axis represents the frequency domain.

In the example of Fig. 49, the frame builder uniformly spreads cells corresponding to L1-pre signaling information of the next frame over an N_spread section included in a symbol part of a frame in the time and frequency domains. In addition, the frame builder uniformly spreads cells corresponding to L1-post signaling information of a next frame over a section subsequent to the N_spread section in the data symbol part of the frame. Further, a P1' symbol, which is an additional preamble, is added to signal the spreading length of the L1-pre signaling information and the pilot pattern through the P1' symbol, thereby allowing the receiving side to efficiently perform channel estimation and spreading structure determination.

Cells of the L1-pre signaling information of the next frame are uniformly arranged in a spreading section (i.e., a symbol section having an N_spread length) indicated by L1_PRE_SPREAD_LEN in the time domain to achieve time diversity and are shifted to subcarriers by a predetermined interval(s) in the frequency domain in each symbol such that the cells are arranged so as to achieve frequency diversity. Cells of the L1-post signaling information of the next frame are uniformly arranged in a section other than the symbol section having the N_spread length in the data symbol section in the time domain to achieve time diversity and are shifted to subcarriers by a predetermined interval(s) in the frequency domain in each symbol such that the cells are arranged so as to achieve frequency diversity. The cells of the L1-pre signaling information and the cells of the L1-post signaling information may be cyclically shifted to subcarriers or may be shifted to subcarriers by a preset random interval(s) in the frequency domain so as to be spread.

When the reception system receives a frame having such a structure, the reception system may first decode a P1 symbol of the frame to acquire FFT size information or the like of the frame. The reception system may then decode the P1' symbol to acquire information regarding the pilot pattern and information regarding the spreading pattern of the L1-pre signaling information. Since the reception system can determine a section in which L1-pre signaling information is spread through the acquired information, the reception system can determine the number of cells of the L1-pre signaling information allocated for each symbol. Since the cells of the L1-pre signaling information are cyclically or randomly shifted in the frequency domain, the reception system can determine correct locations of the cells of the L1-pre signaling information through the spreading structure of the cells to reconstruct the L1-pre.

In addition, the reception system may acquire the length of a section in which the L1-post signaling information is spread by subtracting the length of the spreading section of the L1-pre signaling information from the length of the data symbol section. Thus, since the reception system can determine the number of cells of the L1-post signaling information that are uniformly included in one symbol and the cells of the L1-post signaling information are shifted by a predetermined interval(s) in the frequency domain, the reception system can determine the spreading structure of the cells of the L1-post signaling information to reconstruct the L1-post. The reception system may decode the L1-post signaling information to acquire information regarding a PLP included in a next frame.

As shown in Fig. 49, one P1' symbol may be located as an additional preamble between a P1 symbol and a data symbol. The P1' symbol is a preamble similar to the P1 symbol and includes 7 bits. The P1' symbol uses a distribution sequence and a modulation sequence which are different from those of the P1 symbol and information of the P1' symbol does not change in one superframe, similar to that of the P1 symbol. The 7 bits include 4 bits indicating information regarding the pilot pattern (PILOT_PATTERN) and 3 bits indicating information regarding the length (L1_PRE_SPREAD_LEN) of the spreading section of the L1-pre signaling information.

To decode L1-pre signaling information and L1-post signaling information present in the data symbol part, there is a need to perform channel estimation of the frame. For such channel estimation, the transmitting side needs to use a predefined pilot pattern. In this embodiment, PILOT_PATTERN information of the P1' symbol is used as shown in a table 45020 of Fig. 35 to notify the receiving side of the pilot pattern. In an embodiment, the pilot pattern information may provide information regarding 8 pilot patterns of 0000 to 0111 as shown in the table 45020 and the remaining values 1000 to 1111 may be reserved for pilot patterns that may be used at a later time.

The L1_PRE_SPREAD_LEN information may provide parameter information indicating the number of symbols over which cells of L1-pre signaling information are spread. In other words, the L1_PRE_SPREAD_LEN information may provide information regarding time diversity of the L1-pre signaling information as shown in a table 45030. A data symbol section of a frame may be expressed in 12 bits. However, since 3 bits are allocated to the L1_PRE_SPREAD_LEN information, the length of the spreading section of the L1-pre signaling information may be quantized into 3 bits to be signaled in an embodiment of the present invention. In the embodiment of Fig. 35, it is assumed that the maximum spreading length is about 125ms and the L1_PRE_SPREAD_LEN information indicates 8 spreading patterns. In the case in which in which the value of the L1_PRE_SPREAD_LEN information is 000, this indicates that spreading of the L1 signaling information is not used but instead L1-pre signaling information and L1-post signaling information are signaled using the conventional P2 symbol. In each of the remaining cases, the length of a spreading section of the L1-pre signaling information may be defined in units of symbols for each FFT size as shown in the table 45030.

The reception system may decode an additional P1' symbol after decoding the P1 symbol to acquire PILOT_PATTERN information and L1_PRE_SPREAD_LEN information as shown in Fig. 35. Since the reception system can determine the pilot pattern of the current frame through such acquired information, the reception system can perform channel estimation using the pilot signal. In addition, since the reception system can determine the number of symbols over which the L1-pre signaling information is spread, the reception system can determine the spreading pattern of the L1-pre signaling information to reconstruct L1-pre signaling information present at the corresponding location.

In an embodiment of the present invention, L1-pre signaling information which is transmitted within a data part includes configuration (or attribute) information of a next frame. For example, the L1-pre signaling information may include TYPE information, BWT_EXT information, ID information, NUM_T2_FRAME information, or the like representing the configuration of a next frame and may also include L1_MOD information, L1_COD information, L1_POST_SIZE information, L1_FEC_TYPE information, or the like representing the configuration of L1-post signaling information of a next frame.

To reconstruct L1-post signaling information included in the current frame, there is a need to be aware of a configuration of the current frame such as the length of the current frame. However, since the L1-pre signaling information included in the current frame includes configuration information of L1-post signaling information included in a next frame, parameter information indicating the length of the current frame is added to the L1-pre signaling information in the embodiment of the present invention. In an embodiment, the parameter information may be defined as CURRENT_NUM_DATA_SYMBOLS information. The CURRENT_NUM_DATA_SYMBOLS information, which is 12-bit information, may be expressed by the number of OFDM symbols.

The reception system may decode the L1-pre signaling information included in the current frame to acquire configuration information of the next frame and to acquire information used to decode L1-post signaling information of the next frame included in the current frame. In addition, since the reception system can determine the length of the current frame using the CURRENT_NUM_DATA_SYMBOLS information included in the L1-pre signaling information, the reception system can determine the structure of L1-post signaling information spread in the current frame using the length of the current frame to decode the L1-post signaling information.

The following is a description of a method for a frame builder to spread L1-pre signaling information and L1-post signaling information as in the frame structure of Fig. 49 described above.

First, the L1-pre signaling information is spread over an N_spread section of a data symbol part in the time and frequency domains as in Fig. 49. The L1-pre signaling information is mapped to the frame in the time domain as shown in the following Expression 31.

[Expression 31]

$$C_{PRE}(i) = \begin{cases} ceil(\frac{L1_PRE_INFO_SIZE}{N_{spread}}), & 0 \le i < (L1_PRE_INFO_SIZE \bmod N_{spread}) \\ floor(\frac{L1_PRE_INFO_SIZE}{N_{spread}}), & (L1_PRE_INFO_SIZE \bmod N_{spread}) \le i < N_{spread} \end{cases},$$

*where* $C_{PRE}(i)$= Number of L1-pre cells in $i^{th}$ *data symbol*

$N_{spread}$=Number of data symbols for L1-pre spreding

L1*_PRE_INFO_SIZE*=the size of information part of the L1-pre signalling data

In Expression 31, C_PRE(i) represents the number of cells of L1-pre signaling information allocated to an ith symbol according to the value of N_spread. The value of N_spread may be determined according to L1_PRE_SPREAD information of the P1' symbol as described above.

As shown in Expression 31, when C_PRE(i) cells of L1-pre signaling information are allocated according to the length (N_spread) of the spreading section in the time domain, the allocated cells are shifted in the frequency domain. An amount by which each P2 symbol is shifted in the frequency domain may be a predefined random amount or may be determined using a predefined equation. That is, cells of L1-pre signaling information may be mapped to subcarriers randomly or cyclically at intervals of the determined amount.

The reception system may determine the number of P2 symbols included in the frame using the FFT size information acquired from the P1 symbol. Thus, the reception system may determine the number of L1-pre cells allocated to the ith symbol, i.e., may determine the value C PRE(i). The reception system may acquire P1-pre signaling information using a frame structure in which uniformly divided L1-pre cells are shifted in each symbol in the frequency domain randomly or through a predefined equation.

The reception system may perform channel estimation using a pilot pattern received through the P1' symbol and may then determine the length of the spreading section of the L1-pre signaling information for the next frame using the L1_PRE_SPREAD_LEN information. Since the reception system can determine a correct length of the spreading section through the table 45030 of Fig. 35 described above and can also determine the length of the spreading section and the amount of the L1-pre signaling information, the reception system can determine the locations of cells of the L1-pre signaling information in the time domain through Expression 31 and can determine the locations of cells of the L1-pre signaling information in the frequency domain through a predefined expression or a random frame structure.

Next, the L1-post signaling information is spread over the time and frequency domains in a section subsequent to the spreading section of the L1-pre signaling information of the data symbol part as shown in Fig. 49. The L1-post signaling information is mapped to the frame in the time domain as shown in the following Expression 32.

[Expression 32]

$$C_{POST}(i) = \begin{cases} ceil(\frac{L1_POST_INFO_SIZE}{L_{normal} - N_{spread}}), & N_{spread} \le i < (L1_POST_INFO_SIZE \bmod (L_{normal} - N_{spread})) \\ floor(\frac{L1_POST_INFO_SIZE}{L_{normal} - N_{spread}}), & (L1_POST_INFO_SIZE \bmod (L_{normal} - N_{spread})) \le i < L_{normal} - N_{spread} \end{cases},$$

*where* $C_{POST}(i)$=Number of L1-post cells in $i^{th}$ data symbol L1_*POST_INFO_SIZE*=the size of the information part of the L1-post signaling data $L_{normal}$=# of data symbols, not including P1, P2 or any frame closing symbol, in a frame

In Expression 32, L_normal represents the number of data symbols excluding P1, P2 or closing symbols in the frame. Thus, a value obtained by subtracting the value of N_spread from the value of L_normal is the length of a symbol section over which L1-post signaling information is spread. Cells of L1-post signaling information may be uniformly distributed over L_normal - N_spread data symbols and the number of cells of the L1-post signaling information allocated to the ith data symbol may be set to C_POST(i) according to Expression 32.

The cells of the L1-post signaling information which are spread in the time domain as shown in Expression 32 are again spread in the frequency domain. That is, the cells of the L1-post signaling information are mapped to the first subcarrier and are shifted by a predefined random interval or an interval determined using a predefined equation to maximize frequency diversity. That is, cells of L1-post signaling information may be mapped to subcarriers corresponding to an interval corresponding to the determined amount.

The reception system may acquire NUM_DAT_SYMBOLS information and N_spread information in the current frame and L1_POST_INFO_SIZE by decoding the L1-pre signaling information and may reconstruct L1-post signaling information using the acquired information. That is, the reception system may determine the number of cells corresponding to L1-post signaling information, which is uniformly distributed over one symbol, through such information and Expression 32. In addition, since cells of the L1-post signaling information are shifted in each symbol in the frequency domain by a random interval or an interval determined using a predefined equation, the reception system may determine the number and the locations of L1-post signaling information cells of the subcarrier in the frequency domain through such a structure. Thus, the reception system may acquire information regarding PLPs included in a next frame by acquiring and decoding the L1-post signaling information.

In an embodiment of the present invention, the transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 37 may perform interleaving on output data of a cell interleaver in the BICM block and output the resulting data on a cell mapper included in the frame builder.

The time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row - C_PRE(0) and Column = N_spread when the block interleaver interleaves L1-pre signaling information and may be of Row = C_POST(0) and Column = L_normal - N_spread when the block interleaver interleaves L1-post signaling information. The operations of the time interleaver and the time deinterleaver are the same as described above with reference to Fig. 29.

A transmission signal of this embodiment includes superframes, each including a plurality of frames. The L1 signaling information spreading method, which is applied to a transmission signal having such a structure, is the same as described above with reference to Fig. 36.

Fig. 50 illustrates a frame mapping structure of L1 signaling information according to an embodiment of the present invention. In the frame structure of Fig. 50, the horizontal axis represents the time domain and the vertical axis represents the frequency domain.

In the example of Fig. 50, the frame builder uniformly spreads cells corresponding to L1-pre signaling information of the next frame over an N_spread section included in a symbol part of a frame in the time and frequency domains. In addition, the frame builder uniformly spreads cells corresponding to L1-post signaling information of a next frame over a section subsequent to the N_spread section in the data symbol part of the frame. Further, a P1' symbol, which is an additional preamble, is added to signal the spreading length of the L1-pre signaling information and the pilot pattern through the P1' symbol, thereby allowing the receiving side to efficiently perform channel estimation and spreading structure determination. Particularly, in the example of Fig. 50, the cells of the L1-pre signaling information and the cells of the L1-post signaling information are cyclically shifted to be spread.

In the case of Fig. 50, it is assumed that the number of cells of the L1-pre signaling information is 8, the number of cells of the L1-post signaling information is 28, the number of data symbols is 22, and the length of the N_spread section is 8. The frame builder first spreads the 8 cells of the L1-pre signaling information over the N-spread section and spreads the 28 cells of the L1-post signaling information over the section of the 14 (= 22-8) data symbols such that 2 cells are arranged in each data symbol, thereby maximizing time diversity and frequency diversity.

Fig. 51 illustrates a frame mapping structure of L1 signaling information according to an embodiment of the present invention. In the frame structure of Fig. 51, the horizontal axis represents the time domain and the vertical axis represents the frequency domain.

In the example of Fig. 51, the frame builder uniformly spreads cells corresponding to L1-pre signaling information of the next frame over an N_spread section included in a symbol part of a frame in the time and frequency domains. In addition, the frame builder uniformly spreads cells corresponding to L1-post signaling information of a next frame over a section subsequent to the N_spread section in the data symbol part of the frame. Further, a P1' symbol, which is an additional preamble, is added to signal the spreading length of the L1-pre signaling information and the pilot pattern through the P1' symbol, thereby allowing the receiving side to efficiently perform channel estimation and spreading structure determination. Particularly, in the example of Fig. 51, the cells of the L1-pre signaling information and the cells of the L1-post signaling information are each shifted by a random interval to be spread.

In the case of Fig. 51, it is assumed that the number of cells of the L1-pre signaling information is 8, the number of cells of the L1-post signaling information is 28, the number of data symbols is 22, and the length of the N_spread section is 8. The frame builder first spreads the 8 cells of the L1-pre signaling information over the N-spread section and spreads the 28 cells of the L1-post signaling information over the section of the 14 (= 22-8) data symbols such that 2 cells are arranged in each data symbol, thereby maximizing time diversity and frequency diversity.

8. Method of spreading L1-pre signaling information of a current frame and L1-post signaling information of the current frame over a P2 symbol part of the frame and spreading L1-pre signaling information of a next frame and L1-post signaling information of the next frame over a data symbol part of the frame and then adding an additional symbol (P1')

A P2 symbol part in a frame included in a broadcast signal according to the present invention includes L1_pre signaling information and L1_post signaling information of the current frame to provide information which enables decoding of a desired PLP in the current frame. In addition, an additional P1' symbol is used in addition to the existing P1 symbol to provide L1-pre spreading length information and pilot pattern information required to reconstruct L1-pre signaling information and L1_post signaling information for a next frame. The L1_pre signaling information and the L1_post signaling information for the next frame are as uniformly spread as possible in the time and frequency domains in a data symbol of the frame.

In this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP.

Fig. 52 illustrates a frame mapping structure of L1 signaling information according to an embodiment of the present invention. In the frame structure of Fig. 52, the horizontal axis represents the time domain and the vertical axis represents the frequency domain.

In the example of Fig. 52, the frame builder uniformly spreads cells corresponding to L1 signaling information of the current frame over a P2 symbol part of the frame in the time and frequency domain. In addition, the frame builder uniformly spreads cells corresponding to L1 signaling information of the next frame over a data symbol part of the frame. The frame builder then inserts information regarding the spreading structure of the L1 signaling information of the next frame into a P1' symbol part of the frame.

In the frame structure of Fig. 52, cells corresponding to L1-pre signaling information and L1-post signaling information of the current frame are uniformly distributed over the P2 symbol part in the time domain to achieve time diversity. In addition, as shown by arrows, the cells are shifted in the frequency domain to achieve frequency diversity. The cells may be shifted in the frequency domain by a predefined random amount or by an amount set through a predefined equation. Here, in the frequency domain, the cells of the L1-post signaling information of the current frame are arranged adjacent to the cells of the L1-pre signaling information of the current frame.

Cells corresponding to L1-pre signaling information and L1_post signaling information of the next frame are uniformly distributed over the data symbol part in the time domain to achieve time diversity. In the time domain, the cells of the L1-pre signaling information of the next frame are uniformly arranged over an N_spread section in the data symbol part and the cells of the L1-post signaling information of the next frame are uniformly arranged in a portion, excluding the N_spread section, of the data symbol part. The section of N_spread symbols may be defined as L1_PRE_SPREAD_LEN in the following description. As shown by arrows, the cells are shifted in the frequency domain to achieve frequency diversity. The cells may be shifted in the frequency domain by a predefined random amount or by an amount set through a predefined equation.

The additional P1' symbol signals the L1_PRE_SPREAD_LEN information and the pilot pattern information of the frame to allow the reception system to perform channel estimation of the current frame and to determine the spreading structure of the L1 signaling information.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1_pre signaling information of the current frame is spread according to the number of P2 symbols. The reception system may decode P2 symbols to acquire L1-pre signaling information of the current frame and may then acquire information regarding a configuration of the current frame from the acquired L1-pre signaling information.

In addition, the reception system may decode the P1' symbol to acquire L1_PRE_SPREAD_LEN information and pilot pattern information of the frame. Thus, the reception system may determine the length of a section over which the L1_pre signaling information of the next frame is spread and may determine the number of cells of the L1-pre signaling information of the next frame allocated for each symbol using the length of the spread section (N_spread). Since the cells of the L1-pre signaling information of the next frame allocated for each symbol are shifted by a predetermined amount in the frequency domain, the reception system may determine the locations of the cells of the L1_pre signaling information to decode the L1_pre signaling information.

The reception system may also determine the length of a section over which the L1_post signaling information of the next frame is spread by subtracting N_spread from the length of the data symbol section. Thus, the reception system may determine the number of cells of the L1_post signaling information of the next frame allocated for each symbol. Since the cells of the L1_post signaling information of the next frame allocated for each symbol are shifted by a predetermined amount in the frequency domain, the reception system may determine the locations of the cells of the L1_post signaling information to decode the L1_post signaling information.

Since an amount by which the cells are shifted in the frequency domain is a preset random amount or can be determined through a predefined equation, the reception system can acquire information regarding a data PLP included in the next frame by decoding the L1 signaling information of the next frame. If additional latency is not taken into consideration in the current frame, it is possible to acquire information of the data PLP by decoding L1 signaling information included in the P2 symbol.

The signaling information including the additional preamble (P1' symbol) is the same as described above with reference to Fig. 35.

The reception system may decode an additional P1' symbol after decoding the P1 symbol to acquire PILOT_PATTERN information and L1_PRE_SPREAD_LEN information as shown in Fig. 35. Since the reception system can determine the pilot pattern of the current frame through such acquired information, the reception system can perform channel estimation using the pilot signal. In addition, since the reception system can determine the number of symbols over which the L1_pre signaling information of the next frame is spread, the reception system can determine the spreading pattern of the L1_pre signaling information of the next frame to reconstruct the L1_pre signaling information of the next frame present at the corresponding location. The correct length of the spreading section varies according to the FFT size and the reception system can acquire the length of the spreading section from information (specifically, the table 45030) of Fig. 35 acquired by decoding the P1' symbol.

In an embodiment of the present invention, L1_pre signaling information which is transmitted within a data part includes configuration (or attribute) information of a next frame. For example, the L1_pre signaling information may include TYPE information, BWT_EXT information, ID information, NUM_T2_FRAME information, or the like representing the configuration of a next frame and may also include L1_MOD information, L1_COD information, L1_POST_SIZE information, L1_FEC_TYPE information, or the like representing the configuration of L1_post signaling information of a next frame.

To reconstruct L1_post signaling information included in the current frame, there is a need to be aware of a configuration of the current frame such as the length of the current frame. However, since the L1_pre signaling information included in the current frame includes configuration information of L1_post signaling information included in a next frame, parameter information indicating the length of the current frame is added to the L1_pre signaling information in the embodiment of the present invention. In an embodiment, the parameter information may be defined as CURRENT_NUM_DATA_SYMBOLS information. The CURRENT_NUM_DATA_SYMBOLS information, which is 12-bit information, may be expressed by the number of OFDM symbols.

The reception system may decode the L1_pre signaling information included in the data part of the current frame to acquire configuration information of the next frame and to acquire information used to decode L1_post signaling information of the next frame included in the data part of the current frame. In addition, since the reception system can determine the length of the current frame using the CURRENT_NUM_DATA_SYMBOLS information included in the L1_pre signaling information of the next frame, the reception system can determine the structure of L1_post signaling information spread in the current frame using the length of the current frame to decode the L1_post signaling information.

The following is a description of a method for a frame builder to spread L1_pre signaling information of the current frame and L1_post signaling information of the next frame as in the frame structure of Fig. 52 described above.

First, the L1_pre signaling information of the current frame is spread over the P2 symbol part in the time and frequency domains as in Fig. 52. The L1_pre signaling information of the current frame is mapped to the frame in the time domain as shown in the following Expression 33 and the L1_post signaling information of the current frame is mapped to the frame in the time domain as shown in the following Expression 34.

[Expression 33]

$$C_{PRE_P2}(i)=\begin{cases} ceil\left(\frac{L1_PRE_SIZE}{N_{P2}}\right), & 0\le i<(L1_PRE_SIZE \bmod N_{P2}) \\ floor\left(\frac{L1_PRE_SIZE}{N_{P2}}\right), & (L1_PRE_SIZE \bmod N_{P2})\le i<N_{P2} \end{cases},$$

*where* $C_{PRE_P2}(i)$= Number of L1-pre cells in $i^{th}$ *P2 symbol*

L1_*PRE_INFO_SIZE*=the size of the coded and modulated L1-pre signalling data for current frame, in cells

The L1_pre signaling information of the current frame is arranged as a uniform number of cells in the P2 symbol part in the time domain. In Expression 33, C_PRE_P2(i) represents the number of cells of L1_pre signaling information of the current frame allocated to an ith symbol according to the number of P2 symbols which varies according to the FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 33, when cells of L1_pre signaling information are allocated according to the number of P2 symbols in the time domain, the allocated cells are shifted by a predefined random amount or by an amount calculated using a predefined equation.

The reception system may determine the number of P2 symbols included in the frame using the FFT size information acquired from the P1 symbol. Thus, the reception system may determine the number of cells of the L1_pre signaling information allocated to the ith symbol, i.e., may determine the value C_PRE_P2(i). Since the amount by which uniformly divided cells of L1_pre signaling information are shifted in the frequency domain in each symbol is a predefined random amount or is calculated using an predefined equation, the reception system can acquire L1_pre signaling information of the current frame by determining the shifted amount.

The L1_post signaling information of the current frame is spread over the P2 symbol part in the time and frequency domains as in Fig. 52. The L1_post signaling information is mapped to the frame in the time domain as shown in the following Expression 34.

[Expression 34]

$$C_{POST_P2}(i)=\begin{cases} ceil\left(\frac{L1_POST_SIZE}{N_{P2}}\right), & 0\le i<(L1_POST_SIZE \bmod N_{P2}) \\ floor\left(\frac{L1_POST_SIZE}{N_{P2}}\right), & (L1_POST_SIZE \bmod N_{P2})\le i<N_{P2} \end{cases},$$

*where* $C_{POST_P2}(i)$= Number of L1-pre cells in $i^{th}$ *P2 symbol*

L1_*POST_INFO_SIZE*=the size of the coded and modulated L1-post signalling data for current frame, in cells

The L1_post signaling information of the current frame is arranged as a uniform number of cells in the P2 symbol part in the time domain. In Expression 33, C_POST_P2(i) represents the number of cells of L1_pre signaling information of the current frame allocated to an ith symbol according to the number of P2 symbols which varies according to the FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 34, when cells of L1_pre signaling information are allocated according to the number of P2 symbols in the time domain, the allocated cells are shifted by a predefined random amount or by an amount calculated using a predefined equation.

The reception system decodes L1_post signaling information included in a P2 symbol based on information acquired by decoding L1_pre signaling information included in the P2 symbol. Since the reception system cannot determine length information of the L1_post signaling information before the L1_pre signaling information is decoded, the reception system needs to store cells of the L1_post signaling information which are located continuously in the frequency domain with the cells of the L1_pre signaling information in the P2 symbol until the L1_pre signaling information is decoded.

After the L1_pre signaling information is decoded, the reception system can determine the number of cells of the L1_post signaling information allocated for each symbol using L1_POST_SIZE information included in the L1_pre signaling information. The reception system can acquire this value using C_POST_P2(i) of Expression 34 and can decode the L1_post signaling information by extracting C_POST_P2(i) cells of the L1_post signaling information which are continuous with cells of the L1_pre signaling information from every symbol stored in the buffer. That is, since C_POST_P2(i) cells of the L1_post signaling information are located continuously with cells of the L1_pre signaling information in the frequency domain in every ith symbol, the reception system can decode the L1_post signaling information using the locations of the cells of the L1_pre signaling information determined as described above.

The L1 signaling information of the next frame is spread over the data symbol part in the time and frequency domains as in Fig. 52. The L1_pre signaling information of the next frame is mapped to the frame in the time domain as shown in the following Expression 35 and the L1_post signaling information of the next frame is mapped to the frame in the time domain as shown in the following Expression 36.

[Expression 35]

$$C_{PRE}(i) = \begin{cases} ceil(\frac{L1_PRE_SIZE}{N_{spread}}), & 0 \le i < (L1_PRE_SIZE \bmod N_{spread}) \\ floor(\frac{L1_PRE_SIZE}{N_{spread}}), & (L1_PRE_SIZE \bmod N_{spread}) \le i < N_{spread} \end{cases},$$

*where* $C_{PRE}(i)$= Number of L1-pre cells in $i^{th}$ *data symbol*
$N_{spread}$=Number of data symbols for L1-pre spreding
L1*_PRE_INFO_SIZE*=the size of information part of the L1-pre signalling data

The L1_pre signaling information of the next frame is arranged as a uniform number of cells in an N-spread section determined according to the L1_PRE_SPREAD_LEN information of the P1' symbol described above in the data symbol part in the time domain. In Expression 35, C_PRE(i) represents the number of cells of L1_pre signaling information of the next frame allocated to an ith symbol according to the value of N_spread.

As shown in Expression 35, when cells of L1_pre signaling information are allocated according to the value of N_spread in the time domain, the allocated cells are shifted by a predefined random amount or by an amount calculated using a predefined equation.

The reception system may perform channel estimation using pilot pattern information acquired from the P1' symbol and may then determine the length of the spreading section of the L1_pre signaling information for the next frame using the L1_PRE_SPREAD_LEN information. The correct spreading length may vary according to the FFT size and may be determined using the L1_PRE_SPREAD_LEN information as shown in Fig. 35. Since the reception system can determine the length of the spreading section and the amount of the L1_pre signaling information, the reception system can acquire the number of cells of the L1_pre signaling information allocated to every ith symbol through Expression 35, which is equal to C_PRE(i). Since the amount by which uniformly divided cells of L1_pre signaling information of the next frame in each symbol are shifted in the frequency domain is a predefined random amount or is calculated using an predefined equation, the reception system can acquire L1_pre signaling information of the next frame by determining the shifted amount.

The L1_post signaling information of the next frame is spread over the time and frequency domains in a portion, excluding the spreading section of the L1_pre signaling information, of the data symbol part as shown in Fig. 52. The L1_post signaling information is mapped to the frame in the time domain as shown in the following Expression 36.

[Expression 36]

$$C_{POST}(i) = \begin{cases} ceil(\frac{L1_POST_SIZE}{L_{normal} - N_{spread}}), & N_{spread} \le i < (L1_POST_SIZE \bmod (L_{normal} - N_{spread})) \\ floor(\frac{L1_POST_SIZE}{L_{normal} - N_{spread}}), & (L1_POST_SIZE \bmod (L_{normal} - N_{spread})) \le i < L_{normal} - N_{spread} \end{cases},$$

*where* $C_{POST}(i)$=Number of L1-post cells in $i^{th}$ data symbol L1*_POST_SIZE*=the size of the information part of the L1-post signaling data $L_{normal}$=# of data symbols, not including P1, P2 or any frame closing symbol, in a frame

In Expression 36, L-normal represents the number of data symbols excluding P1, P2 or closing symbols in the frame. Thus, a value obtained by subtracting the value of N_spread from the value of L_normal is the length of a symbol section over which L1_post signaling information of the next frame is spread. Cells of L1_post signaling information of the next frame may be uniformly distributed over L_normal - N_spread data symbols and the number of cells of the L1_post signaling information of the next frame allocated to the ith data symbol may be set to C_POST(i) according to Expression 36.

The cells of the L1_post signaling information of the next frame which are spread in the time domain as shown in Expression 36 are again spread in the frequency domain. That is, the cells of the L1_post signaling information of the next frame are mapped to the first subcarrier and are shifted by a predefined random amount or by an amount determined using a predefined equation, thereby maximizing frequency diversity. That is, cells of L1_post signaling information may be mapped to subcarriers corresponding to an interval corresponding to the determined amount.

The reception system may decode L1_pre signaling information of the next frame and decode L1_post signaling information of the next frame using the decoded information. Once the reception system decodes L1_pre signaling information of the next frame, the reception system can reconstruct L1_post signaling information using NUM_DAT_SYMBOLS information and N_spread information in the current frame and L1_POST_INFO_SIZE. That is, the reception system may determine the number (C_POST(i)) of cells corresponding to L1_post signaling information, which is uniformly distributed over one symbol, through such information and Expression 36. In addition, since cells of the L1_post signaling information are shifted in each symbol in the frequency domain by a random interval or an interval determined using a predefined equation, the reception system may determine the number and the locations of L1_post signaling information cells of the subcarrier in the frequency domain through such a structure. Thus, the reception system may acquire information regarding PLPs included in the next frame by acquiring and decoding the L1_post signaling information of the next frame.

The transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 29 may perform interleaving on output data of a cell interleaver in the BICM block and output the resulting data on a cell mapper included in the frame builder.

The time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row = C_ PRE(0) and Column = N_spread when the block interleaver interleaves L1_pre signaling information included in the data symbol and may be of Row = C_POST(0) and Column = L_normal - N_spread when the block interleaver interleaves L1_post signaling information included in the data symbol. Such an interleaver may perform interleaving such that continuous data is spread and distributed over every time symbol. The operations for time interleaving and time deinterleaving are the same as described above with reference to Fig. 29.

A transmission signal according to this embodiment includes superframes, each including a plurality of frames. The L1 signaling information spreading method, which is applied to a transmission signal having such a structure, is the same as described above with reference to Fig. 36.

Fig. 53 illustrates a frame mapping structure of L1 signaling information according to an embodiment of the present invention. In the frame structure of Fig. 53, the horizontal axis represents the time domain and the vertical axis represents the frequency domain.

In the example of Fig. 53, the frame builder uniformly spreads cells corresponding to L1 signaling information of the current frame over a P2 symbol part of the frame in the time and frequency domains. Cells corresponding to L1 signaling information of the next frame are uniformly spread over a data symbol part of the frame. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1’ symbol, which is an additional preamble, is added to signal the spreading length of the L1_pre signaling information of the next frame and the pilot pattern through the P1’ symbol, thereby allowing the receiving side to efficiently perform channel estimation and spreading structure determination.

In the case of Fig. 53, it is assumed that the number of cells of the L1_pre signaling information is 8, the number of cells of the L1_post signaling information is 28, the number of data symbols is 22, and the length of the N_spread section is 8.

In the P2 symbol part, cells of the L1_pre signaling information of the current frame and cells of the L1_post signaling information of the current frame are divided uniformly so as to suit the number of P2 symbols and then the cells are spread in the frequency domain through a logical operation for cyclic shifting in each symbol. Also, cells of the L1_post signaling information of the current frame are divided uniformly so as to suit the number of P2 symbols and then the cells are arranged continuously in the frequency domain with the cells of the L1_pre signaling information of the current frame.

In the data symbol part, 8 cells of the L1_pre signaling information of the next frame are arranged uniformly on a one by one basis in a section of N_spread=8 and then the cell are spread in the frequency domain through a logical operation for cyclic shifting in each symbol. 28 cells of the L1_post signaling information of the next frame are arranged uniformly on a two by two basis in a section of 14 data symbols, excluding N_spread, in the data symbol section (having a length of 22 symbols) and then the cell are spread in the frequency domain through a logical operation for cyclic shifting in each symbol.

Fig. 54 illustrates a frame mapping structure of L1 signaling information according to another embodiment of the present invention. In the frame structure of Fig. 54, the horizontal axis represents the time domain and the vertical axis represents the frequency domain.

In the example of Fig. 54, the frame builder uniformly spreads cells corresponding to L1 signaling information of the current frame over a P2 symbol part of the frame in the time and frequency domains. Cells corresponding to L1 signaling information of the next frame are uniformly spread over a data symbol part of the frame. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination.

In the case of Fig. 54, it is assumed that the number of cells of the L1_pre signaling information is 8, the number of cells of the L1_post signaling information is 28, the number of data symbols is 22, and the length of the N_spread section is 8.

In the P2 symbol part, cells of the L1_pre signaling information of the current frame and cells of the L1_post signaling information of the current frame are divided uniformly so as to suit the number of P2 symbols and then the cells are shifted by a predefined cell interval in each symbol to be spread in the frequency domain. Also, cells of the L1_post signaling information of the current frame are divided uniformly so as to suit the number of P2 symbols and then the cells are arranged continuously in the frequency domain with the cells of the L1_pre signaling information of the current frame.

In the data symbol part, 8 cells of the L1_pre signaling information of the next frame are arranged uniformly on a one by one basis in a section of N_spread=8 and then the cell are shifted by a predefined cell interval in each symbol to be spread in the frequency domain. 28 cells of the L1_post signaling information of the next frame are arranged uniformly on a two by two basis in a section of 14 data symbols, excluding N_spread, in the data symbol section (having a length of 22 symbols) and then the cell are shifted by a predefined cell interval in each symbol to be spread in the frequency domain.

Fig. 55 illustrates a frame mapping structure of L1 signaling information according to another embodiment of the present invention. In the frame structure of Fig. 55, the horizontal axis represents the time domain and the vertical axis represents the frequency domain.

In the embodiment of Fig. 55, the frame builder uniformly spreads cells corresponding to L1 signaling information of the current frame over a P2 symbol part of the frame in the time and frequency domains. In the embodiment of Fig. 55, L1 signaling information of the next frame is not spread over the data symbol. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. In the embodiment of Fig. 55, L1_PRE_SPREAD_LEN information signaled by the P1' symbol may have a value of '000' to indicate that L1 signaling information is spread only over the P2 symbol part in the current frame as described above with reference to Fig. 35.

In the case of Fig. 55, it is assumed that the number of cells of the L1_pre signaling information is 8, the number of cells of the L1_post signaling information is 28, and the number of data symbols is 22.

In the P2 symbol part, cells of the L1_pre signaling information of the current frame and cells of the L1_post signaling information of the current frame are divided uniformly so as to suit the number of P2 symbols and then the cells are spread in the frequency domain through a logical operation for cyclic shifting in each symbol. Also, cells of the L1_post signaling information of the current frame are divided uniformly so as to suit the number of P2 symbols and then the cells are arranged continuously in the frequency domain with the cells of the L1_pre signaling information of the current frame. In an embodiment, when the number of P4 symbols is 4, cells of the L1_pre signaling information of the current frame may be arranged uniformly in the time domain such that 2 cells are arranged for each symbol and cells of the L1_post signaling information of the current frame may be arranged uniformly in the time domain such that 7 cells are arranged for each symbol.

Fig. 56 illustrates a frame mapping structure of L1 signaling information according to another embodiment of the present invention. In the frame structure of Fig. 56, the horizontal axis represents the time domain and the vertical axis represents the frequency domain.

In the embodiment of Fig. 56, the frame builder uniformly spreads cells corresponding to L1 signaling information of the current frame over a P2 symbol part of the frame in the time and frequency domains. In the embodiment of Fig. 56, L1 signaling information of the next frame is not spread over the data symbol. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. In the embodiment of Fig. 8, L1_PRE_SPREAD_LEN information signaled by the P1' symbol may have a value of '000' to indicate that L1 signaling information is spread only over the P2 symbol part in the current frame as described above with reference to Fig. 35.

In the case of Fig. 56, it is assumed that the number of cells of the L1_pre signaling information is 8, the number of cells of the L1_post signaling information is 28, and the number of data symbols is 22.

In the P2 symbol part, cells of the L1_pre signaling information of the current frame and cells of the L1_post signaling information of the current frame are divided uniformly so as to suit the number of P2 symbols and then the cells are shifted by a predefined random interval in each symbol to be spread in the frequency domain. Also, cells of the L1_post signaling information of the current frame are divided uniformly so as to suit the number of P2 symbols and then the cells are arranged continuously in the frequency domain with the cells of the L1_pre signaling information of the current frame. In an embodiment, when the number of P4 symbols is 4, cells of the L1_pre signaling information of the current frame may be arranged uniformly in the time domain such that 2 cells are arranged for each symbol and cells of the L1_post signaling information of the current frame may be arranged uniformly in the time domain such that 7 cells are arranged for each symbol.

8. Another method of spreading L1_pre signaling information of a current frame and L1_post signaling information of the current frame over a P2 symbol part of the frame and spreading L1_pre signaling information of a next frame and L1_post signaling information of the next frame over a data symbol part of the frame and then adding an additional symbol (P1')

The present invention suggests a frame structure, in which L1 signaling information which is conventionally mapped only to the P2 symbol part, is mapped to the frame in the time and frequency domains as uniformly as possible, as a method of securing robustness enabling transmission and reception even in a mobile environment. A P2 symbol part in a frame included in a broadcast signal according to the present invention includes L1_pre signaling information and L1_post signaling information of the current frame to provide information which enables decoding of a desired PLP in the current frame. In addition, an additional P1' symbol is used in addition to the existing P1 symbol to provide L1_pre spreading length information and pilot pattern information required to reconstruct L1_pre signaling information and L1_post signaling information for a next frame. The L1_pre signaling information and the L1_post signaling information for the next frame are as uniformly spread as possible in the time and frequency domains in a data symbol of the frame.

In this embodiment, a cell mapper included in the frame builder receives PLP related information and L1 signaling information and performs cell mapping on the received information so as to suit a frame structure described below to build a frame. In the receiving side, a cell demapper included in a frame rebuilder may perform the reverse of the above procedure and perform cell demapping to reconstruct or acquire L1 signaling information and information regarding each PLP.

Fig. 57 illustrates a frame mapping structure of L1 signaling information according to an embodiment of the present invention. In the frame structure of Fig. 57, the horizontal axis represents the time domain and the vertical axis represents the frequency domain.

In the example of Fig. 57, the frame builder uniformly spreads cells corresponding to L1 signaling information of the current frame over a P2 symbol part of the frame in the time and frequency domain. In addition, the frame builder uniformly spreads cells corresponding to L1 signaling information of the next frame over a data symbol part of the frame. The frame builder then inserts information regarding the spreading structure of the L1 signaling information of the next frame into a P1' symbol part of the frame.

In the frame structure of Fig. 57, cells corresponding to L1_pre signaling information and L1_post signaling information of the current frame are uniformly distributed over the P2 symbol part in the time domain to achieve time diversity. In addition, as shown by arrows, the cells are shifted in the frequency domain to achieve frequency diversity. The cells may be shifted in the frequency domain by a predefined random amount or by an amount set through a predefined equation. Here, in the frequency domain, the cells of the L1_post signaling information of the current frame are arranged adjacent to the cells of the L1_pre signaling information of the current frame.

Cells corresponding to L1_pre signaling information and L1_post signaling information of the next frame are uniformly distributed over the data symbol part in the time domain to achieve time diversity. In the time domain, the cells of the L1_pre signaling information of the next frame are uniformly arranged over an N_spread section in the data symbol part and the cells of the L1_post signaling information of the next frame are uniformly arranged in a portion, excluding the N_spread section, of the data symbol part. The section of N_spread symbols may be defined as L1_PRE_SPREAD_LEN in the following description. As shown by arrows, the cells are shifted in the frequency domain to achieve frequency diversity. The cells may be shifted in the frequency domain by a predefined random amount or by an amount set through a predefined equation.

The additional P1' symbol signals the L1_PRE_SPREAD_LEN information and the pilot pattern information of the frame to allow the reception system to perform channel estimation of the current frame and to determine the spreading structure of the L1 signaling information.

A reception system that receives a frame having such a structure may first decode a P1 symbol of the frame to acquire FFT size information or the like of the frame and to determine the number of P2 symbols corresponding to the acquired information. The reception system identifies (or determines) a structure in which L1_pre signaling information of the current frame is spread according to the number of P2 symbols. The reception system may decode P2 symbols to acquire L1_pre signaling information of the current frame and may then acquire information regarding a configuration of the current frame from the acquired L1_pre signaling information.

In addition, the reception system may decode the P1' symbol to acquire L1_PRE_SPREAD_LEN information and pilot pattern information of the frame. Thus, the reception system may determine the length of a section over which the L1_pre signaling information of the next frame is spread and may determine the number of cells of the L1_pre signaling information of the next frame allocated for each symbol using the length of the spread section (N_spread). Since the cells of the L1_pre signaling information of the next frame allocated for each symbol are shifted by a predetermined amount in the frequency domain, the reception system may determine the locations of the cells of the L1_pre signaling information to decode the L1_pre signaling information.

The reception system may also determine the length of a section over which the L1_post signaling information of the next frame is spread by subtracting N_spread from the length of the data symbol section. Thus, the reception system may determine the number of cells of the L1_post signaling information of the next frame allocated for each symbol. Since the cells of the L1_post signaling information of the next frame allocated for each symbol are shifted by a predetermined amount in the frequency domain, the reception system may determine the locations of the cells of the L1_post signaling information to decode the L1_post signaling information.

Since an amount by which the cells are shifted in the frequency domain is a preset random amount or can be determined through a predefined equation, the reception system can acquire information regarding a data PLP included in the next frame by decoding the L1 signaling information of the next frame. If additional latency is not taken into consideration in the current frame, it is possible to acquire information of the data PLP by decoding L1 signaling information included in the P2 symbol.

The following is a description of a P1' symbol which is an additional symbol and information signaled by the P1' symbol.

Fig. 58 illustrates a method for signaling an additional preamble according to an embodiment of the present invention.

As shown in Fig. 57, one P1' symbol may be located as an additional preamble between a P1 symbol and a data symbol. The P1' symbol is a preamble similar to the P1 symbol and may include 7 bits. The P1' symbol uses a distribution sequence and a modulation sequence which are different from those of the P1 symbol and information of the P1' symbol does not change in one superframe, similar to that of the P1 symbol.

The 7 bits signaled by the P1' symbol may be provided in 2 types. In the case of type 1, the P1' symbol may include 3 bits indicating PILOT_PATTERN information, 3 bits indicating L1_PRE_SPREAD_LEN information, and 1 bit indicating P2_SYMBOL_FLAG information as shown in a table 58010 of Fig. 58 and, in the case of type 2, the P1' symbol may include 4 bits indicating PILOT_PATTERN information, 2 bits indicating L1_PRE_SPREAD_LEN information, and 1 bit indicating P2_SYMBOL_FLAG information as shown in a table 58020 of Fig. 58.

The PILOT_PATTERN information, the L1_PRE_SPREAD_LEN information, and the P2_SYMBOL_FLAG information are described below.

Fig. 59 illustrates PILOT_PATTERN information signaled by an additional preamble according to an embodiment of the present invention.

To decode L1_pre signaling information and L1_post signaling information of the next frame present in the data symbol part, there is a need to perform channel estimation of the frame. For such channel estimation, the transmitting side needs to use a predefined pilot pattern. In this embodiment, PILOT_PATTERN information of the P1' symbol described above is used to notify the receiving side of the pilot pattern.

When the P1' symbol is of type 1, the P1' symbol may indicate 8 pilot patterns (PP1 to PP8) of 000 to 111 using 3-bit PILOT_PATTERN information as shown in the table 59010. When the P1' symbol is of type 2, the P1' symbol may indicate 16 pilot patterns of 0000 to 1111 using 4-bit PILOT_PATTERN information as shown in the table 59020. In an embodiment, the PILOT_PATTERN information of the type-2 P1' symbol provides 8 pilot patterns (PP1 to PP8) as shown in the table 59020 and the remaining 8 values are reserved for later use.

Fig. 60 illustrates L1_PRE_SPREAD_LEN information signaled by an additional preamble according to an embodiment of the present invention.

The L1_PRE_SPREAD_LEN information may provide parameter information indicating the number of symbols over which cells of L1_pre signaling information of the next frame are spread in the data symbol part. In other words, the L1_PRE_SPREAD_LEN information may provide information regarding time diversity of the L1_pre signaling information of the next frame as shown in Fig. 60.

A data symbol section of a frame may be expressed in 12 bits through NUM_DATA_SYMBOL information. However, since 3 bits are allocated to the L1_PRE_SPREAD_LEN information in the case of type 1 and 2 bits are allocated to the L1_PRE_SPREAD_LEN information in the case of type 2, the length of the spreading section of the L1_pre signaling information of the next frame may be quantized into 3 bits or 2 bits to be signaled in an embodiment of the present invention. In the embodiment of Fig. 60, it is assumed that the maximum spreading length is about 125ms and the L1_PRE_SPREAD_LEN information indicates 8 spreading patterns in the case of type 1 and indicates 4 spreading patterns in the case of type 2. In the case in which in which the value of the L1_PRE_SPREAD_LEN information is 000 (type 1) or 00 (type 2), this indicates that the method of spreading of the L1 signaling information of the next frame is not used but instead L1_pre signaling information and L1_post signaling information are signaled using the conventional P2 symbol. This may be used only when the value of a P2_SYMBOL_FLAG information is 1 as described later. In each of the remaining cases, the basic resolution has a value of about 17.5ms in the case of type 1 and a value of about 41.6ms in the case of type 2 and the length of a spreading section of the L1_pre signaling information may be defined in units of symbols for each FFT size as shown in tables 60010 and 60020.

Fig. 61 illustrates P2_SYMBOL_FLAG information signaled by an additional preamble according to an embodiment of the present invention.

Whether or not the method of spreading L1 signaling information of the current frame in the P2 symbol section is used can be determined using the P2_SYMBOL_FLAG information. As shown in Fig. 61, when the value of the P2_SYMBOL_FLAG information is 0, this indicates that the transmission and reception systems do not use the method of signaling L1 signaling information of the current frame using the P2 symbol part but instead use the method of signaling L1 signaling information of the next frame using the data symbol part. When the value of the P2_SYMBOL_FLAG information is 1, this indicates that the transmission and reception systems use the method of signaling L1 signaling information of the current frame using the P2 symbol part and may use the method of signaling L1 signaling information of the next frame using the data symbol part together with the method of signaling L1 signaling information of the current frame using the P2 symbol part.

The reception system may decode an additional P1' symbol after decoding the P1 symbol to acquire PILOT_PATTERN information, L1_PRE_SPREAD_LEN information, and P2_SYMBOL_FLAG information as shown in Figs. 58 to 61.

Since the reception system can determine the pilot pattern of the current frame through the PILOT_PATTERN information, the reception system can perform channel estimation using the pilot signal. The reception system checks the P2_SYMBOL_FLAG information and does not decode L1 signaling information in the P2 symbol part when the value of the P2_SYMBOL_FLAG information is 0 and decodes L1 signaling information of the current frame spread in the P2 symbol part when the value of the P2_SYMBOL_FLAG information is 1.

The reception system can determine the number of symbols over which the L1_pre signaling information of the next frame is spread in the data symbol part through the L1_PRE_SPREAD_LEN information. Accordingly, the reception system can determine the spreading pattern of the L1_pre signaling information of the next frame to reconstruct the L1_pre signaling information of the next frame present at the corresponding location. The correct length of the spreading section may vary according to the FFT size and the reception system can acquire the length of the spreading section from L1_PRE_SPREAD_LEN information of Figs. 58 and 60 acquired by decoding the P1' symbol.

However, when the value of the P2_SYMBOL_FLAG information is 1 and the value of the L1_PRE_SPREAD_LEN information is 000 (type 1) or 00 (type 2), the reception system decodes only L1 signaling information of the current frame included in the P2 symbol part since, when the value of the L1_PRE_SPREAD_LEN information is 000 (type 1) or 00 (type 2), this indicates that the method of spreading L1 signaling information of the next frame in the data symbol part is not used.

In an embodiment of the present invention, L1_pre signaling information which is transmitted within a data part includes configuration (or attribute) information of a next frame. For example, the L1_pre signaling information may include TYPE information, BWT_EXT information, ID information, NUM_T2_FRAME information, or the like representing the configuration of a next frame and may also include L1_MOD information, L1_COD information, L1_POST_SIZE information, L1_FEC_TYPE information, or the like representing the configuration of L1_post signaling information of a next frame.

To reconstruct L1_post signaling information included in the current frame, there is a need to be aware of a configuration of the current frame such as the length of the current frame. However, since the L1_pre signaling information included in the current frame includes configuration information of L1_post signaling information included in a next frame, parameter information indicating the length of the current frame is added to the L1_pre signaling information in the embodiment of the present invention. In an embodiment, the parameter information may be defined as CURRENT_NUM_DATA_SYMBOLS information. The CURRENT_NUM_DATA_SYMBOLS information, which is 12-bit information, may be expressed by the number of OFDM symbols.

The reception system may decode the L1_pre signaling information included in the data part of the current frame to acquire configuration information of the next frame and to acquire information used to decode L1_post signaling information of the next frame included in the data part of the current frame. In addition, since the reception system can determine the length of the current frame using the CURRENT_NUM_DATA_SYMBOLS information included in the L1_pre signaling information of the next frame, the reception system can determine the structure of L1_post signaling information spread in the current frame using the length of the current frame to decode the L1_post signaling information.

The following is a description of a method for a frame builder to spread L1_pre signaling information of the current frame and L1_post signaling information of the next frame as in the frame structure of Fig. 57 described above.

First, the L1_pre signaling information of the current frame is spread over the P2 symbol part in the time and frequency domains as in Fig. 57. The L1_pre signaling information of the current frame is mapped to the frame in the time domain as shown in the following Expression 37 and the L1_post signaling information of the current frame is mapped to the frame in the time domain as shown in the following Expression 38.

[Expression 37]

$$C_{PRE_P2}(i)=\begin{cases} ceil\left(\frac{L1_PRE_SIZE}{N_{P2}}\right), & 0\le i<(L1_PRE_SIZE \bmod N_{P2}) \\ floor\left(\frac{L1_PRE_SIZE}{N_{P2}}\right), & (L1_PRE_SIZE \bmod N_{P2})\le i<N_{P2} \end{cases},$$

*where* $C_{PRE_P2}(i)$= Number of L1-pre cells in $i^{th}$ *P2 symbol*

L1_*PRE_INFO_SIZE*=the size of information part of the L1-pre signalling data for current frame, in cells

The L1_pre signaling information of the current frame is arranged as a uniform number of cells in the P2 symbol part in the time domain. In Expression 37, C_PRE_P2(i) represents the number of cells of L1_pre signaling information of the current frame allocated to an ith symbol according to the number of P2 symbols which varies according to the FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 37, when cells of L1_pre signaling information are allocated according to the number of P2 symbols in the time domain, the allocated cells are shifted by a predefined random amount or by an amount calculated using a predefined equation.

The reception system may determine the number of P2 symbols included in the frame using the FFT size information acquired from the P1 symbol. Thus, the reception system may determine the number of cells of the L1_pre signaling information allocated to the ith symbol, i.e., may determine the value C_PRE_P2(i). Since the amount by which uniformly divided cells of L1_pre signaling information are shifted in the frequency domain in each symbol is a predefined random amount or is calculated using an predefined equation, the reception system can acquire L1_pre signaling information of the current frame by determining the shifted amount.

The L1_post signaling information of the current frame is spread over the P2 symbol part in the time and frequency domains as in Fig. 57. The L1_post signaling information is mapped to the frame in the time domain as shown in the following Expression 38.

[Expression 38]

$$C_{POST_P2}(i)=\begin{cases} ceil\left(\frac{L1_POST_SIZE}{N_{P2}}\right), & 0\le i<(L1_POST_SIZE \bmod N_{P2}) \\ floor\left(\frac{L1_POST_SIZE}{N_{P2}}\right), & (L1_POST_SIZE \bmod N_{P2})\le i<N_{P2} \end{cases}.$$

*where* $C_{POST_P2}(i)$= Number of L1-post cells in $i^{th}$ *P2 symbol*

L1_*POST_SIZE*=the size of the coded and modulated L1-post signalling data for current frame, in cells

The L1_post signaling information of the current frame is arranged as a uniform number of cells in the P2 symbol part in the time domain. In Expression 38, C_POST_P2(i) represents the number of cells of L1_post signaling information of the current frame allocated to an ith symbol according to the number of P2 symbols which varies according to the FFT mode. The value of N_P2 is expressed according to the FFT mode such that the value is expressed as 16 when the FFT mode is 1K, 8 when the FFT mode is 2K, 4 when the FFT mode is 4K, and 2 when the FFT mode is 8K.

As shown in Expression 38, when cells of L1_pre signaling information are allocated according to the number of P2 symbols in the time domain, the allocated cells are shifted by a predefined random amount or by an amount calculated using a predefined equation.

The reception system decodes L1_post signaling information included in a P2 symbol based on information acquired by decoding L1_pre signaling information included in the P2 symbol. Since the reception system cannot determine length information of the L1_post signaling information before the L1_pre signaling information is decoded, the reception system needs to store cells of the L1_post signaling information which are located continuously in the frequency domain with the cells of the L1_pre signaling information in the P2 symbol until the L1_pre signaling information is decoded.

After the L1_pre signaling information is decoded, the reception system can determine the number of cells of the L1_post signaling information allocated for each symbol using L1_POST_SIZE information included in the L1_pre signaling information. The reception system can acquire this value using C_POST_P2(i) of Expression 38 and can decode the L1_post signaling information by extracting C_POST_P2(i) cells of the L1_post signaling information which are continuous with cells of the L1_pre signaling information from every symbol stored in the buffer. That is, since C_POST_P2(i) cells of the L1_post signaling information are located continuously with cells of the L1_pre signaling information in the frequency domain in every ith symbol, the reception system can decode the L1_post signaling information using the locations of the cells of the L1_pre signaling information determined as described above.

The L1 signaling information of the next frame is spread over the data symbol part in the time and frequency domains as in Fig. 57. The L1_pre signaling information of the next frame is mapped to the frame in the time domain as shown in the following Expression 39 and the L1_post signaling information of the next frame is mapped to the frame in the time domain as shown in the following Expression 40.

[Expression 39]

$$C_{PRE}(i) = \begin{cases} ceil\left(\frac{L1_PRE_SIZE}{N_{spread}}\right), & 0 \le i < (L1_PRE_SIZE \bmod N_{spread}) \\ floor\left(\frac{L1_PRE_SIZE}{N_{spread}}\right), & (L1_PRE_SIZE \bmod N_{spread}) \le i < N_{spread} \end{cases}$$

*where* $C_{PRE}(i)$= Number of L1-pre cells in $i^{th}$ *data symbol*

$N_{spread}$=Number of data symbols for L1-pre spreding

L1*_PRE_INFO_SIZE*=the size of of the coded and modutated L1-pre signalling data for next frame, in cells

The L1_pre signaling information of the next frame is arranged as a uniform number of cells in an N-spread section determined according to the L1_PRE_SPREAD_LEN information of the P1' symbol described above in the data symbol part in the time domain. In Expression 39, C_PRE(i) represents the number of cells of L1_pre signaling information of the next frame allocated to an ith symbol according to the value of N_spread.

As shown in Expression 39, when cells of L1_pre signaling information are allocated according to the value of N_spread in the time domain, the allocated cells are shifted by a predefined random amount or by an amount calculated using a predefined equation.

The reception system may perform channel estimation using pilot pattern information acquired from the P1' symbol and may then determine the length of the spreading section of the L1_pre signaling information for the next frame using the L1_PRE_SPREAD_LEN information. The correct spreading length may vary according to the FFT size and may be determined using the L1_PRE_SPREAD_LEN information as shown in Fig. 58. Since the reception system can determine the length of the spreading section and the amount of the L1_pre signaling information, the reception system can acquire the number of cells of the L1_pre signaling information allocated to every ith symbol through Expression 39, which is equal to C_PRE(i). Since the amount by which uniformly divided cells of L1_pre signaling information of the next frame in each symbol are shifted in the frequency domain is a predefined random amount or is calculated using an predefined equation, the reception system can acquire L1_pre signaling information of the next frame by determining the shifted amount.

The L1_post signaling information of the next frame is spread over the time and frequency domains in a portion, excluding the spreading section of the L1_pre signaling information, of the data symbol part as shown in Fig. 57. The L1_post signaling information is mapped to the frame in the time domain as shown in the following Expression 40.

[Expression 40]

$$C_{POST}(i)=\begin{cases} ceil\left(\frac{L1_POST_SIZE}{L_{normal}-N_{spread}}\right), & N_{spread}\le i<(L1_POST_SIZE \bmod (L_{normal}-N_{spread})) \\ floor\left(\frac{L1_POST_SIZE}{L_{normal}-N_{spread}}\right), & (L1_POST_SIZE \bmod (L_{normal}-N_{spread}))\le i<L_{normal}-N_{spread} \end{cases},$$

*where* $C_{POST}(i)$=Number of L1-post cells in $i^{th}$ data symbol L1_*POST_SIZE*=the size of the information part of the L1-post signaling data $L_{normal}$=# of data symbols, not including P1, P2 or any frame closing symbol, in a frame

In Expression 40, L_normal represents the number of data symbols excluding P1, P2 or closing symbols in the frame. Thus, a value obtained by subtracting the value of N_spread from the value of L_normal is the length of a symbol section over which L1_post signaling information of the next frame is spread. Cells of L1_post signaling information of the next frame may be uniformly distributed over L_normal - N_spread data symbols and the number of cells of the L1_post signaling information of the next frame allocated to the ith data symbol may be set to C_POST(i) according to Expression 40.

The cells of the L1_post signaling information of the next frame which are spread in the time domain as shown in Expression 40 are again spread in the frequency domain. That is, the cells of the L1_post signaling information of the next frame are mapped to the first subcarrier and are shifted by a predefined random amount or by an amount determined using a predefined equation, thereby maximizing frequency diversity. That is, cells of L1_post signaling information may be mapped to subcarriers corresponding to an interval corresponding to the determined amount.

The reception system may decode L1_pre signaling information of the next frame and decode L1_post signaling information of the next frame using the decoded information. Once the reception system decodes L1_pre signaling information of the next frame, the reception system can reconstruct L1_post signaling information using NUM_DAT_SYMBOLS information and N_spread information in the current frame and L1_POST_INFO_SIZE. That is, the reception system may determine the number (C_POST(i)) of cells corresponding to L1_post signaling information, which is uniformly distributed over one symbol, through such information and Expression 40. In addition, since cells of the L1_post signaling information are shifted in each symbol in the frequency domain by a random interval or an interval determined using a predefined equation, the reception system may determine the number and the locations of L1_post signaling information cells of the subcarrier in the frequency domain through such a structure. Thus, the reception system may acquire information regarding PLPs included in the next frame by acquiring and decoding the L1_post signaling information of the next frame.

The transmission system may perform time interleaving on generated L1 signaling information. The time interleaver may be included in a Bit Interleaved Coding and Modulation (BICM) module that performs Forward Error Correction (FEC) encoding and interleaving on data. In this case, the time interleaver of Fig. 29 may perform interleaving on output data of a cell interleaver in the BICM block and output the resulting data on a cell mapper included in the frame builder.

The time interleaver, which is the same type of time interleaver as that of Fig. 29, writes data on a block in a row direction and reads data in a column direction to perform interleaving. The size of the horizontal axis (the row size) and the size of the vertical axis (the column size) of the block interleaver may be adjusted according to the size, attribute, or type of data input to the block interleaver. In an embodiment of the present invention, the size of the block interleaver may be of Row = C_PRE(0) and Column = N_spread when the block interleaver interleaves L1_pre signaling information included in the data symbol and may be of Row = C_POST(0) and Column = L_normal - N_spread when the block interleaver interleaves L1_post signaling information included in the data symbol. Such an interleaver may perform interleaving such that continuous data is spread and distributed over every time symbol. The operations for time interleaving and time deinterleaving are the same as described above with reference to Fig. 29.

A transmission signal according to an embodiment of the present invention includes superframes, each including a plurality of frames. The L1 signaling information spreading method, which is applied to a transmission signal having such a structure, is the same as described above with reference to Fig. 36.

Fig. 62 illustrates a frame mapping structure of L1 signaling information according to an embodiment of the present invention. In the frame structure of Fig. 62, the horizontal axis represents the time domain and the vertical axis represents the frequency domain.

Fig. 62 shows the case in which the value of the P2_SYMBOL_FLAG is 1 and the frame builder uniformly spreads cells corresponding to L1 signaling information of the current frame over a P2 symbol part of the frame in the time and frequency domains. Cells corresponding to L1 signaling information of the next frame are uniformly spread over a data symbol part of the frame. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination.

In the case of Fig. 62, it is assumed that the number of cells of the L1_pre signaling information is 8, the number of cells of the L1_post signaling information is 28, the number of data symbols is 22, and the length of the N_spread section is 8.

In the P2 symbol part, cells of the L1_pre signaling information of the current frame and cells of the L1_post signaling information of the current frame are divided uniformly so as to suit the number of P2 symbols and then the cells are spread in the frequency domain through a logical operation for cyclic shifting in each symbol. Also, cells of the L1_post signaling information of the current frame are divided uniformly so as to suit the number of P2 symbols and then the cells are arranged continuously in the frequency domain with the cells of the L1_post signaling information of the current frame.

In the data symbol part, 8 cells of the L1_pre signaling information of the next frame are arranged uniformly on a one by one basis in a section of N_spread=8 and then the cell are spread in the frequency domain through a logical operation for cyclic shifting in each symbol. 28 cells of the L1_post signaling information of the next frame are arranged uniformly on a two by two basis in a section of 14 data symbols, excluding N_spread, in the data symbol section (having a length of 22 symbols) and then the cell are spread in the frequency domain through a logical operation for cyclic shifting in each symbol.

Fig. 63 illustrates a frame mapping structure of L1 signaling information according to another embodiment of the present invention. In the frame structure of Fig. 63, the horizontal axis represents the time domain and the vertical axis represents the frequency domain.

Fig. 63 shows the case in which the value of the P2_SYMBOL_FLAG is 1 and the frame builder uniformly spreads cells corresponding to L1 signaling information of the current frame over a P2 symbol part of the frame in the time and frequency domains. Cells corresponding to L1 signaling information of the next frame are uniformly spread over a data symbol part of the frame. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination.

In the case of Fig. 63, it is assumed that the number of cells of the L1_pre signaling information is 8, the number of cells of the L1_post signaling information is 28, the number of data symbols is 22, and the length of the N_spread section is 8.

In the P2 symbol part, cells of the L1_pre signaling information of the current frame and cells of the L1_post signaling information of the current frame are divided uniformly so as to suit the number of P2 symbols and then the cells are shifted by a predefined random cell interval in each symbol to be spread in the frequency domain. Also, cells of the L1_post signaling information of the current frame are divided uniformly so as to suit the number of P2 symbols and then the cells are arranged continuously in the frequency domain with the cells of the L1_post signaling information of the current frame.

In the data symbol part, 8 cells of the L1_pre signaling information of the next frame are arranged uniformly on a one by one basis in a section of N_spread=8 and then the cell are shifted by a predefined random cell interval in each symbol to be spread in the frequency domain. 28 cells of the L1_post signaling information of the next frame are arranged uniformly on a two by two basis in a section of 14 data symbols, excluding N_spread, in the data symbol section (having a length of 22 symbols) and then the cell are shifted by a predefined random cell interval in each symbol to be spread in the frequency domain.

Fig. 64 illustrates a frame mapping structure of L1 signaling information according to another embodiment of the present invention. In the frame structure of Fig. 64, the horizontal axis represents the time domain and the vertical axis represents the frequency domain.

Fig. 64 shows the case in which the value of the P2_SYMBOL_FLAG is 0 and the frame builder uniformly spreads cells corresponding to L1 signaling information of the next frame over a data symbol part of the frame in the time and frequency domains. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. Since the value of the P2_SYMBOL_FLAG value is 0 in the P1' symbol which is an additional preamble, the L1 signaling information of the current frame is not additionally signaled using the P2 symbol.

In the case of Fig. 64, it is assumed that the number of cells of the L1_pre signaling information is 8, the number of cells of the L1_post signaling information is 28, the number of data symbols is 22, and the length of the N_spread section is 8.

In the data symbol part, 8 cells of the L1_pre signaling information of the next frame are arranged uniformly on a one by one basis in a section of N_spread=8 and then the cell are spread in the frequency domain through a logical operation for cyclic shifting in each symbol. 28 cells of the L1_post signaling information of the next frame are arranged uniformly on a two by two basis in a section of 14 data symbols, excluding N_spread, in the data symbol section (having a length of 22 symbols) and then the cell are spread in the frequency domain through a logical operation for cyclic shifting in each symbol.

Fig. 65 illustrates a frame mapping structure of L1 signaling information according to another embodiment of the present invention. In the frame structure of Fig. 65, the horizontal axis represents the time domain and the vertical axis represents the frequency domain.

Fig. 65 shows the case in which the value of the P2_SYMBOL_FLAG is 0 and the frame builder uniformly spreads cells corresponding to L1 signaling information of the next frame over a data symbol part of the frame in the time and frequency domains. Cells corresponding to L1_pre signaling information of the next frame are uniformly spread over an N_spread section of the data symbol part of the frame and cells corresponding to L1_post signaling information of the next frame are uniformly spread over a section subsequent to the N_spread section of the data symbol part of the frame. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. Since the value of the P2_SYMBOL_FLAG value is 0 in the P1' symbol which is an additional preamble, the L1 signaling information of the current frame is not additionally signaled using the P2 symbol.

In the case of Fig. 65, it is assumed that the number of cells of the L1_pre signaling information is 8, the number of cells of the L1_post signaling information is 28, the number of data symbols is 22, and the length of the N_spread section is 8.

In the data symbol part, 8 cells of the L1_pre signaling information of the next frame are arranged uniformly on a one by one basis in a section of N_spread=8 and then the cell are shifted by a predefined random cell interval in each symbol to be spread in the frequency domain. 28 cells of the L1_post signaling information of the next frame are arranged uniformly on a two by two basis in a section of 14 data symbols, excluding N_spread, in the data symbol section (having a length of 22 symbols) and then the cell are shifted by a predefined random cell interval in each symbol to be spread in the frequency domain.

Fig. 66 illustrates a frame mapping structure of L1 signaling information according to another embodiment of the present invention. In the frame structure of Fig. 66, the horizontal axis represents the time domain and the vertical axis represents the frequency domain.

Fig. 66 shows the case in which the value of the P2_SYMBOL_FLAG is 1 and the value of the L1_PRE_SPREAD_LEN information is 000 (type 1) or 00 (type 2). Accordingly, the frame builder uniformly spreads cells corresponding to L1 signaling information of the current frame over a P2 symbol part of the frame in the time and frequency domains. In the embodiment of Fig. 66, L1 signaling information of the next frame is not spread over the data symbol. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. In the embodiment of Fig. 66, L1_PRE_SPREAD_LEN information signaled by the P1' symbol may have a value of '000' (type 1) or 00 (type 2) to indicate that L1 signaling information is spread only over the P2 symbol part in the current frame as described above with reference to Fig. 60.

In the case of Fig. 66, it is assumed that the number of cells of the L1_pre signaling information is 8, the number of cells of the L1_post signaling information is 28, and the number of data symbols is 22.

In the P2 symbol part, cells of the L1_pre signaling information of the current frame and cells of the L1_post signaling information of the current frame are divided uniformly so as to suit the number of P2 symbols and then the cells are spread in the frequency domain through a logical operation for cyclic shifting in each symbol. Also, cells of the L1_post signaling information of the current frame are divided uniformly so as to suit the number of P2 symbols and then the cells are arranged continuously in the frequency domain with the cells of the L1_post signaling information of the current frame. In an embodiment, when the number of P4 symbols is 4, cells of the L1_pre signaling information of the current frame may be arranged uniformly in the time domain such that 2 cells are arranged for each symbol and cells of the L1_post signaling information of the current frame may be arranged uniformly in the time domain such that 7 cells are arranged for each symbol.

Fig. 67 illustrates a frame mapping structure of L1 signaling information according to another embodiment of the present invention. In the frame structure of Fig. 67, the horizontal axis represents the time domain and the vertical axis represents the frequency domain.

Fig. 67 shows the case in which the value of the P2_SYMBOL_FLAG is 1 and the value of the L1_PRE_SPREAD_LEN information is 000 (type 1) or 00 (type 2). Accordingly, the frame builder uniformly spreads cells corresponding to L1 signaling information of the current frame over a P2 symbol part of the frame in the time and frequency domains. In the embodiment of Fig. 67, L1 signaling information of the next frame is not spread over the data symbol. Further, a P1' symbol, which is an additional preamble, is added to signal the spreading length of the L1_pre signaling information of the next frame and the pilot pattern through the P1' symbol, thereby allowing the receiving side to efficiently perform channel estimation and spreading structure determination. In the embodiment of Fig. 67, L1_PRE_SPREAD_LEN information signaled by the P1' symbol may have a value of '000' (type 1) or 00 (type 2) to indicate that L1 signaling information is spread only over the P2 symbol part in the current frame as described above with reference to Fig. 60.

In the case of Fig. 67, it is assumed that the number of cells of the L1_pre signaling information is 8, the number of cells of the L1_post signaling information is 28, and the number of data symbols is 22.

In the P2 symbol part, cells of the L1_pre signaling information of the current frame and cells of the L1_post signaling information of the current frame are divided uniformly so as to suit the number of P2 symbols and then the cells are shifted by a predefined random cell interval in each symbol to be spread in the frequency domain. Also, cells of the L1_post signaling information of the current frame are divided uniformly so as to suit the number of P2 symbols and then the cells are arranged continuously in the frequency domain with the cells of the L1_post signaling information of the current frame. In an embodiment, when the number of P4 symbols is 4, cells of the L1_pre signaling information of the current frame may be arranged uniformly in the time domain such that 2 cells are arranged for each symbol and cells of the L1_post signaling information of the current frame may be arranged uniformly in the time domain such that 7 cells are arranged for each symbol.

Fig. 68 is a flowchart illustrating a method for transmitting broadcast signals according to an embodiment of the present invention.

A BICM encoder included in a broadcast signal transmitter according to an embodiment of the present invention may encode signaling information and a plurality of PLPs including components of a broadcast service (S68010).

In this case, the signaling information may include first signaling information and second signaling information. The first signaling information may include the L1-pre signaling information described above and may also include information for decoding the second signaling information in a reception system. For example, the second signaling information may include the L1-post signaling information and may also include information for decoding a plurality of PLPs included in a next frame.

As described above in the embodiments of Figs. 28 to 67, the first signaling information may include L1-pre signaling information of a current frame and L1-pre signaling information of a next frame and the second signaling information may include L1-post signaling information of the current frame and L1-post signaling information of the next frame. The signaling information may also include the above-mentioned information signaled by an additional preamble (P1' or AP1). L1-pre signaling information of the current frame may be referred to as first signaling information, L1-post signaling information of the current frame may be referred to as second signaling information, L1-pre signaling information of the next frame may be referred to as third signaling information, and L1-post signaling information of the next frame may be referred to as fourth signaling information.

A frame builder included in the broadcast signal transmitter according to an embodiment of the present invention may build a plurality of frames including a plurality of encoded PLPs and signaling information (S68020).

In this case, each of the plurality of frames may include a preamble and a data symbol and the preamble may include a P1 symbol and a P2 symbol. In the present invention, a P1 symbol and a P2 symbol excluding a common PLP may be referred to as a preamble and a P1 symbol, a P2 symbol, and a common PLP may all be referred to as a preamble.

The structures of frames generated by the frame builder of the broadcast signal transmitter are described above with reference to Figs. 28 to 67. That is, the first signaling information and the second signaling information may be spread over a preamble area and the third signaling information and the fourth signaling information may be spread over a data symbol area as described above.

In the case of a frame structure including an additional preamble, an AP1 insertion module (additional preamble insertion module) included in an OFDM generator of the broadcast signal transmitter may add an additional preamble, i.e., a P1' symbol (or AP1 symbol) to the frame. Information included in such an additional preamble is described above.

A transmission unit included in the broadcast signal transmitter according to an embodiment of the present invention may transmit a broadcast signal including a plurality of frames (S68030).

A broadcast signal receiver receives and processes a broadcast signal as described above with reference to Figs. 28 to 67. A broadcast signal frame received by the broadcast signal receiver may include L1 signaling information of a current frame and L1 signaling information of a next frame. In this case, the broadcast signal receiver may first process the L1 signaling information of the current frame and process the L1 signaling information of the next frame. Accordingly, when the broadcast signal receiver processes the next frame (frame N+1) in the case in which the broadcast signal receiver has processed L1 signaling information of the next frame (frame N+1) during processing of the current frame (frame N), the broadcast signal receiver may immediately parse the next frame (frame N+1) and process data without processing signaling information of the current frame (frame N+1) in the next frame (frame N+1). At a boundary of a superframe or at a part where signaling information changes, the broadcast signal receiver may again perform processing, starting from signaling information included in the current frame, using L1_CHANGE_COUNTER information as described above with reference to Figs. 30 to 36.

[Modes for Invention]

Details about modes for the present invention have been described in the above best mode.

[Industrial Applicability]

As described above, the present invention can be wholly or partially applied to digital broadcast systems.

## Claims

**1.** A method for transmitting broadcast signals, the method comprising;
processing Physical Layer Pipe, PLP, data to form a BaseBand, BB, frame, the processing further comprising:

generating Layer 1, L1, signaling information including L1-pre signaling information and L1-post signaling information, and
scrambling the generated L1-pre signaling information and L1-post signaling information;

Bit Interleaved Coded Modulation, BICM, encoding the processed PLP data, wherein the BICM encoding further comprising:

Forward Error Correction, FEC, encoding data in the BB frame,
bit interleaving the FEC encoded data,
dividing the bit interleaved data into a first data and a second data,
Quadrature Amplitude Modulation, QAM, mapping the first data and the second data, respectively, onto constellations,
Multi-input Multi-Output, MIMO, processing the mapped first and second data to output a first transmitting signal and a second transmitting signal, wherein the MIMO processing is performed by using a MIMO encoding matrix having a MIMO processing parameter,
cell interleaving the first and second transmitting signal,
time interleaving the cell interleaved first and second transmitting signal, and
BICM encoding the scrambled L1-pre signaling information to output a first L1-pre signaling information and a second L1-pre signaling information, and BICM encoding the scrambled L1-post signaling information to output a first L1-post signaling information and a second L1-post signaling information;

building a first frame using the time interleaved first transmitting signal, the first L1-pre signaling information and the first L1-post signaling information, and building a second frame using the time interleaved second transmitting signal, the second L1-pre signaling information and the second L1-post signaling information; and
modulating data in the built first frame by Orthogonal Frequency Division Multiplexing, OFDM, method to transmit first broadcast signal, and modulating data in the built second frame by OFDM method to transmit second broadcast signal.

**2.** The method of claim 1, wherein the MIMO processing parameter is used for controlling a power imbalance between a first input signal and a second input signal.

**3.** The method of claim 1, wherein the building a first frame further comprising:

compensating delay for the first L1-pre signaling information and the first L1-post signaling information,
mapping the time interleaved first transmitting signal, the compensated first L1-pre signaling information and the compensated first L1-post signaling information onto the first frame, and
pair-wise frequency interleaving data mapped onto the first frame, and

wherein the building a second frame further comprising:

compensating delay for the second L1-pre signaling information and the second L1-post signaling information,
mapping the time interleaved second transmitting signal, the compensated second L1-pre signaling information and the compensated second L1-post signaling information onto the second frame, and
pair-wise frequency interleaving data mapped onto the second frame.

**4.** The method of claim 1, wherein the BICM encoding the scrambled L1-pre signaling information further comprising:

FEC encoding the scrambled L1-pre signaling information,
bit interleaving the FEC encoded L1-pre signaling information,
demultiplexing the bit interleaved L1-pre signaling information,
QAM mapping the demultiplexed L1-pre signaling information onto constellations, and
Multi-Input Single-Output, MISO, processing the mapped L1-pre signaling information to output the first L1-pre signaling information and the second L1-pre signaling information, and

wherein BICM encoding the scrambled L1-post signaling information further comprising:

FEC encoding the scrambled L1-post signaling information,
bit interleaving the FEC encoded L1-post signaling information,
demultiplexing the bit interleaved L1-post signaling information,
QAM mapping the demultiplexed L1-post signaling information onto constellations, and

MISO processing the mapped L1-post signaling information to output the first L1-post signaling information and the second L1-post signaling information.

**5.** An apparatus for transmitting broadcast signals, the apparatus comprising;
means (101200) for processing Physical Layer Pipe, PLP, data to form a BaseBand, BB, frame, the means (101200) further comprising:

means (603500) for generating Layer 1, L1, signaling information including L1-pre signaling information and L1-post signaling information,
means (603600) for scrambling the generated L1-pre signaling information, and
means (603700) for scrambling the generated L1-post signaling information;

means (101300) for Bit Interleaved Coded Modulation, BICM, encoding the processed PLP data, wherein the means(101200) further comprising:

means for Forward Error Correction, FEC, encoding data in the BB frame,
means for bit interleaving the FEC encoded data,
means for dividing the bit interleaved data into a first data and a second data,
means (607210-1) for Quadrature Amplitude Modulation, QAM, mapping the first data onto constellations,
means (607210-2) for QAM mapping the second data onto constellations,
means (607220) for Multi-input Multi-Output, MIMO, processing the mapped first and second data to output a first transmitting signal and a second transmitting signal, wherein the MIMO processing is performed by using a MIMO encoding matrix having a MIMO processing parameter,
means for cell interleaving the first transmitting signal,
means for cell interleaving the second transmitting signal,
means for time interleaving the cell interleaved first transmitting signal,
means for time interleaving the cell interleaved second transmitting signal, and
means (607300) for BICM encoding the scrambled L1-pre signaling information to output a first L1-pre signaling information and a second L1-pre signaling information, and for BICM encoding the scrambled L1-post signaling information to output a first L1-post signaling information and a second L1-post signaling information;

means (101400) for building frames, the means (101400) further comprising:

means (605100) for building a first frame using the time interleaved first transmitting signal, the first L1-pre signaling information and the first L1-post signaling information, and

means (605200) for building a second frame using the time interleaved second transmitting signal, the second L1-pre signaling information and the second L1-post signaling information; and
means (101500) for modulating data in the built frames by Orthogonal Frequency Division Multiplexing, OFDM, method, the means (101500) further comprising:

means (606800) for modulating data in the built first frame by OFDM method to transmit first broadcast signal, and
means (606900) for modulating data in the built second frame by OFDM method to transmit second broadcast signal.

**6.** The apparatus of claim 5, wherein the MIMO processing parameter is used for controlling a power imbalance between a first input signal and a second input signal.

**7.** The apparatus of claim 5, wherein the means (605100) further comprises:

means (605110) for compensating delay for the first L1-pre signaling information and the first L1-post signaling information,
means (605120) for mapping the time interleaved first transmitting signal, the compensated first L1-pre signaling information and the compensated first L1-post signaling information onto the first frame, and
means (605130) for pair-wise frequency interleaving data mapped onto the first frame, and

wherein the means (605200) further comprises:

means (605210) for compensating delay for the second L1-pre signaling information and the second L1-post signaling information,
means(605220) for mapping the time interleaved second transmitting signal, the compensated second L1-pre signaling information and the compensated second L1-post signaling information onto the second frame, and
means (605230) for pair-wise frequency interleaving data mapped onto the second frame.

**8.** The apparatus of claim 5, wherein the means (607300) further comprises:

means for FEC encoding the scrambled L1-pre signaling information,
means for FEC encoding the scrambled L1-post signaling information,
means for bit interleaving the FEC encoded L1-pre signaling information,
means for bit interleaving the FEC encoded L1-post signaling information,
means for demultiplexing the bit interleaved L1-pre signaling information,
means for demultiplexing the bit interleaved L1-post signaling information,
means (607310-1) for QAM mapping the demultiplexed L1-pre signaling information onto constellations,
means (607310-2) for QAM mapping the demultiplexed L1_post signaling information onto constellations,
means (607320-1) for Multi-Input Single-Output, MISO, processing the mapped L1-pre signaling information to output the first L1-pre signaling information and the second L1-pre signaling information, and
means (607320-2) for MISO processing the mapped L1-post signaling information to output the first L1-post signaling information and the second L1-post signaling information.

**9.** A method for receiving broadcast signals, the method comprising;
receiving broadcast signals and demodulating the received broadcast signals by Orthogonal Frequency Division Multiplexing, OFDM, method, the receiving and the demodulating further comprising:

receiving a first broadcast signal and demodulating the received first broadcast signal by OFDM method, and
receiving a second broadcast signal and demodulating the received second broadcast signal by OFDM method;

parsing frames from the demodulated broadcast signals, the parsing frames further comprising:

processing a first frame from the demodulated first broadcast signal to output a first output data, a first L1-pre signaling information and a first L1-post signaling information, and
processing a second frame from the demodulated second broadcast signal to output a second output data, a second L1-pre signaling information and a second L1-post signaling information;

Bit Interleaved Coded Modulation, BICM, decoding data from the parsed frames, the BICM decoding further comprising:

time deinterleaving the first and second output data,
cell deinterleaving the time deinterleaved first and second output data,
Multi-input Multi-Output, MIMO, processing the cell deinterleaved first and second output data, wherein the MIMO processing is performed by using a MIMO matrix having a MIMO processing parameter,
Quadrature Amplitude Modulation, QAM, demapping the MIMO processed first and second output data,
merging the demapped first and second output data into an output data,
bit deinterleaving the output data,
Forward Error Correction, FEC, decoding the bit deinterleaved output data to output a BaseBand, BB, frame, and
BICM decoding the first L1-pre signaling information and the second L1-pre signaling information to output a L1-pre signaling information, and BICM decoding the first L1-post signaling information and the second L1-post signaling information to output a L1-post signaling information; and

processing the BB frame, the L1-pre signaling information and L1-post signaling information, the processing further comprising:

descrambling the L1-pre signaling information and the L1-post signaling information, and
decoding the descrambled L1-pre signaling information and the descrambled L1-post signaling information.

**10.** The method of claim 9, wherein the processing a first frame further comprising:pair-wise frequency deinterleaving data in the demodulated first broadcast signal, and
demapping the frequency deinterleaved data from the first frame to output the first output data, the first L1-pre signaling information and the first L1-post signaling information, and
wherein the processing a second frame further comprising:
pair-wise frequency deinterleaving data in the demodulated second broadcast signal, and
demapping the frequency deinterleaved data from the second frame to output the second output data, the second L1-pre signaling information and the second L1-post signaling information.

**11.** The method of claim 9, wherein the L1-post signaling information includes time interleaving type information.

**12.** An apparatus for receiving broadcast signals, the apparatus comprising;
means (107100) for receiving broadcast signals and demodulating the received broadcast signals by Orthogonal Frequency Division Multiplexing, OFDM, method, the means (107100) further comprising:

means (610100) for receiving a first broadcast signal and demodulating the received first broadcast signal by OFDM method, and
means (610200) for receiving a second broadcast signal and demodulating the received second broadcast signal by OFDM method;

means (107200) for parsing frames from the demodulated broadcast signals, the means (107200) further comprising:

means (611100) for processing a first frame from the demodulated first broadcast signal to output a first output data, a first L1-pre signaling information and a first L1-post signaling information, and
means (611200) for processing a second frame from the demodulated second broadcast signal to output a second output data, a second L1-pre signaling information and a second L1-post signaling information;

means (107300) for Bit Interleaved Coded Modulation, BICM, decoding data from the parsed frames, the means (107300) further comprising:

means for time deinterleaving the first output data,
means for time deinterleaving the second output data,
means for cell deinterleaving the time deinterleaved first output data,
means for cell deinterleaving the time deinterleaved second output data,
means(615210) for Multi-input Multi-Output, MIMO, processing the cell deinterleaved first and second output data, wherein the MIMO processing is performed by using a MIMO matrix having a MIMO processing parameter,
means for Quadrature Amplitude Modulation, QAM, demapping the MIMO processed first output data,

means for QAM demapping the MIMO processed second output data,
means (612250) for merging the demapped first and second output data into an output data,
means (612260) for bit deinterleaving the output data,
means (612270) for Forward Error Correction, FEC, decoding the bit deinterleaved output data to output a BaseBand, BB, frame, and
means (615300) for BICM decoding the first L1-pre signaling information and the second L1-pre signaling information to output a L1-pre signaling information, and for BICM decoding the first L1-post signaling information and the second L1-post signaling information to output a L1-post signaling information; and

means (107400) for processing the BB frame, the L1-pre signaling information and L1-post signaling information, means(107400) further comprising:

means (617400-1) for descrambling the L1-pre signaling information,
means (617400-2) for descrambling the L1-post signaling information, and

means(6174100) for decoding the descrambled L1-pre signaling information and the descrambled L1-post signaling information.

**13.** The apparatus of claim 12, wherein the means (611100) further comprises:

means (611110) for pair-wise frequency deinterleaving data in the demodulated first broadcast signal, and
means (611120) for demapping the frequency deinterleaved data from the first frame to output the first output data, the first L1-pre signaling information and the first L1-post signaling information, and

wherein the means (611200) further comprises:

means (611210) for pair-wise frequency deinterleaving data in the demodulated second broadcast signal, and
means (611220) for demapping the frequency deinterleaved data from the second frame to output the second output data, the second L1-pre signaling information and the second L1-post signaling information.

**14.** The apparatus of claim 12, wherein the L1-post signaling information includes time interleaving type information.

**15.** The method of claim 9, wherein the BICM decoding the first L1-pre signaling information and the second L1-pre signaling information further comprising:

Multi-Input Single-Output, MISO, processing the first L1-pre signaling information and the second L1-pre signaling information to output the L1-pre signaling information,
demapping the L1-pre signaling information from constellations, and
FEC decoding the demapped L1-pre signaling information, and

wherein BICM decoding the first L1-post signaling information and the second L1-post signaling information further comprising:

MISO processing the first L1-post signaling information and the second L1-post signaling information to output the L1-post signaling information,
demapping the L1-post signaling information from constellations,
multiplexing the demapped L1-post signaling information,
bit deinterleaving the multiplexed L1-post signaling information, and
FEC decoding the bit deinterleaved L1-post signaling information.

**16.** The apparatus of claim 12, wherein the means (615300) further comprising:

means (615410) for Multi-Input Single-Output, MISO, processing the first L1-pre signaling information and the second L1-pre signaling information to output the L1-pre signaling information,
means (615510) for MISO processing the first L1-post signaling information and the second L1-post signaling information to output the L1-post signaling information,
means for demapping the L1-pre signaling information from constellations,
means for demapping the L1-post signaling information from constellations,

means for multiplexing the demapped L1-post signaling information,
menas for bit deinterleaving the multiplexed L1-post signaling information,
means for FEC decoding the demapped L1-pre signaling information, and
means for FEC decoding the bit deinterleaved L1-post signaling information.

## Patentansprüche

1. Verfahren zum Senden von Rundfunksignalen, wobei das Verfahren umfasst;
Verarbeiten von PLP-Daten (PLP = Physical Layer Pipe), um einen BB-Frame (BB = Basisband) zu bilden, wobei das Verarbeiten ferner umfasst:

    Generieren von L1-Signalisierungsinformationen (L1 = Schicht 1), die L1-Vorsignalisierungsinformationen und L1-Nachsignalisierungsinformationen einschließen, und
    Verwürfeln der generierten L1-Vorsignalisierungsinformationen und L1-Nachsignalisierungsinformationen;

BICM-Codieren (BICM = Bit Interleaved Coded Modulation) der verarbeiteten PLP-Daten, wobei das BICM-Codieren ferner umfasst:

    FEC-Codieren (FEC = Vorwärtsfehlerkorrektur) von Daten in dem BB-Frame,
    Bitverschachteln der FEC-codierten Daten,
    Aufteilen der bitverschachtelten Daten in erste Daten und zweite Daten,
    QAM-Mappen (QAM = Quadraturamplitudenmodulation) der ersten Daten bzw. der zweiten Daten auf Konstellationen,
    MIMO-Verarbeiten (MIMO = Multi-Input Multi-Output) der dem Mapping unterzogenen ersten und zweiten Daten, um ein erstes Sendesignal und ein zweites Sendesignal auszugeben, wobei das MIMO-Verarbeiten unter Verwendung einer MIMO-Codiermatrix, die einen MIMO-Verarbeitungsparameter aufweist, durchgeführt wird,
    Zellenverschachteln des ersten und des zweiten Sendesignals,
    Zeitverschachteln des zellenverschachtelten ersten und zweiten Sendesignals und
    BICM-Codieren der verwürfelten L1-Vorsignalisierungsinformationen, um eine erste L1-Vorsignalisierungsinformation und eine zweite L1-Vorsignalisierungsinformation auszugeben, und BICM-Codieren der verwürfelten L1-Nachsignalisierungsinformationen, um eine erste L1-Nachsignalisierungsinformation und eine zweite L1-Nachsignalisierungsinformation auszugeben;

Bilden eines ersten Frames unter Verwendung des zeitverschachtelten ersten Sendesignals, der ersten L1-Vorsignalisierungsinformation und der ersten L1-Nachsignalisierungsinformation und Bilden eines zweiten Frames unter Verwendung des zeitverschachtelten zweiten Sendesignals, der zweiten L1-Vorsignalisierungsinformation und der zweiten L1-Nachsignalisierungsinformation; und
Modulieren von Daten in dem gebildeten ersten Frame mittels des OFDM-Verfahrens (OFDM = Orthogonal Frequency Division Multiplexing), um ein erstes Rundfunksignal zu senden, und Modulieren von Daten in dem gebildeten zweiten Frame mittels des OFDM-Verfahrens, um ein zweites Rundfunksignal zu senden.

2. Verfahren nach Anspruch 1, wobei der MIMO-Verarbeitungsparameter zur Steuerung eines Leistungsungleichgewichts zwischen einem ersten Eingangssignal und einem zweiten Eingangssignal verwendet wird.

3. Verfahren nach Anspruch 1, wobei das Bilden eines ersten Frames ferner umfasst:

    Kompensieren einer Laufzeit für die erste L1-Vorsignalisierungsinformation und die erste L1-Nachsignalisierungsinformation,
    Mappen des zeitverschachtelten ersten Sendesignals, der kompensierten ersten L1-Vorsignalisierungsinformation und der kompensierten ersten L1-Nachsignalisierungsinformation auf den ersten Frame und
    paarweises Frequenzverschachteln von dem Mapping auf den ersten

Frame unterzogenen Daten und

    wobei das Bilden eines zweiten Frames ferner umfasst:

        Kompensieren einer Laufzeit für die zweite L1-Vorsignalisierungsinformation und die zweite L1-Nachsignalisierungsinformation,
Mappen des zeitverschachtelten zweiten Sendesignals, der kompensierten zweiten L1-Vorsignalisierungsinformation und der kompensierten zweiten L1-Nachsignalisierungsinformation auf den zweiten Frame und paarweises Frequenzverschachteln von dem Mapping auf den zweiten Frame unterzogenen Daten.

**4.** Verfahren nach Anspruch 1, wobei das BICM-Codieren der verwürfelten L1-Vorsignalisierungsinformationen ferner umfasst:

FEC-Codieren der verwürfelten L1-Vorsignalisierungsinformationen,
Bitverschachteln der FEC-codierten L1-Vorsignalisierungsinformationen,
Demultiplexen der bitverschachtelten L1-Vorsignalisierungsinformationen,
QAM-Mappen der dem Demultiplexen unterzogenen L1-Vorsignalisierungsinformationen auf Konstellationen und
MISO-Verarbeiten (MISO = Multi-Input Single-Output) der dem Mapping unterzogenen L1-Vorsignalisierungsinformationen, um die erste L1-Vorsignalisierungsinformation und die zweite L1-Vorsignalisierungsinformation auszugeben, und

wobei das BICM-Codieren der verwürfelten L1-Nachsignalisierungsinformationen ferner umfasst:

FEC-Codieren der verwürfelten L1-Nachsignalisierungsinformationen,
Bitverschachteln der FEC-codierten L1-Nachsignalisierungsinformationen,
Demultiplexen der bitverschachtelten L1-Nachsignalisierungsinformationen,
QAM-Mappen der dem Demultiplexen unterzogenen L1-Nachsignalisierungsinformationen auf Konstellationen und

MISO-Verarbeiten der dem Mapping unterzogenen L1-Nachsignalisierungsinformationen, um die erste L1-Nachsignalisierungsinformation und die zweite L1-Nachsignalisierungsinformation auszugeben.

**5.** Vorrichtung zum Senden von Rundfunksignalen, wobei die Vorrichtung umfasst;
Mittel (101200) zum Verarbeiten von PLP-Daten (PLP = Physical Layer Pipe), um einen BB-Frame (BB = Basisband) zu bilden, wobei die Mittel (101200) ferner umfassen:

Mittel (603500) zum Generieren von L1-Signalisierungsinformationen (L1 = Schicht 1), die L1-Vorsignalisierungsinformationen und L1-Nachsignalisierungsinformationen einschließen,
Mittel (603600) zum Verwürfeln der generierten L1-Vorsignalisierungsinformationen und
Mittel (603700) zum Verwürfeln der generierten L1-Nachsignalisierungsinformationen;

Mittel (101300) zum BICM-Codieren (BICM = Bit Interleaved Coded Modulation) der verarbeiteten PLP-Daten, wobei die Mittel (101200) ferner umfassen:

Mittel zum FEC-Codieren (FEC = Vorwärtsfehlerkorrektur) von Daten in dem BB-Frame,
Mittel zum Bitverschachteln der FEC-codierten Daten,
Mittel zum Aufteilen der bitverschachtelten Daten in erste Daten und zweite Daten,
Mittel (607210-1) zum QAM-Mappen (QAM = Quadraturamplitudenmodulation) der ersten Daten auf Konstellationen,
Mittel (607210-2) zum QAM-Mappen der zweiten Daten auf Konstellationen,
Mittel (607220) zum MIMO-Verarbeiten (MIMO = Multi-Input Multi-Output) der dem Mapping unterzogenen ersten und zweiten Daten, um ein erstes Sendesignal und ein zweites Sendesignal auszugeben, wobei das MIMO-Verarbeiten unter Verwendung einer MIMO-Codiermatrix, die einen MIMO-Verarbeitungsparameter aufweist, durchgeführt wird,
Mittel zum Zellenverschachteln des ersten Sendesignals,
Mittel zum Zellenverschachteln des zweiten Sendesignals,
Mittel zum Zeitverschachteln des zellenverschachtelten ersten Sendesignals,
Mittel zum Zeitverschachteln des zellenverschachtelten zweiten Sendesignals und
Mittel (607300) zum BICM-Codieren der verwürfelten L1-Vorsignalisierungsinformationen, um eine erste L1-Vorsignalisierungsinformation und eine zweite L1-Vorsignalisierungsinformation auszugeben, und zum BICM-Codieren der verwürfelten L1-Nachsignalisierungsinformationen, um eine erste L1-Nachsignalisierungsinformation und eine zweite L1-Nachsignalisierungsinformation auszugeben;

Mittel (101400) zum Bilden von Frames, wobei die Mittel (101400) ferner umfassen:

Mittel (605100) zum Bilden eines ersten Frames unter Verwendung des zeitverschachtelten ersten Sendesignals, der ersten L1-Vorsignalisierungsinformation und der ersten L1-Nachsignalisierungsinformation und
Mittel (605200) zum Bilden eines zweiten Frames unter Verwendung des zeitverschachtelten zweiten Sendesignals, der zweiten L1-Vorsignalisierungsinformation und der zweiten L1-Nachsignalisierungsinformation; und
Mittel (101500) zum Modulieren von Daten in den gebildeten Frames mittels des OFDM-Verfahrens (OFDM = Orthogonal Frequency Division Multiplexing), wobei die Mittel (101500) ferner umfassen:

Mittel (606800) zum Modulieren von Daten in dem gebildeten ersten Frame mittels des OFDM-Verfahrens, um ein erstes Rundfunksignal zu senden, und
Mittel (606900) zum Modulieren von Daten in dem gebildeten zweiten Frame mittels des OFDM-Verfahrens, um ein zweites Rundfunksignal zu senden.

**6.** Vorrichtung nach Anspruch 5, wobei der MIMO-Verarbeitungsparameter zur Steuerung eines Leistungsungleichgewichts zwischen einem ersten Eingangssignal und einem zweiten Eingangssignal verwendet wird.

**7.** Vorrichtung nach Anspruch 5, wobei die Mittel (605100) ferner umfassen:

Mittel (605110) zum Kompensieren einer Laufzeit für die erste L1-Vorsignalisierungsinformation und die erste L1-Nachsignalisierungsinformation,
Mittel (605120) zum Mappen des zeitverschachtelten ersten Sendesignals, der kompensierten ersten L1-Vorsignalisierungsinformation und der kompensierten ersten L1-Nachsignalisierungsinformation auf den ersten Frame und
Mittel (605130) zum paarweisen Frequenzverschachteln von dem Mapping auf den ersten Frame unterzogenen Daten und

wobei die Mittel (605200) ferner umfassen:

Mittel (605210) zum Kompensieren einer Laufzeit für die zweite L1-Vorsignalisierungsinformation und die zweite L1-Nachsignalisierungsinformation,
Mittel (605220) zum Mappen des zeitverschachtelten zweiten Sendesignals, der kompensierten zweiten L1-Vorsignalisierungsinformation und der kompensierten zweiten L1-Nachsignalisierungsinformation auf den zweiten Frame und
Mittel (605230) zum paarweisen Frequenzverschachteln von dem Mapping auf den zweiten Frame unterzogenen Daten.

**8.** Vorrichtung nach Anspruch 5, wobei die Mittel (607300) ferner umfassen:

Mittel zum FEC-Codieren der verwürfelten L1-Vorsignalisierungsinformationen,
Mittel zum FEC-Codieren der verwürfelten L1-Nachsignalisierungsinformationen,
Mittel zum Bitverschachteln der FEC-codierten L1-Vorsignalisierungsinformationen,
Mittel zum Bitverschachteln der FEC-codierten L1-Nachsignalisierungsinformationen,
Mittel zum Demultiplexen der bitverschachtelten L1-Vorsignalisierungsinformationen,
Mittel zum Demultiplexen der bitverschachtelten L1-Nachsignalisierungsinformationen,

Mittel (607310-1) zum QAM-Mappen der dem Demultiplexen unterzogenen L1-Vorsignalisierungsinformationen auf Konstellationen,
Mittel (607310-2) zum QAM-Mappen der dem Demultiplexen unterzogenen L1-Nachsignalisierungsinformationen auf Konstellationen,
Mittel (607320-1) zum MISO-Verarbeiten (MISO = Multi-Input Single-Output) der dem Mapping unterzogenen L1-Vorsignalisierungsinformationen, um die erste L1-Vorsignalisierungsinformation und die zweite L1-Vorsignalisierungsinformation auszugeben, und
Mittel (607320-2) zum MISO-Verarbeiten der dem Mapping unterzogenen L1-Nachsignalisierungsinformationen, um die erste L1-Nachsignalisierungsinformation und die zweite L1-Nachsignalisierungsinformation auszugeben.

**9.** Verfahren zum Empfangen von Rundfunksignalen, wobei das Verfahren umfasst; Empfangen von Rundfunksignalen und Demodulieren der empfangenen Rundfunksignale mittels des OFDM-Verfahrens (OFDM = Orthogonal Frequency Division Multiplexing), wobei das Empfangen und das Demodulieren ferner umfassen:

Empfangen eines ersten Rundfunksignals und Demodulieren des empfangenen ersten Rundfunksignals mittels des OFDM-Verfahrens und
Empfangen eines zweiten Rundfunksignals und Demodulieren des empfangenen zweiten Rundfunksignals mittels des OFDM-Verfahrens;

Parsen von Frames aus den demodulierten Rundfunksignalen, wobei das Parsen von Frames ferner umfasst:

Verarbeiten eines ersten Frames aus dem demodulierten ersten Rundfunksignal, um erste Ausgabedaten, eine erste L1-Vorsignalisierungsinformation und eine erste All-Nachsignalisierungsinformation auszugeben, und
Verarbeiten eines zweiten Frames aus dem demodulierten zweiten Rundfunksignal, um zweite Ausgabedaten, eine zweite L1-Vorsignalisierungsinformation und eine zweite L1-Nachsignalisierungsinformation auszugeben;

BICM-Decodieren (BICM = Bit Interleaved Coded Modulation) von Daten aus den geparsten Frames, wobei das BICM-Decodieren ferner umfasst:

Zeitentschachteln der ersten und zweiten Ausgabedaten,
Zellenentschachteln der zeitentschachtelten ersten und zweiten Ausgabedaten,
MIMO-Verarbeiten (MIMO = Multi-Input Multi-Output) der zellenentschachtelten ersten und zweiten Ausgabedaten, wobei das MIMO-Verarbeiten unter Verwendung einer MIMO-Matrix, die einen MIMO-Verarbeitungsparameter aufweist, durchgeführt wird,
QAM-Demappen (QAM = Quadraturamplitudenmodulation) der MIMO-verarbeiteten ersten und zweiten Ausgabedaten,
Mischen der dem Demapping unterzogenen ersten und zweiten Ausgabedaten zu Ausgabedaten,
Bitentschachteln der Ausgabedaten,
FEC-Decodieren (FEC = Vorwärtsfehlerkorrektur) der bitentschachtelten Ausgabedaten, um einen BB-Frame (BB = Basisband) auszugeben, und
BICM-Decodieren der ersten L1-Vorsignalisierungsinformation und der zweiten L1-Vorsignalisierungsinformation, um eine L1-Vorsignalisierungsinformation auszugeben, und BICM-Decodieren der ersten L1-Nachsignalisierungsinformation und der zweiten L1-Nachsignalisierungsinformation, um eine L1-Nachsignalisierungsinformation auszugeben; und
Verarbeiten des BB-Frames, der L1-Vorsignalisierungsinformation und L1-Nachsignalisierungsinformation, wobei das Verarbeiten ferner umfasst:

Entwürfeln der L1-Vorsignalisierungsinformation und der L1-Nachsignalisierungsinformation und
Decodieren der entwürfelten L1-Vorsignalisierungsinformation und der entwürfelten L1-Nachsignalisierungsinformation.

**10.** Verfahren nach Anspruch 9, wobei das Verarbeiten eines ersten Frames ferner umfasst: paarweises Frequenzentschachteln von Daten in dem demodulierten ersten Rundfunksignal und
Demappen der frequenzentschachtelten Daten aus dem ersten Frame, um die ersten Ausgabedaten, die erste L1-Vorsignalisierungsinformation und die erste L1-Nachsignalisierungsinformation auszugeben, und wobei das Verarbeiten eines zweiten Frames ferner umfasst:

paarweises Frequenzentschachteln von Daten in dem demodulierten zweiten Rundfunksignal und
Demappen der frequenzentschachtelten Daten aus dem zweiten Frame, um die zweiten Ausgabedaten, die zweite L1-Vorsignalisierungsinformation und die zweite L1-Nachsignalisierungsinformation auszugeben.

**11.** Verfahren nach Anspruch 9, wobei die L1-Nachsignalisierungsinformationen Zeitverschachtelungstypinformationen einschließen.

**12.** Vorrichtung zum Empfangen von Rundfunksignalen, wobei die Vorrichtung umfasst; Mittel (107100) zum Empfangen von Rundfunksignalen und Demodulieren der empfangenen Rundfunksignale mittels des OFDM-Verfahrens (OFDM = Orthogonal Frequency Division Multiplexing), wobei die Mittel (107100) ferner umfassen:

Mittel (610100) zum Empfangen eines ersten Rundfunksignals und Demodulieren des empfangenen ersten Rundfunksignals mittels des OFDM-Verfahrens und
Mittel (610200) zum Empfangen eines zweiten Rundfunksignals und Demodulieren des empfangenen zweiten Rundfunksignals mittels des OFDM-Verfahrens;

Mittel (107200) zum Parsen von Frames aus den demodulierten Rundfunksignalen, wobei die Mittel (107200) ferner umfassen:

Mittel (611100) zum Verarbeiten eines ersten Frames aus dem demodulierten ersten Rundfunksignal, um erste Ausgabedaten, eine erste L1-Vorsignalisierungsinformation und eine erste L1-Nachsignalisierungsinformation auszugeben, und
Mittel (611200) zum Verarbeiten eines zweiten Frames aus dem demodulierten zweiten Rundfunksignal, um zweite Ausgabedaten, eine zweite L1-Vorsignalisierungsinformation und eine zweite L1-Nachsignalisierungsinformation auszugeben;
Mittel (107300) zum BICM-Decodieren (BICM = Bit Interleaved Coded Modulation) von Daten aus den geparsten Frames, wobei die Mittel (107300) ferner umfassen:

Mittel zum Zeitentschachteln der ersten Ausgabedaten,
Mittel zum Zeitentschachteln der zweiten Ausgabedaten,
Mittel zum Zellenentschachteln der zeitentschachtelten ersten Ausgabedaten,
Mittel zum Zellenentschachteln der zeitentschachtelten zweiten Ausgabedaten,
Mittel (615210) zum MIMO-Verarbeiten (MIMO = Multi-Input Multi-Output) der zellenentschachtelten ersten und zweiten Ausgabedaten, wobei das MIMO-Verarbeiten unter Verwendung einer MIMO-Matrix, die einen MIMO-Verarbeitungsparameter aufweist, durchgeführt wird,
Mittel zum QAM-Demappen (QAM = Quadraturamplitudenmodulation) der MIMO-verarbeiteten ersten Ausgabedaten,
Mittel zum QAM-Demappen der MIMO-verarbeiteten zweiten Ausgabedaten,
Mittel (612250) zum Mischen der dem Demapping unterzogenen ersten und zweiten Ausgabedaten zu Ausgabedaten,
Mittel (612260) zum Bitentschachteln der Ausgabedaten,
Mittel (612270) zum FEC-Decodieren (FEC = Vorwärtsfehlerkorrektur) der bitentschachtelten Ausgabedaten, um einen BB-Frame (BB = Basisband) auszugeben, und
Mittel (615300) zum BICM-Decodieren der ersten L1-Vorsignalisierungsinformation und der zweiten L1-Vorsignalisierungsinformation, um eine L1-Vorsignalisierungsinformation auszugeben, und zum BICM-Decodieren der ersten L1-Nachsignalisierungsinformation und der zweiten L1-Nachsignalisierungsinformation, um eine L1-Nachsignalisierungsinformation auszugeben; und

Mittel (107400) zum Verarbeiten des BB-Frames, der L1-Vorsignalisierungsinformation und L1-Nachsignalisierungsinformation, wobei die Mittel (107400) ferner umfassen:

Mittel (617400-1) zum Entwürfeln der L1-Vorsignalisierungsinformation,
Mittel (617400-2) zum Entwürfeln der L1-Nachsignalisierungsinformation
und
Mittel (6174100) zum Decodieren der entwürfelten L1-Vorsignalisierungsinformation und der entwürfelten L1-Nachsignalisierungsinformation.

**13.** Vorrichtung nach Anspruch 12, wobei die Mittel (611100) ferner umfassen:

Mittel (611110) zum paarweisen Frequenzentschachteln von Daten in dem demodulierten ersten Rundfunksignal und
Mittel (611120) zum Demappen der frequenzentschachtelten Daten aus dem ersten Frame, um die ersten Ausgabedaten, die erste L1-Vorsignalisierungsinformation und die erste L1-Nachsignalisierungsinformation auszugeben, und

wobei die Mittel (611200) ferner umfassen:

Mittel (611210) zum paarweisen Frequenzentschachteln von Daten in dem demodulierten zweiten Rundfunksignal und
Mittel (611220) zum Demappen der frequenzentschachtelten Daten aus dem zweiten Frame, um die zweiten Ausgabedaten, die zweite L1-Vorsignalisierungsinformation und die zweite L1-Nachsignalisierungsinformation auszugeben.

**14.** Verfahren nach Anspruch 12, wobei die L1-Nachsignalisierungsinformationen Zeitverschachtelungstypinformationen einschließen.

**15.** Verfahren nach Anspruch 9, wobei das BICM-Decodieren der ersten L1-Vorsignalisierungsinformation und der zweiten L1-Vorsignalisierungsinformation ferner umfasst:

MISO-Verarbeiten (MISO = Multi-Input Single-Output) der ersten L1-Vorsignalisierungsinformation und der zweiten L1-Vorsignalisierungsinformation, um die L1-Vorsignalisierungsinformationen auszugeben,
Demappen der L1-Vorsignalisierungsinformationen aus
Konstellationen und
FEC-Decodieren der dem Demapping unterzogenen L1-Vorsignalisierungsinformationen und

wobei das BICM-Decodieren der ersten L1-Nachsignalisierungsinformation und der zweiten L1-Nachsignalisierungsinformation ferner umfasst:

MISO-Verarbeiten der ersten L1-Nachsignalisierungsinformation und der zweiten L1-Nachsignalisierungsinformation, um die L1-Nachsignalisierungsinformationen auszugeben,
Demappen der L1-Nachsignalisierungsinformationen aus
Konstellationen,
Multiplexen der dem Demapping unterzogenen L1-Nachsignalisierungsinformationen,
Bitentschachteln der dem Multiplexen unterzogenen L1-Nachsignalisierungsinformationen und
FEC-Decodieren der bitentschachtelten L1-Nachsignalisierungsinformationen.

**16.** Vorrichtung nach Anspruch 12, wobei die Mittel (615300) ferner umfassen:

Mittel (615410) zum MISO-Verarbeiten (MISO = Multi-Input Single-Output) der ersten L1-Vorsignalisierungsinformation und der zweiten L1-Vorsignalisierungsinformation, um die L1-Vorsignalisierungsinformationen auszugeben,
Mittel (615510) zum MISO-Verarbeiten der ersten L1-Nachsignalisierungsinformation und der zweiten L1-Nachsignalisierungsinformation, um die L1-Nachsignalisierungsinformationen auszugeben,
Mittel zum Demappen der L1-Vorsignalisierungsinformationen aus Konstellationen,
Mittel zum Demappen der L1-Nachsignalisierungsinformationen aus Konstellationen,
Mittel zum Multiplexen der dem Demapping unterzogenen L1-Nachsignalisierungsinformationen,
Mittel zum Bitentschachteln der dem Multiplexen unterzogenen L1-Nachsignalisierungsinformationen,
Mittel zum FEC-Decodieren der dem Demapping unterzogenen L1-Vorsignalisierungsinformationen und
Mittel zum FEC-Decodieren der bitentschachtelten L1-Nachsignalisierungsinformationen.

## Revendications

**1.** Procédé de transmission de signaux de diffusion, le procédé comprenant :

le traitement de données de pipeline de couche physique, PLP, pour former une trame de bande de base, BB, le traitement comprenant en outre :

la génération d'informations de signalisation de couche 1, L1, comprenant des informations de signalisation de pré-L1 et des informations de signalisation de post-L1, et
l'embrouillage des informations de signalisation de pré-L1 et des informations de signalisation de post-L1 générées ;

le codage par modulation codée entrelacée de bits, BICM, des données de PLP traitées, dans lequel le codage BICM comprend en outre :

le codage de correction d'erreurs sans voie de retour, FEC, de données dans la trame BB,
l'entrelacement de bits des données codées FEC,

la division des données entrelacées par bits en une première donnée et une deuxième donnée,
le mappage de modulation d'amplitude en quadrature, QAM, respectivement de la première donnée et de la deuxième donnée à des constellations,
le traitement à entrées multiples et sorties multiples, MIMO, des première et deuxième données mappées pour délivrer en sortie un premier signal de transmission et un deuxième signal de transmission, dans lequel le traitement MIMO est effectué en utilisant une matrice de codage MIMO ayant un paramètre de traitement MIMO, l'entrelacement cellulaire du premier et du deuxième signal de transmission,
l'entrelacement temporel du premier et du deuxième signal de transmission entrelacé par cellules, et
le codage BICM des informations de signalisation de pré-L1 embrouillées pour délivrer en sortie une première information de signalisation de pré-L1 et une deuxième information de signalisation de pré-L1, et le codage BICM des informations de signalisation de post-L1 embrouillées pour délivrer en sortie une première information de signalisation de post-L1 et une deuxième information de signalisation de post-L1 ;

la construction d'une première trame en utilisant le premier signal de transmission entrelacé temporellement, la première information de signalisation de pré-L1 et la première information de signalisation de post-L1, et la construction d'une deuxième trame en utilisant le deuxième signal de transmission entrelacé temporellement, la deuxième information de signalisation de pré-L1 et la deuxième information de signalisation de post-L1 et la deuxième information de signalisation de post-L1 ; et
la modulation de données dans la première trame construite par un procédé de multiplexage par répartition en fréquence orthogonale, OFDM, pour transmettre un premier signal de diffusion et la modulation de données dans la deuxième trame construite par un procédé OFDM pour transmettre un deuxième signal de diffusion.

**2.** Procédé selon la revendication 1, dans lequel le paramètre de traitement MIMO est utilisé pour commander un déséquilibre de puissance entre un premier signal d'entrée et un deuxième signal d'entrée.

**3.** Procédé selon la revendication 1, dans lequel la construction d'une première trame comprend en outre :

la compensation d'un retard pour la première information de signalisation de pré-L1 et la première information de signalisation de post-L1,
le mappage du premier signal de transmission entrelacé temporellement, de la première information de signalisation de pré-L1 compensée et de la première information de signalisation de post-L1 compensée à la première trame, et
l'entrelacement en fréquence par paires de données mappées à la première trame, et dans lequel la construction d'une deuxième trame comprend en outre :

la compensation d'un retard pour la deuxième information de signalisation de pré-L1 et la deuxième information de signalisation de post-L1,
le mappage du deuxième signal de transmission entrelacé temporellement, de la deuxième information de signalisation de pré-L1 compensée et de la deuxième information de signalisation de post-L1 compensée à la deuxième trame, et
l'entrelacement en fréquence par paires de données mappées à la deuxième trame.

**4.** Procédé selon la revendication 1, dans lequel le codage BICM des informations de signalisation de pré-L1 embrouillées comprend en outre :

le codage FEC des informations de signalisation de pré-L1 embrouillées,
l'entrelacement de bits des informations de signalisation de pré-L1 codées FEC,
le démultiplexage des informations de signalisation de pré-L1 entrelacées par bits,
le mappage QAM des informations de signalisation de pré-L1 démultiplexées à des constellations, et
le traitement à entrées multiples et sortie unique, MISO, des informations de signalisation de pré-L1 mappées pour délivrer en sortie la première information de signalisation de pré-L1 et la deuxième information de signalisation de pré-L1, et
dans lequel le codage BICM des informations de signalisation de post-L1 embrouillées comprend en outre :

le codage FEC des informations de signalisation de post-L1 embrouillées,
l'entrelacement de bits des informations de signalisation de post-L1 codées FEC,
le démultiplexage des informations de signalisation de post-L1 entrelacées par bits,
le mappage QAM des informations de signalisation de post-L1 démultiplexées à des constellations, et

le traitement MISO des informations de signalisation de post-L1 mappées pour délivrer en sortie la première information de signalisation de post-L1 et la deuxième information de signalisation de post-L1.

**5.** Appareil de transmission de signaux de diffusion, l'appareil comprenant :

des moyens (101200) pour le traitement de données de pipeline de couche physique, PLP, pour former une trame de bande de base, BB, les moyens (101200) comprenant en outre :

des moyens (603500) pour la génération d'informations de signalisation de couche 1, L1, comprenant des informations de signalisation de pré-L1 et des informations de signalisation de post-L1, et
des moyens (603600) pour l'embrouillage des informations de signalisation de pré-L1 générées, et

des moyens (603700) pour l'embrouillage des informations de signalisation de post-L1 générées ;
des moyens (101300) pour le codage par modulation codée entrelacée de bits, BICM,
des données de PLP traitées, dans lequel les moyens (101200) comprennent en outre :

des moyens pour le codage par correction d'erreurs sans voie de retour, FEC, des données dans la trame BB,
des moyens pour l'entrelacement de bits des données codées FEC,
des moyens pour la division des données entrelacées par bits en une première donnée et une deuxième donnée,
des moyens (607210-1) pour le mappage par modulation d'amplitude en quadrature, QAM, de la première donnée à des constellations,
des moyens (607210-2) pour le mappage QAM de la deuxième donnée à des constellations,
des moyens (607220) pour le traitement à entrées multiples et sorties multiples, MIMO, des première et deuxième données mappées pour délivrer en sortie un premier signal de transmission et un deuxième signal de transmission, dans lequel le traitement MIMO est effectué en utilisant une matrice de codage MIMO ayant un paramètre de traitement MIMO,
des moyens pour l'entrelacement cellulaire du premier signal de transmission,
des moyens pour l'entrelacement cellulaire du deuxième signal de transmission,
des moyens pour l'entrelacement temporel du premier signal de transmission entrelacé par cellules,
des moyens pour l'entrelacement temporel du deuxième signal de transmission entrelacé par cellules, et
des moyens (607300) pour le codage BICM des informations de signalisation de pré-L1 embrouillées pour délivrer en sortie une première information de signalisation de pré-L1 et une deuxième information de signalisation de pré-L1, et pour le codage BICM des informations de signalisation de post-L1 embrouillées pour délivrer en sortie une première information de signalisation de post-L1 et une deuxième information de signalisation de post-L1 ;

des moyens (101400) pour la construction de trames, les moyens (101400) comprenant en outre :

des moyens (605100) pour la construction d'une première trame en utilisant le premier signal de transmission entrelacé temporellement, la première information de signalisation de pré-L1 et la première information de signalisation de post-L1, et
des moyens (605200) pour la construction d'une deuxième trame en utilisant le deuxième signal de transmission entrelacé temporellement, la deuxième information de signalisation de pré-L1 et la deuxième information de signalisation de post-L1 ; et

des moyens (101500) pour la modulation de données dans les trames construites par un procédé de multiplexage par répartition en fréquence orthogonale, OFDM, les moyens (101500) comprenant en outre :

des moyens (606800) pour la modulation de données dans la première trame construite par un procédé OFDM pour transmettre un premier signal de diffusion,
des moyens (606900) pour la modulation de données dans la deuxième trame construite par un procédé OFDM pour transmettre un deuxième signal de diffusion.

**6.** Appareil selon la revendication 5, dans lequel le paramètre de traitement MIMO est utilisé pour commander un déséquilibre de puissance entre un premier signal d'entrée et un deuxième signal d'entrée.

**7.** Appareil selon la revendication 5, dans lequel les moyens (605100) comprennent en outre :

des moyens (605110) pour la compensation d'un retard pour la première information de signalisation de pré-L1 et la première information de signalisation de post-L1,
des moyens (605120) pour le mappage du premier signal de transmission entrelacé temporellement, de la première information de signalisation de pré-L1 compensée et
de la première information de signalisation de post-L1 compensée à la première trame, et
des moyens (605130) pour l'entrelacement en fréquence par paires de données mappées à la première trame, et dans lequel les moyens (605200) comprennent en outre :

des moyens (605210) pour la compensation d'un retard pour la deuxième information de signalisation de pré-L1 et la deuxième information de signalisation de post-L1,
des moyens (605220) pour le mappage du deuxième signal de transmission entrelacé temporellement, de la deuxième information de signalisation de pré-L1 compensée et de la deuxième information de signalisation de post-L1 compensée à la deuxième trame, et
des moyens (605230) pour l'entrelacement en fréquence par paires de données mappées à la deuxième trame.

**8.** Appareil selon la revendication 5, dans lequel les moyens (607300) comprennent en outre :

des moyens pour le codage FEC des informations de signalisation de pré-L1 embrouillées,
des moyens pour le codage FEC des informations de signalisation de post-L1 embrouillées,
des moyens pour l'entrelacement de bits des informations de signalisation de pré-L1 codées FEC,
des moyens pour l'entrelacement de bits des informations de signalisation de post-L1 codées FEC,
des moyens pour le démultiplexage des informations de signalisation de pré-L1 entrelacées par bits,
des moyens pour le démultiplexage des informations de signalisation de post-L1 entrelacées par bits,
des moyens (607310-1) pour le mappage QAM des informations de signalisation de pré-L1 démultiplexées à des constellations,
des moyens (607310-2) pour le mappage QAM des informations de signalisation de post-L1 démultiplexées à des constellations,
des moyens (607320-1) pour le traitement à entrées multiples et sortie unique, MISO, des informations de signalisation de pré-L1 mappées pour délivrer en sortie la première information de signalisation de pré-L1 et la deuxième information de signalisation de pré-L1, et
des moyens (607320-2) pour le traitement MISO des informations de signalisation de post-L1 mappées pour délivrer en sortie la première information de signalisation de post-L1 et la deuxième information de signalisation de post-L1.

**9.** Procédé de réception de signaux de diffusion, le procédé comprenant :

la réception de signaux de diffusion et la démodulation des signaux de diffusion reçus par un procédé de multiplexage par répartition en fréquence orthogonale, OFDM, la réception et la démodulation comprenant en outre :

la réception d'un premier signal de diffusion et la démodulation du premier signal de diffusion reçu par un procédé OFDM, et
la réception d'un deuxième signal de diffusion et la démodulation du deuxième signal de diffusion reçu par un procédé OFDM ;

l'analyse syntaxique de trames à partir des signaux de diffusion démodulés, l'analyse syntaxique de trames comprenant en outre :

le traitement d'une première trame à partir du premier signal de diffusion démodulé pour délivrer en sortie une première donnée de sortie, une première information de signalisation de pré-L1 et une première information de signalisation de post-L1, et
le traitement d'une deuxième trame à partir du deuxième signal de diffusion démodulé pour délivrer en sortie une deuxième donnée de sortie, une deuxième information de signalisation de pré-L1 et une deuxième information de signalisation de post-L1 ;

le décodage de modulation codée entrelacée de bits, BICM, de données à partir des trames analysées syntaxiquement, le décodage BICM comprenant en outre :

le dé-entrelacement temporel des première et deuxième données de sortie,
le dé-entrelacement cellulaire des première et deuxième données de sortie désentrelacées temporellement,
le traitement à entrées multiples et sorties multiples, MIMO, des première et deuxième données de sortie désentrelacées par cellules, dans lequel le traitement MIMO est effectué en utilisant une matrice MIMO ayant un paramètre de traitement MIMO,
le dé-mappage de modulation d'amplitude en quadrature, QAM, des première et deuxième données de sortie traitées MIMO,
la fusion des première et deuxième données de sortie dé-mappées en une donnée de sortie,
le dé-entrelacement de bits de la donnée de sortie,
le décodage de correction d'erreurs sans voie de retour, FEC, de la donnée de sortie dé-entrelacée par bits pour délivrer en sortie une trame de bande de base, BB, et
le décodage BICM de la première information de signalisation de pré-L1 et la deuxième information de signalisation de pré-L1 pour délivrer en sortie une information de signalisation de pré-L1, et le décodage BICM de la première information de signalisation de post-L1 et la deuxième information de signalisation de post-L1 pour délivrer en sortie une information de signalisation de post-L1 ; et

le traitement de la trame BB, des informations de signalisation de pré-L1 et des informations de signalisation de post-L1, le traitement comprenant en outre :

le désembrouillage des informations de signalisation de pré-L1 et des informations de signalisation de post-L1, et
le décodage des informations de signalisation de pré-L1 désembrouillées et des informations de signalisation de post-L1 désembrouillées.

**10.** Procédé selon la revendication 9, dans lequel le traitement d'une première trame comprend en outre : le dé-entrelacement en fréquence par paires de données dans le premier signal de diffusion démodulé, et
le dé-mappage des données dé-entrelacées en fréquence par rapport à la première trame pour délivrer en sortie la première donnée de sortie, la première information de signalisation de pré-L1 et la première information de signalisation de post-L1, et dans lequel le traitement d'une deuxième trame comprend en outre :

le dé-entrelacement en fréquence par paires de données dans le deuxième signal de diffusion démodulé, et
le dé-mappage des données dé-entrelacées en fréquence par rapport à la deuxième trame pour délivrer en sortie la deuxième donnée de sortie, la deuxième information de signalisation de pré-L1 et la deuxième information de signalisation de post-L1.

**11.** Procédé selon la revendication 9, dans lequel les informations de signalisation de post-L1 comprennent des informations de type d'entrelacement temporel.

**12.** Appareil de réception de signaux de diffusion, l'appareil comprenant :

des moyens (107100) pour la réception de signaux de diffusion et la démodulation des signaux de diffusion reçus par un procédé de multiplexage par répartition en fréquence orthogonale, OFDM, les moyens (107100) comprenant en outre :

des moyens (610100) pour la réception d'un premier signal de diffusion et la démodulation du premier signal de diffusion reçu par un procédé OFDM, et
des moyens (610200) pour la réception d'un deuxième signal de diffusion et la démodulation du deuxième signal de diffusion reçu par un procédé OFDM ;

des moyens (107200) pour l'analyse syntaxique de trames à partir des signaux de diffusion démodulés, les moyens (107200) comprenant en outre :

des moyens (611100) pour le traitement d'une première trame à partir du premier signal de diffusion démodulé pour délivrer en sortie une première donnée de sortie,
une première information de signalisation de pré-L1 et une première information de signalisation de post-L1, et
des moyens (611200) pour le traitement d'une deuxième trame à partir du deuxième signal de diffusion démodulé pour délivrer en sortie une deuxième donnée de sortie, une deuxième information de signalisation de pré-L1 et une deuxième information de signalisation de post-L1 ;

des moyens (107300) pour le décodage de modulation codée entrelacée de bits, BICM, de données à partir des trames analysées syntaxiquement, les moyens (107300) comprenant en outre :

des moyens pour le dé-entrelacement temporel de la première donnée de sortie,
des moyens pour le dé-entrelacement temporel de la deuxième donnée de sortie,
des moyens pour le dé-entrelacement cellulaire de la première donnée de sortie désentrelacée temporellement,
des moyens pour le dé-entrelacement cellulaire de la deuxième donnée de sortie désentrelacée temporellement,
des moyens (615210) pour le traitement à entrées multiples et sorties multiples, MIMO, des première et deuxième données de sortie désentrelacées par cellules, dans lequel le traitement MIMO est effectué en utilisant une matrice MIMO ayant un paramètre de traitement MIMO,
des moyens pour le dé-mappage de modulation d'amplitude en quadrature, QAM, de la première donnée de sortie traitée MIMO,
des moyens pour le dé-mappage QAM de la deuxième donnée de sortie traitée MIMO,
des moyens (612250) pour la fusion des première et deuxième données de sortie dé-mappées en une donnée de sortie,
des moyens (612260) pour le dé-entrelacement de bits de la donnée de sortie,
des moyens (612270) pour le décodage de correction d'erreurs sans voie de retour, FEC, de la donnée de sortie dé-entrelacée par bits pour délivrer en sortie une trame de bande de base, BB, et
des moyens (615300) pour le décodage BICM de la première information de signalisation de pré-L1 et la deuxième information de signalisation de pré-L1 pour délivrer en sortie une information de signalisation de pré-L1, et pour le décodage BICM de la première information de signalisation de post-L1 et la deuxième information de signalisation de post-L1 pour délivrer en sortie une information de signalisation de post-L1 ; et

des moyens (107400) pour le traitement de la trame BB, de l'information de signalisation de pré-L1 et de l'information de signalisation de post-L1, les moyens (107400) comprenant en outre :

des moyens (617400-1) pour le désembrouillage de l'information de signalisation de pré-L1,
des moyens (617400-2) pour le désembrouillage de l'information de signalisation de post-L1, et
des moyens (6174100) pour le décodage de l'information de signalisation de pré-L1 désembrouillée et de l'information de signalisation de post-L1 désembrouillée.

**13.** Appareil selon la revendication 12, dans lequel les moyens (611100) comprennent en outre :

des moyens (611110) pour le dé-entrelacement en fréquence par paires de données dans le premier signal de diffusion démodulé, et
des moyens (611120) pour le dé-mappage des données dé-entrelacées en fréquence par rapport à la première trame pour délivrer en sortie la première donnée de sortie,
la première information de signalisation de pré-L1 et la première information de signalisation de post-L1, et dans lequel les moyens (611200) comprennent en outre :

des moyens (611210) pour le dé-entrelacement en fréquence par paires de données dans le deuxième signal de diffusion démodulé, et
des moyens (611220) pour le dé-mappage des données dé-entrelacées en fréquence par rapport à la deuxième trame pour délivrer en sortie la deuxième donnée de sortie, la deuxième information de signalisation de pré-L1 et la deuxième information de signalisation de post-L1.

**14.** Appareil selon la revendication 12, dans lequel les informations de signalisation de post-L1 comprennent des informations de type d'entrelacement temporel.

**15.** Procédé selon la revendication 9, dans lequel le décodage BICM de la première information de signalisation de pré-L1 et la deuxième information de signalisation de pré-L1 comprend en outre :

le traitement à entrées multiples et sortie unique, MISO, de la première information de signalisation de pré-L1 et la deuxième information de signalisation de pré-L1 pour délivrer en sortie des informations de signalisation de pré-L1,
le dé-mappage des informations de signalisation de pré-L1 par rapport à des constellations, et
le décodage FEC des informations de signalisation de pré-L1 dé-mappées, et
dans lequel le décodage BICM de la première information de signalisation de post-L1 et la deuxième information de signalisation de post-L1 comprend en outre :

le traitement MISO de la première information de signalisation de post-L1 et la deuxième information de signalisation de post-L1 pour délivrer en sortie des informations de signalisation de post-L1,
le dé-mappage des informations de signalisation de post-L1 par rapport à des constellations,
le multiplexage des informations de signalisation de post-L1 dé-mappées,
le dé-entrelacement de bits des informations de signalisation de post-L1 multiplexées, et
le décodage FEC des informations de signalisation de post-L1 dé-entrelacées par bits.

**16.** Appareil selon la revendication 12, dans lequel les moyens (615300) comprennent en outre :

des moyens (615410) pour le traitement à entrées multiples et sortie unique, MISO, de la première information de signalisation de pré-L1 et la deuxième information de signalisation de pré-L1 pour délivrer en sortie les informations de signalisation de pré-L1,
des moyens (615510) pour le traitement MISO de la première information de signalisation de post-L1 et la deuxième information de signalisation de post-L1 pour délivrer en sortie des informations de signalisation de post-L1,
des moyens pour le dé-mappage des informations de signalisation de pré-L1 par rapport à des constellations,
des moyens pour le dé-mappage des informations de signalisation de post-L1 par rapport à des constellations,
des moyens pour le multiplexage des informations de signalisation de post-L1 dé-mappées,
des moyens pour le dé-entrelacement de bits des informations de signalisation de post-L1 multiplexées,
des moyens pour le décodage FEC des informations de signalisation de pré-L1 dé-mappées, et
des moyens pour le décodage FEC des informations de signalisation de post-L1 dé-entrelacées par bits.

FIG. 1

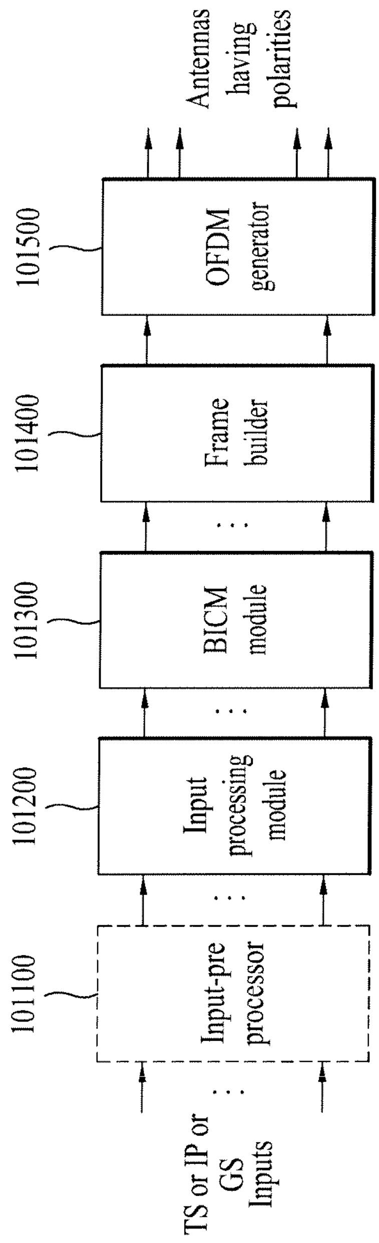
TS or IP or GS Inputs
101100
Input-pre processor
101200
Input processing module
101300
BICM module
101400
Frame builder
101500
OFDM generator
Antennas having polarities

FIG. 2

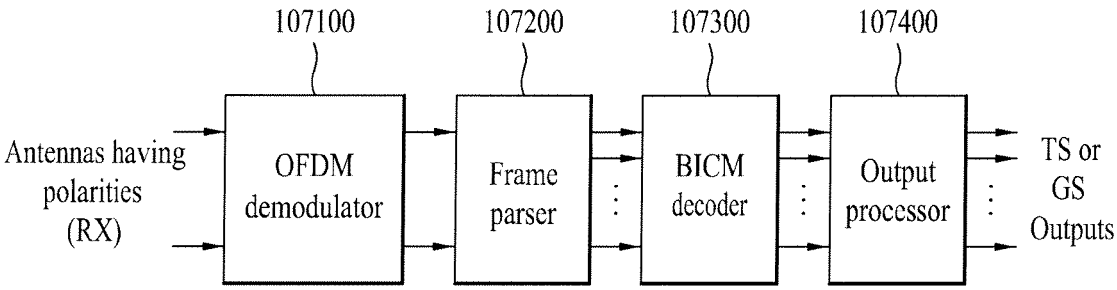
107100
107200
107300
107400
Antennas having polarities (RX)
OFDM demodulator
Frame parser
BICM decoder
Output processor
TS or GS Outputs

FIG. 3

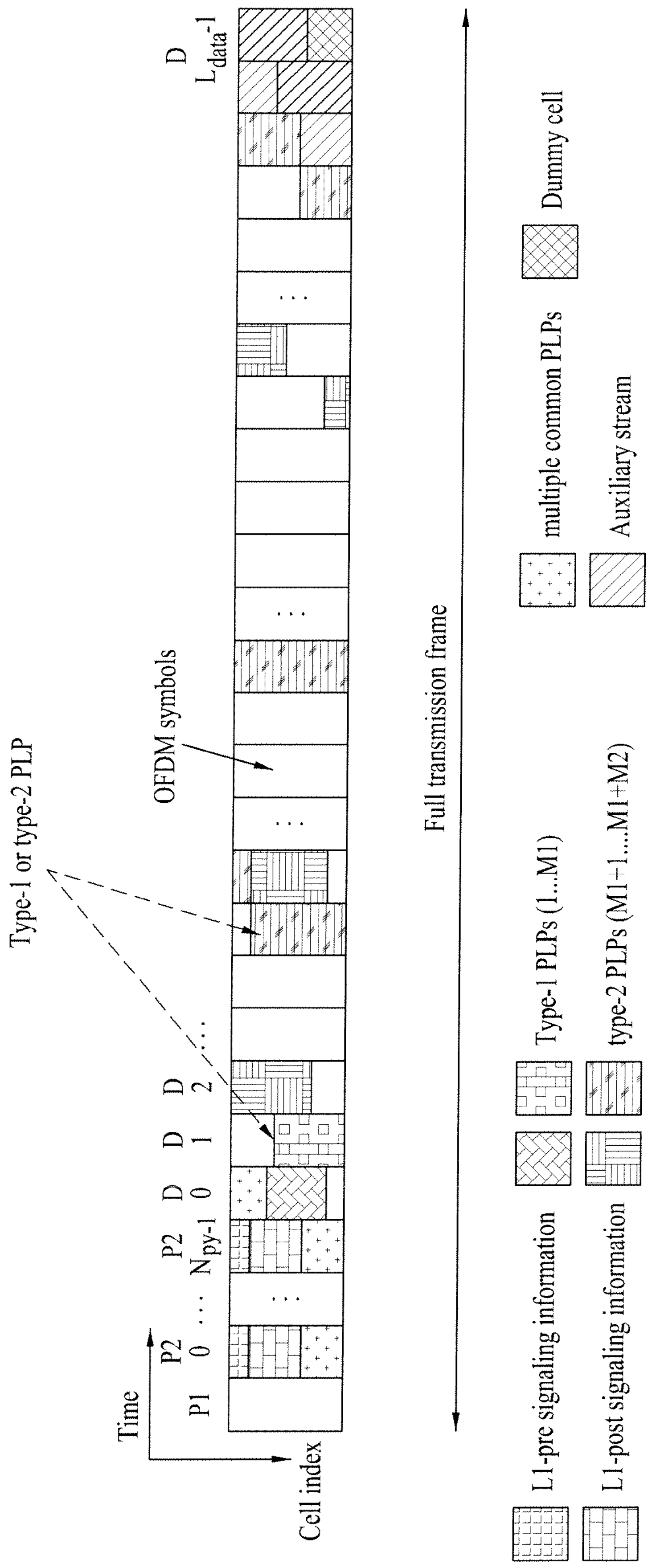
Time
Cell index
P1
P2 0
...
P2 $N_{py-1}$
D 0
D 1
D 2
...
D $L_{data}$-1
Type-1 or type-2 PLP
OFDM symbols
Full transmission frame
L1-pre signaling information
L1-post signaling information
Type-1 PLPs (1...M1)
type-2 PLPs (M1+1...M1+M2)
multiple common PLPs
Auxiliary stream
Dummy cell

FIG. 4

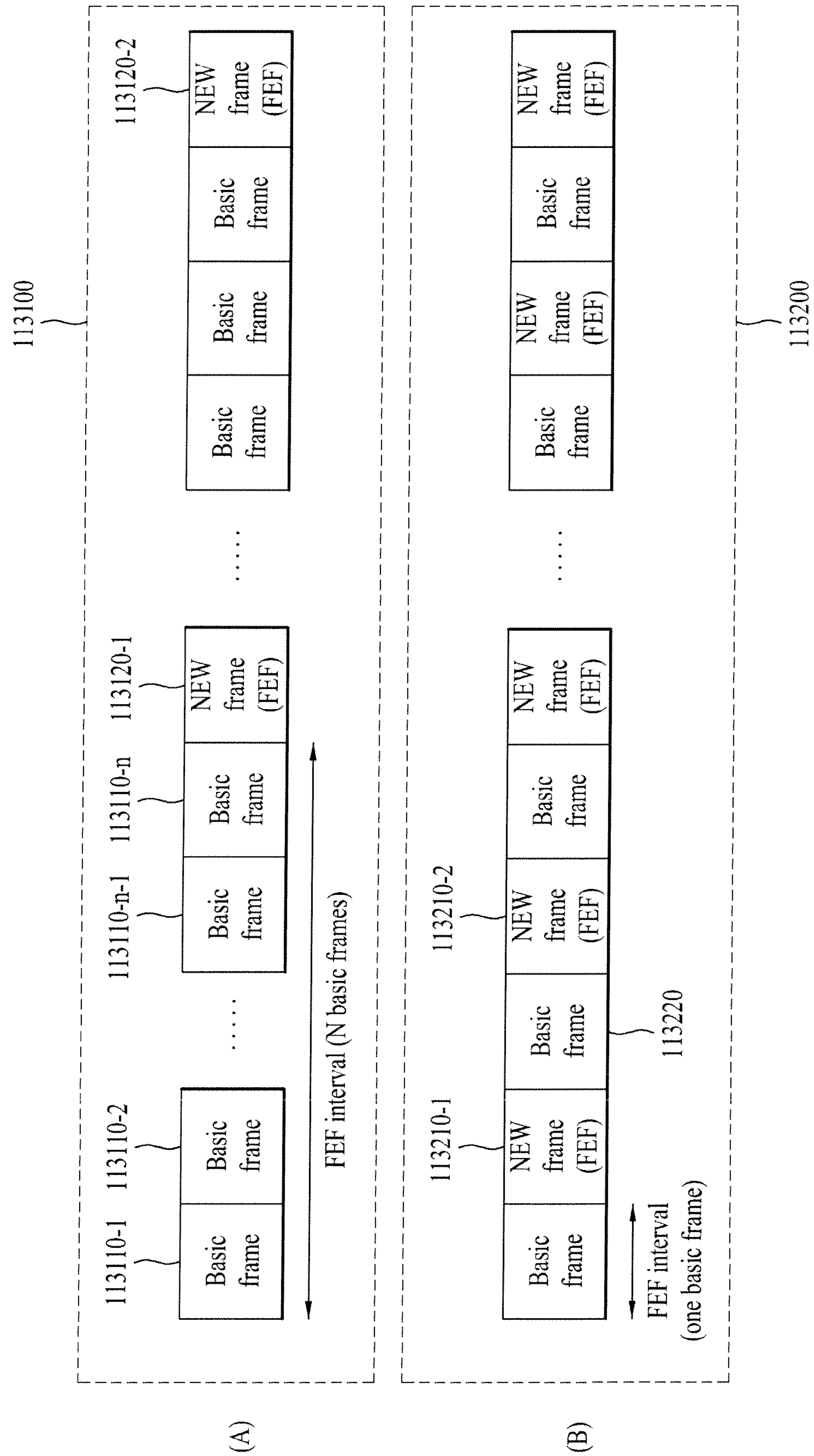
(A)
113100
113110-1
113110-2
113110-n-1
113110-n
113120-1
113120-2
Basic frame
NEW frame (FEF)
FEF interval (N basic frames)
(B)
113200
113210-1
113210-2
113220
FEF interval (one basic frame)

FIG. 5

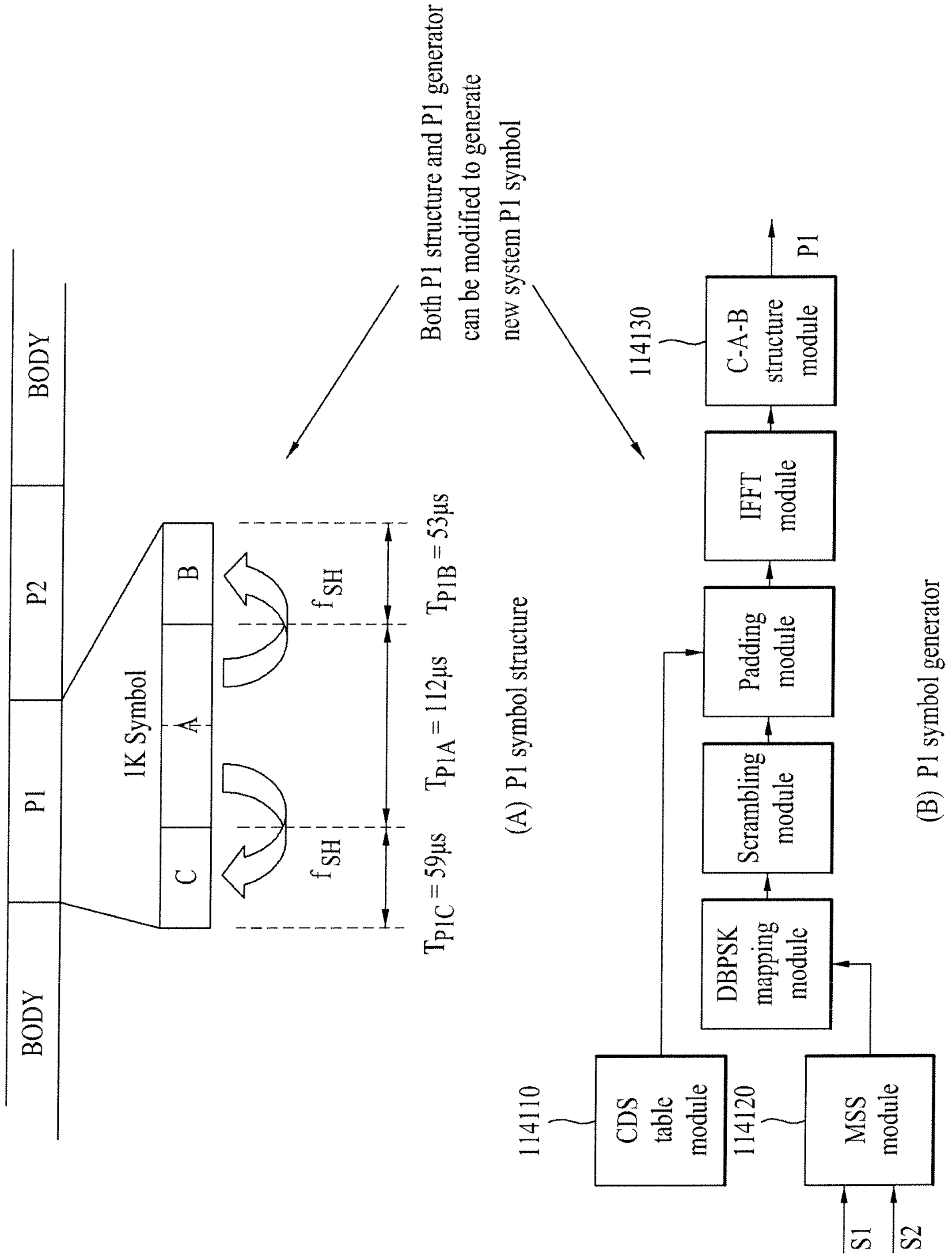
BODY
P1
P2
BODY
1K Symbol
C
A
B
$f_{SH}$
$f_{SH}$
$T_{P1C} = 59\mu s$
$T_{P1A} = 112\mu s$
$T_{P1B} = 53\mu s$
(A) P1 symbol structure
Both P1 structure and P1 generator can be modified to generate new system P1 symbol
114110
CDS table module
114120
MSS module
S1
S2
DBPSK mapping module
Scrambling module
Padding module
IFFT module
114130
C-A-B structure module
P1
(B) P1 symbol generator

FIG. 6

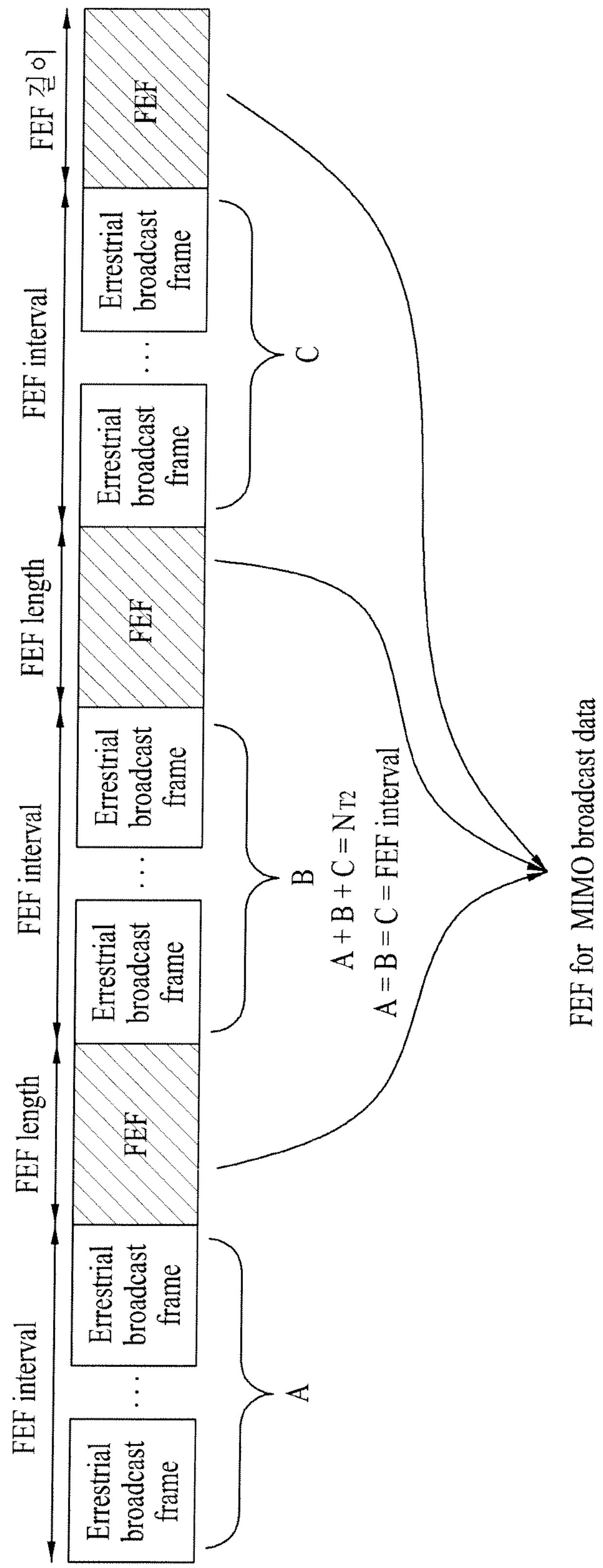
FEF interval
FEF length
FEF interval
FEF length
FEF interval
FEF 길이
Errestrial broadcast frame
Errestrial broadcast frame
FEF
Errestrial broadcast frame
Errestrial broadcast frame
FEF
Errestrial broadcast frame
Errestrial broadcast frame
FEF
A
B
C
A + B + C = $N_{T2}$
A = B = C = FEF interval
FEF for MIMO broadcast data

FIG. 7

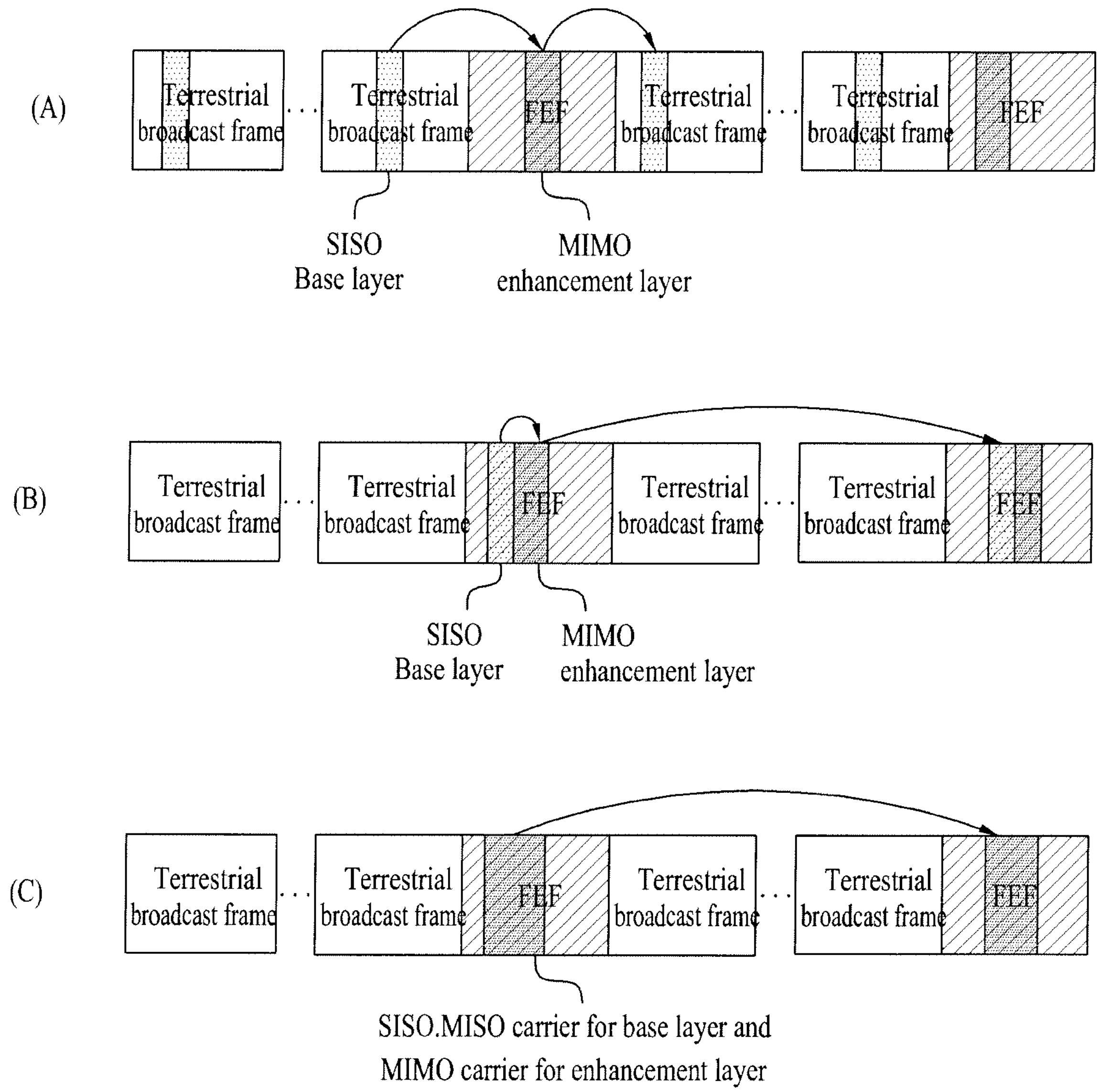
(A)
Terrestrial broadcast frame
Terrestrial broadcast frame
FEF
Terrestrial broadcast frame
Terrestrial broadcast frame
FEF
SISO Base layer
MIMO enhancement layer
(B)
Terrestrial broadcast frame
Terrestrial broadcast frame
FEF
Terrestrial broadcast frame
Terrestrial broadcast frame
FEF
SISO Base layer
MIMO enhancement layer
(C)
Terrestrial broadcast frame
Terrestrial broadcast frame
FEF
Terrestrial broadcast frame
Terrestrial broadcast frame
FEF
SISO.MISO carrier for base layer and MIMO carrier for enhancement layer

FIG. 8

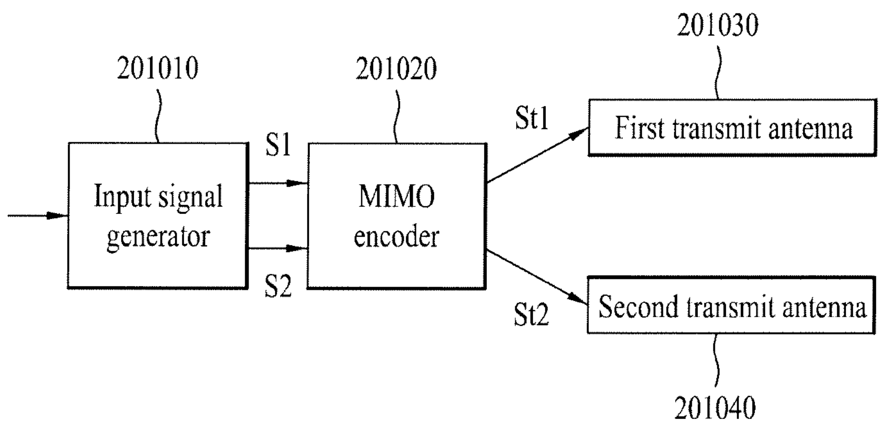
201010
201020
201030
201040
S1
S2
St1
St2
Input signal generator
MIMO encoder
First transmit antenna
Second transmit antenna

FIG. 9

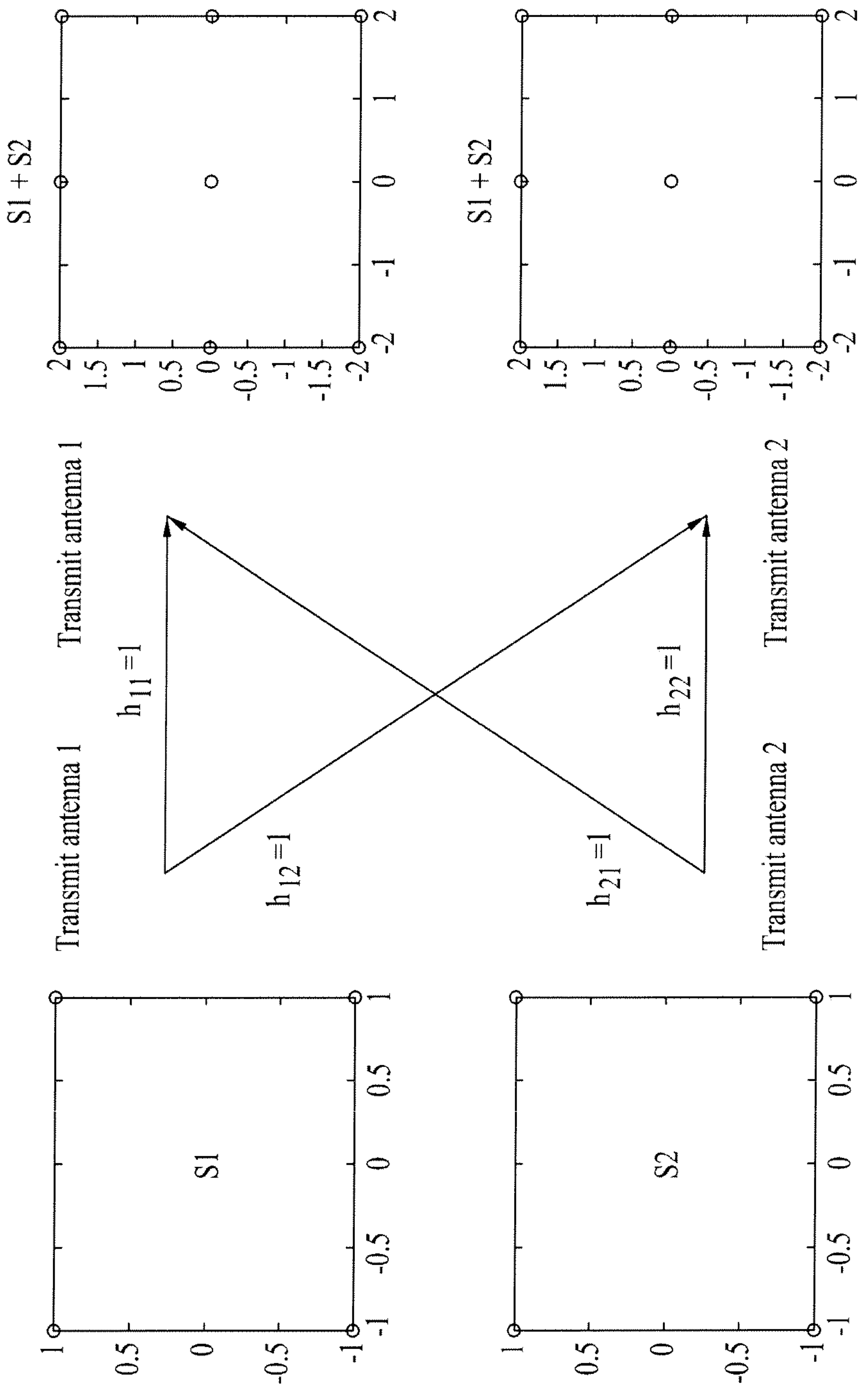
S1
S2
S1 + S2
S1 + S2
Transmit antenna 1
Transmit antenna 1
Transmit antenna 2
Transmit antenna 2
h11=1
h12=1
h21=1
h22=1

FIG. 10

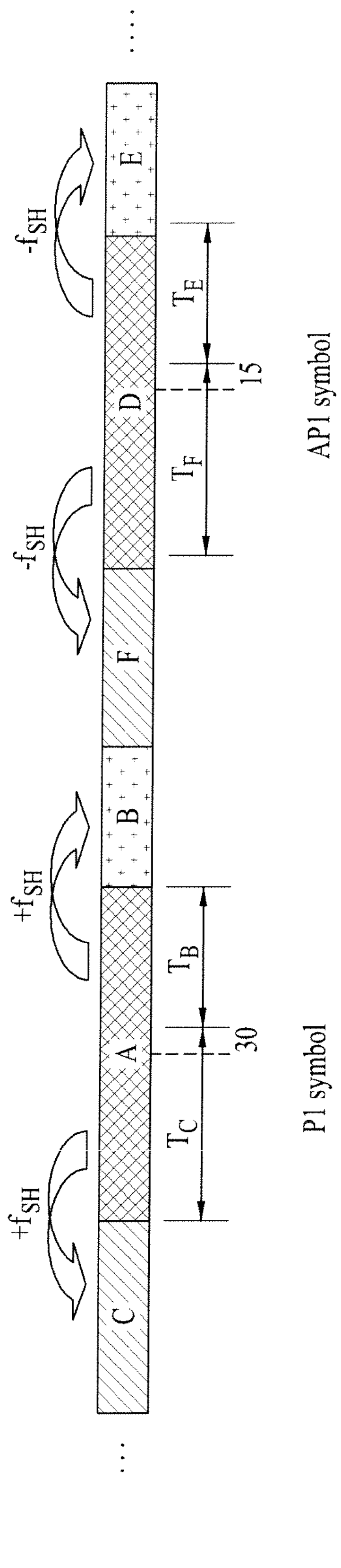

FIG. 11

25-A

| Field | Bits |
|---|---|
| S1 | 3 |
| S2 field 1 | 3 |
| S2 field 2 | 1 |

25-B

| Field | Bits |
|---|---|
| PIOT_PATTERN ⋆ | 4 |
| L1_PRE_SPREAD_LENGTH ⋆ | 3 |

# FIG. 12

| Field | Bits |
|---|---|
| TYPE | 8 |
| BWT_EXT | 1 |
| S1 | 3 |
| S2 | 4 |
| L1_REPETITION_FLAG | 3 |
| GUARD_INTERVAL | 3 |
| PAPR | 4 |
| L1_MOD | 4 |
| L1_COD | 2 |
| L1_FEC | 2 |
| L1_POST_SIZE | 18 |
| L1_POST_INFO_SIZE | 18 |
| PILOT_PATTERN | 4 |
| TX_ID_AVAILABILITY | 8 |
| CELL_ID | 16 |
| NETWORK_ID | 16 |
| NGH_SYSTEM_ID | 16 |
| NUM_NGH_FRAMES | 8 |
| NUM_T2_FRAMES | 8 |
| L1_POST_SPREAD_LENGH * | 12 |
| NUM_DATA_SYMBOLS | 12 |
| NUM_MISO_SYMBOLS | 12 |
| MIMO_SYMBOL_INTERVAL | 12 |
| MIMO_SYMBOL_LENGTH | 12 |
| REGEN_FLAG | 3 |
| L1_POST_EXTENSION | 1 |
| NUM_RF | 3 |
| CURRENT_RF_IDX | 3 |
| RESERVED | 10 |
| CRC_32 | 32 |

FIG. 13

| Field | Bits |
|---|---|
| SUB_SLICES_PER_FRAME | 15 |
| NUM_PLP | 8 |
| NUM_AUX | 4 |
| AUX_CONFIG_RFU | 8 |
| | |
| for i = 0..NUM_RF-1 { | |
| RF_IDX | 3 |
| FREQEUNCY | 32 |
| } | |
| | |
| if S2 == 'xxx1' { | |
| FEF_TYPE | 4 |
| FEF_LENGTH | 22 |
| FEF_INTERVAL | 8 |
| NEXT_NGH_SUPERFRAME | 8 |
| } | |
| | |
| RESERVED_2 | 32 |
| | |
| for i = 0..NUM_AUX-1 { | |
| AUX_RFU | 32 |
| } | |
| for i = 0..NUM_PLP-1 { | |
| PLP_ID | 8 |
| PLP_TYPE | 3 |
| PLP_PAYLOAD_TYPE | 5 |
| PLP_PROFILE | 2 |
| FF_FLAG | 1 |
| FIRST_RF_IDX | 3 |
| FIRST_FRAME_IDX | 8 |
| PLP_GROUP_ID | 8 |
| PLP_COD | 3 |
| PLP_MOD | 3 |
| PLP_MIMO_TYPE | 2 |
| PLP_ROTATION | 1 |
| PLP_FEC_TYPE | 2 |
| PLP_NUM_BLOCKS_MAX | 10 |
| FRAME_INTERVAL | 8 |
| TIME_IL_LENGTH | 8 |
| TIME_IL_TYPE | 1 |
| IN_BAND_FLAG | 1 |
| RESERVED_1 | 16 |
| } | |

FIG. 14

| Field | Bits |
|---|---|
| FRAME_IDX | 8 |
| SUB_SLICE_INTERVAL | 22 |
| TYPE_2_START | 22 |
| L1_CHANGE_COUNTER | 8 |
| START_RF_IDX | 3 |
| RESERVED_1 | 8 |
| | |
| if S2 == 'xxx1' { | |
| NEXT_NGH_FRAME | 8 |
| } | |
| | |
| for i = 0..NUM_PLP-1 { | |
| PLP_ID | 8 |
| PLP_START | 22 |
| PLP_NUM_BLOCKS | 10 |
| RESERVED_2 | 8 |
| } | |
| | |
| RESERVED_3 | 8 |
| | |
| for i = 0..NUM_AUX-1 { | |
| AUX_RFU | 48 |
| } | |

FIG. 15

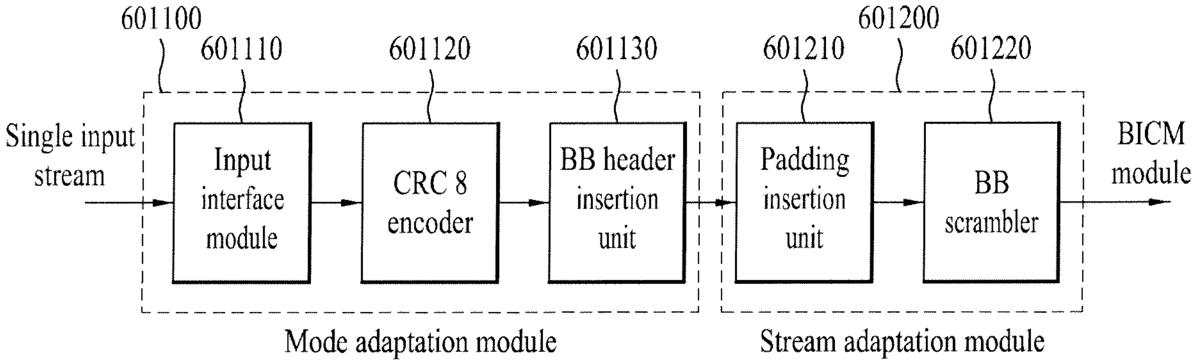
601100
601110
601120
601130
601200
601210
601220
Single input stream
Input interface module
CRC 8 encoder
BB header insertion unit
Padding insertion unit
BB scrambler
BICM module
Mode adaptation module
Stream adaptation module

FIG. 16

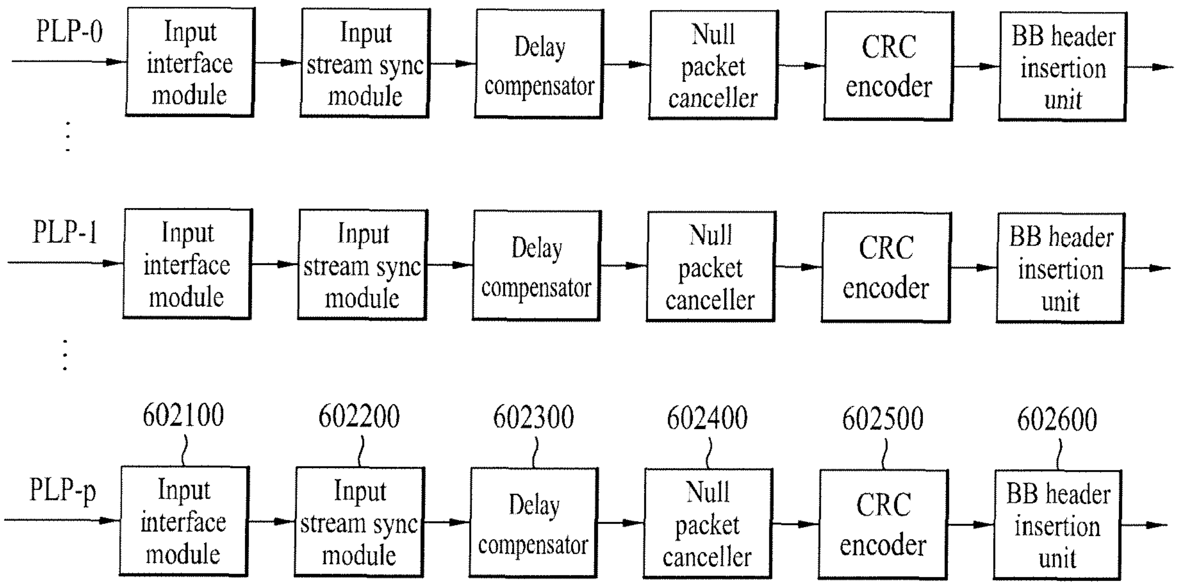
PLP-0
Input interface module
Input stream sync module
Delay compensator
Null packet canceller
CRC encoder
BB header insertion unit
PLP-1
Input interface module
Input stream sync module
Delay compensator
Null packet canceller
CRC encoder
BB header insertion unit
602100
602200
602300
602400
602500
602600
PLP-p
Input interface module
Input stream sync module
Delay compensator
Null packet canceller
CRC encoder
BB header insertion unit

FIG. 17

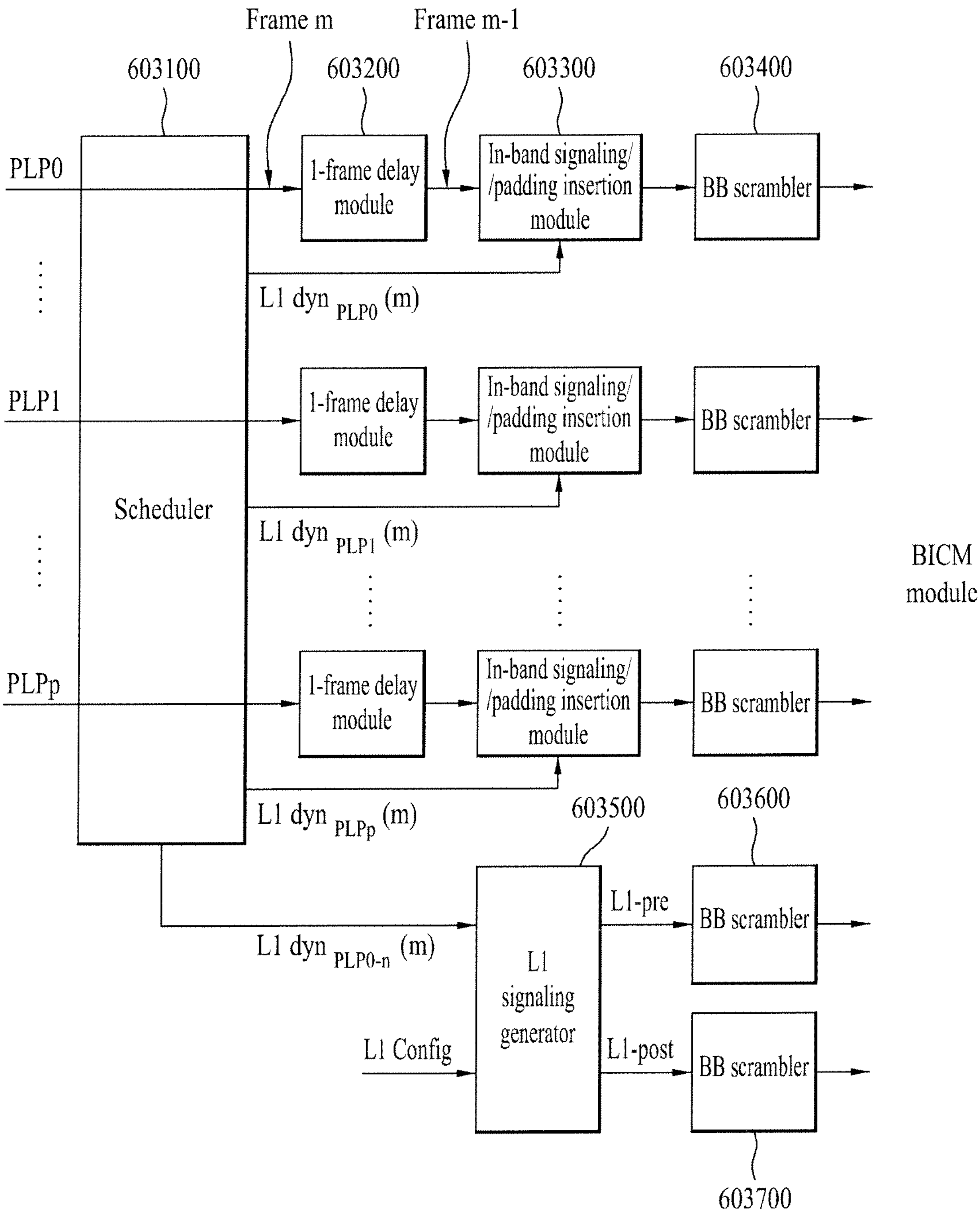
Frame m
Frame m-1
603100
603200
603300
603400
PLP0
PLP1
PLPp
Scheduler
1-frame delay module
In-band signaling/ /padding insertion module
BB scrambler
L1 dyn PLP0 (m)
L1 dyn PLP1 (m)
L1 dyn PLPp (m)
BICM module
603500
603600
L1-pre
L1 dyn PLP0-n (m)
L1 signaling generator
L1 Config
L1-post
603700

FIG. 18

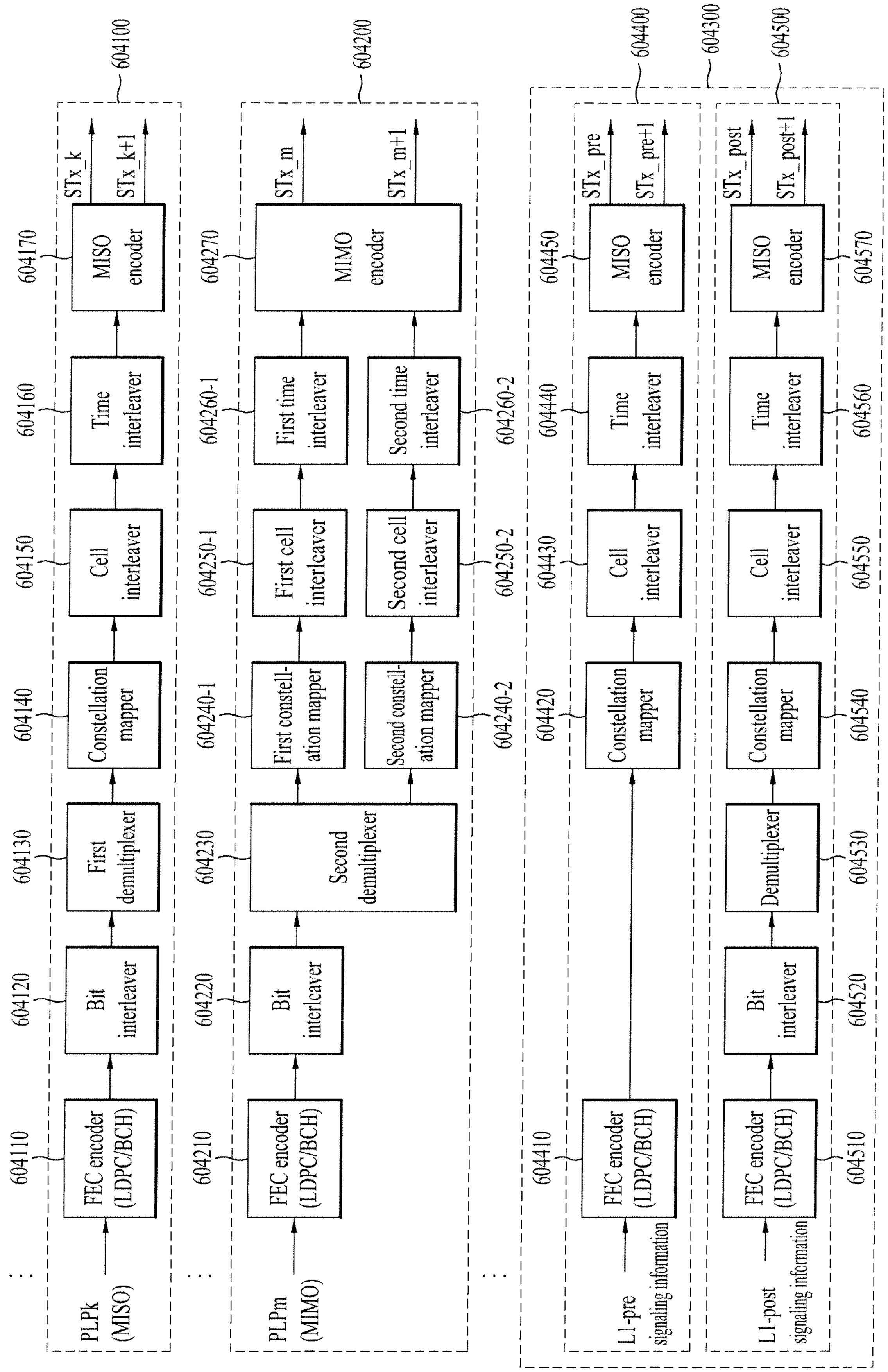
PLPk (MISO)
FEC encoder (LDPC/BCH)
604110
Bit interleaver
604120
First demultiplexer
604130
Constellation mapper
604140
Cell interleaver
604150
Time interleaver
604160
MISO encoder
604170
STx_k
STx_k+1
604100
PLPm (MIMO)
FEC encoder (LDPC/BCH)
604210
Bit interleaver
604220
Second demultiplexer
604230
First constell-ation mapper
604240-1
Second constell-ation mapper
604240-2
First cell interleaver
604250-1
Second cell interleaver
604250-2
First time interleaver
604260-1
Second time interleaver
604260-2
MIMO encoder
604270
STx_m
STx_m+1
604200
L1-pre signaling information
FEC encoder (LDPC/BCH)
604410
Constellation mapper
604420
Cell interleaver
604430
Time interleaver
604440
MISO encoder
604450
STx_pre
STx_pre+1
604400
604300
L1-post signaling information
FEC encoder (LDPC/BCH)
604510
Bit interleaver
604520
Demultiplexer
604530
Constellation mapper
604540
Cell interleaver
604550
Time interleaver
604560
MISO encoder
604570
STx_post
STx_post+1
604500

FIG. 19

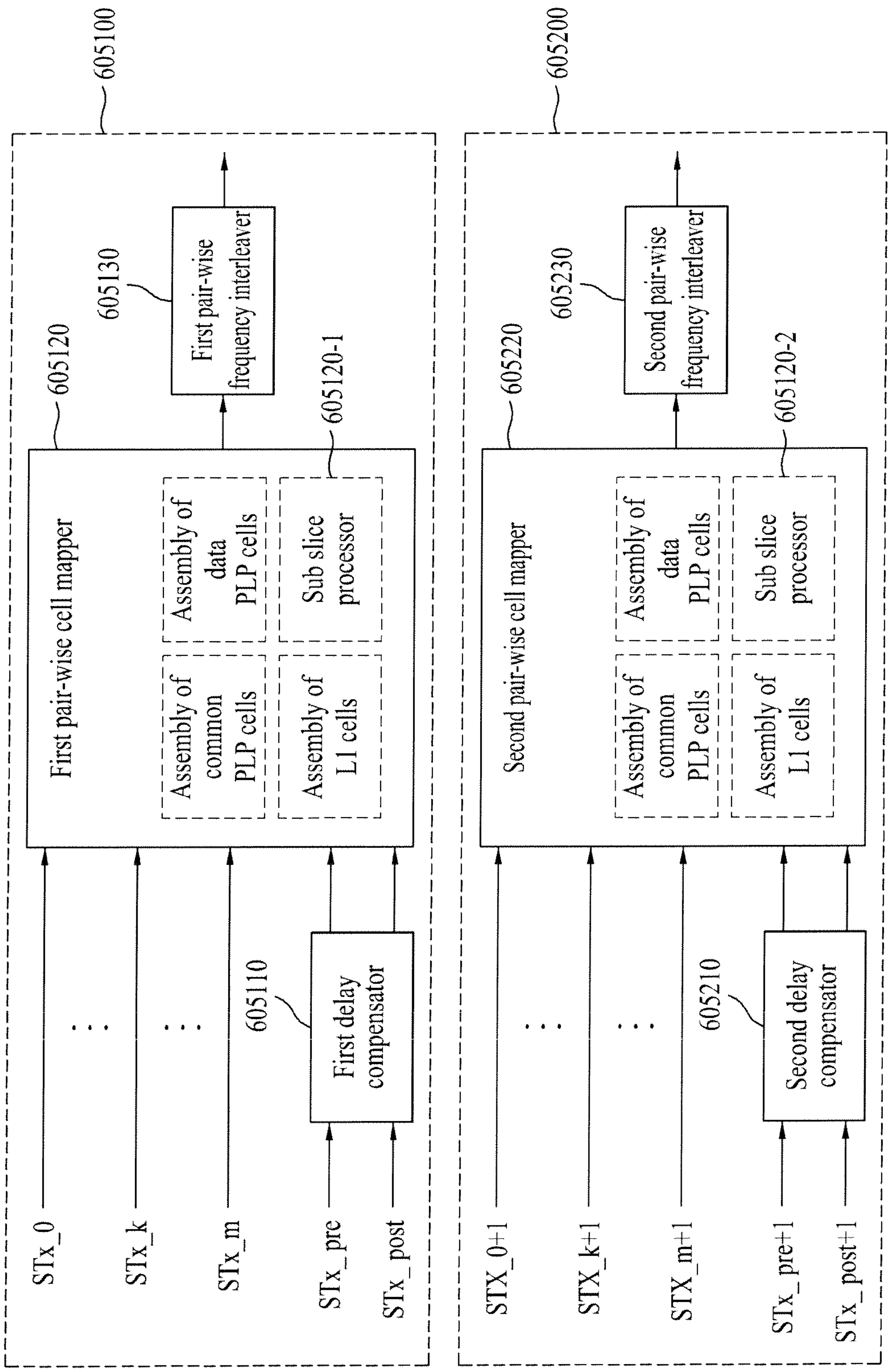
605100
605200
First pair-wise cell mapper
605120
Assembly of common PLP cells
Assembly of data PLP cells
Assembly of L1 cells
Sub slice processor
605120-1
First pair-wise frequency interleaver
605130
First delay compensator
605110
STx_0
STx_k
STx_m
STx_pre
STx_post
Second pair-wise cell mapper
605220
Assembly of common PLP cells
Assembly of data PLP cells
Assembly of L1 cells
Sub slice processor
605120-2
Second pair-wise frequency interleaver
605230
Second delay compensator
605210
STX_0+1
STX_k+1
STX_m+1
STx_pre+1
STx_post+1

FIG. 20

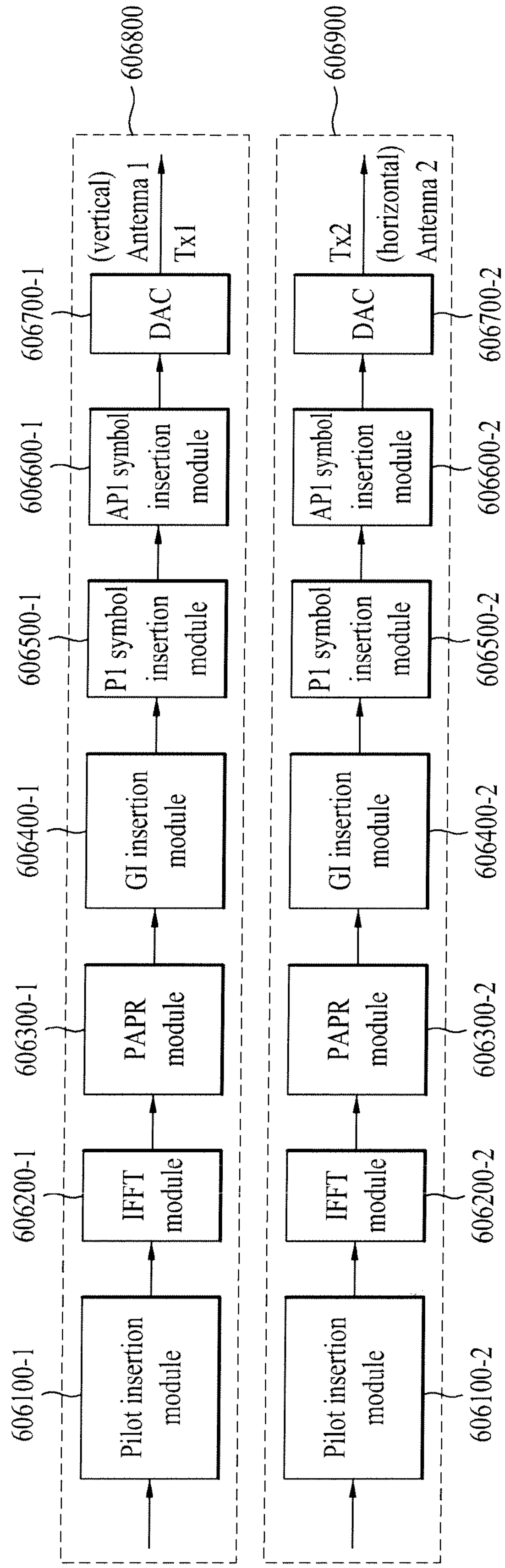
Pilot insertion module
IFFT module
PAPR module
GI insertion module
P1 symbol insertion module
AP1 symbol insertion module
DAC
Tx1
Antenna 1 (vertical)
Tx2
Antenna 2 (horizontal)
606100-1
606200-1
606300-1
606400-1
606500-1
606600-1
606700-1
606800
606100-2
606200-2
606300-2
606400-2
606500-2
606600-2
606700-2
606900

FIG. 21

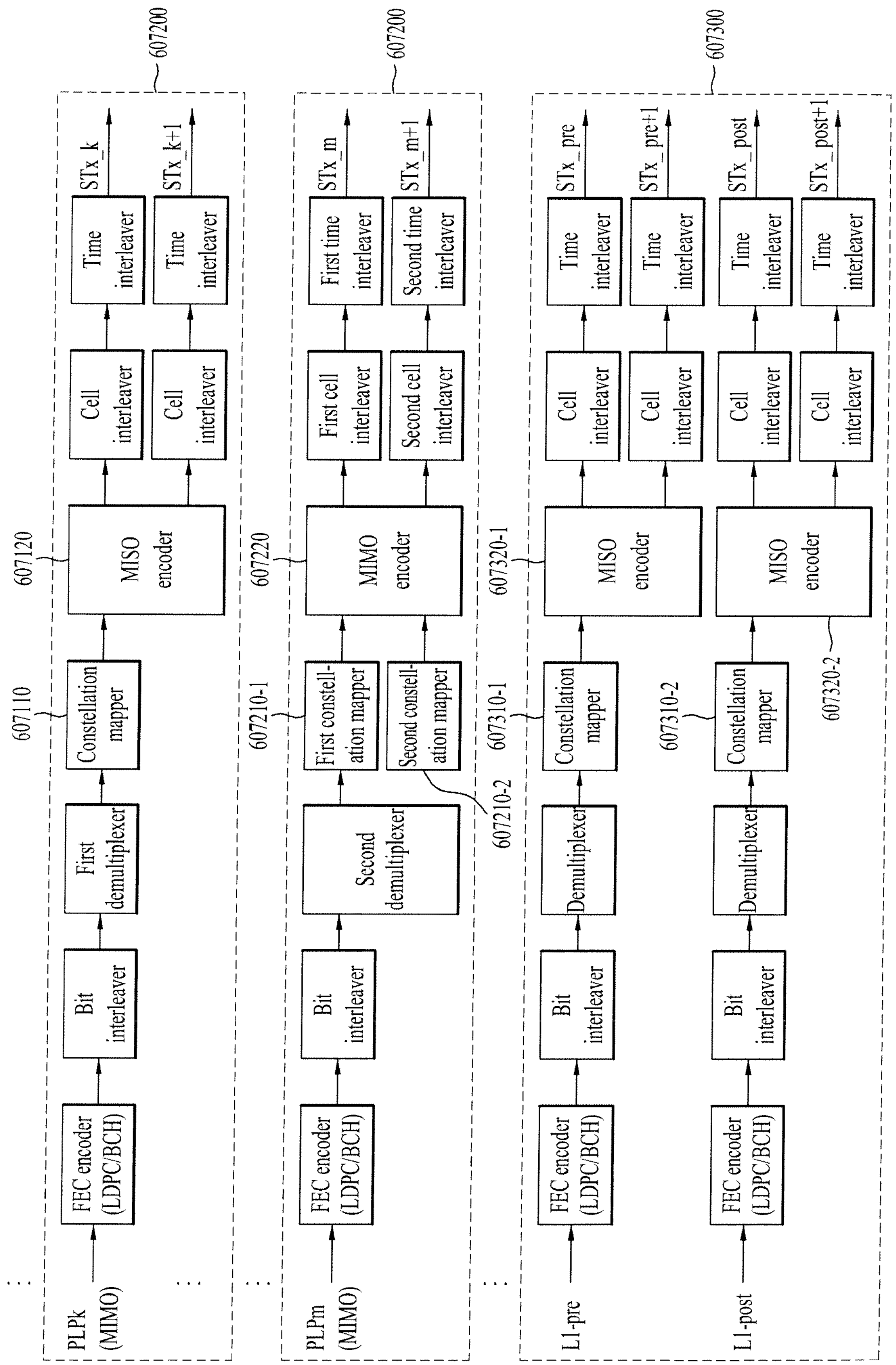
607200
PLPk (MIMO)
FEC encoder (LDPC/BCH)
Bit interleaver
First demultiplexer
607110
Constellation mapper
607120
MISO encoder
Cell interleaver
Cell interleaver
Time interleaver
Time interleaver
STx_k
STx_k+1
607200
PLPm (MIMO)
FEC encoder (LDPC/BCH)
Bit interleaver
Second demultiplexer
607210-1
First constell-ation mapper
Second constell-ation mapper
607210-2
607220
MIMO encoder
First cell interleaver
Second cell interleaver
First time interleaver
Second time interleaver
STx_m
STx_m+1
607300
L1-pre
L1-post
FEC encoder (LDPC/BCH)
FEC encoder (LDPC/BCH)
Bit interleaver
Bit interleaver
Demultiplexer
Demultiplexer
607310-1
607310-2
Constellation mapper
Constellation mapper
607320-1
607320-2
MISO encoder
MISO encoder
Cell interleaver
Cell interleaver
Cell interleaver
Cell interleaver
Time interleaver
Time interleaver
Time interleaver
Time interleaver
STx_pre
STx_pre+1
STx_post
STx_post+1

FIG. 22

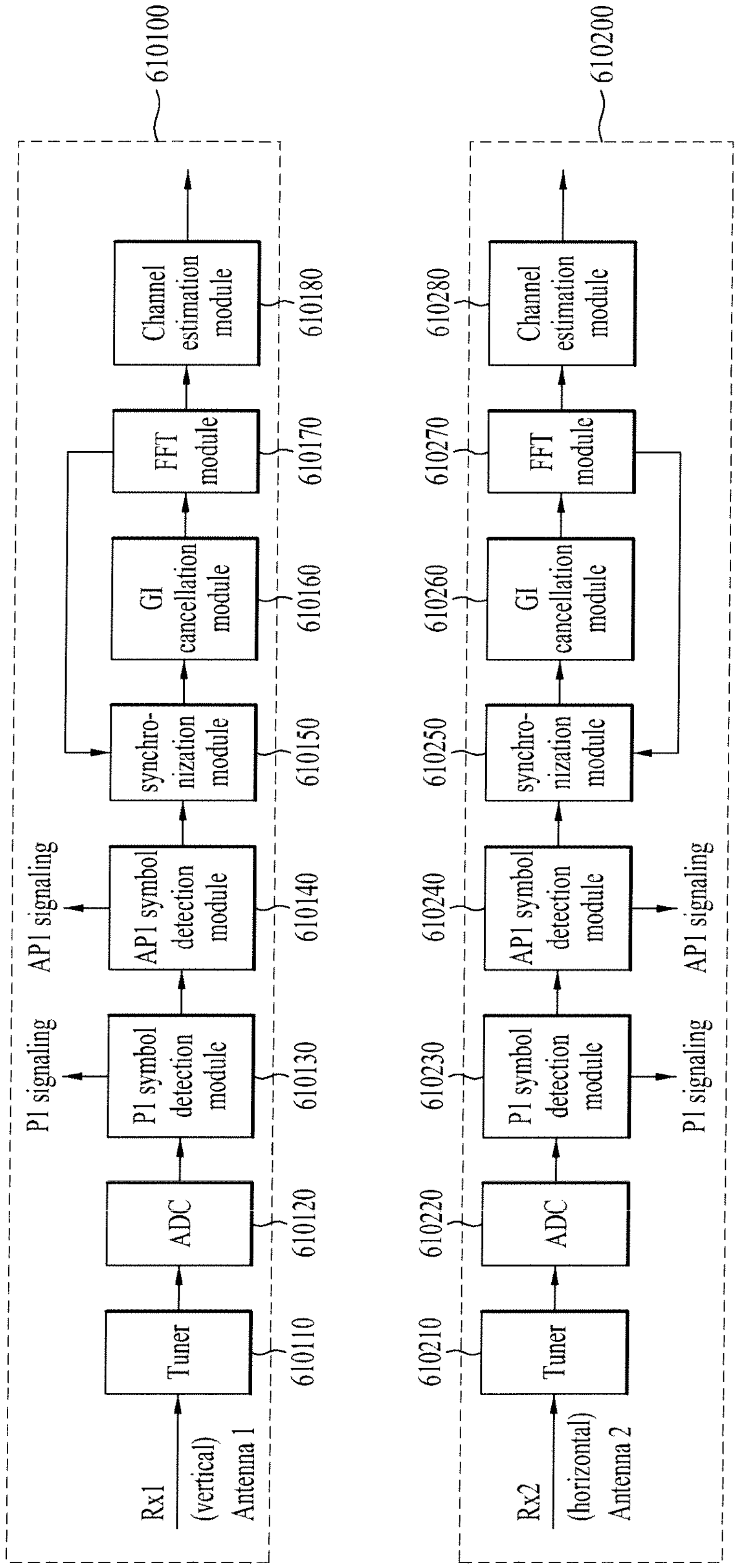
610100
Rx1
(vertical)
Antenna 1
Tuner
610110
ADC
610120
P1 symbol detection module
610130
P1 signaling
AP1 symbol detection module
610140
AP1 signaling
synchro-nization module
610150
GI cancellation module
610160
FFT module
610170
Channel estimation module
610180
610200
Rx2
(horizontal)
Antenna 2
Tuner
610210
ADC
610220
P1 symbol detection module
610230
P1 signaling
AP1 symbol detection module
610240
AP1 signaling
synchro-nization module
610250
GI cancellation module
610260
FFT module
610270
Channel estimation module
610280

FIG. 23

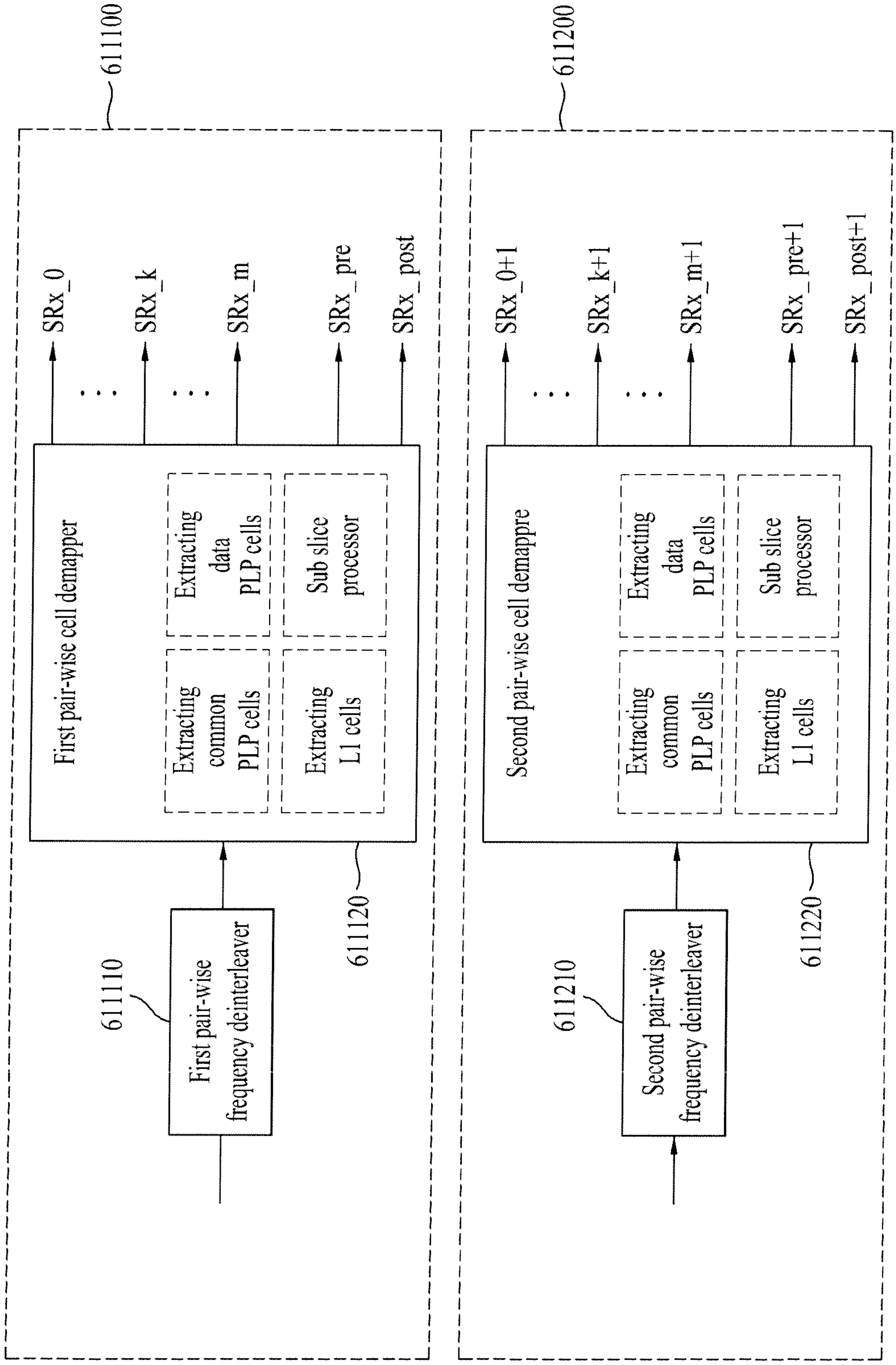
611100
First pair-wise frequency deinterleaver
611110
First pair-wise cell demapper
611120
Extracting common PLP cells
Extracting data PLP cells
Extracting L1 cells
Sub slice processor
SRx_0
SRx_k
SRx_m
SRx_ pre
SRx_ post
611200
Second pair-wise frequency deinterleaver
611210
Second pair-wise cell demappre
611220
SRx_0+1
SRx_k+1
SRx_m+1
SRx_ pre+1
SRx_ post+1

FIG. 24

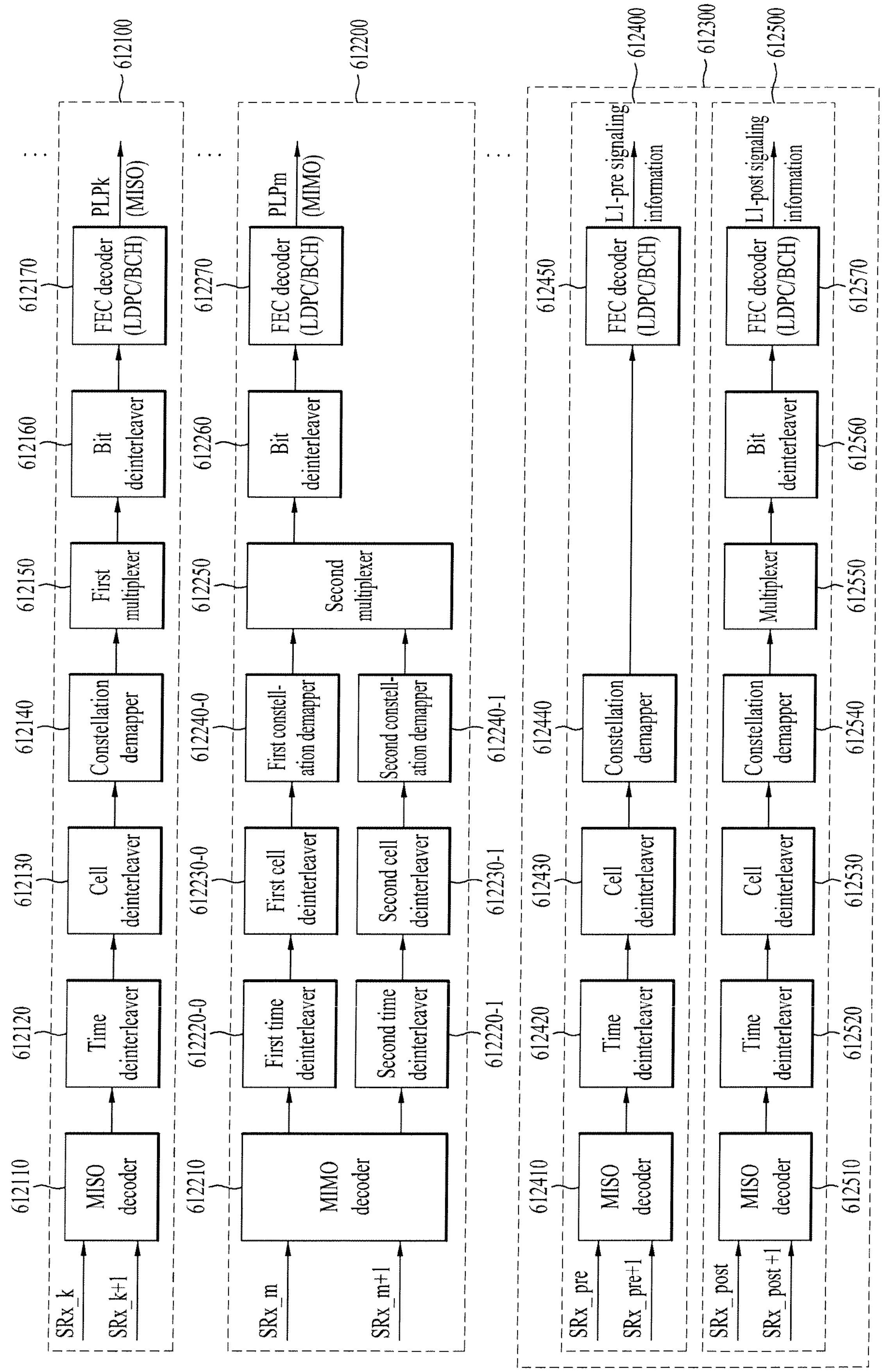
SRx_k
SRx_k+1
MISO decoder
612110
Time deinterleaver
612120
Cell deinterleaver
612130
Constellation demapper
612140
First multiplexer
612150
Bit deinterleaver
612160
FEC decoder (LDPC/BCH)
612170
PLPk (MISO)
612100
SRx_m
SRx_m+1
MIMO decoder
612210
First time deinterleaver
612220-0
Second time deinterleaver
612220-1
First cell deinterleaver
612230-0
Second cell deinterleaver
612230-1
First constellation demapper
612240-0
Second constellation demapper
612240-1
Second multiplexer
612250
Bit deinterleaver
612260
FEC decoder (LDPC/BCH)
612270
PLPm (MIMO)
612200
SRx_pre
SRx_pre+1
MISO decoder
612410
Time deinterleaver
612420
Cell deinterleaver
612430
Constellation demapper
612440
FEC decoder (LDPC/BCH)
612450
L1-pre signaling information
612400
612300
SRx_post
SRx_post+1
MISO decoder
612510
Time deinterleaver
612520
Cell deinterleaver
612530
Constellation demapper
612540
Multiplexer
612550
Bit deinterleaver
612560
FEC decoder (LDPC/BCH)
612570
L1-post signaling information
612500

FIG. 25

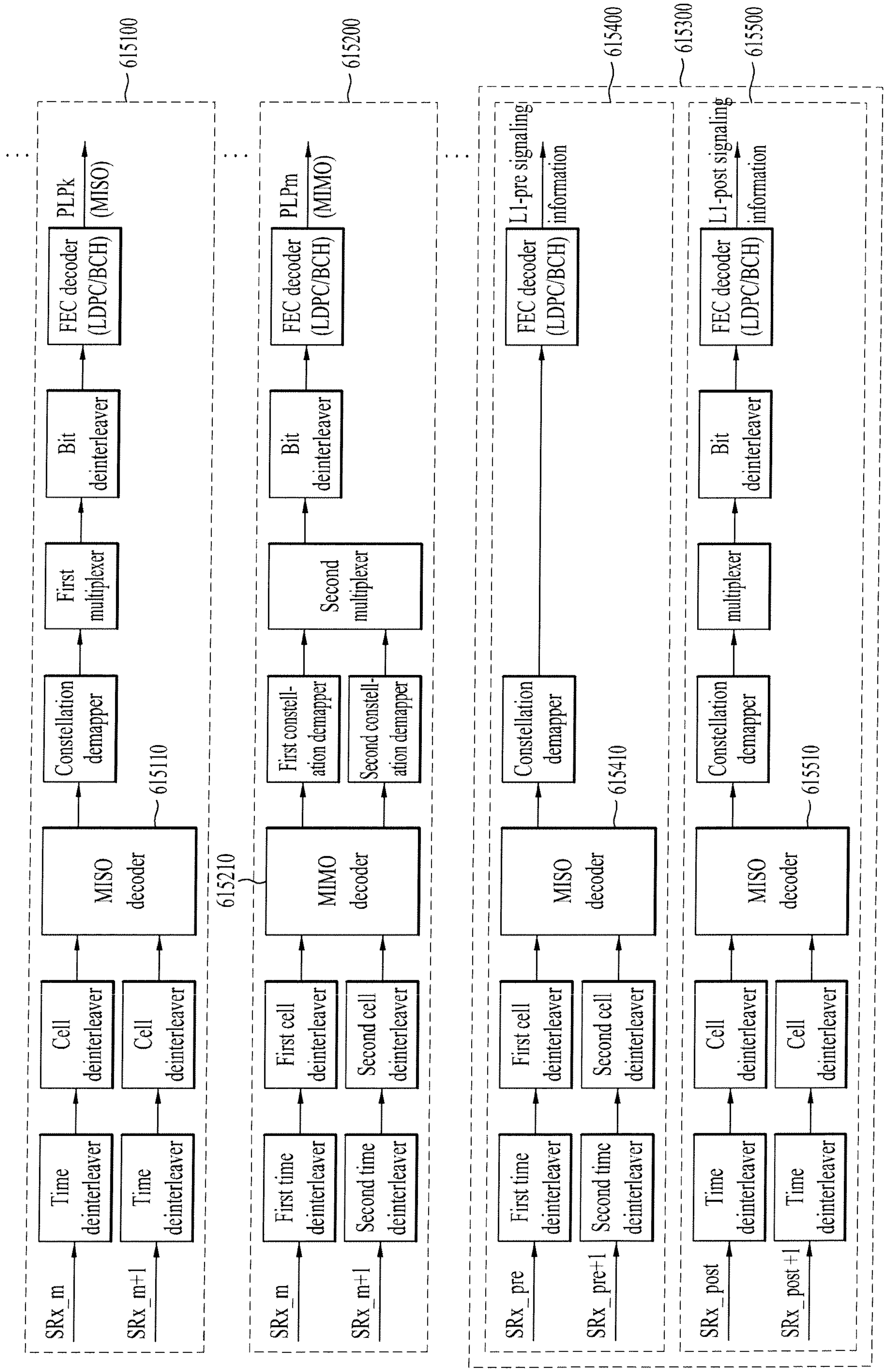
615100
SRx_m
SRx_m+1
Time deinterleaver
Time deinterleaver
Cell deinterleaver
Cell deinterleaver
MISO decoder
615110
Constellation demapper
First multiplexer
Bit deinterleaver
FEC decoder (LDPC/BCH)
PLPk (MISO)
615200
SRx_m
SRx_m+1
First time deinterleaver
Second time deinterleaver
First cell deinterleaver
Second cell deinterleaver
MIMO decoder
615210
First constellation demapper
Second constellation demapper
Second multiplexer
Bit deinterleaver
FEC decoder (LDPC/BCH)
PLPm (MIMO)
615300
615400
SRx_pre
SRx_pre+1
First time deinterleaver
Second time deinterleaver
First cell deinterleaver
Second cell deinterleaver
MISO decoder
615410
Constellation demapper
FEC decoder (LDPC/BCH)
L1-pre signaling information
615500
SRx_post
SRx_post+1
Time deinterleaver
Time deinterleaver
Cell deinterleaver
Cell deinterleaver
MISO decoder
615510
Constellation demapper
multiplexer
Bit deinterleaver
FEC decoder (LDPC/BCH)
L1-post signaling information

FIG. 26

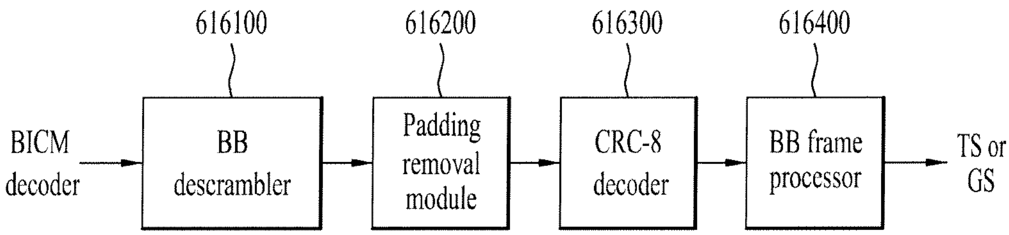
616100
616200
616300
616400
BICM decoder
BB descrambler
Padding removal module
CRC-8 decoder
BB frame processor
TS or GS

FIG. 27

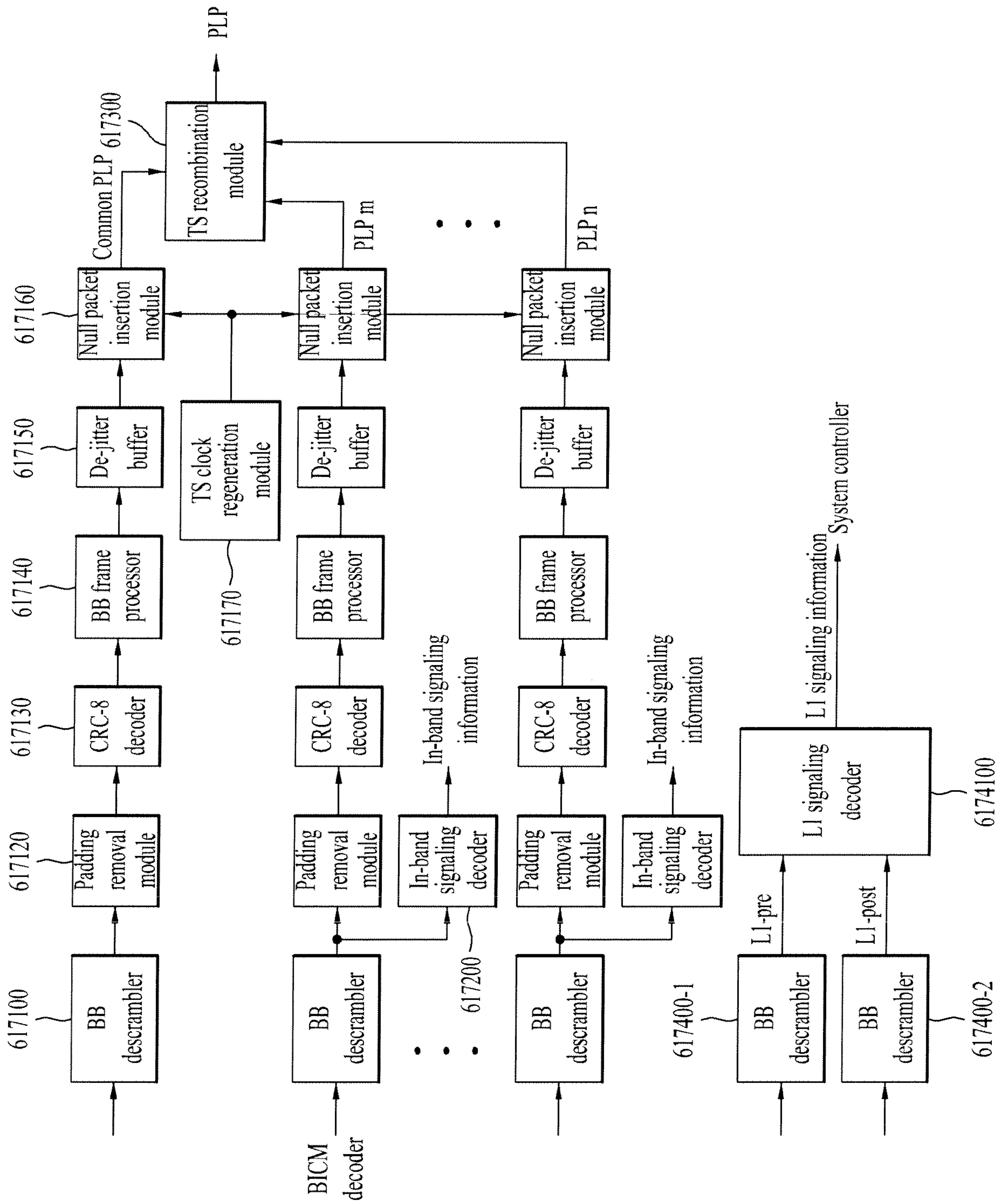
617100
BB descrambler
617120
Padding removal module
617130
CRC-8 decoder
617140
BB frame processor
617150
De-jitter buffer
617160
Null packet insertion module
Common PLP
617300
TS recombination module
PLP
TS clock regeneration module
617170
PLP m
PLP n
BICM decoder
617200
In-band signaling decoder
In-band signaling information
617400-1
617400-2
L1-pre
L1-post
L1 signaling decoder
6174100
L1 signaling information
System controller

FIG. 28

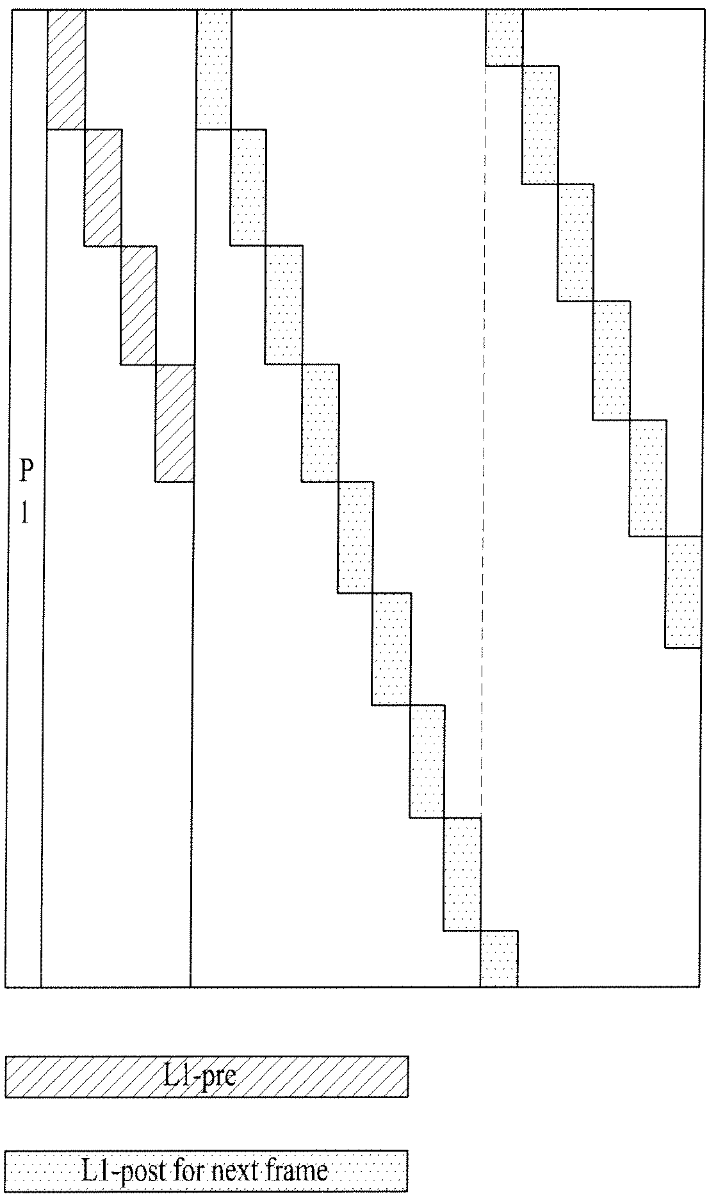

FIG. 29

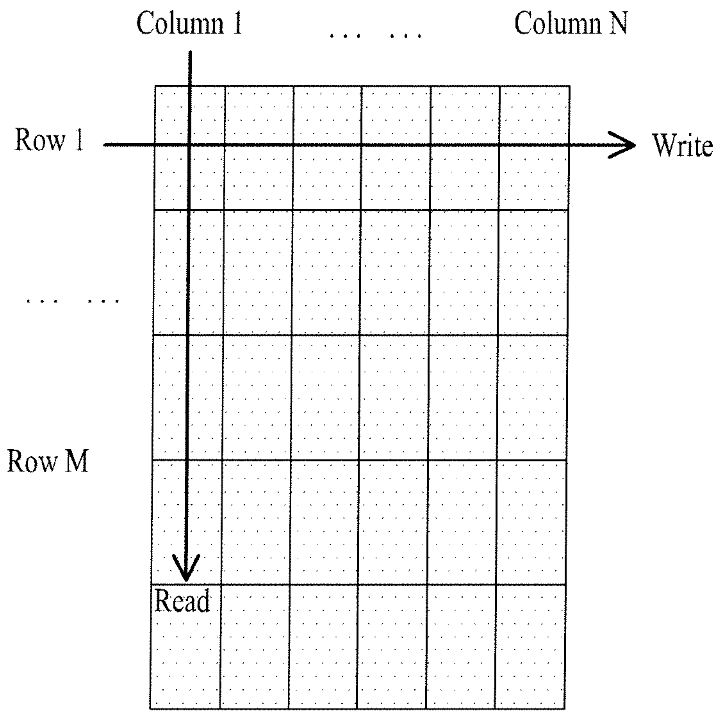

FIG. 30

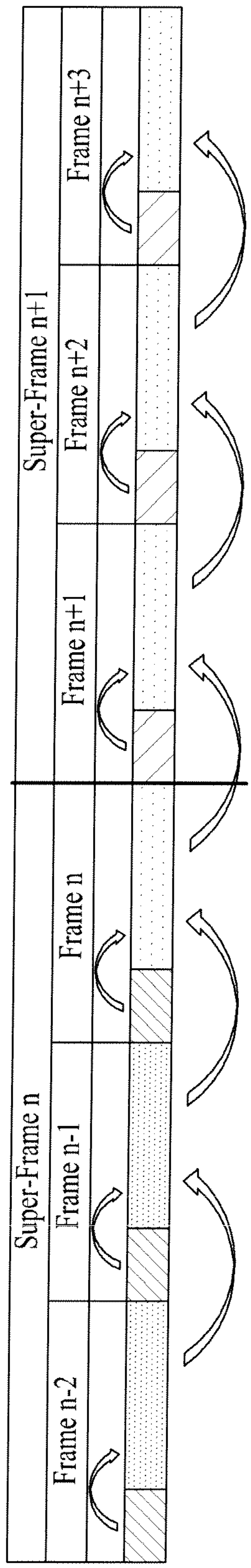
Super-Frame n
Super-Frame n+1
Frame n-2
Frame n-1
Frame n
Frame n+1
Frame n+2
Frame n+3

FIG. 31

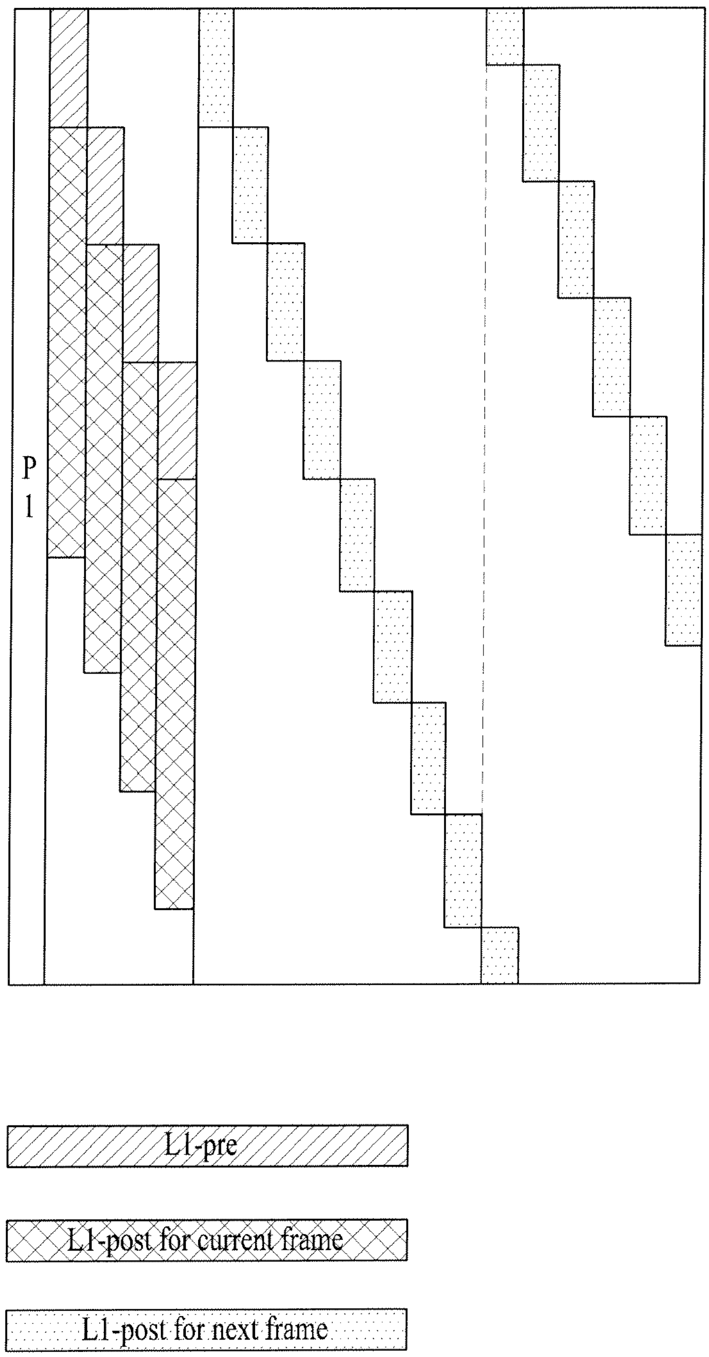

FIG. 32

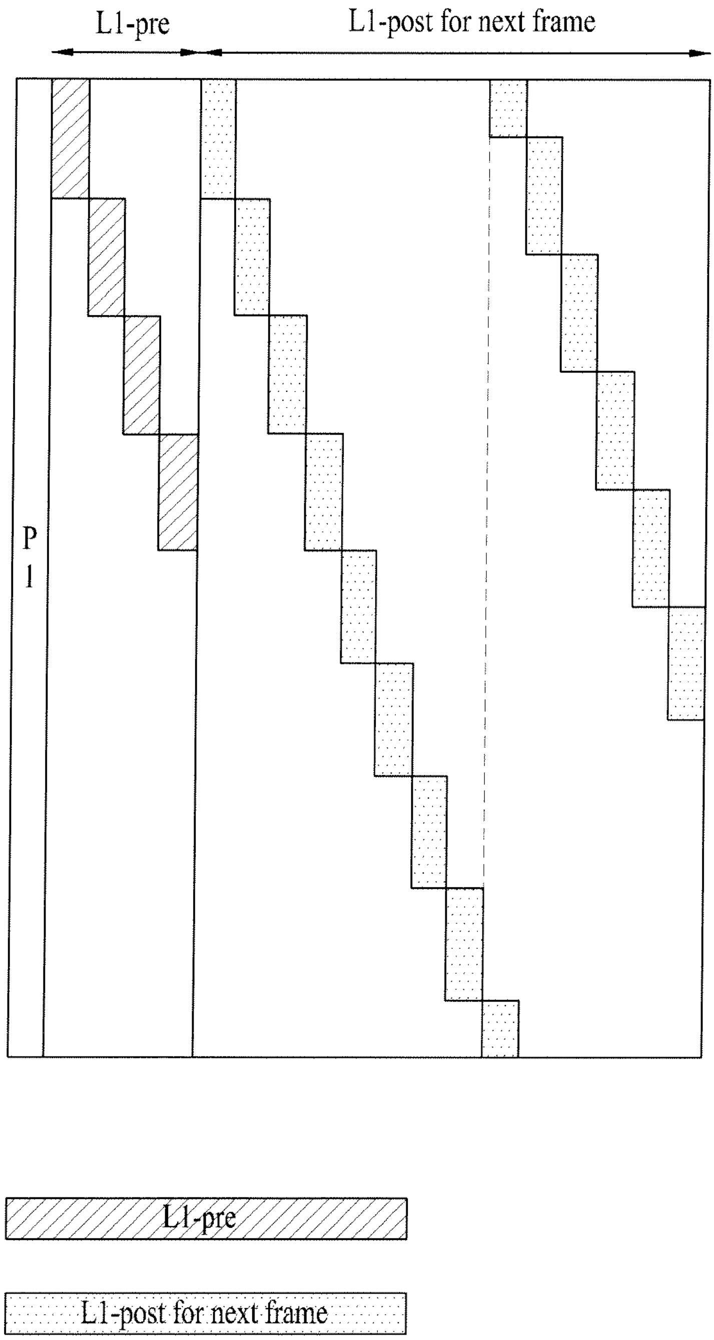

FIG. 33

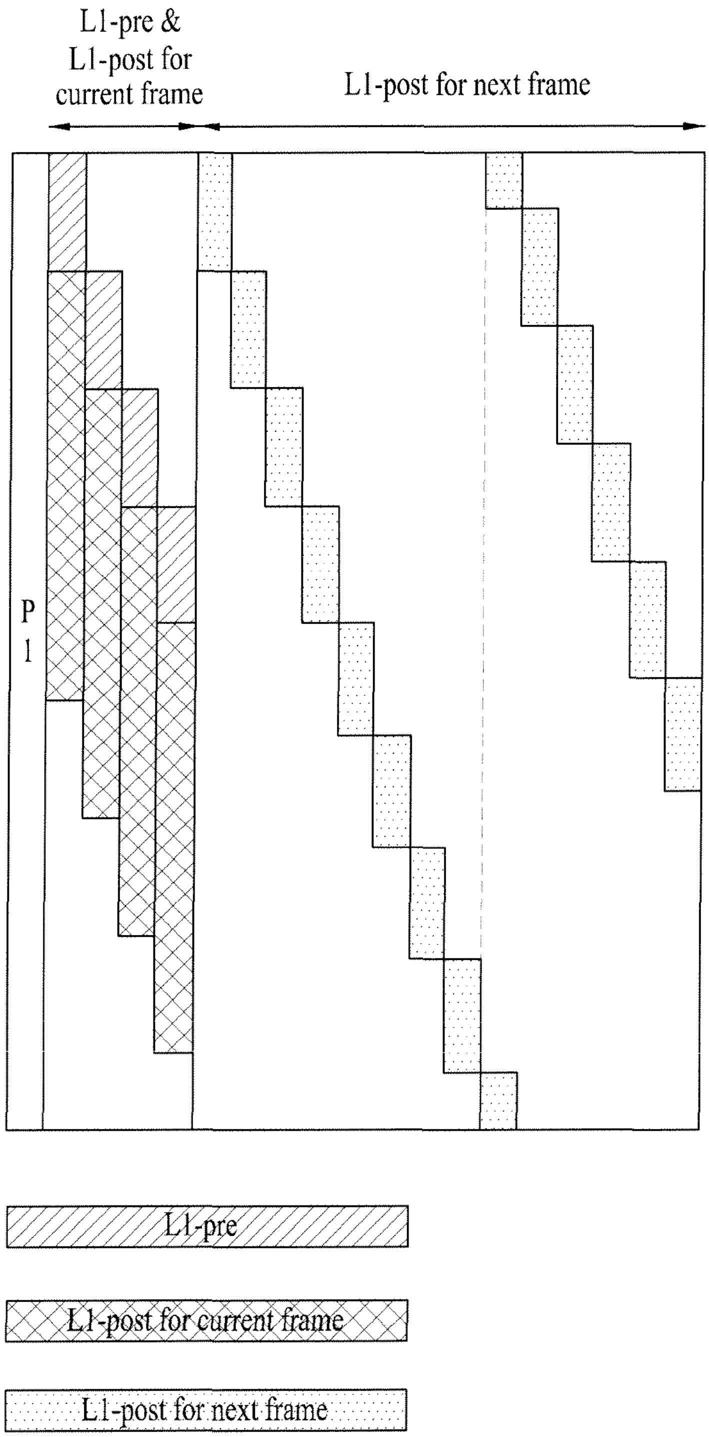
L1-pre &
L1-post for
current frame
L1-post for next frame
P
1
L1-pre
L1-post for current frame
L1-post for next frame

FIG. 34

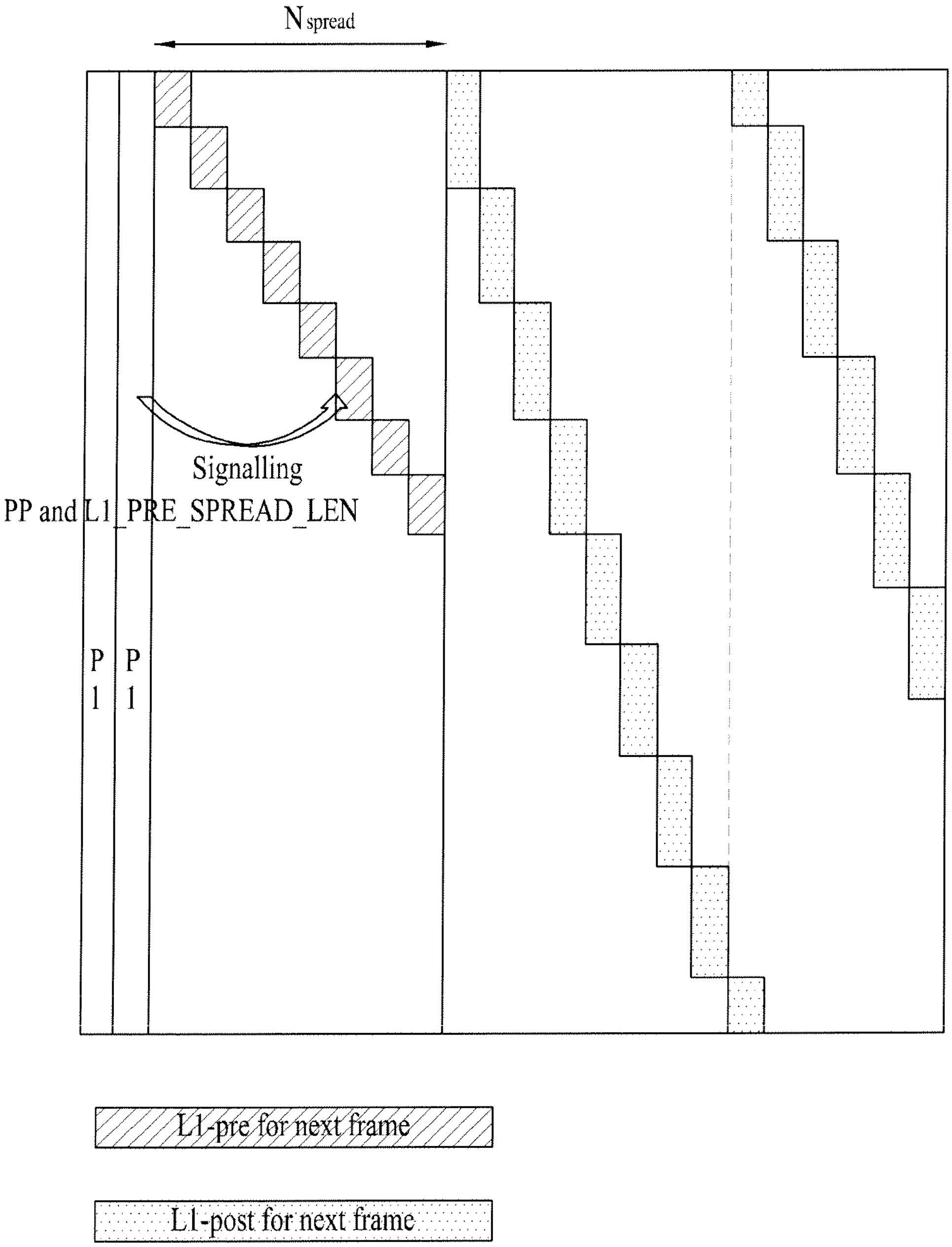
N spread
Signalling
PP and L1_PRE_SPREAD_LEN
P1
P1
L1-pre for next frame
L1-post for next frame

# FIG. 35

45010

| Parameters | Bit | Description |
|---|---|---|
| PILOT_PATTERN | 4 bits | Pilot pattern for current frame |
| L1_PRE_SPREAD_LEN | 3 bits | L1-pre spreading length |

45020

| Value | Pilot Pattern type |
|---|---|
| 0000 | PP1 |
| 0001 | PP2 |
| 0010 | PP3 |
| 0011 | PP4 |
| 0100 | PP5 |
| 0101 | PP6 |
| 0110 | PP7 |
| 0111 | PP8 |
| 1000 to 1111 | Reserved future use |

45030

| Value | # of symbols for L1-pre spreading | | | | Average duration of L1-pre spreading for each FFT size (ms) |
|---|---|---|---|---|---|
| | 1K FFT | 2K FFT | 4K FFT | 8K FFT | |
| 000 | L1-pre and L1-post spreading only in P2 symbols | | | | |
| 001 | 159 | 79 | 39 | 19 | 17.5 |
| 010 | 318 | 158 | 78 | 38 | 35 |
| 011 | 477 | 237 | 117 | 57 | 52.5 |
| 100 | 633 | 316 | 156 | 76 | 70 |
| 101 | 795 | 395 | 195 | 95 | 87.5 |
| 110 | 954 | 474 | 234 | 114 | 105 |
| 111 | 1113 | 553 | 273 | 133 | 122.5 |

FIG. 36

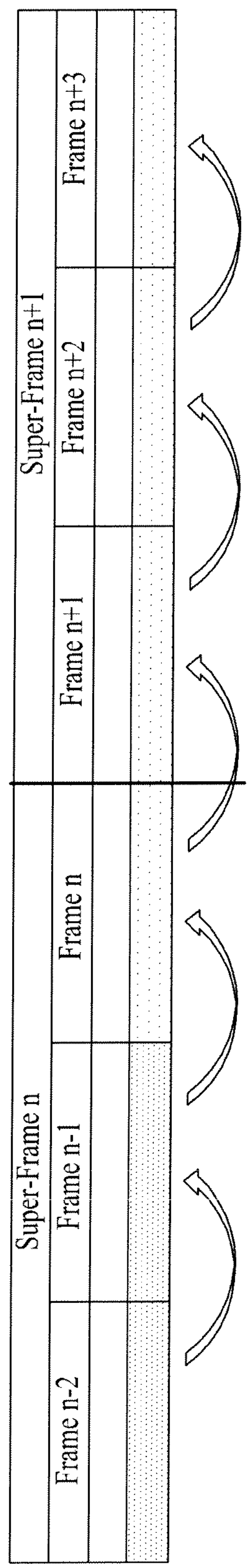
Super-Frame n
Super-Frame n+1
Frame n-2
Frame n-1
Frame n
Frame n+1
Frame n+2
Frame n+3

FIG. 37

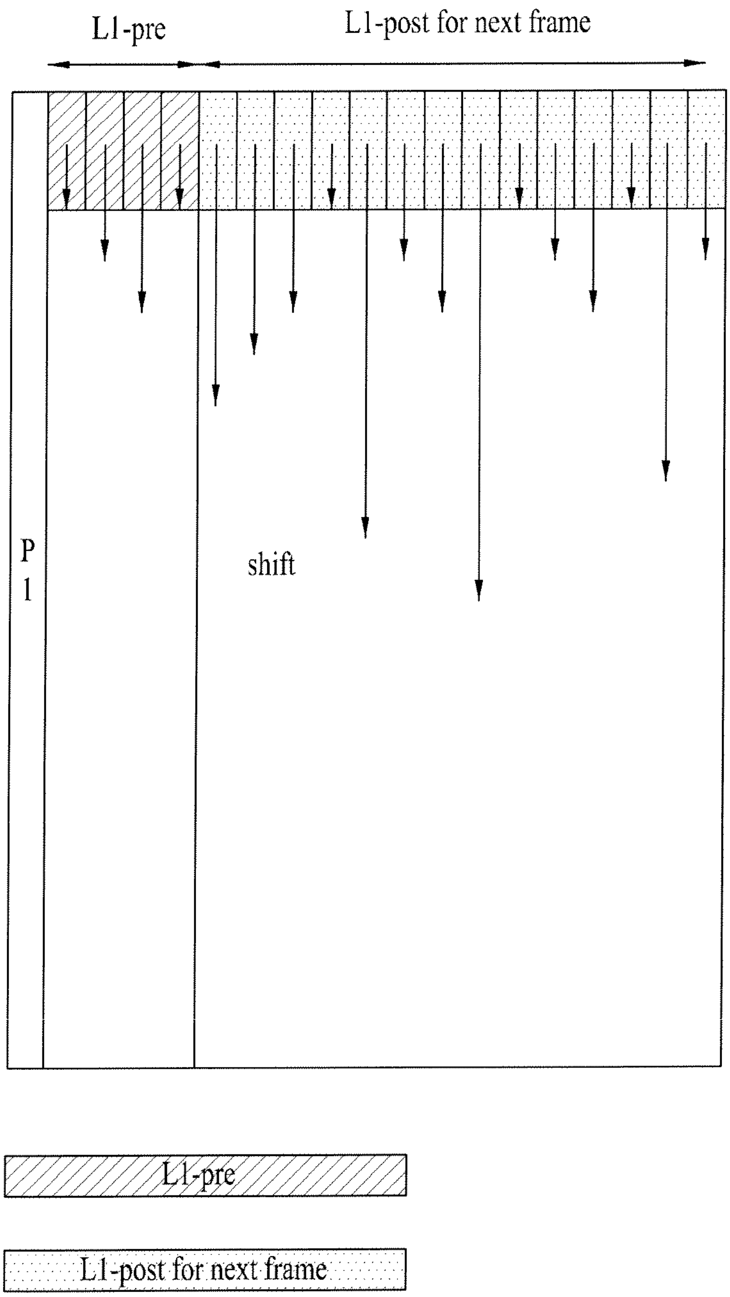
L1-pre
L1-post for next frame
P
1
shift
L1-pre
L1-post for next frame

FIG. 38

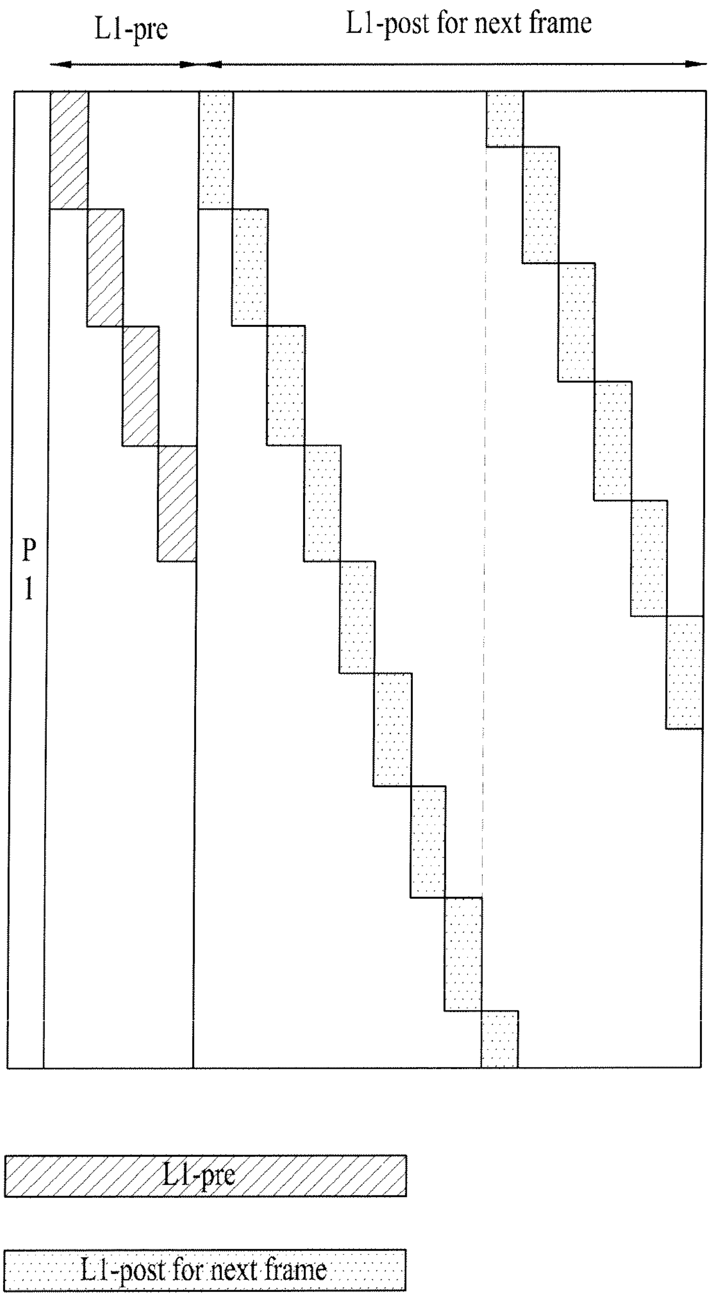

FIG. 39

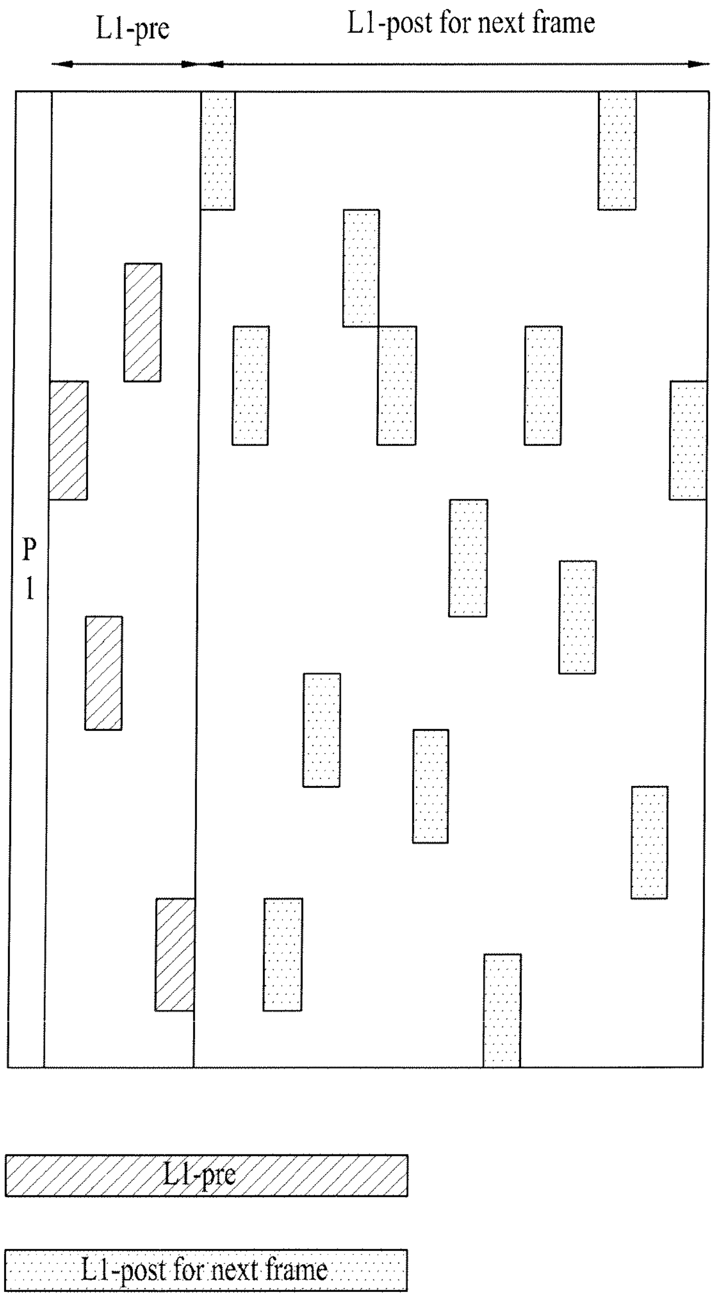

FIG. 40

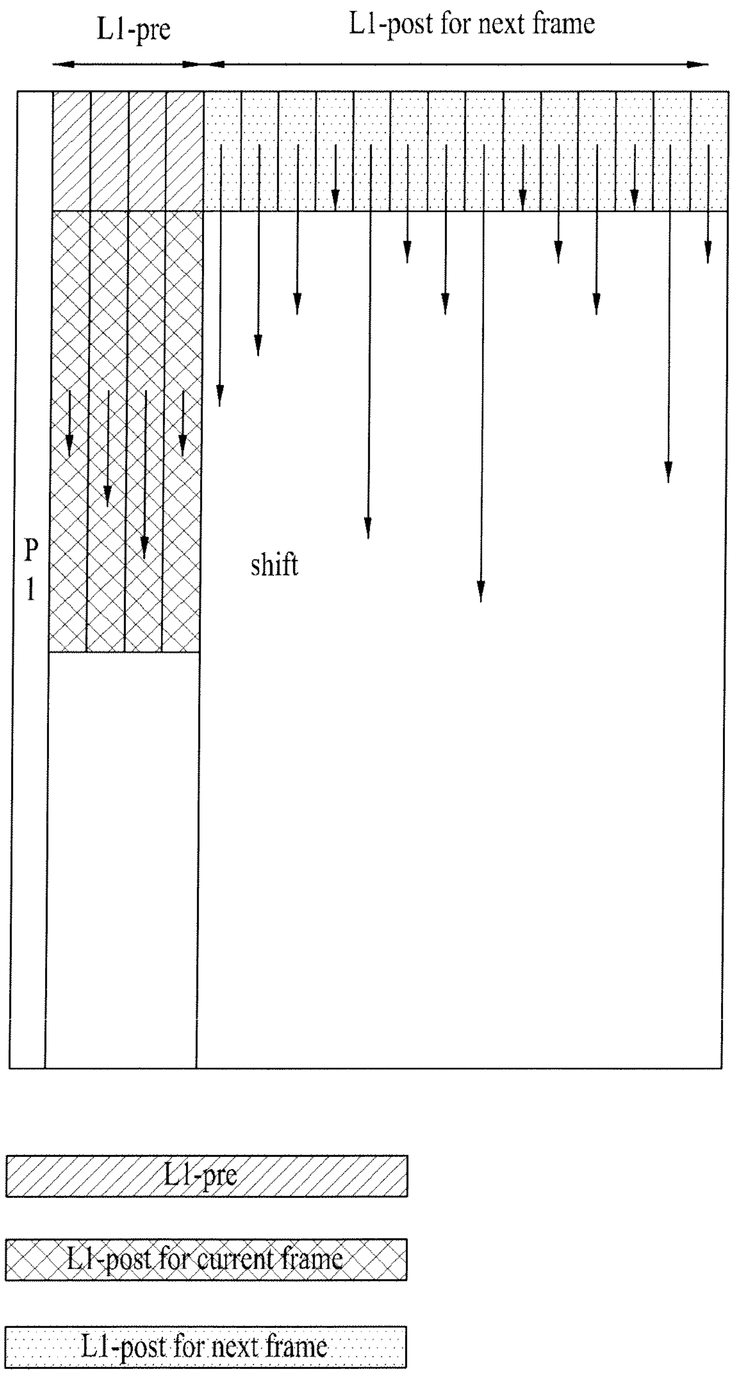
L1-pre
L1-post for next frame
P
1
shift
L1-pre
L1-post for current frame
L1-post for next frame

FIG. 41

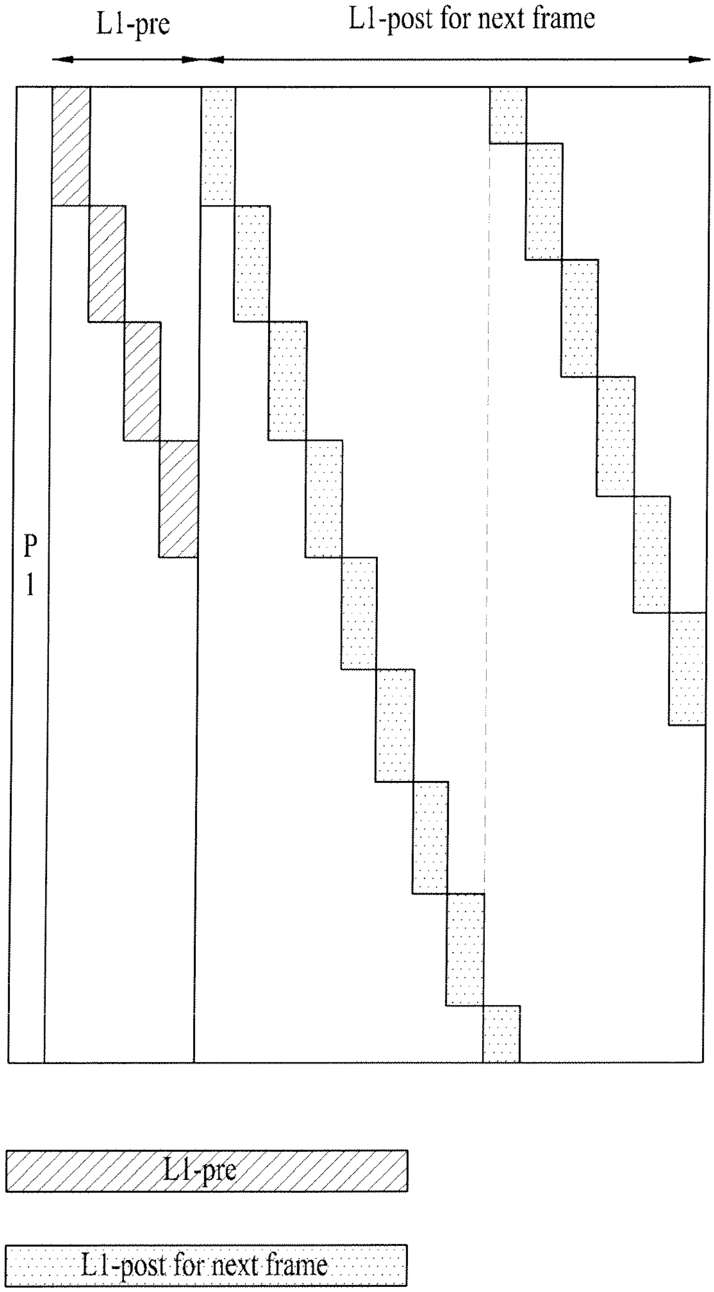

FIG. 42

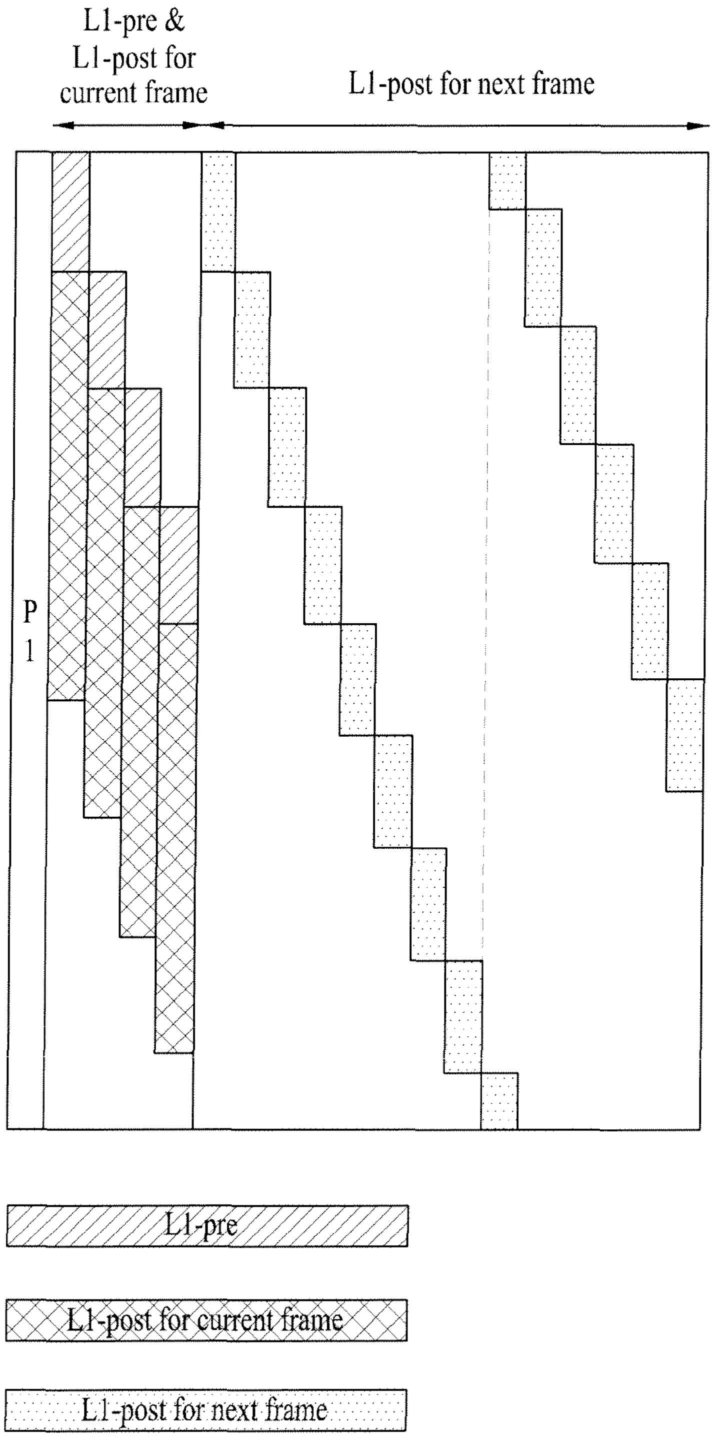
L1-pre &
L1-post for
current frame
L1-post for next frame
P
1
L1-pre
L1-post for current frame
L1-post for next frame

FIG. 43

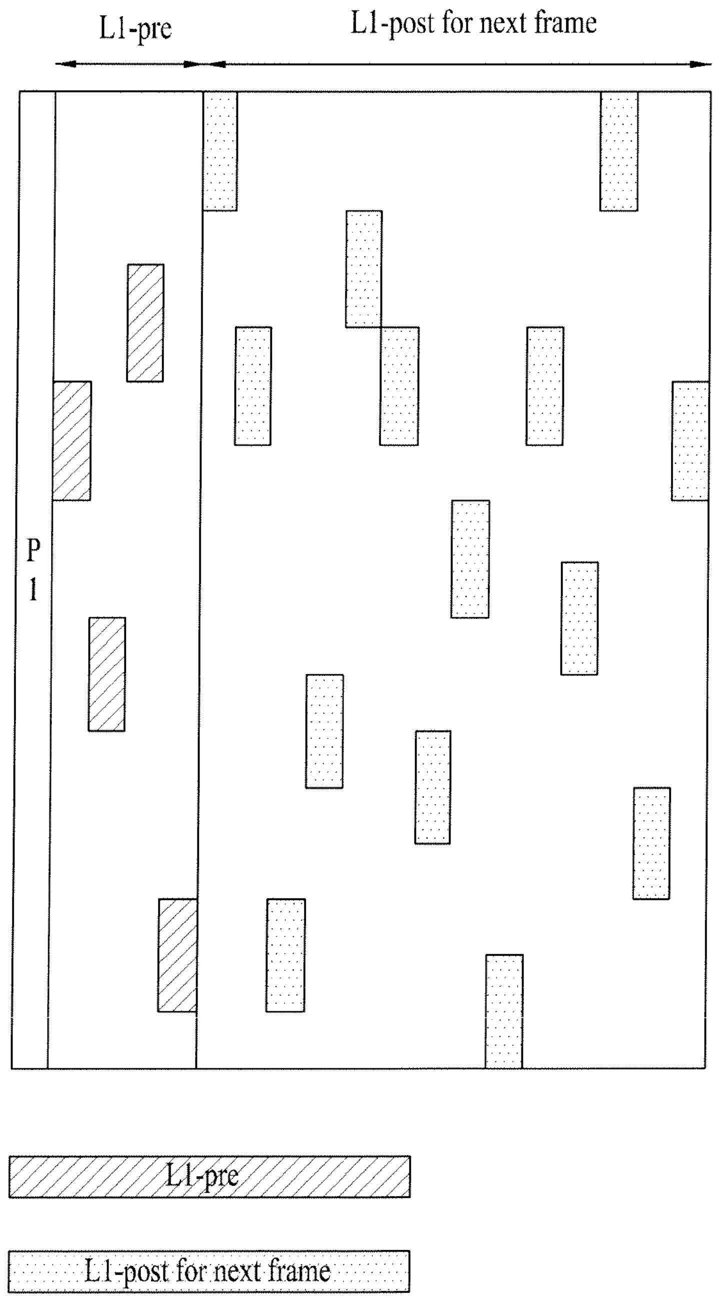

FIG. 44

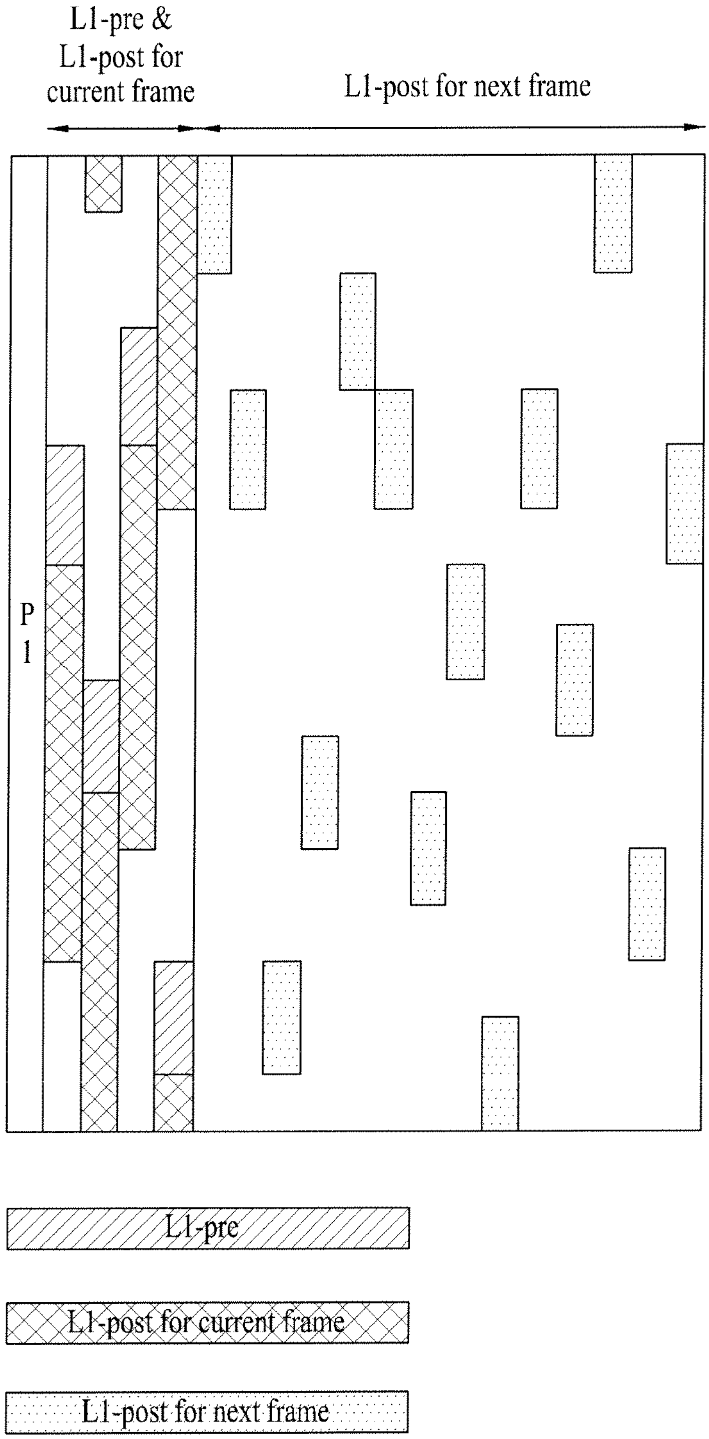
L1-pre &
L1-post for
current frame
L1-post for next frame
P
1
L1-pre
L1-post for current frame
L1-post for next frame

FIG. 45

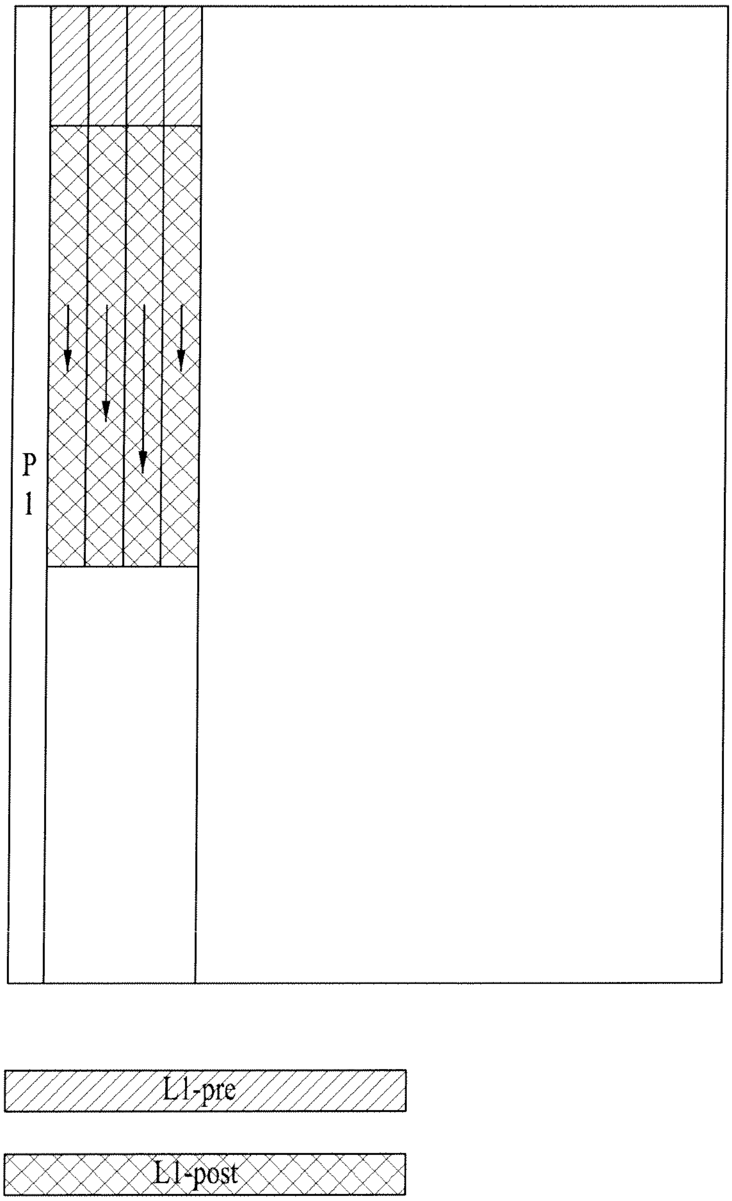

FIG. 46

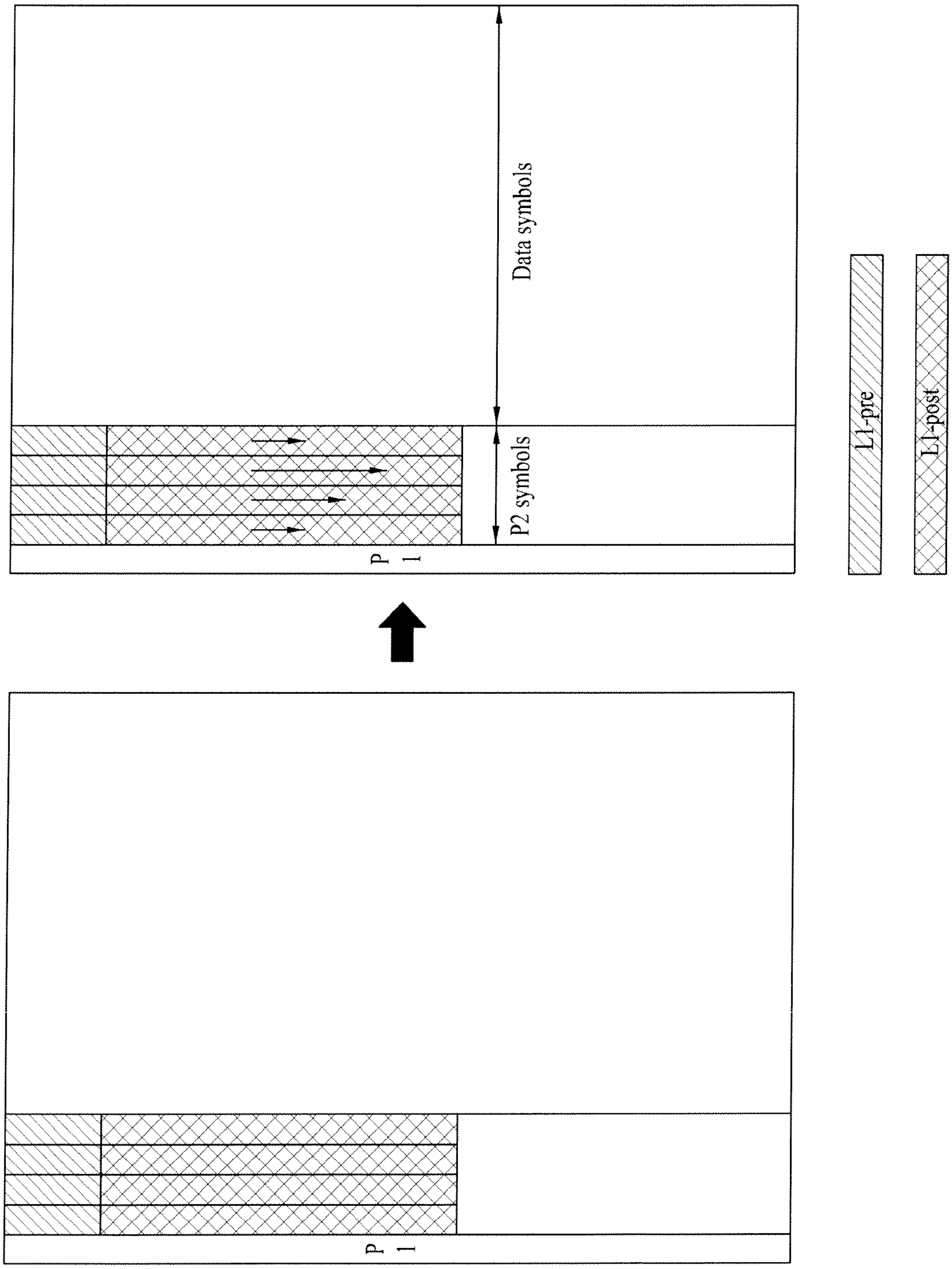

FIG. 47

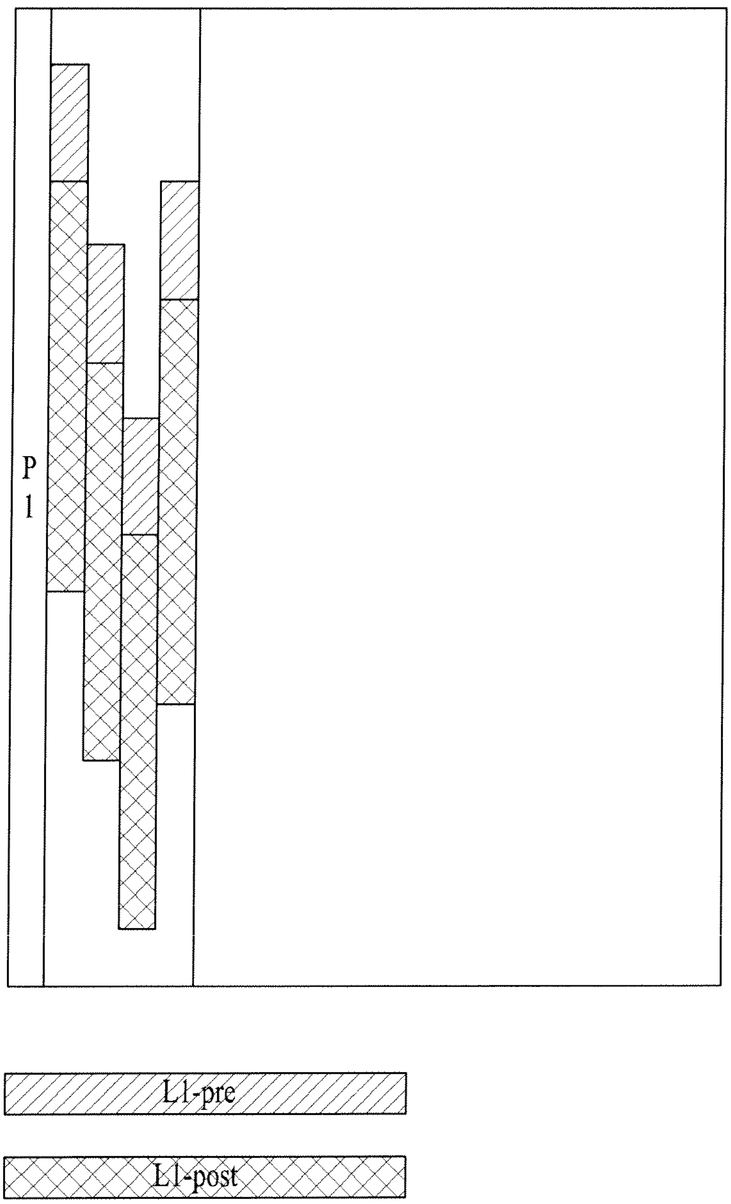

FIG. 48

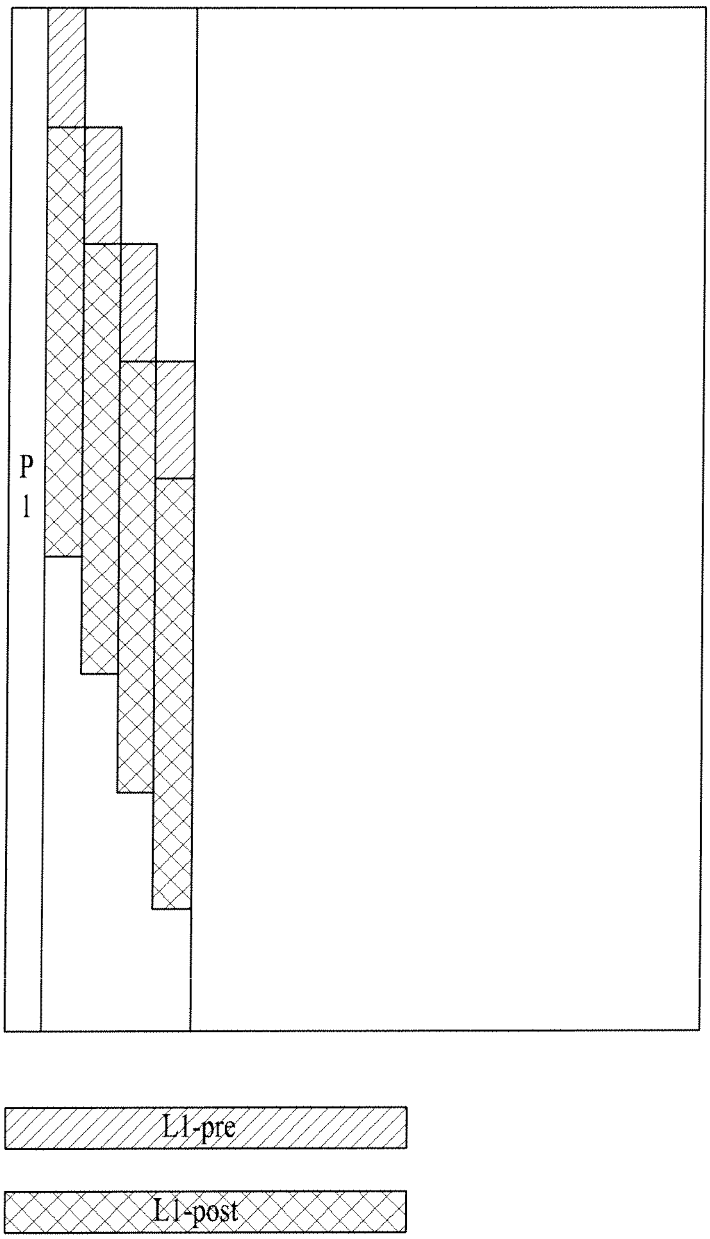

FIG. 49

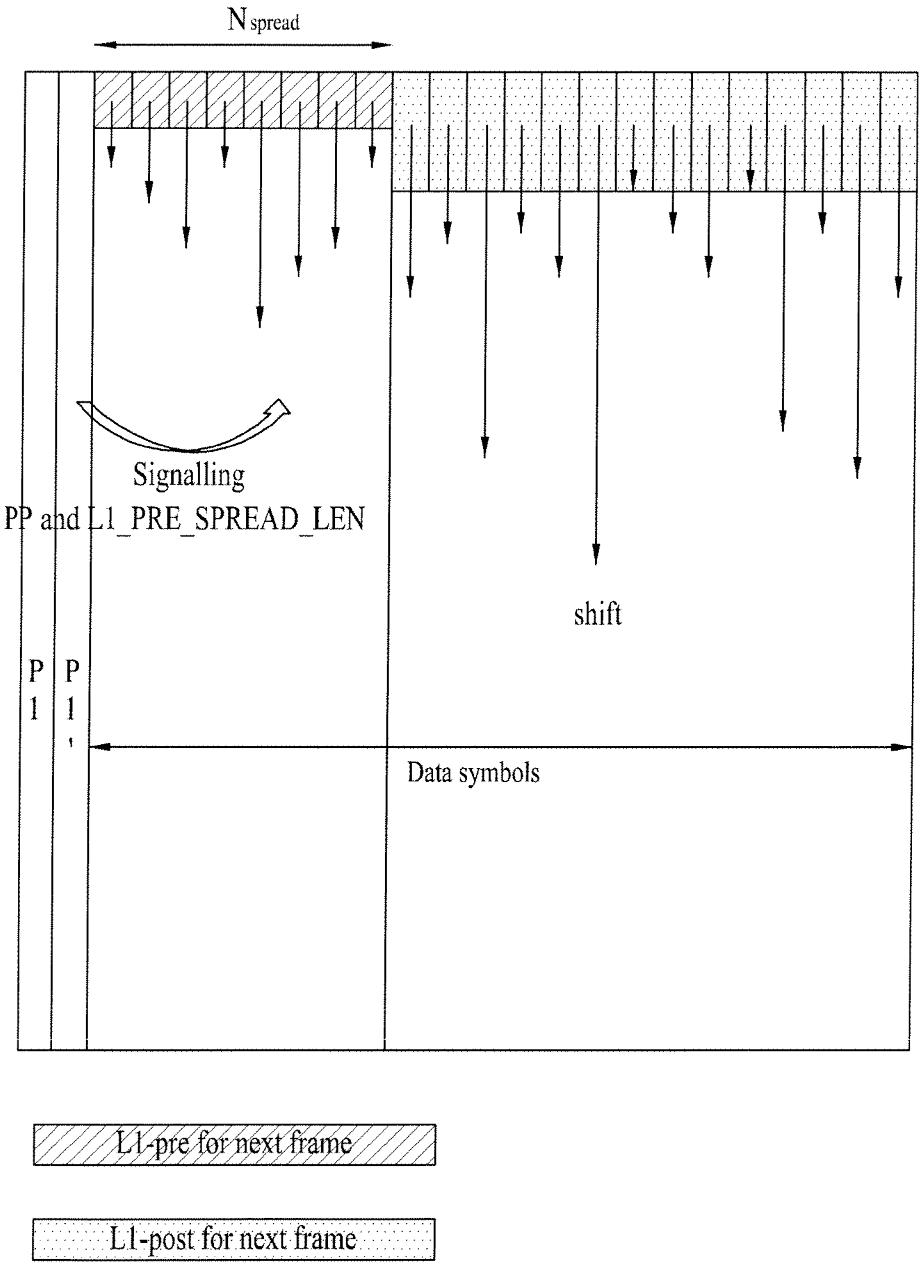
N spread
Signalling
PP and L1_PRE_SPREAD_LEN
shift
P1
P1'
Data symbols
L1-pre for next frame
L1-post for next frame

FIG. 50

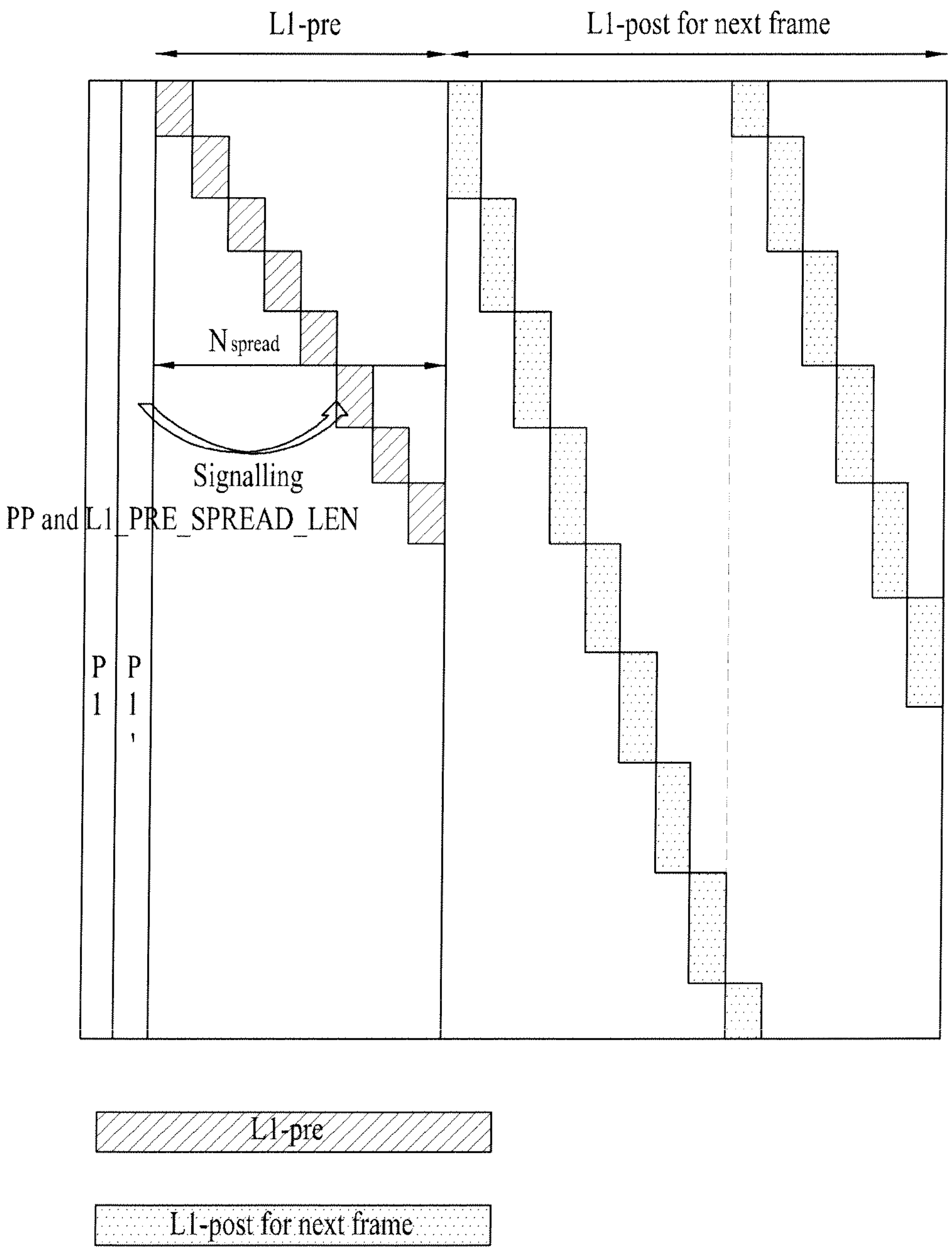
L1-pre
L1-post for next frame
Nspread
Signalling
PP and L1_PRE_SPREAD_LEN
P1
P1'
L1-pre
L1-post for next frame

FIG. 51

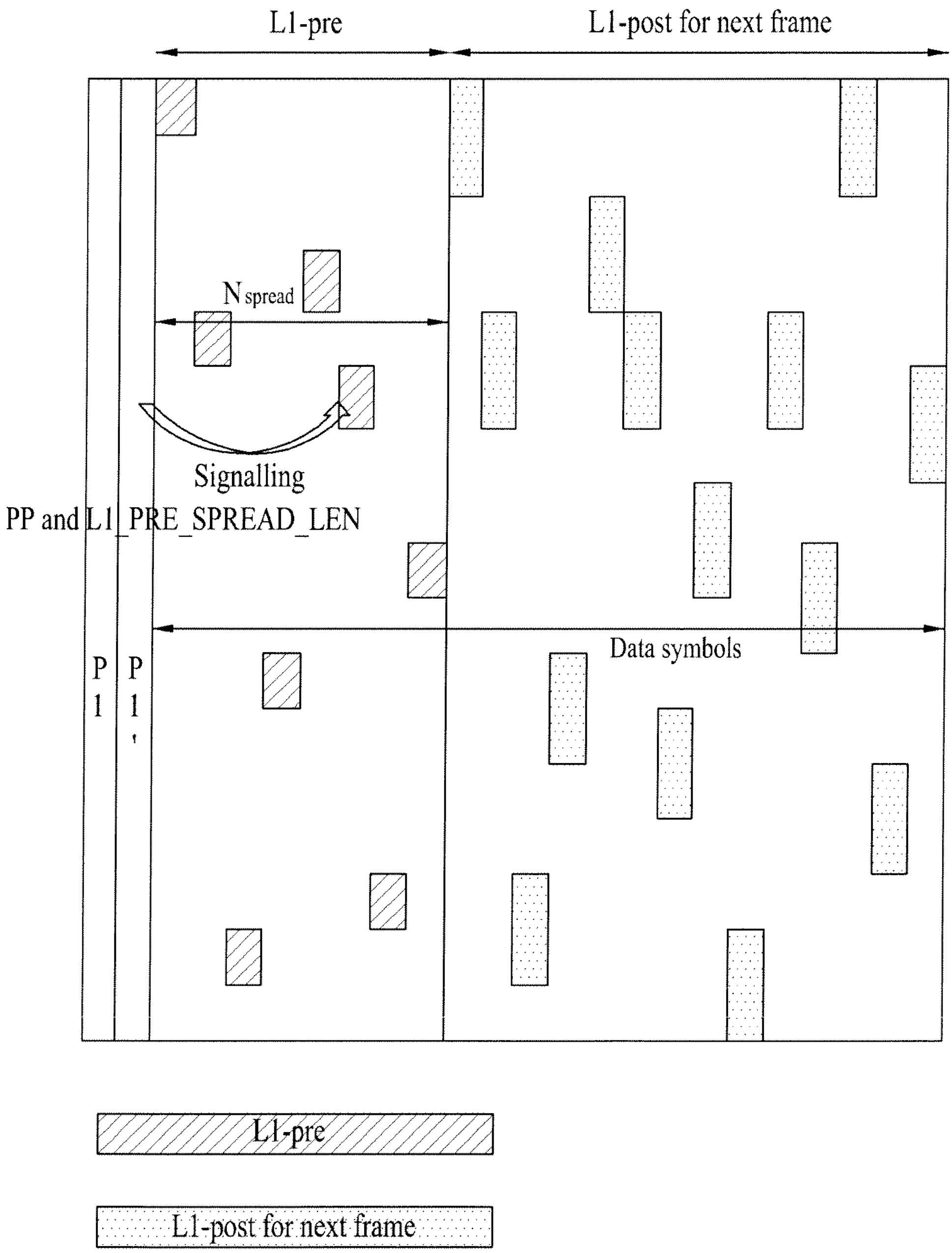
L1-pre
L1-post for next frame
N spread
Signalling
PP and L1_PRE_SPREAD_LEN
Data symbols
P 1
P 1'
L1-pre
L1-post for next frame

FIG. 52

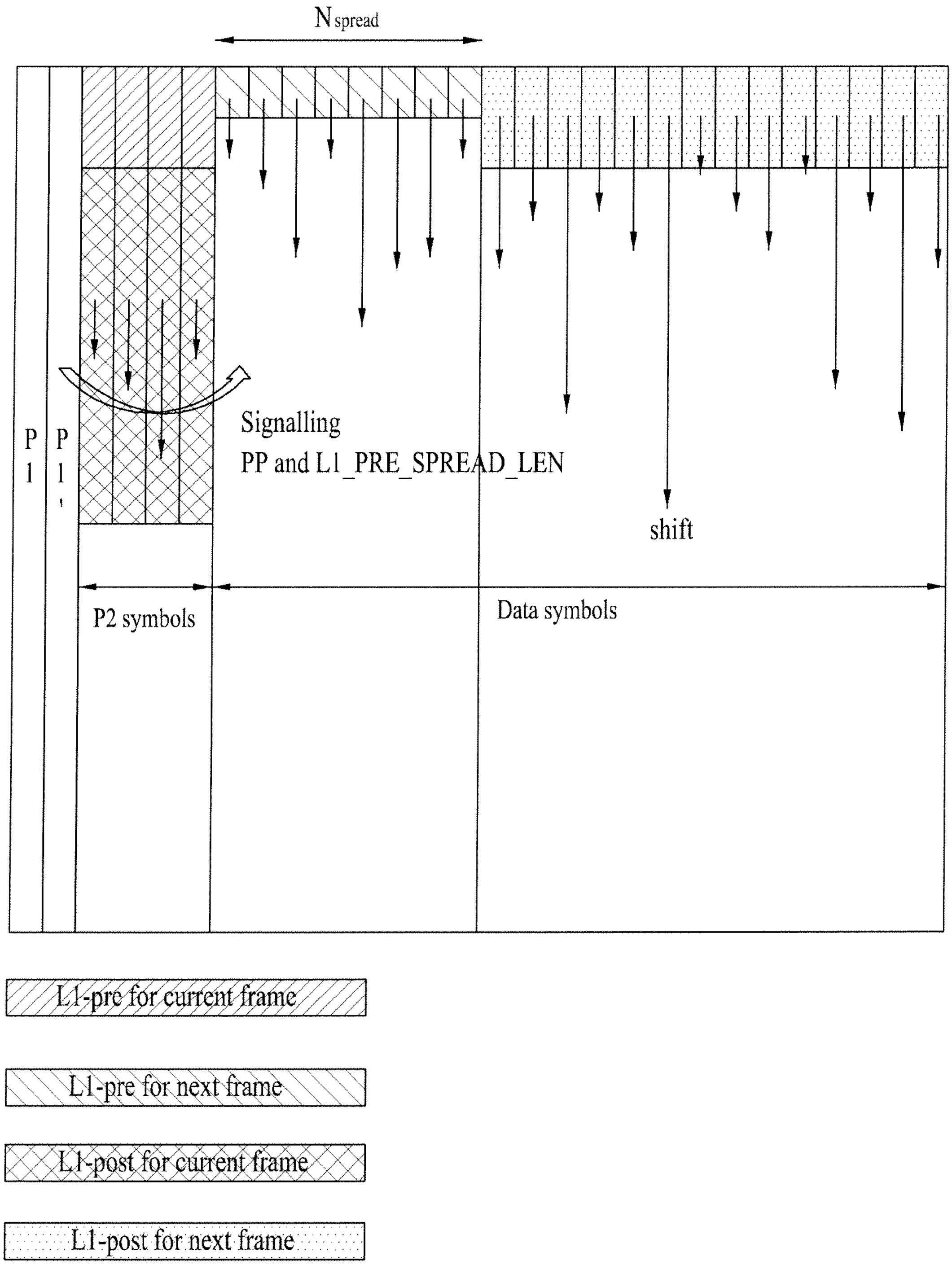
N spread
P 1
P 1 '
Signalling
PP and L1_PRE_SPREAD_LEN
shift
P2 symbols
Data symbols
L1-pre for current frame
L1-pre for next frame
L1-post for current frame
L1-post for next frame

FIG. 53

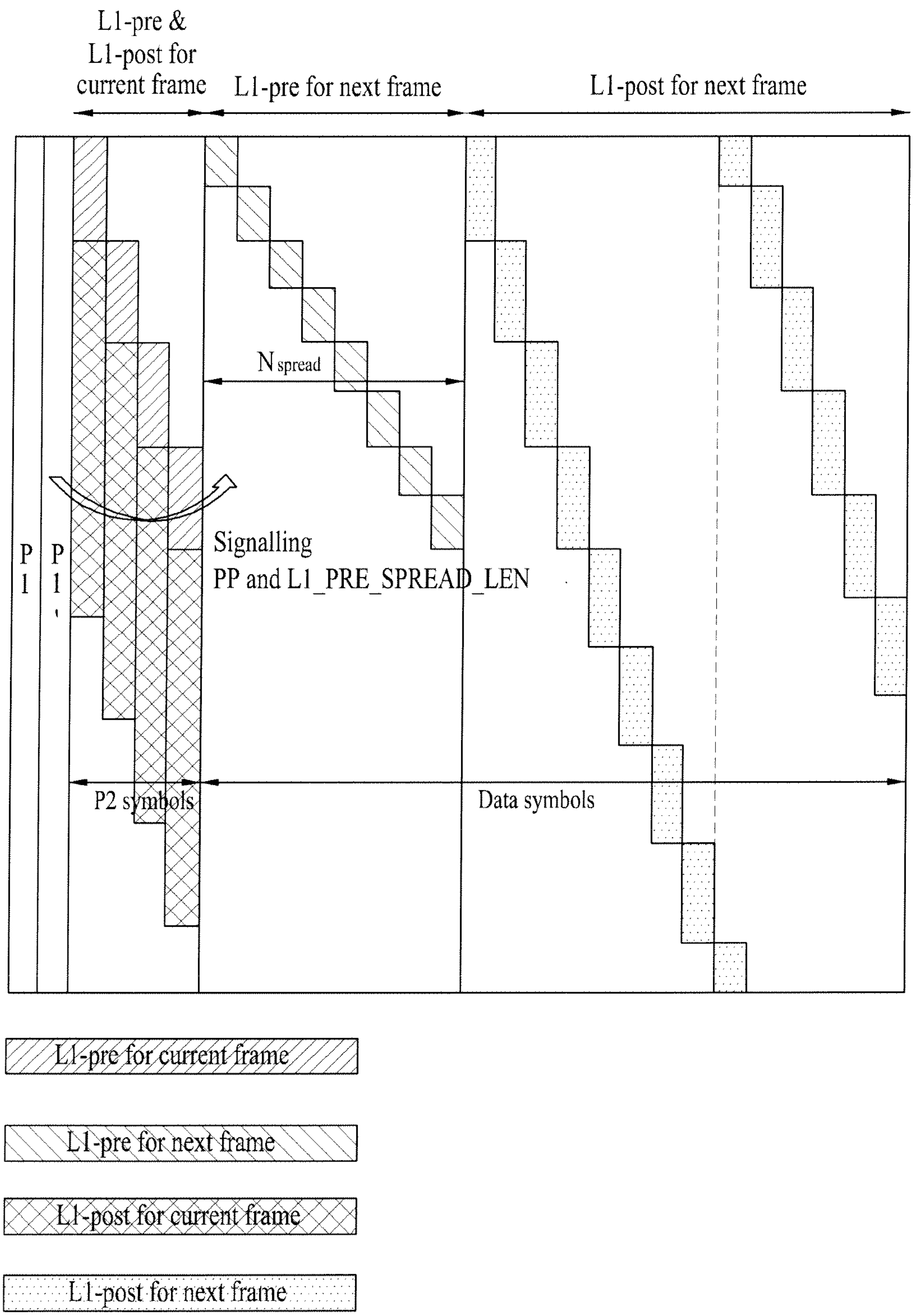
L1-pre &
L1-post for
current frame
L1-pre for next frame
L1-post for next frame
N spread
Signalling
PP and L1_PRE_SPREAD_LEN
P1
P1'
P2 symbols
Data symbols
L1-pre for current frame
L1-pre for next frame
L1-post for current frame
L1-post for next frame

FIG. 54

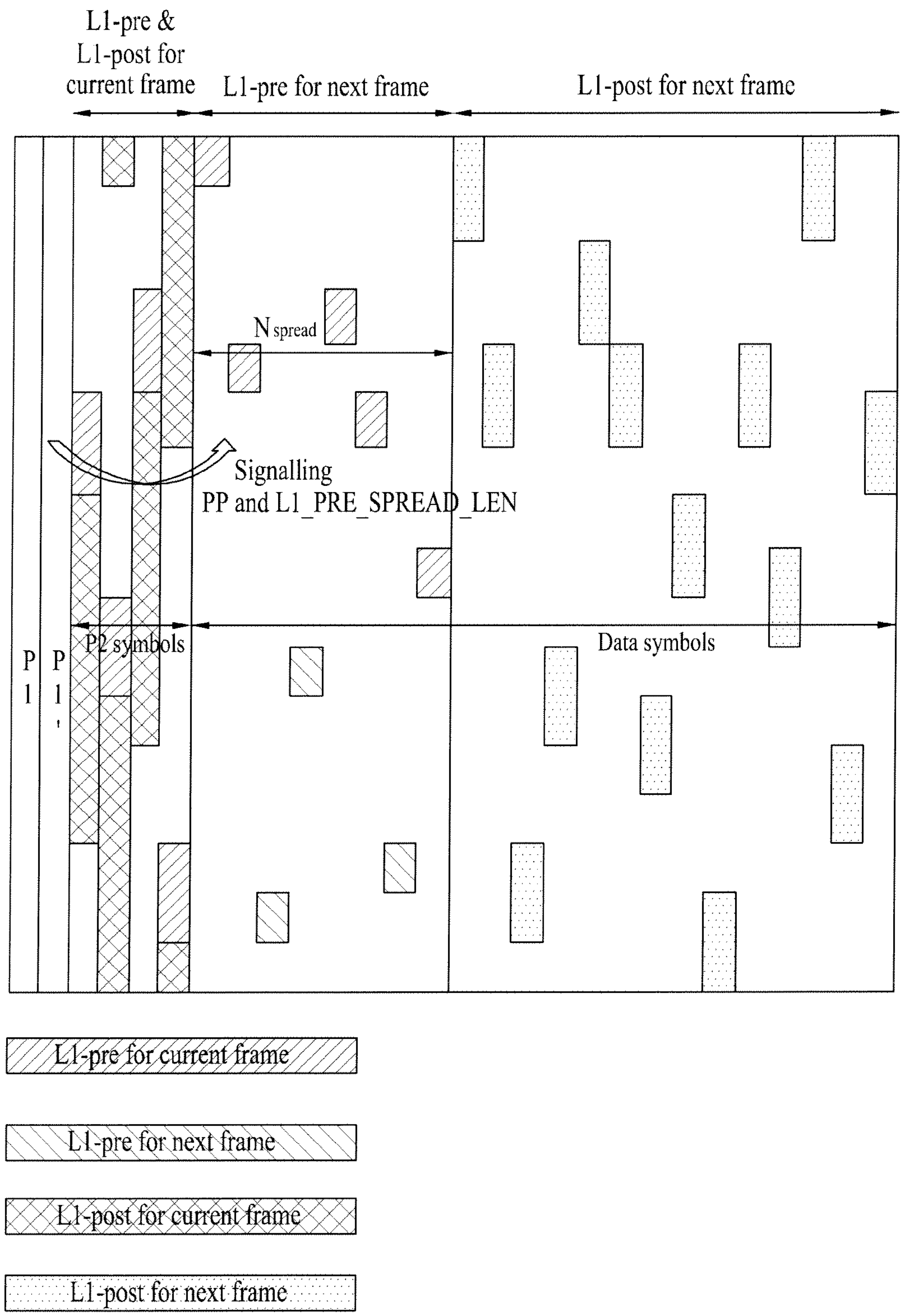
L1-pre &
L1-post for
current frame
L1-pre for next frame
L1-post for next frame
N spread
Signalling
PP and L1_PRE_SPREAD_LEN
P2 symbols
Data symbols
P1
P1'
L1-pre for current frame
L1-pre for next frame
L1-post for current frame
L1-post for next frame

FIG. 55

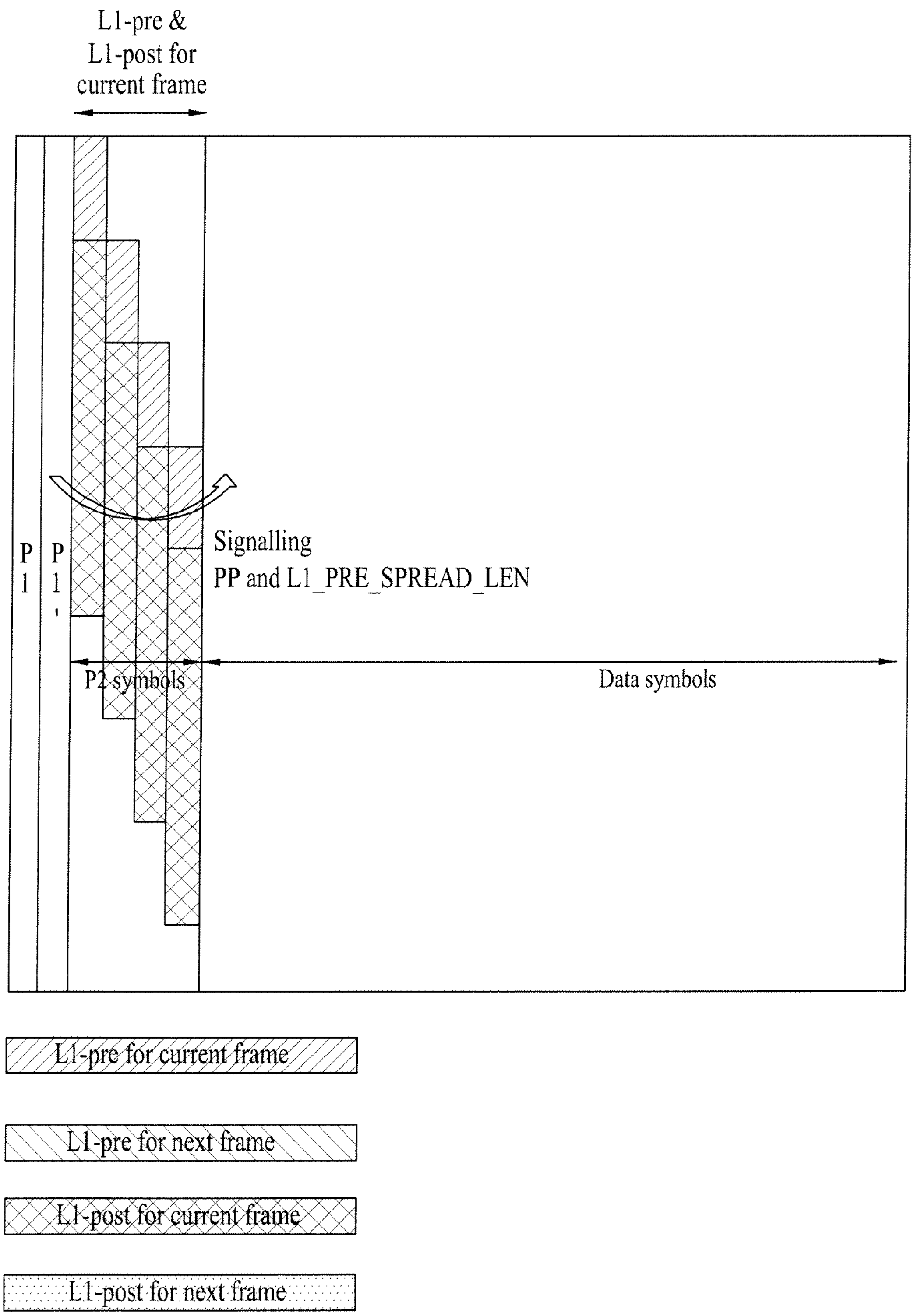
L1-pre &
L1-post for
current frame
P
1
P
1
'
Signalling
PP and L1_PRE_SPREAD_LEN
P2 symbols
Data symbols
L1-pre for current frame
L1-pre for next frame
L1-post for current frame
L1-post for next frame

FIG. 56

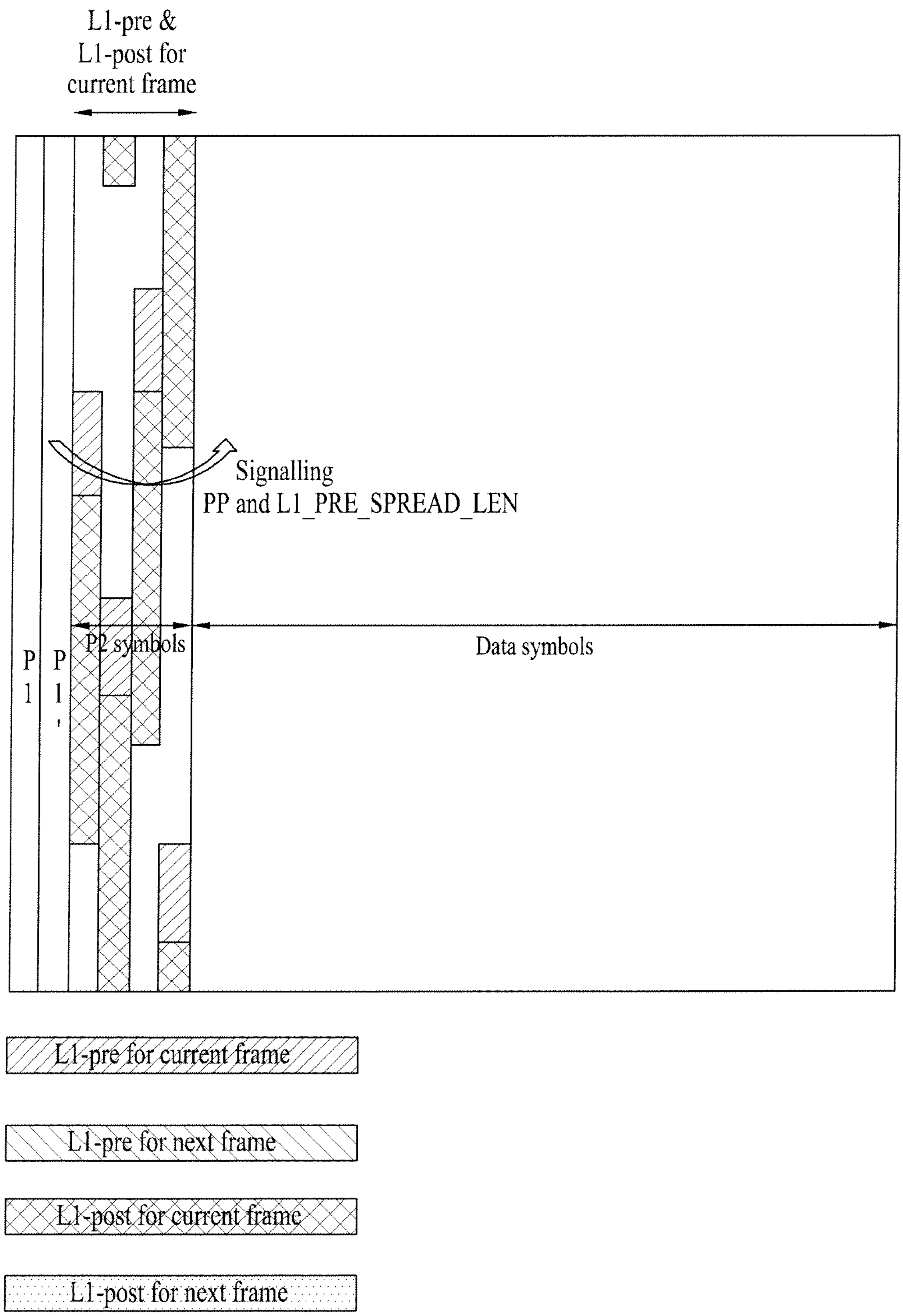
L1-pre &
L1-post for
current frame
Signalling
PP and L1_PRE_SPREAD_LEN
P1
P1'
P2 symbols
Data symbols
L1-pre for current frame
L1-pre for next frame
L1-post for current frame
L1-post for next frame

FIG. 57

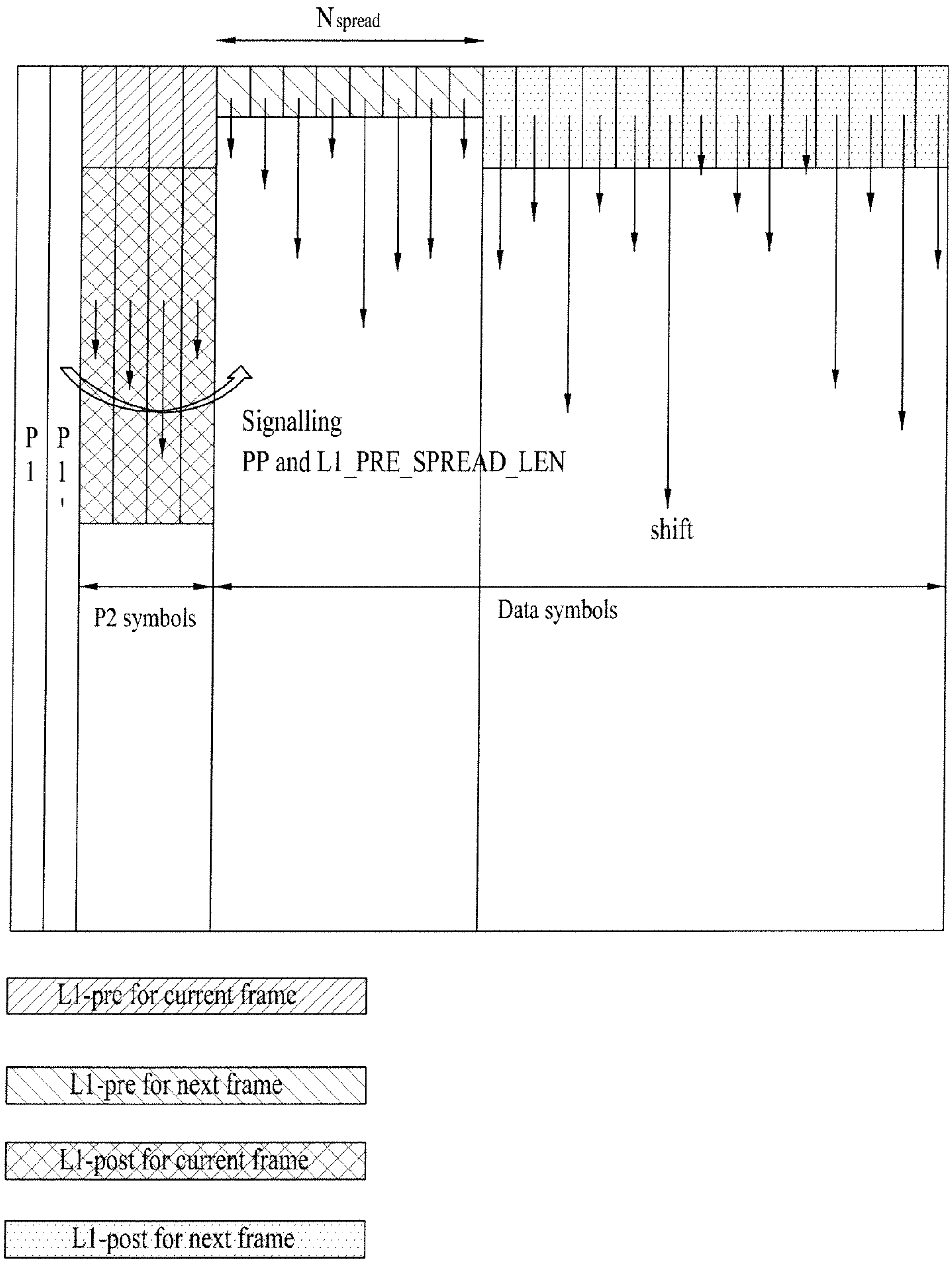
N spread
P 1
P 1'
Signalling
PP and L1_PRE_SPREAD_LEN
shift
P2 symbols
Data symbols
L1-pre for current frame
L1-pre for next frame
L1-post for current frame
L1-post for next frame

# FIG. 58

58010

<Type 1>

| Parameters | Bit | Description |
|---|---|---|
| PILOT_PATTERN | 3 bits | Pilot pattern for current frame |
| L1_PRE_SPREAD_LEN | 3 bits | L1-pre spreading length |
| P2_SYMBOL_FLAG | 1 bit | Flag which shows whether L1-signalling using P2 symbol is used or not |

58020

<Type 2>

| Parameters | Bit | Description |
|---|---|---|
| PILOT_PATTERN | 4 bits | Pilot pattern for current frame |
| L1_PRE_SPREAD_LEN | 4 bits | L1-pre spreading length |
| P2_SYMBOL_FLAG | 1 bit | Flag which shows whether L1-signalling using P2 symbol is used or not |

# FIG. 59

59010

<Type 1>

| Value | Pilot Pattern type |
|---|---|
| 000 | PP1 |
| 001 | PP2 |
| 010 | PP3 |
| 011 | PP4 |
| 100 | PP5 |
| 101 | PP6 |
| 110 | PP7 |
| 111 | PP8 |

59020

<Type 2>

| Value | Pilot Pattern type |
|---|---|
| 0000 | PP1 |
| 0001 | PP2 |
| 0010 | PP3 |
| 0011 | PP4 |
| 0100 | PP5 |
| 0101 | PP6 |
| 0110 | PP7 |
| 0111 | PP8 |
| 1000 to 1111 | Reserved future use |

# FIG. 60

60010

| Value | # of symbols for L1-pre spreading | | | | Average duration of L1-pre spreading for each FFT size (ms) |
|---|---|---|---|---|---|
| | 1K FFT | 2K FFT | 4K FFT | 8K FFT | |
| 000 | L1-pre and L1-post spreading in P2 symbols is only used.<br>(this value is only valid for P2_SYMBOL_FLAG=1 in P1` symbol) | | | | |
| 001 | 159 | 79 | 39 | 19 | 17.5 |
| 010 | 318 | 158 | 78 | 38 | 35 |
| 011 | 477 | 237 | 117 | 57 | 52.5 |
| 100 | 633 | 316 | 156 | 76 | 70 |
| 101 | 795 | 395 | 195 | 95 | 87.5 |
| 110 | 954 | 474 | 234 | 114 | 105 |
| 111 | 1113 | 553 | 273 | 133 | 122.5 |

60020

| Value | # of symbols for L1-pre spreading | | | | Average duration of L1-pre spreading for each FFT size (ms) |
|---|---|---|---|---|---|
| | 1K FFT | 2K FFT | 4K FFT | 8K FFT | |
| 00 | L1-pre and L1-post spreading in P2 symbols is only used.<br>(this value is only valid for P2_SYMBOL_FLAG=1 in P1` symbol) | | | | |
| 01 | 372 | 558 | 279 | 138 | 41.6 |
| 10 | 774 | 1116 | 558 | 276 | 83.1 |
| 11 | 1116 | 1674 | 837 | 414 | 124.74 |

FIG. 61

| P2_SYMBOL_FLAG | P2_SYMBOL_FLAG |
|---|---|
| 0 | L1-signalling(for current frame) in P2 symbols is not used |
| 1 | L1-signalling(for current frame) in P2 symbols is used |

# FIG. 62

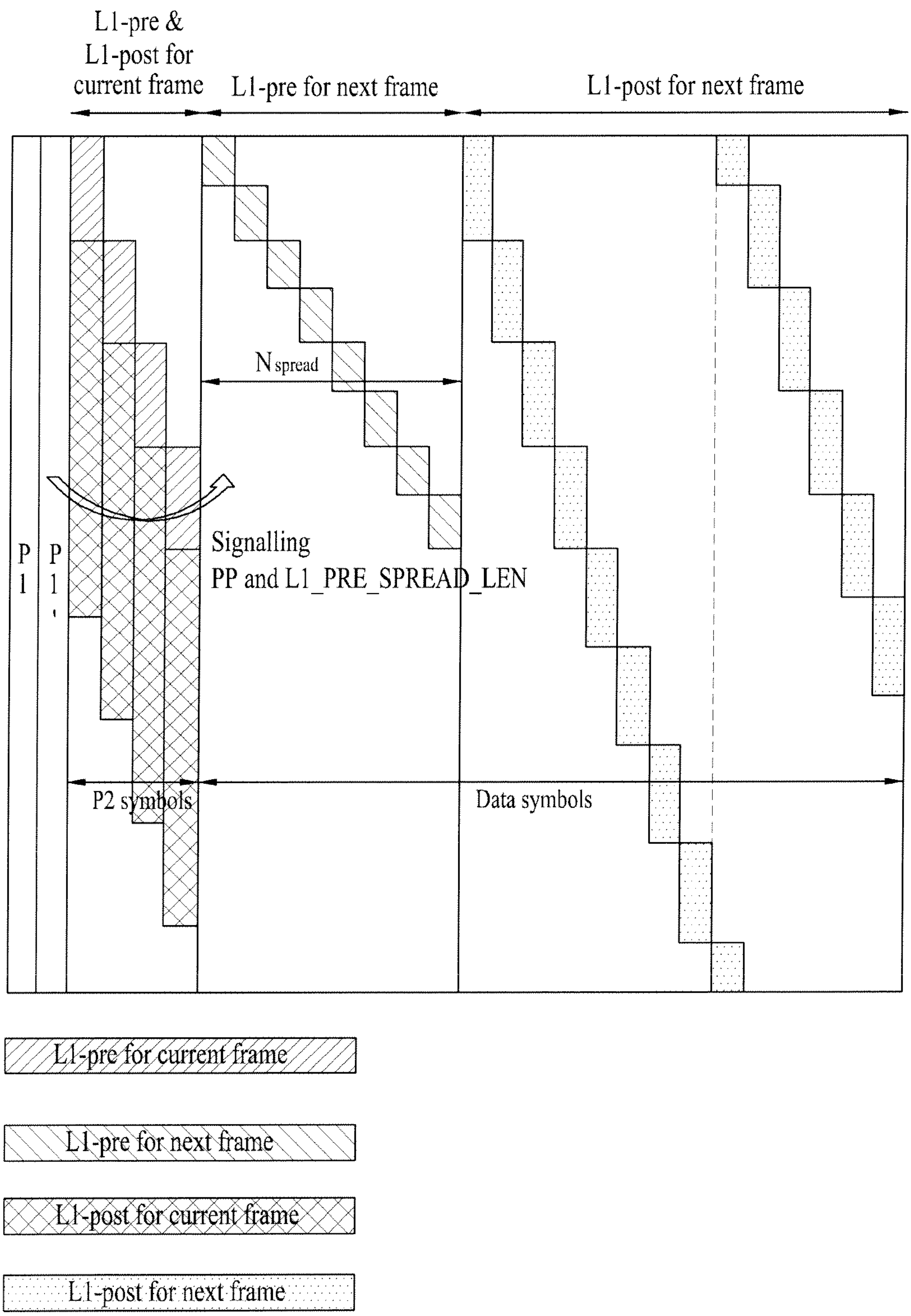
L1-pre &
L1-post for
current frame
L1-pre for next frame
L1-post for next frame
N spread
Signalling
PP and L1_PRE_SPREAD_LEN
P1
P1'
P2 symbols
Data symbols
L1-pre for current frame
L1-pre for next frame
L1-post for current frame
L1-post for next frame

FIG. 63

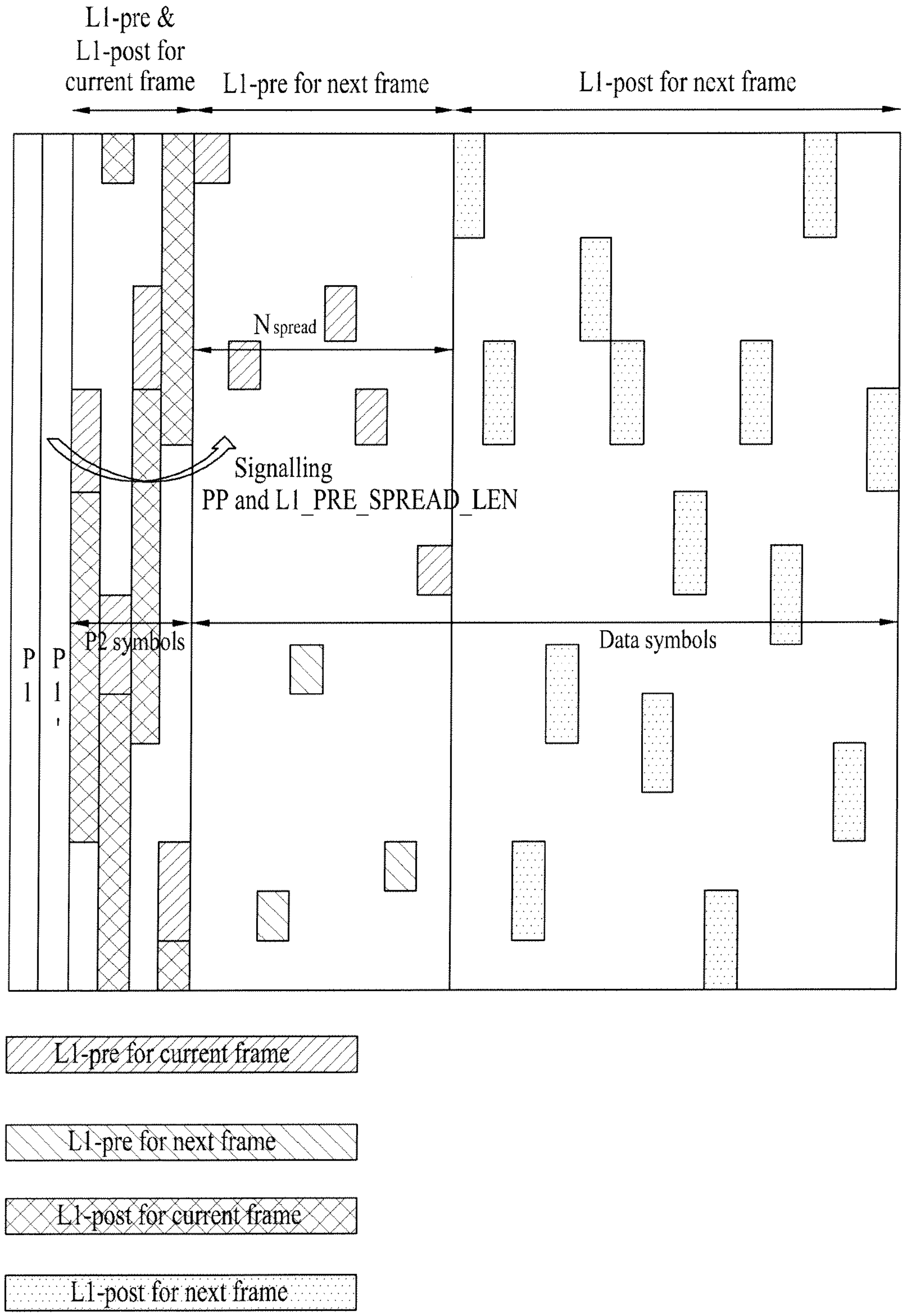
L1-pre &
L1-post for
current frame
L1-pre for next frame
L1-post for next frame
N spread
Signalling
PP and L1_PRE_SPREAD_LEN
P2 symbols
Data symbols
P1
P1'
L1-pre for current frame
L1-pre for next frame
L1-post for current frame
L1-post for next frame

FIG. 64

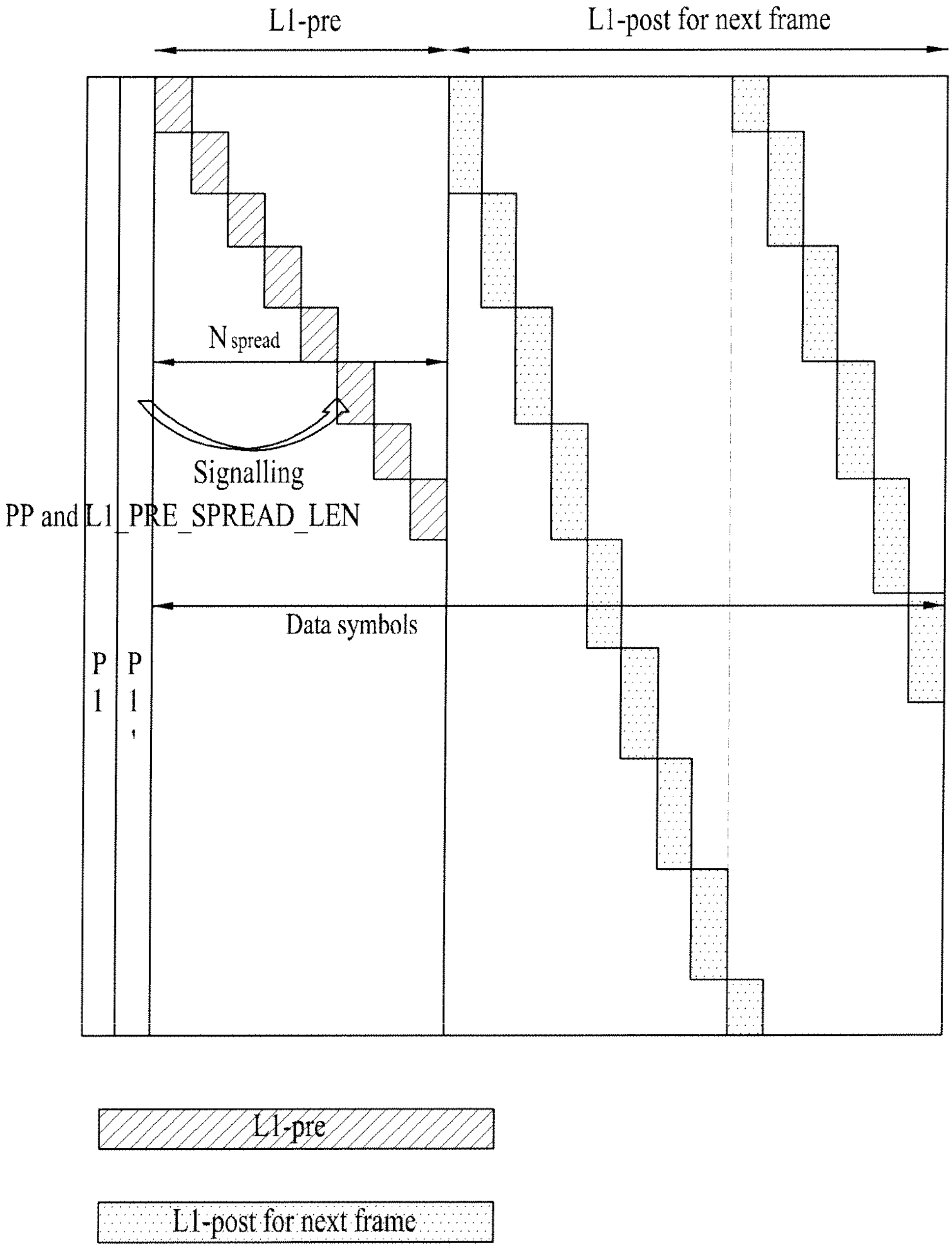
L1-pre
L1-post for next frame
N spread
Signalling
PP and L1_PRE_SPREAD_LEN
Data symbols
P1
P1'
L1-pre
L1-post for next frame

FIG. 65

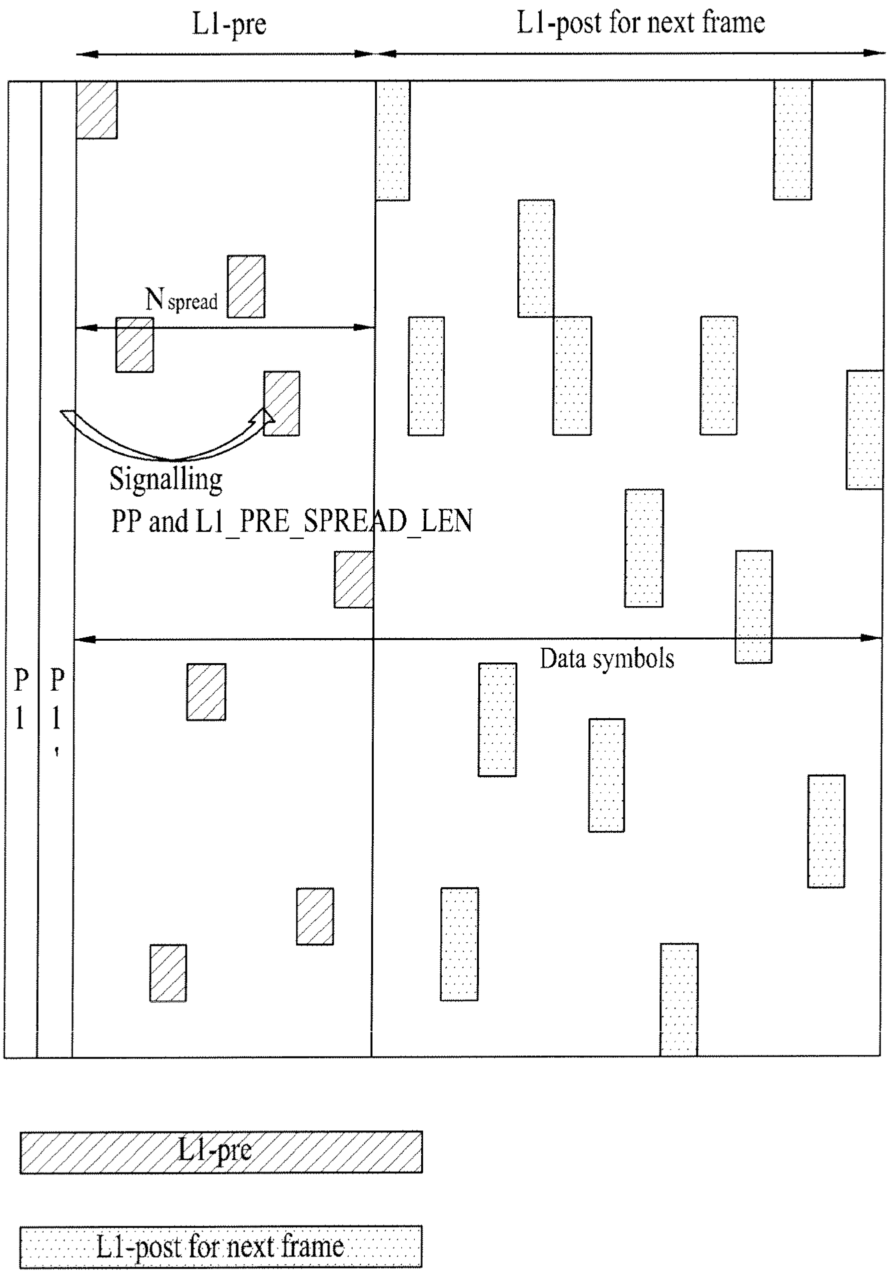
L1-pre
L1-post for next frame
N spread
Signalling
PP and L1_PRE_SPREAD_LEN
Data symbols
P1
P1'
L1-pre
L1-post for next frame

FIG. 66

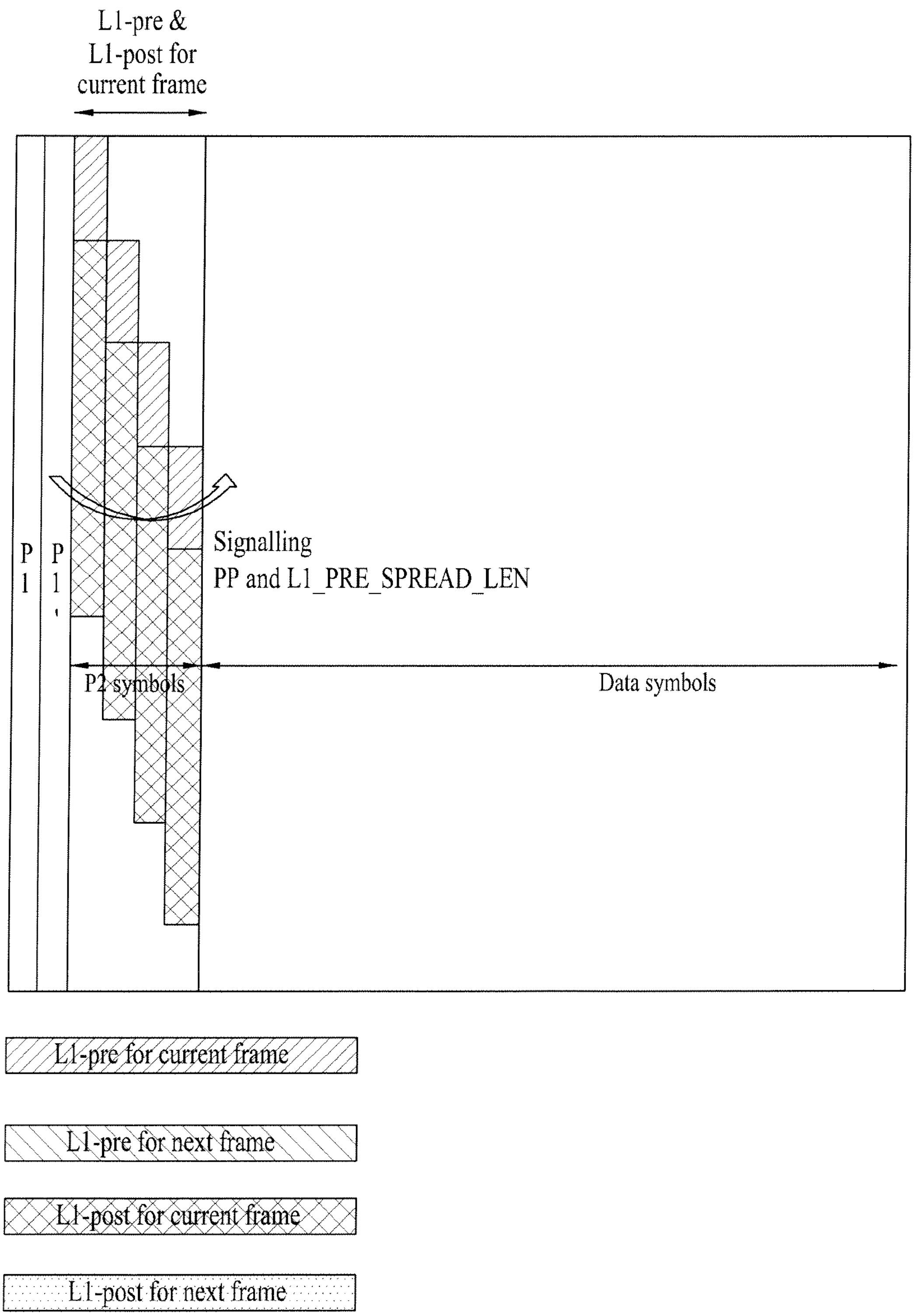
L1-pre &
L1-post for
current frame
P1
P1'
Signalling
PP and L1_PRE_SPREAD_LEN
P2 symbols
Data symbols
L1-pre for current frame
L1-pre for next frame
L1-post for current frame
L1-post for next frame

FIG. 67

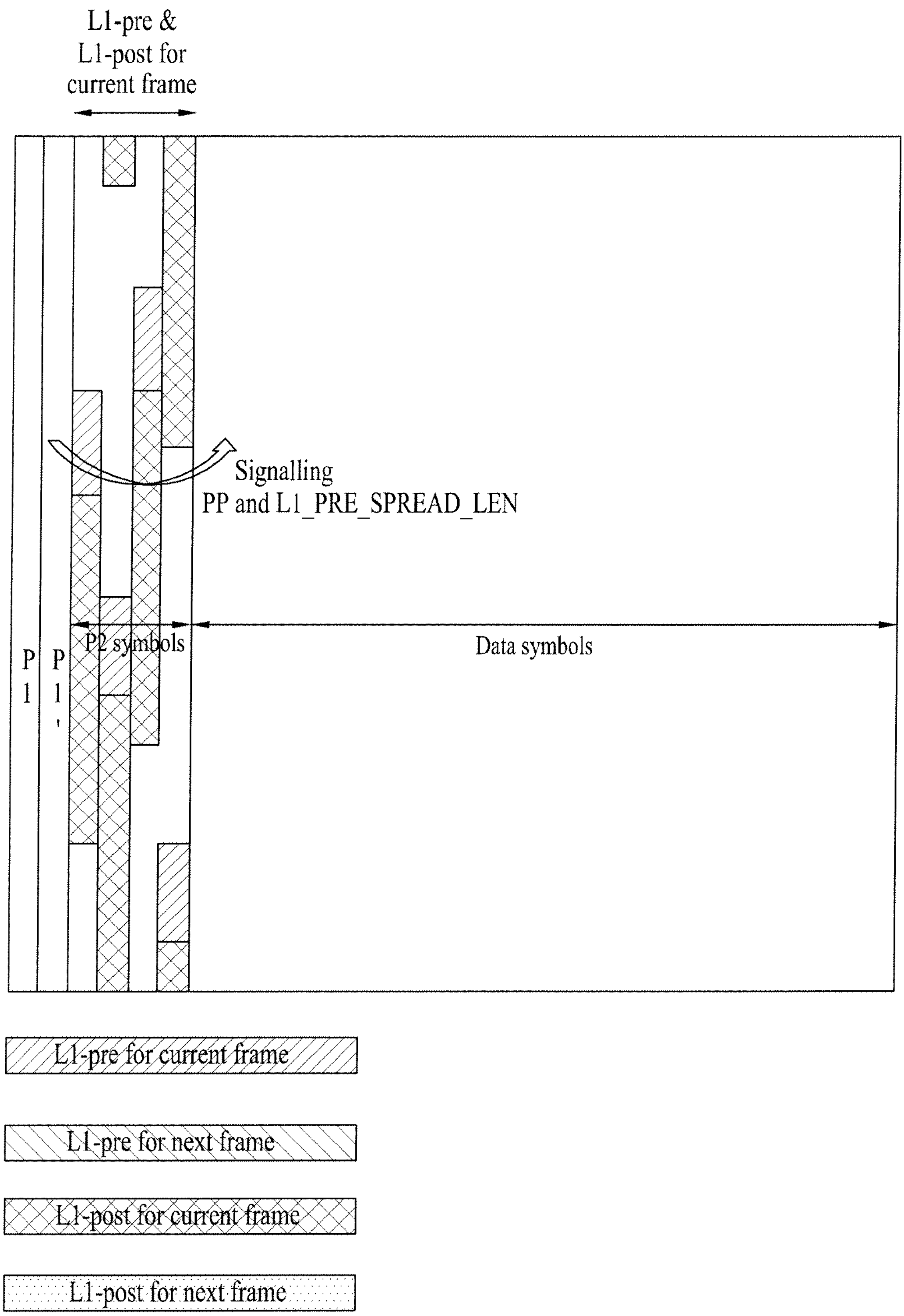
L1-pre &
L1-post for
current frame
Signalling
PP and L1_PRE_SPREAD_LEN
P1
P1'
P2 symbols
Data symbols
L1-pre for current frame
L1-pre for next frame
L1-post for current frame
L1-post for next frame

FIG. 68

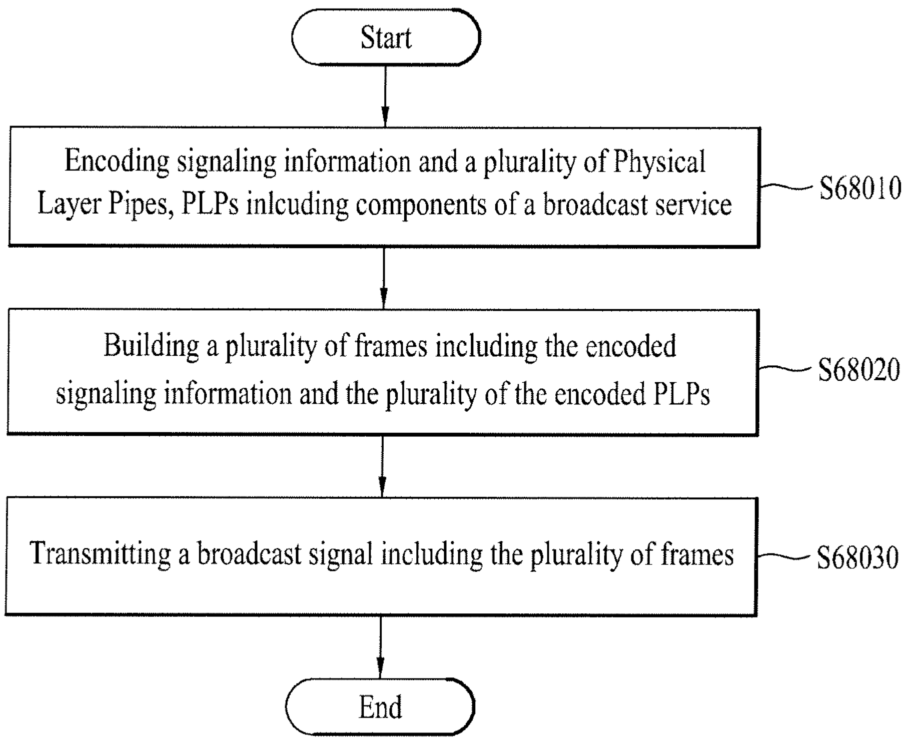
Start
Encoding signaling information and a plurality of Physical Layer Pipes, PLPs inlcuding components of a broadcast service
S68010
Building a plurality of frames including the encoded signaling information and the plurality of the encoded PLPs
S68020
Transmitting a broadcast signal including the plurality of frames
S68030
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Digital video broadcasting (DVB); Frame structure channel coding and modulation for a second generation digital terrestrial television broadcasting system (DVB-T2). *European standard (Telecommunications series, European telecommunications standards Institute (ETSI),* 01 July 2009
- 49BBC_Alamouti&inter_M&1049.pdf. *DVB, Digital video broadcasting,* 16 November 2007
- DVB_TM_C2_137_sss_015_preamble_pilots.pdf. *DVB, Digital video broadcasting,* 03 November 2008